(19) Europäisches Patentamt
European Patent Office
Office européen des brevets

(11) EP 3 890 488 B1

(12) # EUROPÄISCHE PATENTSCHRIFT

(45) Veröffentlichungstag und Bekanntmachung des Hinweises auf die Patenterteilung:
**04.01.2023 Patentblatt 2023/01**

(21) Anmeldenummer: **19809101.9**

(22) Anmeldetag: **02.12.2019**

(51) Internationale Patentklassifikation (IPC):
***A01N 43/80*** (2006.01) ***A01N 41/10*** (2006.01)
***A01N 47/24*** (2006.01) ***A01N 43/40*** (2006.01)
***A01N 47/36*** (2006.01) ***A01N 57/20*** (2006.01)
***A01N 33/22*** (2006.01) ***A01N 43/70*** (2006.01)
***A01N 43/68*** (2006.01) ***A01N 47/30*** (2006.01)
***A01N 43/82*** (2006.01) ***A01N 37/22*** (2006.01)
***A01N 47/38*** (2006.01) ***A01N 37/40*** (2006.01)
***A01N 43/653*** (2006.01) ***A01N 43/50*** (2006.01)
***A01N 43/56*** (2006.01) ***A01N 43/84*** (2006.01)
***A01N 39/04*** (2006.01) ***A01P 13/00*** (2006.01)

(52) Gemeinsame Patentklassifikation (CPC):
(C-Sets verfügbar)
**A01N 43/80; A01P 13/02** (Forts.)

(86) Internationale Anmeldenummer:
**PCT/EP2019/083226**

(87) Internationale Veröffentlichungsnummer:
**WO 2020/114932 (11.06.2020 Gazette 2020/24)**

(54) **HERBIZIDE ZUSAMMENSETZUNGEN**

HERBICIDAL COMBINATIONS

COMPOSITIONS D'HERBICIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2018 EP 18211041**

(43) Veröffentlichungstag der Anmeldung:
**13.10.2021 Patentblatt 2021/41**

(73) Patentinhaber: **Bayer Aktiengesellschaft**
**51373 Leverkusen (DE)**

(72) Erfinder:
- **TRABOLD, Klaus**
**69123 Heidelberg (DE)**
- **LORENTZ, Lothar**
**51545 Waldbröl (DE)**
- **MENNE, Hubert**
**55252 Mainz-Kastel (DE)**
- **GATZWEILER, Elmar**
**61231 Bad Nauheim (DE)**
- **ROSINGER, Christopher Hugh**
**65719 Hofheim (DE)**
- **HAAF, Klaus Bernhard**
**65779 Kelkheim (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**WO-A1-2010/130798 WO-A1-2018/228985**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 890 488 B1



**(Forts. nächste Seite)**

(52) Gemeinsame Patentklassifikation (CPC): (Forts.)

C-Sets
**A01N 43/80, A01N 33/22;**
**A01N 43/80, A01N 37/22;**
**A01N 43/80, A01N 37/40;**
**A01N 43/80, A01N 39/04;**
**A01N 43/80, A01N 41/10;**
**A01N 43/80, A01N 43/40;**
**A01N 43/80, A01N 43/40, A01N 47/30;**
**A01N 43/80, A01N 43/50;**
**A01N 43/80, A01N 43/54;**
**A01N 43/80, A01N 43/56;**
**A01N 43/80, A01N 43/653;**
**A01N 43/80, A01N 43/68;**
**A01N 43/80, A01N 43/70;**
**A01N 43/80, A01N 43/707;**
**A01N 43/80, A01N 43/80;**
**A01N 43/80, A01N 43/82;**
**A01N 43/80, A01N 43/84;**
**A01N 43/80, A01N 47/24;**
**A01N 43/80, A01N 47/36;**
**A01N 43/80, A01N 47/38;**
**A01N 43/80, A01N 57/20**

## Beschreibung

Die Erfindung liegt auf dem technischen Gebiet der Pflanzenschutzmittel, die gegen unerwünschten Pflanzenwuchs in Nichtkulturland, zur Saatvorbereitung oder in Pflanzenkulturen eingesetzt werden können und als Herbizidwirkstoffe eine Kombination von mindestens zwei Herbiziden enthalten, wobei die Zusammensetzungen herbizid wirksame Verbindungen (A) und (B) enthält, worin (A) eine oder mehrere Verbindungen der allgemeinen Formel (I) oder deren agrochemisch verträglichen Salze [Herbizide (A) bzw. Komponente (A)] und (B) ein oder mehrere Herbizide (Komponente B) bedeutet.

Verbindungen aus der Strukturklasse der 3-Phenylisoxazolin-5-carboxamide sind als Herbizide bekannt (siehe z. B. WO2012/130798 A). Die Verbindungen sind gegen ein breites Spektrum von Schadpflanzen im Vorauflauf wie auch im Nachauflaufapplikationsverfahren wirksam, wobei ein nichtselektiver Einsatz zur Bekämpfung von unerwünschtem Pflanzenwuchs oder ein selektiver Einsatz in Pflanzenkulturen möglich ist.

Die Wirksamkeit dieser Herbizide gegen Schadpflanzen liegt auf einem hohen Niveau, hängt jedoch im Allgemeinen von der Aufwandmenge, der jeweiligen Zubereitungsform, dem Schadpflanzenspektrum, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Generell besteht Bedarf an Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst unerwartet synergistisch verstärkter Wirkung, welche eine Reduzierung der Aufwandmenge im Vergleich zur Einzelapplikation der zu kombinierenden Wirkstoffe erlaubt.

Die Aufgabe der vorliegenden Erfindung besteht in der Bereitstellung alternativer oder vorteilhafter herbizider Zusammensetzungen, welche ein gutes biologisches Anwendungsprofil und möglichst mehrere der oben genannten gewünschten günstigen Eigenschaften aufweisen.

Überraschenderweise wurde nun gefunden, dass diese Aufgabe durch Verwendung einer Zusammensetzung enthaltend herbizid wirksame Verbindungen (A) und (B) gelöst werden kann, wobei (A) eine oder mehrere Verbindungen der allgemeinen Formel (I) oder deren agrochemisch verträglichen Salze [Komponente (A)] bedeutet und (B) ein oder mehrere Herbizide [Komponente (B)] ausgewählt aus der Gruppe der herbiziden Wirkstoffe (B1) bis (B11) bedeutet. Die erfindungsgemäßen Zusammensetzungen wirken in besonders günstiger Weise zusammen, z.B. wenn sie zur Bekämpfung von unerwünschtem Pflanzenwuchs in Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Nichtkulturland Weideland und Grün-/Rasenflächen und Plantagenkulturen eingesetzt werden.

Gegenstand der vorliegenden Erfindung sind somit Zusammensetzungen enthaltend herbizid wirksame Verbindungen (A) und (B), wobei (A) für eine oder mehrere Verbindungen der allgemeinen Formel (I) oder deren agrochemisch verträglichen Salze [Komponente (A)] steht,

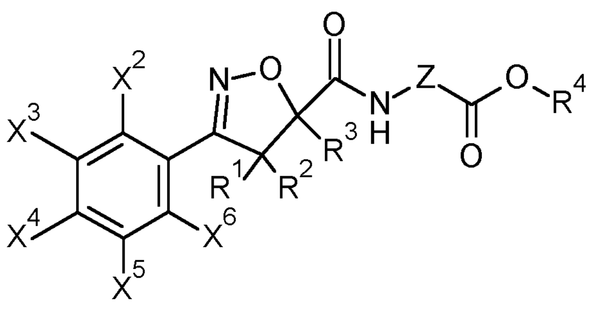

(I)

worin

$R^1$ und $R^2$ jeweils Wasserstoff bedeuten;

$R^3$ durch jeweils m Reste aus der Gruppe bestehend aus Fluor, Chlor, Cyano und ($C_1$-$C_2$)-Alkoxy substituiertes ($C_1$-$C_3$)-Alkyl, ($C_3$-$C_4$)-Cycloalkyl, ($C_2$-$C_3$)-Alkenyl, ($C_2$-$C_3$)-Alkinyl oder ($C_1$-$C_3$)-Alkoxy bedeutet;

$R^4$ Wasserstoff bedeutet, oder durch jeweils m Reste aus der Gruppe bestehend aus Fluor, Chlor, Brom, Cyano, ($C_1$-$C_4$)-Alkoxy, Hydroxy und Aryl substituiertes ($C_1$-$C_6$)-Alkyl, ($C_3$-$C_6$)-Cycloalkyl, ($C_3$-$C_6$)-Cycloalkyl-($C_1$-$C_6$)-Alkyl, ($C_2$-$C_6$)-Alkenyl, ($C_5$-$C_6$)-Cycloalkenyl oder ($C_2$-$C_6$)-Alkinyl bedeutet;

Z für eine Gruppe Z-1, Z-2, Z-8, Z-9, Z-11 oder Z13 steht, wobei Z-1, Z-2, Z-8, Z-9, Z-11 und Z13 folgende Bedeutung haben:

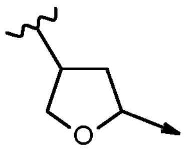

Z-1

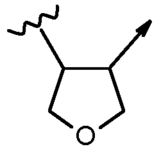

Z-2

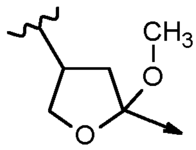

Z-8

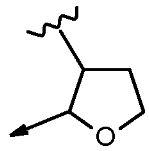

Z-9

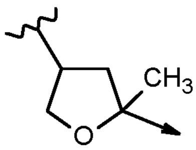

Z-11

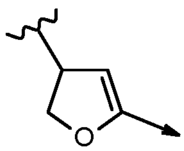

Z-13

worin der Pfeil jeweils für eine Bindung zur Gruppe C=O der Formel (I) steht;

$X^2$, $X^4$ und $X^6$ unabhängig voneinander Wasserstoff oder Fluor bedeuten;

$X^3$ und $X^5$ unabhängig voneinander Wasserstoff, Fluor, Chlor oder Cyano, oder jeweils durch m Reste aus der Gruppe bestehend aus Fluor und Chlor substituiertes ($C_1$-$C_3$)-Alkyl, ($C_1$-$C_3$)-Alkoxy, bedeuten; und

m die Laufzahl 0, 1, 2 oder 3 beträgt,

und
(B) für ein oder mehrere Herbizide [Komponente (B)] aus der Gruppe der herbiziden Wirkstoffe (B1) bis (B11) steht, worin (B1) für herbizide Wirkstoffe aus der Gruppe der 1,3-Diketoverbindungen steht, ausgewählt aus

| | | |
|---|---|---|
| (B1.1) | Alloxydim, | (CAS 55634-91-8), (CAS 55635-13-7) |
| (B1.2) | Bicyclopyrone, | (CAS 352010-68-5) |
| (B1.3) | Butroxydim, | (CAS 138164-12-2) |
| (B1.4) | Clethodim, | (CAS 99129-21-2) |
| (B1.5) | Cycloxydim, | (CAS 101205-02-1) |
| (B1.6) | Fenquinotrione, | (CAS 1342891-70-6) |
| (B1.7) | Mesotrione, | (CAS 104206-82-8) |
| (B1.8) | Pinoxaden, | (CAS 243973-20-8) |
| (B1.9) | Profoxydim, | (CAS 139001-49-3) |
| (B1.10) | Sethoxydim, | (CAS 74051-80-2) |
| (B1.11) | Sulcotrione, | (CAS 99105-77-8) |
| (B1.12) | SYP-9121 | (CAS 1976053-87-8) |

(fortgesetzt)

| | | |
|---|---|---|
| (B1.13) | Tefuryltrione, | (CAS 473278-76-1) |
| (B1.14) | Tembotrione, | (CAS 335104-84-2) |
| (B1.15) | Tepraloxydim, | (CAS 149979-41-9) |
| (B1.16) | Tralkoxydim, | (CAS 87820-88-0) |
| (B1.17) | Y13161, | (CAS 1639426-14-4) |
| (B1.18) | Y13287; | (CAS 1639426-42-8) |

(B2) für herbizide Wirkstoffe aus der Gruppe der (Sulfon)Amide steht, ausgewählt aus

| | | |
|---|---|---|
| (B2.1) | Acetochlor, | (CAS 34256-82-1) |
| (B2.2) | Alachlor, | (CAS 15972-60-8), |
| (B2.3) | Amidosulfuron, | (CAS 120923-37-7) |
| (B2.4) | Asulam, | (CAS 3337-71-1) (CAS 14089-43-1), (CAS 2302-17-2) |
| (B2.5) | Azimsulfuron, | (CAS 120162-55-2) |
| (B2.6) | Beflubutamid, | (CAS 113614-08-7), (CAS 113614-09-8) |
| (B2.7) | Bensulfuron, | (CAS 83055-99-6), (CAS 83055-99-6) |
| (B2.8) | Butachlor, | (CAS 23184-66-99) |
| (B2.9) | Carbetamide, | (CAS 16118-49-3) |
| (B2.10) | Chlorimuron, | (CAS 99283-00-8), (CAS 90982-32-4), |
| (B2.11) | Chlorpropham, | (CAS 101-21-3) |
| (B2.12) | Chlorsulfuron, | (CAS 64902-72-3) |
| (B2.13) | Cinosulfuron, | (CAS 94593-91-6) |
| (B2.14) | Cloransulam, | (CAS159518-97-5), (CAS 147150-35-4) |
| (B2.15) | Cyclosulfamuron, | (CAS 136849-15-5) |
| (B2.16) | Desmedipham, | (CAS 13684-56-5) |
| (B2.17) | Diclosulam, | (CAS 145701-21-9) |
| (B2.18) | Diflufenican, | (CAS 83164-33-4) |
| (B2.19) | Dimethachlor, | (CAS 50563-36-5) |
| (B2.20) | Dimethenamid, | (CAS 87674-68-8), (CAS 163515-14-8) |
| (B2.21) | Esprocarb | (CAS 85785-20-2) |
| (B2.22) | Ethametsulfuron, | (CAS 111353-84-5), (CAS 97780-06-8) |
| (B2.23) | Ethoxysulfuron, | (CAS 126801-58-9) |
| (B2.24) | Flazasulfuron, | (CAS 104040-78-0) |
| (B2.25) | Florasulam, | (CAS 145701-23-1) |
| (B2.26) | Flucarbazone, | (CAS 145026-88-6 ), (CAS 181274-17-9) |
| (B2.27) | Flucetosulfuron, | (CAS 412928-75-7) |
| (B2.28) | Flufenacet, | (CAS 142459-58-3) |
| (B2.29) | Flumetsulam, | (CAS 98967-40-9) |
| (B2.30) | Flupyrsulfuron, | (CAS 150315-10-9), (CAS 144740-53-4), (CAS 144740-54-5) |
| (B2.31) | Foramsulfuron, | (CAS 173159-57-4) |
| (B2.32) | Halosulfuron, | (CAS 135397-30-7), (CAS 100784-20-1) |
| (B2.33) | Imazosulfuron, | (CAS 122548-33-8) |
| (B2.34) | Iodosulfuron, | (CAS 185119-76-0), (CAS 144550-06-1), (CAS 144550-36-7) |
| (B2.35) | Ipfencarbazone, | (CAS 212201-70-2) |
| (B2.36) | Mefenacet, | (CAS 73250-68-7) |
| (B2.37) | Mesosulfuron, | (CAS 400852-66-6), (CAS 208465-21-8) |
| (B2.38) | Metazachlor, | (CAS 67129-08-2) |
| (B2.39) | Metazosulfuron, | (CAS 868680-84-6) |
| (B2.40) | Metolachlor, | (CAS 51218-45-2) |
| (B2.41) | Metosulam, | (CAS 139528-85-1) |
| (B2.42) | Metsulfuron, | (CAS 79510-48-8), (CAS 74223-64-6) |

(fortgesetzt)

| | | |
|---|---|---|
| (B2.43) | Nicosulfuron, | (CAS 111991-09-4) |
| (B2.44) | Orthosulfamuron, | (CAS 213464-77-8) |
| (B2.45) | Oxasulfuron, | (CAS 144651-06-9) |
| (B2.46) | Penoxsulam, | (CAS 219714-96-2) |
| (B2.47) | Pethoxamide, | (CAS 106700-29-2) |
| (B2.48) | Phenmedipham, | (CAS 13684-63-4) |
| (B2.49) | Picolinafen, | (CAS 137641-05-5) |
| (B2.50) | Pretilachlor, | (CAS 51218-49-6) |
| (B2.51) | Primisulfuron, | (CAS 113036-87-6), (CAS 86209-51-0) |
| (B2.52) | Propachlor, | (CAS 1918-16-7) |
| (B2.53) | Propanil, | (CAS 709-98-8) |
| (B2.54) | Propham, | (CAS 122-42-9) |
| (B2.55) | Propisochlor, | (CAS 86763-47-5) |
| (B2.56) | Propoxycarbazone, | (CAS 145026-81-9), (CAS 181274-15-7) |
| (B2.57) | Propyrisulfuron, | (CAS 570415-88-2) |
| (B2.58) | Propyzamide, | (CAS 23950-58-5) |
| (B2.59) | Prosulfocarb, | (CAS 52888-80-9) |
| (B2.60) | Prosulfuron, | (CAS 94125-34-5) |
| (B2.61) | Pyrazosulfuron, | (CAS 98389-04-9), (CAS 93697-74-6) |
| (B2.62) | Pyroxsulam, | (CAS 422556-08-9) |
| (B2.63) | Rimsulfuron, | (CAS 122931-48-0) |
| (B2.64) | S-metolachlor, | (CAS 87392-12-9) |
| (B2.65) | Sulfometuron, | (CAS 74223-56-6), (CAS 74222-97-2), (CAS 144651-06-9) |
| (B2.66) | Sulfosulfuron, | (CAS 141776-32-1) |
| (B2.67) | Thenylchlor, | (CAS 96491-05-3) |
| (B2.68) | Thiencarbazone, | (CAS 936331-72-5), (CAS 317815-83-1) |
| (B2.69) | Thifensulfuron, | (CAS 79277-67-1), (CAS 79277-27-3) |
| (B2.70) | Tri-allat | (CAS 2303-17-5) |
| (B2.71) | Triasulfuron, | (CAS 82097-50-5) |
| (B2.72) | Tribenuron, | (CAS 106040-48-6), (CAS 101200-48-0) |
| (B2.73) | Trifloxysulfuron, | (CAS 145099-21-4, (CAS 199119-58-9) |
| (B2.74) | Triflusulfuron, | (CAS 135990-29-3), (CAS 126535-15-7) |
| (B2.75) | Tritosulfuron, | (CAS 142469-14-5) |
| (B2.76) | Esprocarb, | (CAS 85785-20-2) |
| (B2.77) | Profluazol, | (CAS 190314-43-3) |
| (B2.78) | Tri-allate; | (CAS 2303-17-5) |

(B3) für herbizide Wirkstoffe aus der Gruppe der Arylnitrile steht, ausgewählt aus

| | | |
|---|---|---|
| (B3.1) | Bromoxynil, | (CAS 1689-84-5) (CAS 3861-41-4), (CAS 56634-95-8), (CAS 1689-99-2), (CAS 2961-68-4) |
| (B3.2) | Chlorthiamid, | (CAS 1918-13-4) |
| (B3.3) | Dichlobenil, | (CAS 1194-65-6) |
| (B3.4) | Ioxynil, | (CAS 1689-83-4), (CAS 2961-61-7), (CAS 3861-47-0), (CAS 2961-62-8) |
| (B3.5) | Pyraclonil; | (CAS 158353-15-2) |

(B4) für herbizide Wirkstoffe aus der Gruppe der Azole steht, ausgewählt aus

| | | |
|---|---|---|
| (B4.1) | Amicarbazone, | (CAS 129909-90-6) |
| (B4.2) | Amitrole, | (CAS 61-82-5) |
| (B4.3) | Azafenidin, | (CAS 68049-83-2) |
| (B4.4) | Benzofenap, | (CAS 82692-44-2) |

(fortgesetzt)

| | | |
|---|---|---|
| (B4.5) | Benzuofucaotong | (CAS 1992017-55-6) |
| (B4.6) | Biscarfentrazone | (CAS 1622908-18-2) |
| (B4.7) | Cafenstrole, | (CAS 125306-83-4) |
| (B4.8) | Carfentrazone, | (CAS 128621-72-7), (CAS128639-02-1) |
| (B4.9) | Fentrazamide, | (CAS 158237-07-1) |
| (B4.10) | Imazamethabenz, | (CAS 100728-84-5), (CAS 81405-85-8) |
| (B4.11) | Imazamox, | (CAS 114311-32-9), (CAS 247057-22-3) |
| (B4.12) | Imazapic, | (CAS 104098-48-8), (CAS 115136-53-3) |
| (B4.13) | Imazapyr, | (CAS 81334-34-1), (CAS 81510-83-0) |
| (B4.14) | Imazaquin, | (CAS 81335-37-7), (CAS 81335-47-9), (CAS 81335-43-5), (CAS 81335-46-8) |
| (B4.15) | Imazethapyr, | (CAS 81335-77-5), (CAS 101917-66-2) |
| (B4.16) | Isouron, | (CAS 55861-78-4) |
| (B4.17) | Isoxaben, | (CAS 82558-50-7) |
| (B4.18) | Isoxaflutole, | (CAS 141112-29-0) |
| (B4.19) | Oxadiargyl, | (CAS 39807-15-3) |
| (B4.20) | Oxadiazon, | (CAS 19666-30-9) |
| (B4.21) | Pyraflufen, | (CAS 129630-17-7), (CAS 129630-19-9) |
| (B4.22) | Pyrasulfotole, | (CAS 365400-11-9) |
| (B4.23) | Pyrazolynate, | (CAS 58011-68-0) |
| (B4.24) | Pyrazoxyfen, | (CAS 71561-11-0) |
| (B4.25) | Pyroxasulfone, | (CAS 447399-55-5) |
| (B4.26) | Sulfentrazone, | (CAS 122836-35-5) |
| (B4.27) | Tolpyralate, | (CAS 1101132-67-5) |
| (B4.28) | Topramezone, | (CAS 210631-68-8) |
| (B4.29) | Triazolesulcotrione (QYR-301), | (CAS 1911613-97-2) |
| (B4.30) | QYM-201, | (CAS 1855925-45-1) |
| (B4.31) | Bencarbazone, | (CAS 173980-17-1) |
| (B4.32) | Fluazolate, | (CAS 174514-07-9) |
| (B4.33) | Flupoxam, | (CAS 119126-15-7) |
| (B4.34) | Isoxachlortole; | (CAS 141112-06-3) |

(B5) für weitere herbizide Wirkstoffe steht, ausgewählt aus

| | | |
|---|---|---|
| (B5.1) | Aminocyclopyrachlor, | (CAS 858956-08-8), (CAS 858954-83-3), (CAS 858956-35-1) |
| (B5.2) | Aminopyralid, | (CAS 150114-71-9), (CAS 566191-87-5), (CAS 566191-89-7) |
| (B5.3) | Benazolin-ethyl, | (CAS 3813-05-6), (CAS 38561-76-1), (CAS 25059-80-7), (CAS 67338-65-2) |
| (B5.4) | Benfluralin, | (CAS 1861-40-1) |
| (B5.5) | Bentazone, | (CAS 25057-89-0), (CAS 50723-80-3) |
| (B5.6) | Benzobicyclon, | (CAS 156963-66-5) |
| (B5.7) | Bixlozone | (CAS 81777-95-9) |
| (B5.8) | Bromofenoxim, | (CAS 13181-17-4) |
| (B5.9) | Butralin, | (CAS 33629-47-9) |
| (B5.10) | Chloridazon/Pyrazon, | (CAS 1698-60-8) |
| (B5.11) | Chlorthal, | (CAS 2136-79-0), (CAS 1861-32-1), (CAS 887-54-7) |
| (B5.12) | Cinidon-ethyl, | (CAS 142891-20-1) |
| (B5.13) | Cinmethylin, | (CAS 87818-31-3) |

(fortgesetzt)

| | | |
|---|---|---|
| (B5.14) | Clomazone, | (CAS 81777-89-1) |
| (B5.15) | Cyclopyrimorat | (CAS 499231-24-2) |
| (B5.16) | Dinitramine, | (CAS 29091-05-2) |
| (B5.17) | Diquat, | (CAS 2764-72-9), (CAS 85-00-7), (CAS 4032-26-2) |
| (B5.18) | Dithiopyr, | (CAS 97886-45-8) |
| (B5.19) | Essigsäure, | (CAS 64-19-7) |
| (B5.20) | Ethalfluralin, | (CAS 55283-68-6) |
| (B5.21) | Ethofumesate, | (CAS 26225-79-6) |
| (B5.22) | Flamprop, | (CAS 58667-63-3, (CAS 90134-59-1), (CAS 63782-90-1), (CAS 63729-98-6) |
| (B5.23) | Florpyrauxifen, | (CAS 943832-81-3), (CAS 1390661-72-9) |
| (B5.24) | Flufenpyr, | (CAS 188490-07-5), (CAS 188489-07-8) |
| (B5.25) | Flumiclorac, | (CAS 87547-04-4), (CAS 87546-18-7) |
| (B5.26) | Flumioxazin, | (CAS 103361-09-7) |
| (B5.27) | Fluridone, | (CAS 59756-60-4) |
| (B5.28) | Flurochloridone, | (CAS 61213-25-0) |
| (B5.29) | Flurtamone, | (CAS 96525-23-4) |
| (B5.30) | Fluthiacet-methyl, | (CAS 149253-65-6) |
| (B5.31) | Halauxifen, | (CAS 943832-60-8), (CAS 943831-98-9) |
| (B5.32) | Indanofan, | (CAS 13320-30-1) |
| (B5.33) | Norflurazon, | (CAS 27314-13-2) |
| (B5.34) | Oleinsäure | (CAS 112-80-1) |
| (B5.35) | Oryzalin, | (CAS 19044-88-3) |
| (B5.36) | Oxaziclomefone, | (CAS 153197-14-9) |
| (B5.37) | Paraquat, | (CAS 4685-14-7), (CAS 1910-42-5), (CAS 2074-50-2) |
| (B5.38) | Pelargonsäure, | (CAS 112-05-0) |
| (B5.39) | Pendimethalin, | (CAS 40487-42-1) |
| (B5.40) | Pentoxazone, | (CAS 110956-75-7) |
| (B5.41) | Pyridafol, | (CAS 40020-01-7) |
| (B5.42) | Pyridate, | (CAS 55512-33-9) |
| (B5.43) | Tetflupyrolimet, | (CAS 2053901-33-8) |
| (B5.44) | Thiazopyr, | (CAS 117718-60-2) |
| (B5.45) | Triafamone, | (CAS 874195-61-6) |
| (B5.46) | Trifluralin, | (CAS 1582-09-8) |
| (B5.4 7) | 4-Amino-3-chloro-5-fluoro-6-(7-fluoro-1H-indol-6-yyl) pyridine-2-carbonsäure, | |
| (B5.48) | Cyclopyrimorate, | (CAS 499231-24-2) |
| (B5.49) | Diquat; | (CAS 2764-72-9, CAS 85-00-7, CAS4032-26-2) |
| (B5.50) | Oxaziclomefone, | (CAS 153197-14-9) |
| (B5.51) | Pentanochlor, | (CAS 2307-68-8) |
| (B5.52) | Tebutam, | (CAS 35256-85-0) |
| (B5.53) | Thidiazimin; | (CAS 123249-43-4) |

(B6) für herbizide Wirkstoffe aus der Gruppe der (Het)Arylcarbonsäuren steht, ausgewählt aus

| | | |
|---|---|---|
| (B6.1) | Chloramben, | (CAS 133-90-4), (CAS 1076-46-6), (CAS 53404-16-3), (CAS 7286-84-2), (CAS 25182-03-0), (1954-81-0) |

(fortgesetzt)

| | | |
|---|---|---|
| (B6.2) | Clopyralid, | (CAS 1702-17-6), (CAS 1532-24-7), (CAS 57754-85-5), (CAS 58509-83-4), (CAS 73455-09-1) |
| (B6.3) | Dicamba, | (CAS 1918-00-9), (CAS 1286239-22-2), (CAS 104040-79-1), (CAS 2300-66-5), (CAS 25059-78-3), (CAS 55871-02-8), (CAS 6597-78-0), (CAS 53404-28-7), (CAS 10007-85-9), (CAS 1982-69-0), (53404-29-8), (CAS 56141-00-5) |
| (B6.4) | Fluroxypyr, | (CAS 69377-81-7), (CAS -27-8), (CAS 81406-37-3) |
| (B6.5) | Picloram, | (CAS 1918-02-1), (CAS 55870-98-9), (CAS 36374-99-9), (CAS 26952-20-5), (CAS 14143-55-6), (CAS 55871-00-6), (CAS 2545-60-0), (CAS 35832-11-2), (CAS 6753-47-5), (CAS 82683-78-1) |
| (B6.6) | Quinclorac, | (CAS 84087-01-4), (CAS 84087-48-9), (CAS 84087-33-2) |
| (B6.7) | Quinmerac, | (CAS 90717-03-6) |
| (B6.8) | TBA, | (CAS 50-31-7), (CAS 3426-62-8), (CAS 71750-37-3), (CAS 4559-30-2), (CAS 2078-42-4) |
| (B6.9) | Trichlopyr; | (CAS 55335-06-3), (CAS [64700-56-7), (CAS 1048373-85-8), (CAS 60825-27-6), (CAS 57213-69-1) |

(B7) für herbizide Wirkstoffe aus der Gruppe der organischen Phosphorverbindungen steht, ausgewählt aus

| | | |
|---|---|---|
| (B7.1) | Anilofos, | (CAS 64249-01-0) |
| (B7.2) | Bialaphos, | (CAS 35597-43-4), (CAS 71048-99-2) |
| (B7.3) | Butamifos, | (CAS 36335-67-8) |
| (B7.4) | Glufosinate, | (CAS 51276-47-2), (CAS 35597-44-5), (CAS 77182-82-2), (CAS 70033-13-5) |
| (B7.5) | Glyphosate, | (CAS 1071-83-6), (CAS 69254-40-6), (CAS 34494-04-7), (CAS 38641-94-0), (CAS 40465-66-5), (CAS 39600-42-5), (CAS 70393-85-0), (CAS 81591-81-3) |
| (B7.6) | Piperophos, | (CAS 24151-93-7) |
| (B7.7) | Sulfosate, | (CAS 1591-81-3) |
| (B7.8) | Amiprofos; | (CAS 33857-23-7, CAS 36001-88-4) |

(B8) für herbizide Wirkstoffe aus der Gruppe der Phenylether steht, ausgewählt aus

| | | |
|---|---|---|
| (B8.1) | 2,4-D, | (CAS 94-75-7), (CAS 2307-55-3), (CAS 1929-73-3), (CAS 1320-18-9), (CAS 1928-45-6), (CAS 94-80-4), (CAS 1048373-72-3), (CAS 20940-37-8), (CAS 2008-39-1), (CAS 5742-19-8), (CAS 2212-54-6), (CAS 533-23-3), (CAS 1928-43-4), (CAS 37102-63-9), (CAS 713-15-1), (CAS 25168-26-7), (CAS 94-11-1), (CAS 5742-17-6), (CAS 3766-27-6), (CAS 1917-97-1), (CAS 1928-38-7), (CAS 1928-44-5), (CAS 1917-92-6), (CAS 1928-61-6), (CAS 2702-72-9), (CAS 15146-99-3), (CAS 28685-18-9), (CAS 2646-78-8), (CAS 18584-79-7), (CAS 2569-01-9), (CAS 215655-76-8) |
| (B8.2) | 2,4-DB, | (CAS 94-82-6), (CAS 2758-42-1), (CAS 1320-15-6), (CAS 19480-40-1), (CAS 10433-59-7) |
| (B8.3) | 2,4-DP, | (CAS 120-36-5), (CAS 53404-31-2), (CAS 53404-32-3), (CAS 79270-78-3), (CAS 28631-35-8), (CAS 57153-17-0), (CAS 5746-17-8), (CAS 39104-30-8) |
| (B8.4) | Acifluorfen, | (CAS 50594-66-6), (CAS 50594-67-7), (CAS 62476-59-9) |
| (B8.5) | Aclonifen, | (CAS 74070-46-5) |
| (B8.6) | Bifenox, | (CAS 42576-02-3) |
| (B8.7) | Chlomethoxyfen, | (CAS 32861-85-1) |
| (B8.8) | Clodinafop-propargyl, | (CAS 114420-56-3), (CAS 105512-06-9) |
| (B8.9) | Clomeprop, | (CAS 84496-56-0) |
| (B8.10) | Cyhalofop, | (CAS 122008-78-0), (CAS 122008-85-9) |
| (B8.11) | Diclofop, | (CAS 40843-25-2), (CAS 51338-27-3) |
| (B8.12) | Ethoxyfen, | (CAS 188634-90-4), (CAS 131086-42-5) |
| (B8.13) | Fenoxaprop, | (CAS 95617-09-7), (CAS 113158-40-0), (CAS 71283-80-2) |

(fortgesetzt)

| | | |
|---|---|---|
| (B8.14) | Fluazifop, | (CAS 69335-91-7), (CAS 83066-88-0), (CAS 79241-46-6) |
| (B8.15) | Fluoroglycofen, | (CAS 77501-60-1), (CAS 77501-90-7) |
| (B8.16) | Fomesafen, | (CAS 72178-02-0), (CAS 108731-70-0) |
| (B8.17) | Halosafen, | (CAS 77227-69-1) |
| (B8.18) | Haloxyfop, | (CAS 69806-34-4), (CAS 95977-29-0), (CAS 72619-32-0) |
| (B8.19) | Lactofen, | (CAS 77501-63-4) |
| (B8.20) | MCPA, | (CAS 94-74-6), (CAS 19480-43-4), (CAS 1713-12-8), (CAS 2039-46-5), (CAS 20405-19-0), (CAS 2698-38-6), (CAS 29450-45-1), (CAS 1713-11-7), (CAS 26544-20-7), (CAS 2698-40-0), (CAS 2436-73-9), (CAS 6365-62-4), (CAS 5221-16-9), (CAS 3653-48-3), (CAS 42459-68-7) |
| (B8.21) | MCPB, | (CAS 94-81-5), (CAS 10443-70-6), (CAS 57153-18-1), (CAS 6062-26-6) |
| (B8.22) | Mecoprop, | (CAS 93-65-2), (CAS 32351-70-5), (CAS 1432-14-0), (CAS 71526-69-7), (CAS 28473-03-2), (CAS 2786-19-8), (CAS 1929-86-8), (CAS 19095-88-6), (CAS 53404-61-8), (CAS 16484-77-8) |
| (B8.23) | Metamifop, | (CAS 256412-89-2) |
| (B8.24) | Oxyfluorfen, | (CAS 42874-03-3) |
| (B8.25) | Propaquizafop, | (CAS 111479-05-1) |
| (B8.26) | Quizalofop, | (CAS 76578-12-6), (CAS 76578-14-8), |
| (B8.27) | Quizalofop-p, | (CAS 94051-08-8), (CAS 100646-51-3), (CAS 200509-41-7) |
| (B8.28) | Benzfendizone; | (CAS 158755-95-4) |

(B9) für herbizide Wirkstoffe aus der Gruppe der Pyrimidine steht, ausgewählt aus

| | | |
|---|---|---|
| (B9.1) | Bispyrac-sodium, | (CAS 125401-92-5) |
| (B9.2) | Bromacil, | (CAS 314-40-9), (CAS 53404-19-6), (CAS 69484-12-4) |
| (B9.3) | Butafenacil, | (CAS 134605-64-4) |
| (B9.4) | Lenacil, | (CAS 2164-08-1) |
| (B9.5) | Pyribenzoxim, | (CAS 168088-61-7) |
| (B9.6) | Pyriftalid, | (CAS 135186-78-6) |
| (B9.7) | Pyriminobac, | (CAS 136191-56-5), (CAS 136191-64-5) |
| (B9.8) | Pyrimisulfan, | (CAS 221205-90-9) |
| (B9.9) | Pyrithiobac-sodium, | (CAS 123342-93-8), (CAS 123343-16-8) |
| (B9.10) | Saflufenacil, | (CAS 372137-35-4) |
| (B9.11) | Terbacil, | (CAS 5902-51-2) |
| (B9.12) | Tiafenacil, | (CAS 1220411-29-9) |
| (B9.13) | Trifludimoxazin; | (CAS 1258836-72-4) |
| (B9.14) | Ethyl[3-[2-chloro-4-fluoro-5-(1-methyl-6-trifluoromethyl-2,4-dioxo-1,2,3,4-tetrahydropyrimidin-3-yl)phenoxy]-2-pyridyloxy]acetat; | |

(B10) für herbizide Wirkstoffe aus der Gruppe der (Thio)harnstoffe steht, ausgewählt aus

| | | |
|---|---|---|
| (B10.1) | Chlorobromuron, | (CAS 13360-45-7) |
| (B10.2) | Chlorotoluron, | (CAS 15545-48-9) |
| (B10.3) | Daimuron, | (CAS 42609-52-9) |
| (B10.4) | Dimefuron, | (CAS 34205-21-5) |
| (B10.5) | Diuron, | (CAS 330-54-1) |
| (B10.6) | Diflufenzopyr | (CAS 1957168-02-3) |
| (B10.7) | Fluometuron, | (CAS 2164-17-2) |
| (B10.8) | Isoproturon, | (CAS 34123-59-6) |

(fortgesetzt)

| | | |
|---|---|---|
| (B10.9) | Linuron, | (CAS 330-55-2) |
| (B10.10) | Methabenzthiazuron, | (CAS 18691-97-9) |
| (B10.11) | Metobromuron, | (CAS 3060-89-7) |
| (B10.12) | Metoxuron, | (CAS 19937-59-8) |
| (B10.13) | Monolinuron, | (CAS 1746-81-2) |
| (B10.14) | Neburon, | (CAS 555-37-3) |
| (B10.15) | Siduron, | (CAS 1982-49-6) |
| (B10.16) | Tebuthiuron, | (CAS 34014-18-1) |
| (B10.17) | Fenuron, | (CAS 101-42-8) |
| (B10.18) | Chloroxuron, | (CAS 1982-47-4) |
| (B10.19) | Diflufenzopyr, | (CAS 1957168-02-3, CAS 109293-98-3) |
| (B10.20) | Ethidimuron; | (CAS 30043-49-3) |

(B11) für herbizide Wirkstoffe aus der Gruppe der Triazine steht, ausgewählt aus

| | | |
|---|---|---|
| (B11.1) | Ametryne, | (CAS 834-12-8) |
| (B11.2) | Atrazine, | (CAS 1912-24-9) |
| (B11.3) | Cynazine, | (CAS 21725-46-2) |
| (B11.4) | Dimethametryn, | (CAS 22936-75-0) |
| (B11.5) | Hexazinone, | (CAS 51235-04-2) |
| (B11.6) | Indaziflam, | (CAS 950782-86-2) |
| (B11.7) | Metamitron, | (CAS 41394-05-2) |
| (B11.8) | Metribuzin, | (CAS 21087-64-9) |
| (B11.9) | Prometon, | (CAS 1610-18-0) |
| (B11.10) | Prometryne, | (CAS 7287-19-6) |
| (B 11.11) | Propazine, | (CAS 139-40-2) |
| (B11.12) | Simazine, | (CAS 122-34-9) |
| (B11.13) | Simetryne, | (CAS 1014-70-6) |
| (B11.14) | Terbumeton, | (CAS 33693-04-8) |
| (B11.15) | Terbuthylazine, | (CAS 5915-41-3) |
| (B11.16) | Terbutryne, | (CAS 886-50-0) |
| (B 11.17) | Triaziflam, | (CAS 131475-57-5) |
| (B 11.18) | Trietazine, | (CAS 1912-26-1) |
| (B11.19) | Desmetryne | (CAS 1014-69-3) |

bedeuten.

Die Bezeichnungen der oben aufgelisteten Herbizide (Common name) ist durch die in Klammern aufgeführte "CAS RN" (Chemical Abstract Service Registry Number) (kurz "CAS") ergänzt. Die CAS RN ist eine allgemein gebräuchlichen Referenznummer, die eine eindeutige Zuordnung der bezeichneten Substanzen ermöglicht, da die "CAS RN" u.a. zwischen Isomeren, einschließlich Stereoisomeren, sowie Salzen und Estern unterscheidet. Für Wirkstoffe, die in verschiedenen Formen existieren, ist in der obigen Auflistung jeweils der Name der Neutralverbindung angegeben. Die in Klammern angegeben CAS richten auf diese, sowie auf sämtliche, weiteren bekannten Formen des Wirkstoffs. Im Folgenden wird immer nur die Neutralverbindung genannt und umfasst damit sämtliche existieren Formen wie aufgelistet, es sei denn, eine spezifische Form des Wirkstoffs ist in einem bestimmten Zusammenhang relevant, wie z.B. in nachstehenden Tabellenbeispiele für die biologische Wirksamkeit.

Die erfindungsgemäßen Zusammensetzungen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe der Herbizide, Fungizide, Insektizide, Akarizide, Nematizide und Mitizide und verwandte Stoffe, oder auch Pflanzenschutzmittelwirkstoffe anderer Art (z. B. Resistenzinduktoren), Pflanzenwachstumsregulatoren und/oder im Pflanzenschutz übliche Zusatzstoffe und/oder Formulierungshilfsmittel. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die als Komponente (A) enthaltenen einzelnen herbiziden Wirkstoffe der allgemeinen Formel (I) werden im Folgenden auch als Verbindungen (A), Wirkstoffe (A), Komponenten (A) oder Herbizide (A) bezeichnet. Entsprechend werden die als Komponente (B) enthaltenen einzelnen herbiziden Wirkstoffe im Folgenden auch als Verbindungen (B), Wirkstoffe (B), Komponenten (B) oder Herbizide (B) bezeichnet.

Als vorteilhafte Eigenschaft der erfindungsgemäßen Kombination von Herbiziden (A) und (B) zeigt sich, dass Wirkstoffe (A) und (B) miteinander kompatibel sind, d. h. sie lassen sich gemeinsam anwenden, ohne dass wesentliche chemische Unverträglichkeiten der Wirkstoffe (A) und/oder (B) auftreten, die zu einer Zersetzung eines oder mehrerer Wirkstoffe führen. Damit wird eine Reduzierung des Wirkstoffgehalts in Formulierungen oder Spritzbrühen vermieden. Die günstige Kompatibilität erstreckt sich auch auf die biologischen Eigenschaften der Wirkstoffe bei der kombinierten Anwendung. So werden antagonistische Effekte bei der Kontrolle von Schadpflanzen mit den erfindungsgemäßen Wirkstoff-Kombinationen in der Regel nicht beobachtet. Damit sind die Wirkstoffe (A) und (B) besonders geeignet, gemeinsam oder zusätzlich mit weiteren Pflanzenschutzmittelwirkstoffen oder Agrochemikalien angewendet zu werden. Die ermöglichte kombinierte Anwendung erlaubt die Nutzung vorteilhafter Effekte, wie beispielsweise die Ausweitung des Spektrums der zu kontrollierenden oder zu bekämpfenden Schadpflanzen bei einer Anwendung, die Reduzierung der Aufwandmenge der einzelnen Herbizide (A) bzw. (B) im Vergleich zur jeweiligen Aufwandmenge des betreffenden Herbizids bei der Einzelapplikation. Damit kann das Abbauverhalten der Wirkstoffe beeinflusst und günstigere Bedingungen für den Nachbau von Kulturpflanzen erreicht werden. Ein weiterer Vorteil ist darin zu sehen, dass die Entstehung von Resistenzen der Schadpflanzen gegen die Wirkstoffe durch Kombination von Wirkstoffen mit unterschiedlichem Wirkungsmechanismus oft wesentlich verringert werden oder vermieden werden kann.

Insbesondere treten überraschenderweise bei der kombinierten Anwendung der Wirkstoffe (A) und (B) bei einer größeren Zahl wirtschaftlich wichtiger Schadpflanzen überadditive (= synergistische) Effekte auf. Dabei ist die Wirkung in der Kombination stärker als die zu erwartende Summe der Wirkungen der eingesetzten Einzelherbizide. Die synergistischen Effekte erlauben eine weitere Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gewünscht, um landwirtschaftliche Kulturen von unerwünschten Konkurrenzpflanzen freizuhalten und damit die Erträge qualitativ und quantitativ zu sichern und/oder zu erhöhen. Der technische Standard wird durch die neuen Kombinationen hinsichtlich der beschriebenen Eigenschaften deutlich übertroffen.

Die synergistischen Wirkungen werden bei gemeinsamer Ausbringung der Wirkstoffe (A) und (B) beobachtet, können jedoch auch häufig bei zeitlich versetzter Anwendung (Splitting) auftreten. Möglich ist auch die Anwendung der Herbizide (A) bzw. (B) oder der herbiziden Zusammensetzung (A) und (B) in mehreren Portionen (Sequenzanwendung). Beispielsweise kann nach einer oder mehreren Anwendungen im Vorauflauf eine Nachauflauf-Applikation erfolgen, oder nach einer frühen Nachauflaufanwendung kann eine Applikationen im mittleren oder späten Nachauflauf erfolgen. Bevorzugt ist dabei die simultane oder zeitnahe Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In das System der Anwendung können auch andere Pflanzenschutzmittel, wie beispielsweise die erwähnten anderen Wirkstoffe (andere Herbizide, Fungizide, Insektizide, Akarizide etc.) und/oder verschiedene Hilfsstoffe, Adjuvantien und/oder Düngergaben, integriert werden.

Unter Anwendung im Vorauflauf- oder Nachauflaufverfahren ist je nach dem Zusammenhang, in dem die Bezeichnungen verwendet werden, die Anwendung der Wirkstoffe vor dem bzw. nach dem obererdig sichtbaren Erscheinen der Schadpflanzen zu verstehen oder die Anwendung der Wirkstoffe gegen die Schadpflanzen vor Auflauf der Kulturpflanzen bzw. nach Auflauf der Kulturpflanzen zu verstehen.

In der Formel (I) für Verbindungen der herbiziden Wirkstoffe (A) und allen nachfolgenden Formeln gelten folgende Definitionen:

Alkyl bedeutet gesättigte, geradkettige oder verzweigte Kohlenwasserstoffreste mit der jeweils angegebenen Anzahl von Kohlenstoffatomen, z.B. $C_1$-$C_6$-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl,1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl.

Durch Halogen substitiertes Alkyl bedeutet geradkettige oder verzweigte Alkylgruppen, wobei in diesen Gruppen teilweise oder vollständig die Wasserstoffatome durch Halogenatome ersetzt sein können, z.B. $C_1$-$C_2$-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor,2-difluorethyl, 2,2-Dichlor-2-fluorethyl, 2,2,2-Trichlorethyl, Pentafluorethyl und

1,1,1-Trifluorprop-2-yl.

Alkenyl bedeutet ungesättigte, geradkettige oder verzweigte Kohlenwasserstoffreste mit der jeweils angegebenen Anzahl von Kohlenstoffatomen und einer Doppelbindung in einer beliebigen Position, z.B. $C_2$-$C_6$-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Alkinyl bedeutet geradkettige oder verzweigte Kohlenwasserstoffreste mit der jeweils angegebenen Anzahl von Kohlenstoffatomen und einer Dreifachbindung in einer beliebigen Position, z.B. $C_2$-$C_6$-Alkinyl wie Ethinyl, 1-Propinyl, 2-Propinyl (oder Propargyl), 1-Butinyl, 2-Butinyl, 3-Butinyl, 1-Methyl-2-propinyl, 1-Pentinyl, 2-Pentinyl, 3-Pentinyl, 4-Pentinyl, 3-Methyl-1-butinyl, 1-Methyl-2-butinyl, 1-Methyl-3-butinyl, 2-Methyl-3-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 3-Methyl-1-pentinyl, 4-Methyl-1-pentinyl, 1-Methyl-2-pentinyl, 4-Methyl-2-pentinyl, 1-Methyl-3-pentinyl, 2-Methyl-3-pentinyl, 1-Methyl-4-pentinyl, 2-Methyl-4-pentinyl, 3-Methyl-4-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl.

Cycloalkyl bedeutet ein carbocyclisches, gesättigtes Ringsystem mit vorzugsweise 3-6 Ring-C-Atomen, z.B. Cyclopropyl, Cyclobutyl, Cyclopentyl oder Cyclohexyl. Im Falle von gegebenenfalls substituiertem Cycloalkyl werden cyclische Systeme mit Substituenten umfasst, wobei auch Substituenten mit einer Doppelbindung am Cycloalkylrest, z. B. eine Alkylidengruppe wie Methyliden, umfasst sind.

Cycloalkenyl bedeutet ein carbocyclisches, nicht aromatisches, partiell ungesättigtes Ringsystem mit 4-6 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl, wobei auch Substituenten mit einer Doppelbindung am Cycloalkenylrest, z. B. eine Alkylidengruppe wie Methyliden, umfasst sind. Im Falle von gegebenenfalls substituiertem Cycloalkenyl gelten die Erläuterungen für substituiertes Cycloalkyl entsprechend.

Alkoxy bedeutet gesättigte, geradkettige oder verzweigte Alkoxyreste mit der jeweils angegebenen Anzahl von Kohlenstoffatomen, z.B. $C_1$-$C_4$-Alkoxy wie Methoxy, Ethoxy, Propoxy, 1-Methylethoxy, Butoxy, 1-Methyl-propoxy, 2-Methylpropoxy und 1,1-Dimethylethoxy,. Durch Halogen substitiertes Alkoxy bedeutet geradkettige oder verzweigte Alkoxyreste mit der jeweils angegebenen Anzahl von Kohlenstoffatomen, wobei in diesen Gruppen teilweise oder vollständig die Wasserstoffatome durch Halogenatome wie vorstehend genannt ersetzt sein können, z.B. $C_1$-$C_2$-Halogenalkoxy wie Chlormethoxy, Brommethoxy, Dichlormethoxy, Trichlormethoxy, Fluormethoxy, Difluormethoxy, Trifluormethoxy, Chlorfluormethoxy, Dichlor-fluormethoxy, Chlordifluormethoxy, 1-Chlorethoxy, 1-Bromethoxy, 1-Fluorethoxy, 2-Fluorethoxy, 2,2-Difluorethoxy, 2,2,2-Trifluorethoxy, 2-Chlor-2-fluorethoxy, 2-Chlor-1,2-difluorethoxy, 2,2-Dichlor-2-fluorethoxy, 2,2,2-Trichlorethoxy, Pentafluor-ethoxy und 1,1,1-Trifluorprop-2-oxy.

Aryl bedeutet ein gegebenenfalls durch 0 - 5 Reste aus der Gruppe Fluor, Chlor, Brom, Iod, Cyano, Hydroxy, ($C_1$- $C_3$)-Alkyl, ($C_1$-$C_3$)-Alkoxy, ($C_3$- $C_4$)-Cycloalkyl, ($C_2$- $C_3$)-Alkenyl oder ($C_2$- $C_3$)-Alkinyl substituiertes Phenyl.

Die Bezeichnung "Halogen" bedeutet Fluor, Chlor, Brom oder Iod. Wird die Bezeichnung für einen Rest verwendet, dann bedeutet "Halogen" ein Fluor-, Chlor-, Brom- oder Iodatom.

Die Verbindungen der Formel (I) können je nach Art und Verknüpfung der Substituenten als Stereoisomere vorliegen. Sind beispielsweise ein oder mehrere asymmetrisch substiuierte Kohlenstoffatome und/oder Sulfoxide vorhanden, so können Enantiomere und Diastereomere auftreten. Stereoisomere lassen sich aus den bei der Herstellung anfallenden Gemischen nach üblichen Trennmethoden, beispielsweise durch chromatographische Trennverfahren, erhalten. Ebenso können Stereoisomere durch Einsatz stereoselektiver Reaktionen unter Verwendung optisch aktiver Ausgangs- und/oder Hilfsstoffe selektiv hergestellt werden.

Die Erfindung betrifft auch alle Stereoisomeren und deren Gemische, die von der Formel (I) umfaßt, jedoch nicht spezifisch definiert sind. Im Folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Je nach Art der oben definierten Substituenten weisen die Verbindungen der Formel (I) saure Eigenschaften auf und können mit anorganischen oder organischen Basen oder mit Metallionen Salze, gegebenenfalls auch innere

Salze oder Addukte bilden. Tragen die Verbindungen der Formel (I) Hydroxy, Carboxy oder andere, saure Eigenschaften induzierende Gruppen, so können diese Verbindungen mit Basen zu Salzen umgesetzt werden.Geeignete Basen sind beispielsweise Hydroxide, Carbonate, Hydrogencarbonate der Alkali- und Erdalkalimetalle, insbesondere die von Natrium, Kalium, Magnesium und Calcium, weiterhin Ammoniak, primäre, sekundäre und teritäre Amine mit ($C_1$-$C_4$-)-Alkyl-Gruppen, Mono-, Di- und Trialkanolamine von ($C_1$-$C_4$)-Alkanolen, Cholin sowie Chlorcholin, sowie organische Amine, wie Trialkylamine, Morpholin, Piperidin oder Pyridin. Diese Salze sind Verbindungen, in denen der acide Wasserstoff durch ein für die Landwirtschaft geeignetes Kation ersetzt wird, beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze, zum Beispiel mit Kationen der Formel $[NRR'R''R''']^+$, worin R bis R‴ jeweils unabhängig voneinander einen organischen Rest, insbesondere Alkyl, Aryl, Aralkyl oder Alkylaryl darstellen. Infrage kommen auch Alkylsulfonium- und Alkylsulfoxoniumsalze, wie ($C_1$-$C_4$)-Trialkylsulfonium- und ($C_1$-$C_4$)-Trialkylsulfoxoniumsalze.

Die Verbindungen der Formel (I) können durch Anlagerung einer geeigneten anorganischen oder organischen Säure, wie beispielsweise Mineralsäuren, wie beispielsweise HCl, HBr, $H_2SO_4$, $H_3PO_4$ oder $HNO_3$, oder organische Säuren, z. B. Carbonsäuren, wie Ameisensäure, Essigsäure, Propionsäure, Oxalsäure, Milchsäure oder Salicylsäure oder Sulfonsäuren, wie zum Beispiel p-Toluolsulfonsäure, an eine basische Gruppe, wie z.B. Amino, Alkylamino, Dialkylamino, Piperidino, Morpholino oder Pyridino, Salze bilden. Diese Salze enthalten dann die konjugierte Base der Säure als Anion.

Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden.

Ist eine Gruppe mehrfach durch Reste substituiert, so bedeutet dies, dass diese Gruppe durch einen oder mehrere gleiche oder verschiedene der genannten Reste substituiert ist.

In allen nachfolgend genannten Formeln haben die Substituenten und Symbole, sofern nicht anders definiert, dieselbe Bedeutung wie unter der allgemeinen Formel (I) der Herbizide (A) beschrieben. Pfeile in einer chemischen Formel bedeuten die Verknüpfungsorte zum restlichen Molekül.

Im Folgenden werden, jeweils für die einzelnen Substituenten der Herbizide (A) gemäß der allgemeinen Formel (I) wie oben dargestellt, bevorzugte, besonders bevorzugte und ganz besonders bevorzugte Bedeutungen beschrieben. Die übrigen Substituenten der Herbizide (A) gemäß der allgemeinen Formel (I), welche nachfolgend nicht genannt werden, weisen die oben genannte Bedeutung auf.

In einer ersten Ausführungsform der vorliegenden Erfindung bedeutet

$R^3$ bevorzugt durch jeweils m Reste aus der Gruppe bestehend aus Fluor und Chlor substituiertes ($C_1$-$C_3$)-Alkyl, ($C_2$-$C_3$)-Alkenyl oder ($C_1$-$C_3$)-Alkoxy bedeutet.

Besonders bevorzugt bedeutet $R^3$ Methyl, Vinyl, Trifluormethyl oder Methoxy.

In einer zweiten Ausführungsform der vorliegenden Erfindung bedeutet

$R^4$ bevorzugt Wasserstoff, oder durch jeweils m Reste aus der Gruppe bestehend aus Fluor, Chlor, Cyano, ($C_1$-$C_4$)-Alkoxy und Phenyl substituiertes ($C_1$-$C_6$)-Alkyl, ($C_3$-$C_6$)-Cycloalkyl, ($C_3$-$C_6$)-CycloaLkyl-($C_1$-$C_6$)-ALkyl, ($C_2$-$C_6$)-Alkenyl oder ($C_2$-$C_6$)-Alkinyl.

Besonders bevorzugt bedeutet $R^4$ Methyl, Ethyl, Chlorethyl, Cyanomethyl, Methoxyethyl oder Allyl.

In einer dritten Ausführungsform der vorliegenden Erfindung steht

Z bevorzugt für die Gruppe Z-1 oder Z13, wobei Z-1 und Z13 die folgende Bedeutung haben:

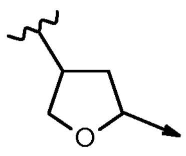

Z-1

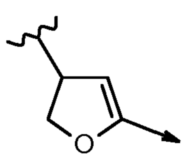

Z-13

worin der Pfeil jeweils für eine Bindung zur Gruppe C=O der Formel (I) steht.

In einer vierten Ausführungsform der vorliegenden Erfindung bedeuten

$X^2$, $X^4$ und $X^6$ bevorzugt jeweils Wasserstoff.

Im Rahmen der vorliegenden Erfindung ist es möglich, die einzelnen bevorzugten, besonders bevorzugten und am meisten bevorzugten Bedeutungen für die Substituenten $R^1$ bis $R^4$, $X^2$ bis $X^6$, Z sowie die Laufzahl m beliebig miteinander zu kombinieren.

Das heißt, dass Herbizide (A) der allgemeinen Formel (I) von der vorliegenden Erfindung umfasst sind, in welchen beispielsweise der Substituent $R^1$ eine bevorzugte Bedeutung aufweist und die Substituenten $R^2$ bis $R^4$ die allgemeine Bedeutung aufweisen oder aber der Substituent $R^2$ eine bevorzugte Bedeutung aufweist, der Substituent $R^3$ eine besonders bevorzugte, bzw. eine ganz besonders bevorzugte, Bedeutung aufweist und die übrigen Substituenten eine allgemeine Bedeutung aufweisen.

Zwei dieser Kombinationen der oben für die Substituenten $R^1$ bis $R^4$, $X^2$ bis $X^6$, Z sowie der Laufzahl m angegebenen Definitionen werden nachfolgend beispielhaft erläutert und jeweils als weitere Ausführungsformen offenbart:
In einer fünften Ausführungsform der vorliegenden Erfindung bedeuten

$R^1$ und $R^2$ jeweils Wasserstoff;

$R^3$ bedeutet durch jeweils m Reste aus der Gruppe bestehend aus Fluor und Chlor substituiertes $(C_1-C_3)$-Alkyl, $(C_2-C_3)$-Alkenyl, oder $(C_1-C_3)$-Alkoxy;

$R^4$ bedeutet Wasserstoff, oder durch jeweils m Reste aus der Gruppe bestehend aus Fluor, Chlor, Cyano, $(C_1-C_4)$-Alkoxy und Phenyl substituiertes $(C_1-C_6)$-Alkyl, $(C_3-C_6)$-Cycloalkyl, $(C_3-C_6)$-Cycloalkyl-$(C_1-C_6)$-Alkyl, $(C_2-C_6)$-Alkenyl oder $(C_2-C_6)$-Alkinyl;

Z steht für die Gruppe Z-1 oder Z-13, wobei Z-1 und Z-13 die folgende Bedeutung haben:

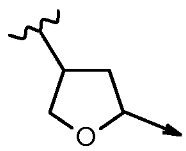
Z-1

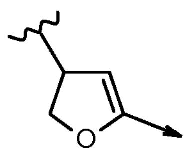
Z-13

worin der Pfeil jeweils für eine Bindung zur Gruppe C=O der Formel (I) steht;

$X^2$, $X^4$ und $X^6$ bedeuten jeweils Wasserstoff;

$X^3$ und $X^5$ unabhängig voneinander Wasserstoff, Fluor, Chlor oder Cyano, oder jeweils durch m Reste aus der Gruppe bestehend aus Fluor und Chlor substituiertes $(C_1-C_3)$-Alkyl, $(C_1-C_3)$-Alkoxy, bedeuten; und

m die Laufzahl beträgt 0, 1, 2 oder 3.

In einer sechsten Ausführungsform der vorliegenden Erfindung bedeuten

$R^1$ und $R^2$ jeweils Wasserstoff;

$R^3$ bedeutet Methyl, Vinyl, Trifluoromethyl oder Methoxy;

$R^4$ bedeutet Methyl, Ethyl, Chlorethyl, Cyanomethyl, Methoxyethyl oder Allyl;

Z steht für die Gruppe Z-1 oder Z-13, wobei Z-1 und Z-13 die folgende Bedeutung haben:

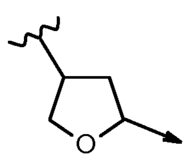
Z-1

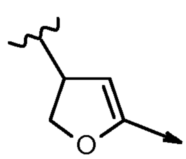
Z-13

worin der Pfeil jeweils für eine Bindung zur Gruppe C=O der Formel (I) steht;

$X^2$, $X^4$ und $X^6$ bedeuten jeweils Wasserstoff;

$X^3$ und $X^5$ unabhängig voneinander Wasserstoff, Fluor, Chlor oder Cyano, oder jeweils durch m Reste aus der Gruppe bestehend aus Fluor und Chlor substituiertes $(C_1-C_3)$-Alkyl, $(C_1-C_3)$-Alkoxy, bedeuten; und

m die Laufzahl beträgt 0, 1, 2 oder 3.

In einer siebten Ausführungsform der vorliegenden Erfindung enthält die herbizide Zusammensetzung neben mindestens einer Komponente (B) wie oben definiert bevorzugt (A) eine oder mehrere Verbindungen [Komponente (A)] der allgemeinen Formel (I) oder deren agrochemisch verträglichen Salze [Herbizide (A)] gemäß Tabellen 1a und 1b.

Tabelle 1a: Bevorzugte Verbindungen der Formel (I) (Herbizid (A)):

| Verbindungs-Nr. | $X^3$ | $X^5$ | $R^3$ | $R^4$ | Z | Kommentar |
|---|---|---|---|---|---|---|
| A1 | Cl | Cl | $OCH_3$ | $CH_3$ | Z-1 | Z-1 mit Konfiguration 2,4-cis |
| A2 | Cl | Cl | $CH=CH_2$ | $CH_3$ | Z-1 | Z-1 mit Konfiguration 2,4-cis |
| A3 | F | F | (S) - $CH=CH_2$ | $CH_3$ | Z-1 | Z-1 mit Konfiguration 2,4-cis; 2 Diastereomere |
| A4 | F | H | $CH_3$ | $CH(CH_3)_2$ | Z-1 | Z-1 mit Konfiguration 2,4-cis |
| A5 | F | F | (S) - $CH=CH_2$ | $CH_3$ | Z-13 | Z-13 mit (3R)-Konfiguration |
| A6 | F | F | (R) - $CH_3$ | $CH_3$ | Z-13 | Z-13 mit (3R)-Konfiguration |

Tabelle 1b: IUPAC Namen sowie die Strukturformeln der bevorzugten Verbindungen der Formel (I) (Herbizid (A))

| Verbindungs-Nr. | IUPAC Name | Strukturformel |
|---|---|---|
| A1 | Methyl rel-(2R,4R)-4-[[3-(3,5-dichlorophenyl)-5-methoxy-4H-isoxazole-5-carbonyl] amino] tetrahydrofuran-2-carboxylate | 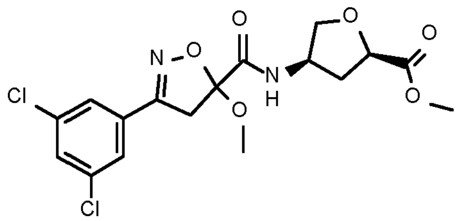 rel-(2R,4R) |
| A2 | Methyl rel-(2R,4R)-4-[[3-(3,5-dichlorophenyl)-5-vinyl-4H-isoxazole- 5-carbonyl] amino] tetrahydrofuran-2-carboxylate | 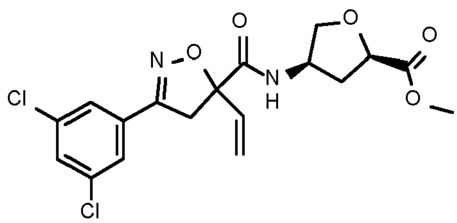 rel-(2R,4R) |

(fortgesetzt)

| Verbindungs-Nr. | IUPAC Name | Strukturformel |
|---|---|---|
| A3 | Methyl-rel-(2R,4R)-4-[[(5S)-3-(3,5-difluorophenyl)-5-vinyl-4H-isoxazole- 5-carbonyl] amino]tetrahydrofuran-2-carboxylate | 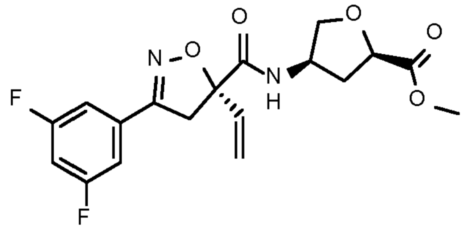 rel-(2R,4R) |
| A4 | Isopropyl rel-(2R,4R)-4-[[3-(3-fluorophenyl)-5-methyl-4H-isoxazole-5-carbonyl]amino] tetrahydrofuran-2-carboxylate | 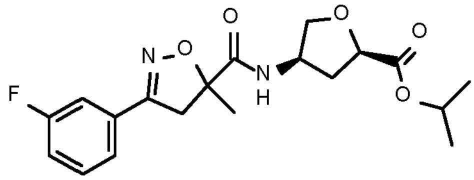 rel-(2R,4R) |
| A5 | Methyl (3R)-3-[[(5S)-3-(3,5-difluorophenyl)-5-vinyl-4H-isoxazole-5-carbonyl]amino]-2,3-dihydrofuran-5-carboxylate | 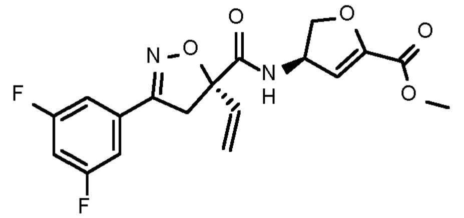 |
| A6 | Methyl (3R)-3-[[(5R)-3-(3,5-difluorophenyl)-5-methyl-4H-isoxazole-5-carbonyl]amino]-2,3-dihydrofuran-5-carboxylat | 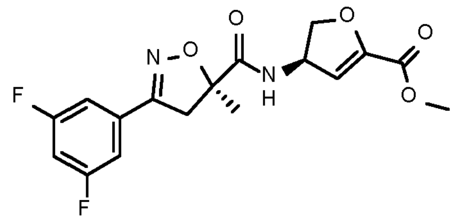 |

Die Bezeichnung rel-(2R,4R) entspricht der IUPAC Nomenklatur und bedeutet, dass beide cis-Konfigurationen der Substituenten in 2- und 4-Position vorliegen

In den Tabellen 1a und 1b sind die Verbindungen durch die chemische Formel der Hauptkomponente bezeichnet, wobei diese Komponente in einer chemischen Reinheit von vorzugsweise mindestens 95 Gewichtsprozent der Verbindung vorliegt. Naturgemäß können die Verbindungen auch mit niedrigeren Reinheiten eingesetzt werden. Insbesondere wenn Nebenkomponenten der Verbindungen überwiegend oder ganz aus Stereoisomeren der jeweiligen Verbindungen (A) bestehen, werden bei der Anwendung Wirksamkeiten erreicht. Bevorzugt sind als Herbizide (A) deshalb auch Mischungen von zwei oder mehreren erfindungsgemäßen Verbindungen (A)

Wenn in den Tabellen 1a und 1b die stereochemische Orientierung an einem C-Atom definiert ist, so handelt es sich bei der Hauptkomponente der Verbindung um ein Stereoisomer oder Stereoisomerengemisch, das an dem bezeichneten C-Atom die R- oder S-Konfiguration aufweist.

Wenn keine Stereochemie definiert ist, so handelt es sich um ein Racemat. Sind mehrere Stereozentren vorhanden und jeweils die Konfiguration mit R oder S bezeichnet, handelt es sich um Verbindungen mit der genannten Stereochemie an den bezeichneten Zentren.

Ist bei mehreren Zentren keine R oder S Konfiguration angegeben, handelt es sich um racemische Gemische, d. h. darin enthaltene spiegelbildliche Stereoisomere (Enantiomere eines Enantiomerenpaars) sind in gleichen Anteilen im Gemisch enthalten. Wenn nicht näher angegeben, sind in den Tabellen 1a und 1b bei racemischen Verbindungen

(A) mit mehreren Stereozentren die diastereomeren Komponenten näherungsweise in gleichen Anteilen enthalten. Für die praktische Anwendung kommen aber bei racemischen Verbindungen mit mehreren Stereozentren Gemische von Diastereomeren mit unterschiedlichen Anteilen der diastereomeren Komponenten vor.

Bevorzugt sind dabei auch die jeweils aufgeführten Verbindungen
in einer stereochemischen Reinheit von 60 bis 100 %, vorzugsweise 70-100 %, insbesondere 80 bis 100 %.

Bevorzugt sind auch die aufgeführten Gemische von stereoisomeren Verbindungen (A).

Die Verbindungen der Formel (I) sind aus der nicht-vorveröffentlichten Anmeldung mit dem Aktenzeichen PCT/EP2018/065333 bekannt und können nach den dort beschriebenen Verfahren hergestellt werden.

Die Aufwandmengen der Herbizide (A) liegen im Bereich von 0,01 bis 2000 g Aktivsubstanz pro Hektar (im folgenden g a.i./ha), vorzugsweise 0,02 bis 1000 g a.i./ha, insbesondere 0,5 bis 750 g a.i./ha). In den erfindungsgemäßen Kombinationen werden im Rahmen der genannten Aufwandmengen im Vergleich zur Einzelapplikation meist niedrigere Aufwandmengen des jeweiligen Wirkstoffs benötigt, vorzugsweise 0,01 bis 1000 g a.i./ha, insbesondere 0,02 bis 500 g a.i./ha, und am meisten bevorzugt 5 bis 250 g a.i./ha.

Als Kombinationspartner (B) [= Komponente (B) bzw. Herbizide (B)] sind grundsätzliche alle Wirkstoffe der Untergruppen (B1) bis (B11) geeignet, wobei die Bezeichnung der herbiziden Wirkstoffe weitgehend mit dem "common name" (in der englischen Schreibweise) nach der Referenzstelle "The Pesticide Manual" 14th Ed., British Crop Protection Council 2006, abgekürzt "PM" bzw. dem chemischen Namen gemäß der üblichen Nomenklaturen (IUPAC oder Chemical Abstracts) erfolgt.

Einige Herbizide (B) haben sich jedoch überraschenderweise als besonders gute Kombinationspartner erwiesen. Im Folgenden sind die bevorzugten, besonders bevorzugten und am meisten bevorzugten Herbizide (B) als weitere Ausführungsformen der vorliegenden Erfindung aufgelistet.

In einer achten Ausführungsform der vorliegenden Erfindung sind die herbiziden Wirkstoffe (B1) bevorzugt:

| | |
|---|---|
| (B1.2) | Bicyclopyrone, |
| (B1.7) | Mesotrione, |
| (B1.8) | Pinoxaden, |
| (B1.10) | Sethoxydim, |
| (B 1.11) | Sulcotrione, |
| (B1.14) | Tembotrione und |
| (B1.16) | Tralkoxydim. |

Besonders bevorzugt sind die herbiziden Wirkstoffe

| | |
|---|---|
| (B1.7) | Mesotrione und |
| (B1.8) | Pinoxaden. |

In einer neunten Ausführungsform der vorliegenden Erfindung sind die herbiziden Wirkstoffe (B2) bevorzugt:

| | |
|---|---|
| (B2.3) | Amidosulfuron, |
| (B2.4) | Asulam, |
| (B2.6) | Beflubutamid, |
| (B2.10) | Chlorimuron, |
| (B2.12) | Chlorsulfuron, |
| (B2.14) | Cloransulam, |
| (B2.17) | Diclosulam, |
| (B2.18) | Diflufenican, |
| (B2.23) | Ethoxysulfuron, |
| (B2.24) | Flazasulfuron, |
| (B2.25) | Florasulam, |
| (B2.26) | Flucarbazone, |
| (B2.28) | Flufenacet, |
| (B2.29) | Flumetsulam, |
| (B2.30) | Flupyrsulfuron, |
| (B2.34) | Iodosulfuron, |

(fortgesetzt)

(B2.37) Mesosulfuron,
(B2.40) Metolachlor,
(B2.41) Metosulam,
(B2.42) Metsulfuron,
(B2.46) Penoxsulam,
(B2.49) Picolinafen,
(B2.56) Propoxycarbazone,
(B2.59) Prosulfocarb,
(B2.60) Prosulfuron,
(B2.62) Pyroxsulam,
(B2.63) Rimsulfuron,
(B2.64) S-metolachlor,
(B2.65) Sulfometuron,
(B2.66) Sulfosulfuron,
(B2.68) Thiencarbazone,
(B2.69) Thifensulfuron,
(B2.72) Tribenuron,
(B2.76) Esprocarb,
(B2.78) Tri-allate.

Besonders bevorzugt sind

(B2.18) Diflufenican,
(B2.25) Florasulam,
(B2.28) Flufenacet,
(B2.37) Mesosulfuron
(B2.40) Metolachlor
(B2.63) Rimsulfuron und
(B2.68) Thiencarbazone

In einer zehnten Ausführungsform der vorliegenden Erfindung sind die herbiziden Wirkstoffe (B3) bevorzugt

(B3.1) Bromoxynil und
(B3.4) Ioxynil.

In einer elften Ausführungsform der vorliegenden Erfindung sind die herbiziden Wirkstoffe (B4) bevorzugt:

(B4.2) Amitrole,
(B4.8) Carfentrazone,
(B4.10) Imazamethabenz,
(B4.11) Imazamox,
(B4.12) Imazapic,
(B4.13) Imazapyr,
(B4.15) Imazethapyr,
(B4.17) Isoxaben,
(B4.18) Isoxaflutole,
(B4.21) Pyraflufen,
(B4.22) Pyrasulfotole,
(B4.25) Pyroxasulfone,
(B4.28) Topramezone und
(B4.33) Flupoxam.

Besonders bevorzugt sind

(B4.18) Isoxaflutole,
(B4.22) Pyrasulfotole und
(B4.25) Pyroxasulfone.

In einer zwölften Ausführungsform der vorliegenden Erfindung sind die herbiziden Wirkstoffe (B5) bevorzugt:

(B5.1) Aminocyclopyrachlor,
(B5.2) Aminopyralid,
(B5.3) Benazolin,
(B5.5) Bentazone,
(B5.7) Bixlozone
(B5.12) Cinidon,
(B5.13) Cinmethylin,
(B5.14) Clomazone,
(B5.21) Ethofumesate,
(B5.22) Flamprop,
(B5.23) Florpyrauxifen,
(B5.26) Flumioxazin,
(B5.27) Fluridone,
(B5.28) Flurochloridone,
(B5.29) Flurtamone,
(B5.31) Halauxifen,
(B5.32) Indanofan,
(B5.37) Paraquat,
(B5.38) Pelargonsäure,
(B5.39) Pendimethalin,
(B5.45) Triafamone,
(B5.46) Trifluralin,
(B5.47) 4-Amino-3-chloro-5-fluoro-6-(7-fluoro-1H-indol-6-yyl)pyridine-2-carbonsäure,
(B5.48) Cyclopyrimorate,
(B5.49) Diquat, und
(B5.50) Oxaziclomefone.

Besonders bevorzugt sind

(B5.7) Bixlozone,
(B5.23) Florpyrauxifen,
(B5.31) Halauxifen und
(B5.38) Pelargonsäure.

In einer dreizehnten Ausführungsform der vorliegenden Erfindung sind die herbiziden Wirkstoffe (B6) bevorzugt:

(B6.2) Clopyralid,
(B6.3) Dicamba,
(B6.4) Fluroxypyr und
(B6.5) Picloram.

Besonders bevorzugt sind

(B6.2) Clopyralid,

(fortgesetzt)

(B6.3) Dicamba und
(B6.4) Fluroxypyr.

In einer vierzehnten Ausführungsform der vorliegenden Erfindung sind die herbiziden Wirkstoffe (B7) bevorzugt:

(B7.2) Bialaphos,
(B7.4) Glufosinate,
(B7.5) Glyphosate und
(B7.7) Sulfosate.

Besonders bevorzugt sind

(B7.5) Glyphosate und
(B7.7) Sulfosate.

In einer fünfzehnten Ausführungsform der vorliegenden Erfindung sind die herbiziden Wirkstoffe (B8) bevorzugt:

(B8.1) 2,4-D,
(B8.3) 2,4-DP,
(B8.5) Aclonifen,
(B8.8) Clodinafop,
(B8.11) Diclofop,
(B8.13) Fenoxaprop,
(B8.20) MCPA,
(B8.22) Mecoprop,
(B8.26) Quizalofop und
(B8.27) Quizalofop.

Besonders bevorzugt sind

(B8.1) 2,4-D und
(B8.5) Aclonifen.

In einer sechzehnten Ausführungsform der vorliegenden Erfindung sind die herbiziden Wirkstoffe (B9) bevorzugt:

(B9.10) Saflufenacil,
(B9.11) Terbacil,
(B9.13) Trifludimoxazin und
(B9.14) Ethyl[3-[2-chloro-4-fluoro-5-(1-methyl-6-trifluoromethyl-2,4-dioxo-1,2,3,4-tetrahydropyrimidin-3 - yl) phenoxy]-2-pyridyloxy]acetat.

Am meisten bevorzugt ist (B9.10) Saflufenacil.

In einer siebzehnten Ausführungsform der vorliegenden Erfindung sind die herbiziden Wirkstoffe (B10) bevorzugt:

(B10.1) Chlorobromuron,
(B10.2) Chlorotoluron,
(B10.5) Diuron,
(B10.8) Isoproturon,
(B10.9) Linuron,

(fortgesetzt)

| | |
|---|---|
| (B10.10) | Methabenzthiazuron, |
| (B10.11) | Metobromuron, |
| (B10.12) | Metoxuron und |
| (B10.13) | Monolinuron. |

Besonders bevorzugt ist (B10.5) Diuron und (B10.8) Isoproturon.

In einer achtzehnten Ausführungsform der vorliegenden Erfindung sind die herbiziden Wirkstoffe (B11) bevorzugt:

| | |
|---|---|
| (B11.1) | Ametryne, |
| (B11.2) | Atrazine, |
| (B11.5) | Hexazinone, |
| (B11.6) | Indaziflam, |
| (B11.8) | Metribuzin, |
| (B11.12) | Simazine, |
| (B11.15) | Terbuthylazine und |
| (B11.16) | Terbutryne. |

Besonders bevorzugt sind

| | |
|---|---|
| (B11.5) | Hexazinone, |
| (B11.6) | Indaziflam und |
| (B11.8) | Metribuzin. |

Im Rahmen der vorliegenden Erfindung ist es möglich, die einzelnen bevorzugten, besonders bevorzugten und am meisten Ausführungsformen beliebig miteinander zu kombinieren. Das heißt, dass herbizide Zusammensetzungen enthaltend (A) eine oder mehrere Verbindungen der allgemeinen Formel (I) oder deren agrochemisch verträglichen Salze [Komponente (A)] sowie (B) ein oder mehrere Herbizide [Komponente (B)] ausgewählt aus der Gruppe der herbiziden Wirkstoffe (B1) bis (B11)von der vorliegenden Erfindung umfasst sind, in welchen beliebige offenbarte, bevorzugte, besonders bevorzugte und am meisten bevorzugte Ausführungsformen wie oben aufgeführt miteinander kombiniert werden können.

Einige binäre Zusammensetzungen enthaltend (A) eine oder mehrere herbizid wirksame Verbindungen (A) der allgemeinen Formel (I) oder deren agrochemisch verträglichen Salze [Herbizide (A)] sowie ein Herbizid (B) haben sich überraschenderweise als besonders vorteilhaft erwiesen. Im Folgenden sind die bevorzugten, besonders bevorzugten und am meisten bevorzugten binären Systeme als weitere Ausführungsformen der vorliegenden Erfindung aufgelistet.

In einer neunzehnten Ausführungsform der vorliegenden Erfindung enthält die Zusammensetzung bevorzugt (A) eine Verbindung der allgemeinen Formel (I) oder deren agrochemisch verträglichen Salze [Herbizide (A)]

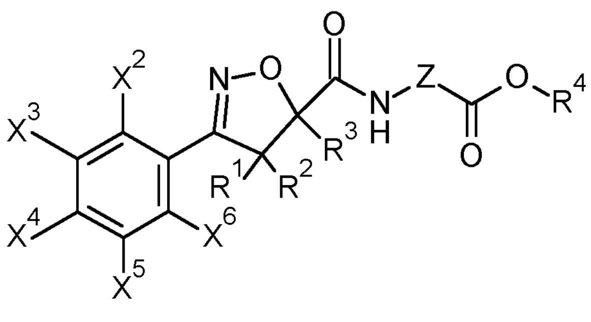

(I)

worin

$R^1$ und $R^2$ jeweils Wasserstoff bedeuten;

$R^3$ durch jeweils m Reste aus der Gruppe bestehend aus Fluor und Chlor substituiertes $(C_1-C_3)$-Alkyl,

($C_2$-$C_3$)-Alkenyl, oder ($C_1$-$C_3$)-Alkoxy bedeutet;

$R^4$ durch jeweils m Reste aus der Gruppe bestehend aus Fluor, Chlor, Cyano, ($C_1$-$C_4$)-Alkoxy und Phenyl substituiertes ($C_1$-$C_6$)-Alkyl, ($C_3$-$C_6$)-Cycloalkyl, ($C_3$-$C_6$)-Cycloalkyl-($C_1$-$C_6$)-Alkyl, ($C_2$-$C_6$)-Alkenyl oder ($C_2$-$C_6$)-Alkinyl bedeutet;

Z für die Gruppe Z-1 oder Z-13 steht, wobei Z1 und Z13 die folgende Bedeutung haben:

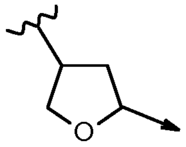
Z-1

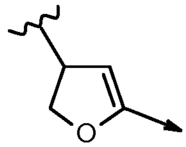
Z-13

worin der Pfeil jeweils für eine Bindung zur Gruppe C=O der Formel (I) steht;

$X^2$, $X^4$ und $X^6$ unabhängig voneinander Wasserstoff bedeuten;

$X^3$ und $X^5$ unabhängig voneinander Wasserstoff, Fluor, Chlor oder Cyano, oder jeweils durch m Reste aus der Gruppe bestehend aus Fluor und Chlor substituiertes ($C_1$-$C_3$)-Alkyl, ($C_1$-$C_3$)-Alkoxy, bedeuten; und

m die Laufzahl 0, 1, 2 oder 3 beträgt,

und
(B) eine Herbizid [Komponente (B)] aus der Gruppe, bestehend aus

(B1.2) Bicyclopyrone,
(B1.7) Mesotrione,
(B1.8) Pinoxaden,
(B1.10) Sethoxydim,
(B1.11) Sulcotrione,
(B1.14) Tembotrione,
(B1.16) Tralkoxydim;

(B2.3) Amidosulfuron,
(B2.4) Asulam,
(B2.6) Beflubutamid,
(B2.10) Chlorimuron,
(B2.12) Chlorsulfuron,
(B2.14) Cloransulam,
(B2.17) Diclosulam,
(B2.18) Diflufenican,
(B2.23) Ethoxysulfuron,
(B2.24) Flazasulfuron,
(B2.25) Florasulam,
(B2.26) Flucarbazone,
(B2.28) Flufenacet,
(B2.29) Flumetsulam,
(B2.30) Flupyrsulfuron,
(B2.34) Iodosulfuron,
(B2.37) Mesosulfuron,
(B2.40) Metolachlor,

(fortgesetzt)

(B2.41) Metosulam,
(B2.42) Metsulfuron,
(B2.46) Penoxsulam,
(B2.49) Picolinafen,
(B2.56) Propoxycarbazone,
(B2.59) Prosulfocarb,
(B2.60) Prosulfuron,
(B2.62) Pyroxsulam,
(B2.63) Rimsulfuron,
(B2.64) S-metolachlor,
(B2.65) Sulfometuron,
(B2.66) Sulfosulfuron,
(B2.68) Thiencarbazone,
(B2.69) Thifensulfuron,
(B2.72) Tribenuron,
(B2.76) Esprocarb,
(B2.78) Tri-allate;

(B3.1) Bromoxynil,
(B3.4) Ioxynil;

(B4.2) Amitrole,
(B4.8) Carfentrazone,
(B4.10) Imazamethabenz,
(B4.11) Imazamox,
(B4.12) Imazapic,
(B4.13) Imazapyr,
(B4.15) Imazethapyr,
(B4.17) Isoxaben,
(B4.18) Isoxaflutole,
(B4.21) Pyraflufen,
(B4.22) Pyrasulfotole,
(B4.25) Pyroxasulfone,
(B4.28) Topramezone,
(B4.33) Flupoxam;

(B5.1) Aminocyclopyrachlor,
(B5.2) Aminopyralid,
(B5.3) Benazolin,
(B5.5) Bentazone,
(B5.7) Bixlozone
(B5.12) Cinidon,
(B5.13) Cinmethylin,
(B5.14) Clomazone,
(B5.21) Ethofumesate,
(B5.22) Flamprop,
(B5.23) Florpyrauxifen,

(fortgesetzt)

| | |
|---|---|
| (B5.26) | Flumioxazin, |
| (B5.27) | Fluridone, |
| (B5.28) | Flurochloridone, |
| (B5.29) | Flurtamone, |
| (B5.31) | Halauxifen, |
| (B5.32) | Indanofan, |
| (B5.37) | Paraquat, |
| (B5.38) | Pelargonsäure, |
| (B5.39) | Pendimethalin, |
| (B5.45) | Triafamone, |
| (B5.46) | Trifluralin; |
| (B5.47) | 4-Amino-3-chloro-5-fluoro-6-(7-fluoro-1H-indol-6-yyl)pyridine-2-carbonsäure, |
| (B5.48) | Cyclopyrimorate, |
| (B5.49) | Diquat, |
| (B5.50) | Oxaziclomefone; |

| | |
|---|---|
| (B6.2) | Clopyralid, |
| (B6.3) | Dicamba, |
| (B6.4) | Fluroxypyr, |
| (B6.5) | Picloram; |

| | |
|---|---|
| (B7.2) | Bialaphos, |
| (B7.4) | Glufosinate, |
| (B7.5) | Glyphosate, |
| (B7.7) | Sulfosate; |

| | |
|---|---|
| (B8.1) | 2,4-D, |
| (B8.3) | 2,4-DP, |
| (B8.5) | Aclonifen, |
| (B8.8) | Clodinafop, |
| (B8.11) | Diclofop, |
| (B8.13) | Fenoxaprop, |
| (B8.20) | MCPA, |
| (B8.22) | Mecoprop, |
| (B8.26) | Quizalofop, |
| (B8.27) | Quizalofop; |

| | |
|---|---|
| (B9.10) | Saflufenacil, |
| (B9.11) | Terbacil, |
| (B9.13) | Trifludimoxazin; |

| | |
|---|---|
| (B10.1) | Chlorobromuron, |
| (B10.2) | Chlorotoluron, |
| (B10.5) | Diuron, |
| (B10.8) | Isoproturon, |

(fortgesetzt)

| | |
|---|---|
| (B10.9) | Linuron, |
| (B10.10) | Methabenzthiazuron, |
| (B10.11) | Metobromuron, |
| (B10.12) | Metoxuron, |
| (B10.13) | Monolinuron; |

| | |
|---|---|
| (B11.1) | Ametryne, |
| (B11.2) | Atrazine, |
| (B11.5) | Hexazinone, |
| (B11.6) | Indaziflam, |
| (B11.8) | Metribuzin, |
| (B11.12) | Simazine, |
| (B11.15) | Terbuthylazine und |
| (B11.16) | Terbutryne |

bedeutet.

In einer zwanzigsten Ausführungsform der vorliegenden Erfindung enthält die Zusammensetzung bevorzugt (A) eine Verbindung der allgemeinen Formel (I) oder deren agrochemisch verträglichen Salze [Herbizide (A)]

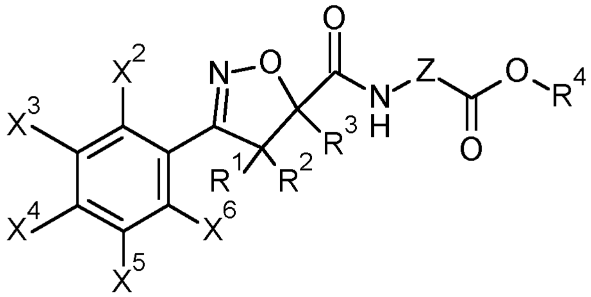

(I)

worin

$R^1$ und $R^2$ jeweils Wasserstoff bedeuten;

$R^3$ Methyl, Vinyl, Trifluoromethyl und Methoxy bedeutet;

$R^4$ Methyl,Ethyl, Clorethyl, Cyanomethyl, Methoxyethyl und Allyl bedeutet;

Z für die Gruppe Z-1 oder Z-13 steht, wobei Z1 und Z13 die folgende Bedeutung haben:

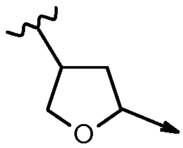

Z-1

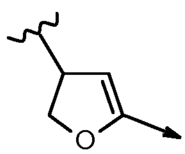

Z-13

worin der Pfeil jeweils für eine Bindung zur Gruppe C=O der Formel (I) steht;

$X^2$, $X^4$ und $X^6$ unabhängig voneinander Wasserstoff bedeuten;

$X^3$ und $X^5$ unabhängig voneinander Wasserstoff, Fluor, Chlor oder Cyano, oder jeweils durch m Reste aus der

Gruppe bestehend aus Fluor und Chlor substituiertes ($C_1$-$C_3$)-Alkyl, ($C_1$-$C_3$)-Alkoxy, bedeuten; und

m die Laufzahl 0, 1, 2 oder 3 beträgt,

und
(B) eine Herbizid [Komponente (B)] aus der Gruppe, bestehend aus

(B1.7) Mesotrione,
(B1.8) Pinoxaden,

(B2.18) Diflufenican,
(B2.25) Florasulam,
(B2.28) Flufenacet,
(B2.37) Mesosulfuron,
(B2.40) Metolachlor,
(B2.63) Rimsulfuron und
(B2.68) Thiencarbazone

(B4.18) Isoxaflutole,
(B4.22) Pyrasulfotole,
(B4.25) Pyroxasulfone,

(B5.7) Bixlozone
(B5.23) Florpyrauxifen,
(B5.38) Pelargonsäure,
(B5.48) Fulminate;

(B6.2) Clopyralid,
(B6.3) Dicamba,
(B6.4) Fluroxypyr,

(B7.5) Glyphosate,
(B7.7) Sulfosate;

(B8.1) 2,4-D,
(B8.5) Aclonifen,

(B9.10) Saflufenacil,

(B10.5) Diuron

(B10.8) Isoproturon,

(fortgesetzt)

| | |
|---|---|
| (B11.5) | Hexazinone, |
| (B11.6) | Indaziflam, |
| (B11.8) | Metribuzin |

bedeutet.

Besonders bevorzugte Zusammensetzungen im Sinne der vorliegenden Erfindung sind die Zusammensetzung wie in den folgenden Tabellen 2.1 - 2.7 aufgeführt:

Tabelle 2.1: Besonders bevorzugte binäre Zusammensetzungen enthaltend (A1)

| Binäre Zusammensetzung | Verbindung (A) | Verbindung (B) |
|---|---|---|
| Z1 | A1 | (B1.7) |
| Z2 | A1 | (B1.8) |
| Z3 | A1 | (B2.18) |
| Z4 | A1 | (B2.25) |
| Z5 | A1 | (B2.28) |
| Z6 | A1 | (B2.37) |
| Z7 | A1 | (B2.40) |
| Z8 | A1 | (B2.63) |
| Z9 | A1 | (B2.68) |
| Z10 | A1 | (B4.18) |
| Z11 | A1 | (B4.22) |
| Z12 | A1 | (B4.25) |
| Z13 | A1 | (B5.7) |
| Z14 | A1 | (B5.23) |
| Z15 | A1 | (B5.31) |
| Z16 | A1 | (B5.38) |
| Z17 | A1 | (B6.2) |
| Z18 | A1 | (B6.3) |
| Z19 | A1 | (B6.4) |
| Z20 | A1 | (B7.5) |
| Z21 | A1 | (B7.7) |
| Z22 | A1 | (B8.1) |
| Z23 | A1 | (B8.5) |
| Z24 | A1 | (B9.10) |
| Z25 | A1 | (B10.5) |
| Z26 | A1 | (B10.8) |
| Z27 | A1 | (B11.5) |
| Z28 | A1 | (B11.6) |
| Z29 | A1 | (B11.8) |

Tabelle 2.2: Besonders bevorzugte binäre Zusammensetzungen enthaltend (A2)

| Binäre Zusammensetzung | Verbindung (A) | Verbindung (B) |
|---|---|---|
| Z30 | A2 | (B1.7) |
| Z31 | A2 | (B1.8) |
| Z32 | A2 | (B2.18) |
| Z33 | A2 | (B2.25) |
| Z34 | A2 | (B2.28) |
| Z35 | A2 | (B2.37) |
| Z36 | A2 | (B2.40) |
| Z37 | A2 | (B2.63) |
| Z38 | A2 | (B2.68) |
| Z39 | A2 | (B4.18) |
| Z40 | A2 | (B4.22) |
| Z41 | A2 | (B4.25) |
| Z42 | A2 | (B5.7) |
| Z43 | A2 | (B5.23) |
| Z44 | A2 | (B5.31) |
| Z45 | A2 | (B5.38) |
| Z46 | A2 | (B6.2) |
| Z47 | A2 | (B6.3) |
| Z48 | A2 | (B6.4) |
| Z49 | A2 | (B7.5) |
| Z50 | A2 | (B7.7) |
| Z51 | A2 | (B8.1) |
| Z52 | A2 | (B8.5) |
| Z53 | A2 | (B9.10) |
| Z54 | A2 | (B10.5) |
| Z55 | A2 | (B10.8) |
| Z56 | A2 | (B11.5) |
| Z57 | A2 | (B11.6) |
| Z58 | A2 | (B11.8) |

Tabelle 2.3: Besonders bevorzugte binäre Zusammensetzungen enthaltend (A3)

| Binäre Zusammensetzung | Verbindung (A) | Verbindung (B) |
|---|---|---|
| Z59 | A3 | (B1.7) |
| Z60 | A3 | (B1.8) |
| Z61 | A3 | (B2.18) |
| Z62 | A3 | (B2.25) |
| Z63 | A3 | (B2.28) |
| Z64 | A3 | (B2.37) |

(fortgesetzt)

| Binäre Zusammensetzung | Verbindung (A) | Verbindung (B) |
|---|---|---|
| Z65 | A3 | (B2.40) |
| Z66 | A3 | (B2.63) |
| Z67 | A3 | (B2.68) |
| Z68 | A3 | (B4.18) |
| Z69 | A3 | (B4.22) |
| Z70 | A3 | (B4.25) |
| Z71 | A3 | (B5.7) |
| Z72 | A3 | (B5.23) |
| Z73 | A3 | (B5.31) |
| Z74 | A3 | (B5.38) |
| Z75 | A3 | (B6.2) |
| Z76 | A3 | (B6.3) |
| Z77 | A3 | (B6.4) |
| Z78 | A3 | (B7.5) |
| Z79 | A3 | (B7.7) |
| Z80 | A3 | (B8.1) |
| Z81 | A3 | (B8.5) |
| Z82 | A3 | (B9.10) |
| Z83 | A3 | (B10.5) |
| Z84 | A3 | (B10.8) |
| Z85 | A3 | (B11.5) |
| Z86 | A3 | (B11.6) |
| Z87 | A3 | (B11.8) |

Tabelle 2.4: Besonders bevorzugte binäre Zusammensetzungen enthaltend (A4)

| Binäre Zusammensetzung | Verbindung (A) | Verbindung (B) |
|---|---|---|
| Z88 | A4 | (B1.7) |
| Z89 | A4 | (B1.8) |
| Z90 | A4 | (B2.18) |
| Z91 | A4 | (B2.25) |
| Z92 | A4 | (B2.28) |
| Z93 | A4 | (B2.37) |
| Z94 | A4 | (B2.40) |
| Z95 | A4 | (B2.63) |
| Z96 | A4 | (B2.68) |
| Z97 | A4 | (B4.18) |
| Z98 | A4 | (B4.22) |

(fortgesetzt)

| Binäre Zusammensetzung | Verbindung (A) | Verbindung (B) |
|---|---|---|
| Z99 | A4 | (B4.25) |
| Z100 | A4 | (B5.7) |
| Z101 | A4 | (B5.23) |
| Z102 | A4 | (B5.31) |
| Z103 | A4 | (B5.38) |
| Z104 | A4 | (B6.2) |
| Z105 | A4 | (B6.3) |
| Z106 | A4 | (B6.4) |
| Z107 | A4 | (B7.5) |
| Z108 | A4 | (B7.7) |
| Z109 | A4 | (B8.1) |
| Z110 | A4 | (B8.5) |
| Z111 | A4 | (B9.10) |
| Z112 | A4 | (B10.5) |
| Z113 | A4 | (B10.8) |
| Z114 | A4 | (B11.5) |
| Z115 | A4 | (B11.6) |
| Z116 | A4 | (B11.8) |

Tabelle 2.5: Besonders bevorzugte binäre Zusammensetzungen enthaltend (A5)

| Binäre Zusammensetzung | Verbindung (A) | Verbindung (B) |
|---|---|---|
| Z117 | A5 | (B1.7) |
| Z118 | A5 | (B1.8) |
| Z119 | A5 | (B2.18) |
| Z120 | A5 | (B2.25) |
| Z121 | A5 | (B2.28) |
| Z122 | A5 | (B2.37) |
| Z123 | A5 | (B2.40) |
| Z124 | A5 | (B2.63) |
| Z125 | A5 | (B2.68) |
| Z126 | A5 | (B4.18) |
| Z127 | A5 | (B4.22) |
| Z128 | A5 | (B4.25) |
| Z129 | A5 | (B5.7) |
| Z130 | A5 | (B5.23) |
| Z131 | A5 | (B5.31) |
| Z132 | A5 | (B5.38) |

(fortgesetzt)

| Binäre Zusammensetzung | Verbindung (A) | Verbindung (B) |
|---|---|---|
| Z133 | A5 | (B6.2) |
| Z134 | A5 | (B6.3) |
| Z135 | A5 | (B6.4) |
| Z136 | A5 | (B7.5) |
| Z137 | A5 | (B7.7) |
| Z138 | A5 | (B8.1) |
| Z139 | A5 | (B8.5) |
| Z140 | A5 | (B9.10) |
| Z141 | A5 | (B10.5) |
| Z142 | A5 | (B10.8) |
| Z143 | A5 | (B11.5) |
| Z144 | A5 | (B11.6) |
| Z145 | A5 | (B11.8) |

Tabelle 2.6: Besonders bevorzugte binäre Zusammensetzungen enthaltend (A6)

| Binäre Zusammensetzung | Verbindung (A) | Verbindung (B) |
|---|---|---|
| Z146 | A6 | (B1.7) |
| Z147 | A6 | (B1.8) |
| Z148 | A6 | (B2.18) |
| Z149 | A6 | (B2.25) |
| Z150 | A6 | (B2.28) |
| Z151 | A6 | (B2.37) |
| Z152 | A6 | (B2.40) |
| Z153 | A6 | (B2.63) |
| Z154 | A6 | (B2.68) |
| Z155 | A6 | (B4.18) |
| Z156 | A6 | (B4.22) |
| Z157 | A6 | (B4.25) |
| Z158 | A6 | (B5.7) |
| Z159 | A6 | (B5.23) |
| Z160 | A6 | (B5.31) |
| Z161 | A6 | (B5.38) |
| Z162 | A6 | (B6.2) |
| Z163 | A6 | (B6.3) |
| Z164 | A6 | (B6.4) |
| Z165 | A6 | (B7.5) |
| Z166 | A6 | (B7.7) |

(fortgesetzt)

| Binäre Zusammensetzung | Verbindung (A) | Verbindung (B) |
|---|---|---|
| Z167 | A6 | (B8.1) |
| Z168 | A6 | (B8.5) |
| Z169 | A6 | (B9.10) |
| Z170 | A6 | (B10.5) |
| Z171 | A6 | (B10.8) |
| Z172 | A6 | (B11.5) |
| Z173 | A6 | (B11.6) |
| Z174 | A6 | (B11.8) |

Weiterhin können die erfindungsgemäßen Kombinationen zusammen mit anderen Wirkstoffen wie die erwähnten Wirkstoffe (Herbizide, Fungizide, Insektizide, Akarizide etc.) und/oder Pflanzenwachstumsregulatoren oder Hilfstoffe aus der Gruppe der im Pflanzenschutz üblichen Zusatzstoffe, wie Adjuvantien und Formulierungshilfsmittel, eingesetzt werden. Die Kombination der Pflanzenschutzmittelwirkstoffe, welche die Wirkstoffe (A) und (B) und gegebenenfalls weitere Wirkstoffe enthalten, werden hier kurz als "Herbizid-Kombination" bezeichnet. Deren Anwendungsformen wie Formulierungen oder Tankmischungen stellen herbizide Mittel (Zusammensetzungen) dar.

Gegenstand der Erfindung sind deshalb auch die herbiziden Mittel, welche die erfindungsgemäßen Wirkstoffkombinationen mit im Pflanzenschutz üblichen Zusatzstoffen, wie Adjuvantien und Formulierungshilfsmitteln, und gegebenenfalls weiteren Pflanzenschutzmittelwirkstoffen enthalten.

Gegenstand der Erfindung ist auch die Verwendung der bzw. das Anwendungsverfahren unter Verwendung der erfindungsgemäßen Wirkstoffkombinationen als Herbizide und Pflanzenwachstumsregulatoren, vorzugsweise als Herbizide und Pflanzenwachstumsregulatoren mit einem synergistisch wirksamen Gehalt an der jeweils enthaltenen Wirkstoffkombination.

Die Aufwandmengen der Herbizide (B) sind im Prinzip bekannt und liegen in der Regel im Bereich von 0,01 bis 4000 g a.i./ha, vorzugsweise im Bereich von 0,02 bis 2000 g a.i./ha, insbesondere 1 bis 2000 g a.i./ha. Für den Wirkstoff Pelargonsäure (B5.38) aus der Gruppe (B5) liegt die Aufwandmenge im Bereich von 1 bis 100.000 g a.i./ha.

In den erfindungsgemäßen Mischungen werden im Rahmen der genannten Aufwandmengen im Vergleich zur Einzelapplikation in der Regel niedrigere Aufwandmengen des jeweiligen Wirkstoffs benötigt.

Für die Wirkstoffe aus der Gruppe (B1) ist die Aufwandmenge vorzugsweise im Bereich von 5 bis 250 g a.i./ha, insbesondere im Bereich von 5 bis 150 g/ha, und am meisten bevorzugt im Bereich von 5 bis 60 g a.i./ha.

Für die Wirkstoffe aus der Gruppe (B2) ist die Aufwandmenge vorzugsweise im Bereich von 1 bis 4000 g a.i./ha, insbesondere im Bereich von 1 bis 2000 g a.i./ha, und am meisten bevorzugt im Bereich von 1 bis 400 g a.i./ha.

Für den Wirkstoff aus der Gruppe (B3) ist die Aufwandmenge vorzugsweise im Bereich von 10 bis 1000 g a.i. /ha, insbesondere im Bereich von 10 bis 500 g a.i./ha, und am meisten bevorzugt im Bereich von 10 bis 300 g a.i./ha.

Für den Wirkstoff aus der Gruppe (B4) ist die Aufwandmenge vorzugsweise im Bereich von 1 bis 700 g a.i. /ha, insbesondere im Bereich von 1 bis 400 g a.i./ha, und am meisten bevorzugt im Bereich von 1 bis 200 g a.i./ha.

Für den Wirkstoff aus der Gruppe (B5), ausgenommen Pelargonsäure (B5.38), ist die Aufwandmenge vorzugsweise im Bereich von 1 bis 2400 g a.i. /ha, insbesondere im Bereich von 1 bis 1200 g a.i./ha, und am meisten bevorzugt im Bereich von 1 bis 400 g a.i./ha. Für Pelargonsäure (B.5.38) ist die Aufwandmenge vorzugsweise 1 bis 100.000 g a.i/ha, weiter bevorzugt 1 bis 40.000 g a.i./ha und insbesondere im Bereich von 1 bis 30.000 g a.i./ha.

Für den Wirkstoff aus der Gruppe (B6) ist die Aufwandmenge vorzugsweise im Bereich von 10 bis 1000 g a.i. /ha, insbesondere im Bereich von 10 bis 600 g a.i./ha.

Für den Wirkstoff aus der Gruppe (B7) ist die Aufwandmenge vorzugsweise im Bereich von 20 bis 3500 g a.i. /ha, insbesondere im Bereich von 20 bis 2500 g a.i./ha, und am meisten bevorzugt im Bereich von 20 bis 2000 g a.i./ha.

Für den Wirkstoff aus der Gruppe (B8) ist die Aufwandmenge vorzugsweise im Bereich von 5 bis 1500 g a.i. /ha, insbesondere im Bereich von 5 bis 1000 g a.i./ha und am meisten bevorzugt im Bereich von 5 bis 900 g a.i./ha.

Für den Wirkstoff aus der Gruppe (B9) ist die Aufwandmenge vorzugsweise im Bereich von 2 bis 2000 g a.i. /ha, insbesondere im Bereich von 2 bis 1000 g a.i./ha, mehr bevorzugt im Bereich von 2 bis 200 g a.i./ha, und am meisten bevorzugt im Bereich von 2 bis 50 g a.i./ha.

Für den Wirkstoff aus der Gruppe (B10) ist die Aufwandmenge vorzugsweise im Bereich von 20 bis 3500 g a.i. /ha, insbesondere im Bereich von 20 bis 2000 g a.i./ha.

Für den Wirkstoff aus der Gruppe (B11) ist die Aufwandmenge vorzugsweise im Bereich von 25 bis 3000 g a.i.

/ha, insbesondere im Bereich von 25 bis 2500 g a.i./ha, und am meisten bevorzugt im Bereich von 25 bis 2000 g a.i./ha.

Die Mengenverhältnisse (A):(B) bezogen auf das Gewicht liegen in Abhängigkeit von den wirksamen Aufwandmengen in der Regel im Bereich von 1:100000 bis 2000:1, vorzugsweise 1:40000 bis 750:1, insbesondere im Bereich von 1:15000 bis 500:1 und noch weiter bevorzugt im Bereich von 1:300 bis 400:1.

Für die Wirkstoffe aus den Gruppen (B1) bis (B11) sind die bevorzugten Gewichtsverhältnisse (A):(B) wie folgt:

(A):(B1) vorzugsweise im Bereich von 30:1 bis 1:30, insbesondere 15:1 bis 1:15;

(A):(B2) vorzugsweise im Bereich von 400:1 bis 1:400, insbesondere 200:1 bis 1:200;

(A):(B3) vorzugsweise im Bereich von 30:1 bis 1:30, insbesondere 15:1 bis 1:15;

(A):(B4) vorzugsweise im Bereich von 300:1 bis 1:300, insbesondere 150:1 bis 1:150;

(A):(B5) vorzugsweise im Bereich von 400:1 bis 1:300 , insbesondere 300:1 bis 1:150;

(A):(B6) vorzugsweise im Bereich von 60:1 bis 1:60, insbesondere 30:1 bis 1:30;

(A):(B7) vorzugsweise im Bereich von 10:1 bis 1:200, insbesondere 1:1 bis 1:100;

(A):(B8) vorzugsweise im Bereich von 30:1 bis 1:300, insbesondere 10:1 bis 1:80;

(A):(B9) vorzugsweise im Bereich von 80:1 bis 1:200, insbesondere 40:1 bis 1:100;

(A):(B10) vorzugsweise im Bereich von 10:1 bis 1:300, insbesondere 3:1 bis 1: 150;

(A):(B11) vorzugsweise im Bereich von 30:1 bis 1:300, insbesondere 15:1 bis 1:150.

Die erfindungsgemäßen herbiziden Zusammensetzungen können auch mit weiteren Herbiziden und Pflanzenwachstumsregulatoren kombiniert werden, um beispielsweise das Wirkungsspektrum zu ergänzen. Als Kombinationspartner für die erfindungsgemäßen Verbindungen in Mischungsformulierungen oder im Tank-Mix sind beispielsweise bekannte Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 14th edition, The British Crop Protection Council and the Royal Soc. of Chemistry, 2006, das korrespondierende "e-Pesticide Manual Version 4 (2006)" und dort zitierter Literatur bekannt sind. Weitere Handelsnamen und "common names" sind im "Compendium of Pesticide Common Names" verzeichnet (abfragbar im Internet unter http://www.alanwood.net/pesticides).

Als bekannte Herbizide, die mit den erfindungsgemäßen Verbindungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet) und umfassen stets sämtliche Anwendungsformen wie Säuren, Salze, Ester und Isomere wie Stereoisomere und optische Isomere. Dabei sind eine und zum Teil auch mehrere Anwendungsformen genannt:
2,4-D, Acetochlor, Acifluorfen, Acifluorfen-sodium, Aclonifen, Alachlor, Alloxydim, Alloxydim-sodium, Ametryn, Amicarbazone, Amidosulfuron, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-natrium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuronethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquat-dibromide, Dithiopyr, Diuron, Dymron, EPTC, Esprocarb, Ethalfluralin, Ethametsulfuron-methyl, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop--butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen,

Foramsulfuron, Glufosinate, Glufosinate-ammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Iodosulfuron-methyl-natrium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuron-ethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl, Tritosulfuron, WL 110547, d. h. 5-phenoxy-1-[3-(trifluoromethyl)phenyl]-1H-tetrazole; HOK-201, HOK-202, UBH-509; D-489; LS 82-556; KPP-300; NC-324; NC-330; KH-218; DPX-N8189; SC-0774; TH-547, DOWCO-535; DK-8910; V-53482; PP-600; MBH-001; KIH-9201; ET-751; KIH-6127; KIH-2023 and KIH5996..

Wenn die jeweilige Bezeichnung (common name) mehrere Formen des Wirkstoffes umfasst, ist mit der Bezeichnung die kommerziell erhältliche Form bevorzugt definiert.

Jeder der genannten weiteren Wirkstoffe (= Wirkstoffe (C*), (C1*), (C2*) etc.) kann dann vorzugsweise mit einer der Zweierkombinationen gemäß der vorliegenden Erfinung, nach dem Schema (A)+(B)+(C*) oder auch nach dem Schema (A)+(B)+(C1*)+(C2*) etc. kombiniert werden.

Die Mengenangaben sind Aufwandmengen (g a.i./ha = Gramm Aktivsubstanz pro Hektar) und definieren somit auch die Mengenverhältnisse in einer Koformulierung, einem Pre-mix, einem Tank-mix oder einer sequentiellen Applikation der kombinierten Wirkstoffe.

Die Kombinationen können sowohl im Vorauflaufverfahren als auch Nachauflaufverfahren angewendet werden. Dies gilt sowohl für Vor- und Nachauflauf in Bezug auf die Schadpflanzen also auch bei der selektiven Bekämpfung der Schadpflanzen für den Vor- oder Nachauflauf der Kulturpflanzen. Es kommen dabei auch Mischformen in Frage, z. B. beim Nachauflauf der Kulturpflanzen die Bekämpfung der Schadpflanzen in deren Vor- oder Nachauflaufstadium.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide, Mitizide und verwandte Stoffe.

Fungizid wirksame Verbindungen, die in Kombination mit den erfindungsgemäßen Herbizidkombinationen eingesetzt werden können, sind bevorzugt handelsübliche Wirkstoffe, beispielsweise (analog zu den Herbiziden werden die Verbindungen generell mit ihren Common names bezeichnet, hier in der üblichen englischen Schreibweise):

1) Inhibitoren der Ergosterol-Biosynthese, beispielsweise (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,5R)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol(1.029)(2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluortnethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1-yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol,(1.035)(S)-[3-(4-Chlor-2-fluorphenyl)-5-(2,4-difluorphenyl)-1,2-oxazol-4-yl](pyridin-3-yl)methanol, (1.036) [3-(4-Chlor-2-fluorphenyl)-5-(2,4-difluorphenyl)-1,2-oxazol-4-yl](pyridin-3-y1)methanol, (1.037) 1-({(2R,4S)-2-[2-Chlor-4-(4-chlorphenoxy)phenyl]-4-methyl-1,3-dioxolan-2-yl}methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1-{[3-(2-Chlorphenyl)-2-(2,4-difluorphenyl)oxiran-2-yl]methyl}-1H-1,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat,

(1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,5S)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl]-1-(1H-1,2,4-triazol-1-yl)butan-2-ol, (1.053) 2-[4-(4-Chlorphenoxy)-2-(trifluormethyl)phenyl]-1-(1H-1,2,4-triazol-1-yl)butan-2-ol, (1.054) 2-[4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2-{[3-(2-Chlorphenyl)-2-(2,4-difluorphenyl)oxiran-2-yl]methyl}-2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058)2-{[rel(2R,3S)-3-(2-Chlorphenyl)-2-(2,4-difluorphenyl)oxiran-2-yl]methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1- {[rel(2R,3R)-3-(2-chlorphenyl)-2-(2,4-difluorphenyl)oxiran-2-yl]methyl} -1H-1,2,4-triazol, (1.062) 5-(Allylsulfanyl)-1 - {[rel(2R,3S)-3-(2-chlorphenyl)-2-(2,4-difluorphenyl)oxiran-2-yl]methyl}-1H-1,2,4-triazol, (1.063) N'-(2,5-Dimethyl-4- {[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{[3-(2,2,3,3-tetrafluorpropoxy)phenyl]sulfanyl}phenyl)-N-ethyl-N-methylimidoformamid, (1.066) N'-(2,5-Dimethyl-4-{[3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4- {3-[(2,2,2-trifluorethyl)sulfanyl]phenoxy}phenyl)-N-ethyl-N-methylimidoformamid, (1.069) N'-(2,5-Dimethyl-4- {3-[(2,2,3,3-tetrafluorpropyl)sulfanyl]phenoxy}phenyl)-N-ethyl-N-methylimidofbrmamid, (1.070) N'-(2,5-Dimethyl-4-{3-[(pentafluorethyl)sulfanyl]phenoxy}phenyl)-N-ethyl-N-methylimidofbrmamid, (1.071) N'-(2,5-Dimethyl-4-phenoxyphenyl)-N-ethyl-N-methylimidoformamid, (1.072) N'-(4-{[3-(Difluormethoxy)phenyl]sulfanyl} -2,5-dimethylphenyl)-N-ethyl-N-methylimidoformamid, (1.073) N'-(4-{3-[(Difluormethyl)sulfanyl]phenoxy} -2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl}-N-ethyl-N-methylimidoformamid, (1.077)N'-{5-Brom-6-[(1S)-1-(3,5-difluorphenyl)ethoxy]-2-methylpyridin-3-yl}-N-ethyl-N-methylimidoformamid, (1.078) N'- {5-Brom-6-[(cis-4-isopropylcyclohexyl)oxy]-2-methylpyridin-3-yl} -N-ethyl-N-methylimidoformamid, (1.079) N'- {5-Brom-6-[(trans-4-isopropylcyclohexyl)oxy]-2-methylpyridin-3-yl} -N-ethyl-N-methylimidoformamid, (1.080) N'- {5-Bromo-6-[1-(3,5-difluorphenyl)ethoxy]-2-methylpyridin-3-yl}-N-ethyl-N-methylimidoformamid, (1.081) Mefentrifluconazole, (1.082) Ipfentrifluconazole.

2) Inhibitoren der Atmungskette am Komplex I oder II beispielsweise (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des anti-epimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3 -trimethyl-2,3 - dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1H-pyrazol-4-carboxamid, (2.033) 5,8-Difluor-N-[2-(2-fluor-4-{[4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl-1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.

3) Inhibitoren der Atmungskette am Komplex III, beispielsweise (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Flufenoxystrobin, (3.012) Fluoxastrobin, (3.013) Kresoxim-Methyl, (3.014) Metominostrobin, (3.015) Orysastrobin, (3.016) Picoxystrobin, (3.017) Pyraclostrobin, (3.018) Pyrametostrobin, (3.019) Pyraoxystrobin, (3.020) Trifloxystrobin (3.021) (2E)-2-{2-[({[(1E)-1-(3-{[(E)-1-Fluor-2-phenylvinyl]oxy}phenyl)ethyliden]amino}oxy)methyl]phenyl}-2-(methoxyimino)-N-methylacetamid, (3.022) (2E,3Z)-5-{[1-(4-Chlorphenyl)-lH-pyrazol-3-yl]oxy}-2-(methoxyimino)-N,3-dimethylpent-3-enamid, (3.023) (2R)-2-{2-[(2,5-Dimethylphenoxy)methyl]phenyl}-2-methoxy-N-methylacetamid, (3.024) (2S)-2-{2-[(2,5-Dimethylphenoxy)methyl]phenyl}-2-methoxy-N-methylacetamid, (3.025) (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoat, (3.026) 2-{2-[(2,5-Dimethylphenoxy)methyl]phenyl}-2-methoxy-N-methylacetamid, (3.027) N-(3-Ethyl-3,5,5-trimethylcyclohexyl)-3-formamido-2-hydroxybenzamid, (3.028) (2E,3Z)-5-{[1-(4-Chlor-2-fluorphenyl)-1H-pyrazol-3-yl]oxy}-2-(methoxyimmo)-N,3-dimethylpent-3-enamid, (3.029) Methyl {5-[3-(2,4-dimethylphenyl)-1H-pyrazol-1-yl]-2-methylbenzyl} carbamate.

4) Inhibitoren der Mitose und Zellteilung, beispielsweise (4.001) Carbendazim, (4.002) Diethofencarb, (4.003) Ethaboxam, (4.004) Fluopicolid, (4.005) Pencycuron, (4.006) Thiabendazol, (4.007) Thiophanat-Methyl, (4.008) Zoxamid,, (4.009) 3-Chlor-4-(2,6-difluorphenyl)-6-methyl-5-phenylpyridazin, (4.010) 3-Chlor-5-(4-chlorphenyl)-4-(2,6-difluorphenyl)-6-methylpyridazin, (4.011) 3-Chlor-5-(6-chlorpyridin-3-yl)-6-methyl-4-(2,4,6-trifluorphenyl)pyridazin, (4.012) 4-(2-Brom-4-fluorphenyl)-N-(2,6-difluorphenyl)-1,3-dimethyl-1H-pyrazol-5-amin, (4.013) 4-(2-Brom-4-fluorphenyl)-N-(2-brom-6-fluorphenyl)-1,3-dimethyl-1H-pyrazol-5-amin, (4.014) 4-(2-Brom-4-fluorphenyl)-N-(2-bromphenyl)-1,3-dimethyl-1H-pyrazol-5-amin, (4.015) 4-(2-Brom-4-fluorphenyl)-N-(2-chlor-6-fluorphenyl)-1,3-dimethyl-1H-pyrazol-5-amin, (4.016) 4-(2-Brom-4-fluorphenyl)-N-(2-chlorphenyl)-1,3-dimethyl-1H-pyrazol-5-amin, (4.017) 4-(2-Brom-4-fluorphenyl)-N-(2-fluorphenyl)-1,3-dimethyl-1H-pyrazol-5-amin, (4.018) 4-(2-Chlor-4-fluorphenyl)-N-(2,6-difluorphenyl)-1,3-dimethyl-1H-pyrazol-5-amin, (4.019) 4-(2-Chlor-4-fluorphenyl)-N-(2-chlor-6-fluorphenyl)-1,3-dimethyl-1H-pyrazol-5-amin, (4.020) 4-(2-Chlor-4-fluorphenyl)-N-(2-chlorphenyl)-1,3-dimethyl-1H-pyrazol-5-amin, (4.021) 4-(2-Chlor-4-fluorphenyl)-N-(2-fluorphenyl)-1,3-dimethyl-1H-pyrazol-5-amin, (4.022) 4-(4-Chlorphenyl)-5-(2,6-difluorphenyl)-3,6-dimethylpyridazin, (4.023) N-(2-Brom-6-fluorphenyl)-4-(2-chlor-4-fluorphenyl)-1,3-dimethyl-1H-pyrazol-5-amin, (4.024) N-(2-Bromphenyl)-4-(2-chlor-4-fluorphenyl)-1,3-dimethyl-1H-pyrazol-5-amin, (4.025) N-(4-Chlor-2,6-difluorphenyl)-4-(2-chlor-4-fluorphenyl)-1,3-dimethyl-1H-pyrazol-5-amin.

5) Verbindungen mit Befähigung zu Multisite-Aktivität, beispielsweise (5.001) Bordeauxmischung, (5.002) Captafol, (5.003) Captan, (5.004) Chlorthalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Zinkmetiram, (5.017) Kupfer-Oxin, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazole-3-carbonitrile.

6) Verbindungen, die zum Auslösen einer Wirtsabwehr befähigt sind, beispielsweise (6.001) Acibenzolar-S-Methyl, (6.002) Isotianil, (6.003) Probenazol, (6.004) Tiadinil.

7) Inhibitoren der Aminosäure- und/oder Protein-Biosynthese, beispielsweise (7.001) Cyprodinil, (7.002) Kasugamycin, (7.003) Kasugamycinhydrochlorid-hydrat, (7.004) Oxytetracyclin (7.005) Pyrimethanil, (7.006) 3-(5-Fluor-3,3,4,4-tetramethyl-3,4-dihydroisochinolin-1-yl)chinolin.

8) Inhibitoren der ATP-Produktion, beispielsweise (8.001) Silthiofam.

9) Inhibitoren der Zellwandsynthese, beispielsweise (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on.

10) Inhibitoren der Lipid- und Membran-Synthese, beispielsweise (10.001) Propamocarb, (10.002) Propamocarbhydrochlorid, (10.003) Tolclofos-Methyl.

11) Inhibitoren der Melanin-Biosynthese, beispielsweise (11.001) Tricyclazol, (11.002) 2,2,2-Trifluorethyl-{3-methyl-1-[(4-methylbenzoyl)amino]butan-2-yl}carbamat.

12) Inhibitoren der Nukleinsäuresynthese, beispielsweise (12.001) Benalaxyl, (12.002) Benalaxyl-M (Kiralaxyl), (12.003) Metalaxyl, (12.004) Metalaxyl-M (Mefenoxam).

13) Inhibitoren der Signaltransduktion, beispielsweise (13.001) Fludioxonil, (13.002) Iprodion, (13.003) Procymidon, (13.004) Proquinazid, (13.005) Quinoxyfen, (13.006) Vinclozolin.

14) Verbindungen, die als Entkoppler wirken können, beispielsweise (14.001) Fluazinam, (14.002) Meptyldinocap.

15) Weitere Verbindungen, beispielsweise (15.001) Abscisinsäure, (15.002) Benthiazol, (15.003) Bethoxazin, (15.004) Capsimycin, (15.005) Carvon, (15.006) Chinomethionat, (15.007) Cufraneb, (15.008) Cyflufenamid, (15.009) Cymoxanil, (15.010) Cyprosulfamid, (15.011) Flutianil, (15.012) Fosetyl-Aluminium, (15.013) Fosetyl-Calcium, (15.014) Fosetyl-Natrium, (15.015) Methylisothiocyanat, (15.016) Metrafenon, (15.017) Mildiomycin, (15.018) Natamycin, (15.019) Nickel-Dimethyldithiocarbamat, (15.020) Nitrothal-Isopropyl, (15.021) Oxamocarb, (15.022) Oxathiapiprolin, (15.023) Oxyfenthiin, (15.024) Pentachlorphenol und Salze, (15.025) Phosphonsäure und deren Salze, (15.026) Propamocarb-fosetylat, (15.027) Pyriofenone (Chlazafenone) (15.028) Tebufloquin, (15.029) Tecloftalam, (15.030) Tolnifanide, (15.031) 1-(4-{4-[(SR)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.032) 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.033) 2-(6-Benzylpyridin-2-yl)quinazolin, (15.034) 2,6-Dimethyl-1H,5H-[1,4]dithiino[2,3-c:5,6-c']dipyrrol-1,3,5,7(2H,6H)-tetron, (15.035) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (15.036) 2-[3,5-Bis(difluormethyl)-1H-pyrazol-1 -yl]-1 -[4-(4-{5-[2-chlor-6-(prop-2-in-1-yloxy)phenyl]-4,5-dihydro-1,2-oxazol-3-yl}-1,3-thiazol-2-yl)piperidin-1-yl]ethanon, (15.037) 2-[3,5-Bis(difluormethyl)-1H-pyrazol-1-yl]-1-[4-(4-{5-[2-fluor-6-(prop-2-in-1-yloxy)phenyl]-4,5-dihydro-1,2-oxazol-3-yl}-1,3-thiazol-2-yl)piperidin-1-yl]ethanon, (15.038) 2-[6-(3-Fluor-4-methoxyphenyl)-5-methylpyridin-2-yl]quinazolin, (15.039) 2-{(5R)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.040) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenylmethanesulfonat, (15.041) 2-{2-[(7,8-Difluor-2-methylquinolin-3-yl)oxy]-6-fluorphenyl}propan-2-ol, (15.042) 2-{2-Fluor-6-[(8-fluor-2-methylquinolin-3-yl)oxy]phenyl}propan-2-ol, (15.043) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl-methansulfonat, (15.044) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}phenyl methanesulfonat, (15.045) 2-Phenylphenolund deren Salze, (15.046) 3-(4,4,5-Trifluor-3,3-dimethyl-3,4-dihydroisoquinolin-1-yl)quinolin, (15.047) 3-(4,4-Difluor-3,3-dimethyl-3,4-dihydroisoquinolin-1-yl)quinolin, (15.048) 4-Amino-5-fluorpyrimidin-2-ol (Tautomere Form: 4-Amino-5-fluorpyrimidin-2(1H)-on), (15.049) 4-Oxo-4-[(2-phenylethyl)amino]buttersäure, (15.050) 5-Amino-1,3,4-thiadiazol-2-thiol, (15.051) 5-Chlor-N'-phenyl-N'-(prop-2-yn-1-yl)thiophen-2-sulfonohydrazid, (15.052) 5-Fluor-2-[(4-fluorbenzyl)oxy]pyrimidin-4-amin, (15.053) 5-Fluor-2-[(4-methylbenzyl)oxy]pyrimidin-4-amin, (15.054) 9-Fluor-2,2-dimethyl-5-(quinolin-3-yl)-2,3-dihydro-1,4-benzoxazepin, (15.055) But-3-yn-1-yl {6-[({[(Z)-(1-methyl-1H-tetrazol-5-yl)(phenyl)methylen]amino}oxy)methyl]pyridin-2-yl}carbamat, (15.056) Ethyl (2Z)-3-amino-2-cyano-3-phenylacrylat, (15.057) Phenazin-1-carbonsäure, (15.058) Propyl 3,4,5-trihydroxybenzoat, (15.059) Quinolin-8-ol, (15.060) Quinolin-8-ol sulfat (2:1), (15.061) tert-Butyl {6-[({[(1-methyl-1H-tetrazol-5-yl)(phenyl)methylene]amino}oxy)methyl]pyridin-2-yl}carbamat, (15.062) 5-Fluor-4-imino-3-methyl-1)sulfonyl] -3,4-dihydropyrimidin-2(1H)-one.

Bevorzugte Fungizide sind ausgewählt aus der Gruppe bestehend aus Benalaxyl, Bitertanol, Bromuconazol, Captafol, Carbendazim, Carpropamid, Cyazofamid, Cyproconazol, Diethofencarb, Edifenphos, Fenpropimorph, Fentine, Fluquinconazol, Fosetyl, Fluoroimide, Folpet, Iminoctadine, Iprodionem, Iprovalicarb, Kasugamycin, Maneb, Nabam, Pencycuron, Prochloraz, Propamocarb, Propineb, Pyrimethanil, Sprioxamine, Quintozene, Tebuconazole, Tolylfluanid, Triadimefon, Triadimenol, Trifloxystrobin, Zineb.

Insektizide, akarizide, nematizide, mitizide und verwandte Wirkstoffe sind, beispielsweise (analog zu den Herbiziden und Fungiziden werden die Verbindungen nach Möglichkeit mit ihren Common names bezeichnet, hier in der üblichen englischen Schreibweise):

(1) Acetylcholinesterase(AChE)-Inhibitoren, vorzugsweise Carbamate ausgewählt aus Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb, oder Organophosphate ausgewählt aus Acephat, Azamethiphos, Azinphos-ethyl, Azinphosmethyl, Cadusafos, Chlorethoxyfos, Chlorfenvinphos, Chlormephos, Chlorpyrifos-methyl, Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, Fenamiphos, Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.

(2) GABA-gesteuerte Chlorid-Kanal-Blocker, vorzugsweise Cyclodien-organochlorine ausgewählt aus Chlordan und Endosulfan, oder Phenylpyrazole (Fiprole) ausgewählt aus Ethiprol und Fipronil.

(3) Natrium-Kanal-Modulatoren, vorzugsweise Pyrethroide ausgewählt aus Acrinathrin, Allethrin, d-cistrans-Allethrin, d-trans-Allethrin, Bifenthrin, Bioallethrin, Bioallethrin-S-cyclopentenyl-Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomer], Deltamethrin, Empenthrin [(EZ)-(1R)-Isomer], Esfenvalerat, Etofenprox, Fenpropathrin, Fenvalerat, Flucythrinat, Flumethrin, tau-Fluvalinat, Halfenprox, Imiprothrin, Kadethrin, Momfluorothrin, Permethrin, Phenothrin [(1R)-trans-Isomer], Prallethrin, Pyrethrine (pyrethrum), Resmethrin, Silafluofen, Tefluthrin, Tetramethrin, Tetramethrin [(1R)-Isomer], Tralomethrin und Transfluthrin, oder DDT oder Methoxychlor.

(4) Kompetitive Modulatoren des nicotinischen Acetylcholin-Rezeptors (nAChR), vorzugsweise Neonicotinoide ausgewählt aus Acetamiprid, Clothianidin, Dinotefuran, Imidacloprid, Nitenpyram, Thiacloprid und Thiamethoxam, oder Nicotin, oder Sufoximine ausgewählt aus Sulfoxaflor, oder Butenolide ausgewählt aus Flupyradifurone.

(5) Allosterische Modulatoren des nicotinischen Acetylcholin-Rezeptors (nAChR), vorzugsweise Spinosyne ausgewählt aus Spinetoram und Spinosad.

(6) Allosterische Modulatoren des Glutamat-abhängigen Chloridkanals (GluCl), vorzugsweise Avermectine/Milbemycine ausgewählt aus Abamectin, Emamectin-benzoat, Lepimectin und Milbemectin.

(7) Juvenilhormon-Mimetika, vorzugsweise Juvenilhormon-Analoge ausgewählt aus Hydropren, Kinopren und Methopren, oder Fenoxycarb oder Pyriproxyfen.

(8) Verschiedene nicht spezifische (multi-site) Inhibitoren, vorzugsweise Alkylhalogenide ausgewählt aus Methylbromid und andere Alkylhalogenide, oder Chloropicrin oder Sulfurylfluorid oder Borax oder Brechweinstein oder Methylisocyanaterzeuger ausgewählt aus Diazomet und Metam.

(9) TRPV-Kanal-Modulatoren chordotonaler Organe ausgewählt aus Pymetrozin und Pyrifluquinazon.

(10) Milbenwachstumsinhibitoren ausgewählt aus Clofentezin, Hexythiazox, Diflovidazin und Etoxazol.

(11) Mikrobielle Disruptoren der Insektendarmmembran ausgewählt aus *Bacillus thuringiensis* Subspezies *israelensis, Bacillus sphaericus, Bacillus thuringiensis* Subspezies *aizawai, Bacillus thuringiensis* Subspezies *kurstaki, Bacillus thuringiensis* Subspezies *tenebrionis und B.t.*-Pflanzenproteine ausgewählt aus Cry1Ab, Cry1Ac, Cry1Fa, Cry1A.105, Cry2Ab, VIP3A, mCry3A, Cry3Ab, Cry3Bb und Cry34Ab1/35Ab1.

(12) Inhibitoren der mitochondrialen ATP-Synthase, vorzugsweise ATP-Disruptoren ausgewählt aus Diafenthiuron, oder Organozinnverbindungen ausgewählt aus Azocyclotin, Cyhexatin und Fenbutatinoxid, oder Propargit oder Tetradifon.

(13) Entkoppler der oxidativen Phoshorylierung durch Störung des Protonengradienten ausgewählt aus Chlorfenapyr, DNOC und Sulfluramid.

(14) Blocker des nicotinischen Acetylcholinrezeptorkanals ausgewählt aus Bensultap, Cartaphydrochlorid, Thiocyclam und Thiosultap-Natrium.

(15) Inhibitoren der Chitinbiosynthese, Typ 0, ausgewählt aus Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.

(16) Inhibitoren der Chitinbiosynthese, Typ 1 ausgewählt aus Buprofezin.

(17) Häutungsdisruptor (insbesondere bei Dipteren, d. h. Zweiflüglern) ausgewählt aus Cyromazin.

(18) Ecdyson-Rezeptor-Agonisten ausgewählt aus Chromafenozid, Halofenozid, Methoxyfenozid und Tebufenozid.

(19) Oktopamin-Rezeptor-Agonisten ausgewählt aus Amitraz.

(20) Mitochondriale Komplex-III-Elektronentransportinhibitoren ausgewählt aus Hydramethylnon, Acequinocyl und Fluacrypyrim.

(21) Mitochondriale Komplex-I-Elektronentransportinhibitoren, vorzugsweise METI-Akarizide ausgewählt aus Fenazaquin, Fenpyroximat, Pyrimidifen, Pyridaben, Tebufenpyrad und Tolfenpyrad, oder Rotenon (Derris).

(22) Blocker des spannungsabhängigen Natriumkanals ausgewählt aus Indoxacarb und Metaflumizone.

(23) Inhibitoren der Acetyl-CoA-Carboxylase, vorzugsweise Tetron- und Tetramsäurederivate ausgewählt aus Spirodiclofen, Spiromesifen und Spirotetramat.

(24) Inhibitoren des mitochondrialen Komplex-IV-Elektronentransports, vorzugsweise Phosphine ausgewählt aus Aluminiumphosphid, Calciumphosphid, Phosphin und Zinkphosphid, oder Cyanide ausgewählt aus Calciumcyanid, Kaliumcyanid und Natriumcyanid.

(25) Inhibitoren des mitochondrialen Komplex-II-Elektronentransports, vorzugsweise beta-Ketonitrilderivate ausgewählt aus Cyenopyrafen und Cyflumetofen, oder Carboxanilide ausgewählt aus Pyflubumid.

(28) Ryanodinrezeptor-Modulatoren, vorzugsweise Diamide ausgewählt aus Chlorantraniliprol, Cyantraniliprol und Flubendiamid.

(29) Modulatoren chordotonaler Organe (mit undefinierter Zielstruktur) ausgewählt aus Flonicamid.

(30) weitere Wirkstoffe ausgewählt aus Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat, Triflumezopyrim und Iodmethan; des Weiteren Präparate auf Basis von *Bacillus firmus* (I-1582, BioNeem, Votivo), sowie folgende Verbindungen: 1-{2-Fluor-4-methyl-5-[(2,2,2-trifluorethyl)sulfmyl]phenyl}-3-(trifluormethyl)-1H-1,2,4-triazol-5-amin (bekannt aus WO2006/043635) (CAS 885026-50-6), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (bekannt aus WO2006/003494) (CAS 872999-66-1), 3-(4-Chlor-2,6-dimethylphenyl)-4-hydroxy-8-methoxy-1,8-diazaspiro[4.5]dec-3-en-2-on (bekannt aus WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (bekannt aus EP 2647626) (CAS-1440516-42-6), 4-(But-2-in-1-yloxy)-6-(3,5-dimethylpiperidin-1-yl)-5-fluorpyrimidin (bekannt aus WO2004/099160) (CAS 792914-58-0), PF1364 (bekannt aus JP2010/018586) (CAS-Reg.No. 1204776-60-2), (3E)-3-[1-[(6-Chlor-3-pyridyl)methyl]-2-pyridylidcn]-1,1,1-trifluorpropan-2-on (bekannt aus WO2013/144213) (CAS 1461743-15-6), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (bekannt aus CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid und 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013/050317 A1) (CAS 1332628-83-7), N-[3-Chlor-1-(3-pyridinyl)-1H-pyrazol-4-yl]-N-ethyl-3-[(3,3,3-trifluorpropyl)sulfinyl]propanamid, (+)-N-[3-Chlor-1-(3-pyridinyl)-1H-pyrazol-4-yl]-N-ethyl-3-[(3,3,3-trifluorpropyl)sulfinyl]propanamid und (-)-N- [3 -Chlor-1 -(3 -pyridinyl)-1H-pyrazol-4-yl] -N-ethyl-3 - [(3,3,3-trifluorpropyl)sulfinyl]propanamid (bekannt aus WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (bekannt aus CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (bekannt aus CN 101337940 A) (CAS 1108184-52-6); (2E)- und 2(Z)-2-[2-(4-Cyanophenyl)-1-[3-(trifluormethyl)phenyl]ethyliden]-N-[4-(difluormethoxy)phenyl]hydrazincarboxamid (bekannt aus CN 101715774 A) (CAS 1232543-85-9); Cyclopropancarbonsäure-3-(2,2-dichlorethenyl)-2,2-dimethyl-4-(1H-benzimidazol-2-yl)phenylester (bekannt aus CN 103524422 A) (CAS 1542271-46-4); (4aS)-7-Chlor-2,5-dihydro-2-[[(methoxycarbonyl)[4-[(trifluormethyl)thio]phenyl]amino]carbonyl]indeno[1,2-e][1,3,4]oxadiazin-4a(3H)-carbonsäuremethylester (bekannt aus CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-$\alpha$-L-mannopyranose (bekannt aus US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (bekannt aus WO 2007040280 A1, WO 2007040282 A1) (CAS 934001-66-8), N- [3 -Chlor-1 -(3 -pyridinyl)-1H-pyrazol-4-yl]-N-ethyl-3 - [(3,3,3 -trifluorpropyl)thio] -propanamid (bekannt aus WO 2015/058021 A1, WO 2015/058028 A1) (CAS 1477919-27-9) undN-[4-(Aminothioxomethyl)-2-methyl-6- [(methylamino)carbonyl]phenyl]-3-bromo-1-(3-chloro-2-pyridinyl)- 1H-pyrazol-5-carboxamid (bekannt aus CN 103265527 A) (CAS 1452877-50-7), 5-(1,3-Dioxan-2-yl)-4-[[4-(trifluormethyl)phenyl]methoxy]-pyrimidin (bekannt aus WO 2013/115391 A1) (CAS 1449021-97-9), 3-(4-Chlor-2,6-dimethylphenyl)-8-methoxy-1-methyl-1,8-diazaspiro[4.5]decane-2,4-dion (bekannt aus WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsäureethylester (bekannt aus WO 2010/066780 A1, WO 2011151146 A1) (CAS 1229023-00-0), 4-[(5S)-5-(3,5-Dichlor-4-fluorophenyl)-4,5-dihydro-5-(trifluoromethyl)-3-isoxazolyl] -N- [(4R)-2-ethyl-3 -oxo-4-isoxazolidinyl] -2-methyl-benzamid (bekannt aus WO 2011/067272, WO2013/050302) (CAS 1309959-62-3).

Insektizide, die bevorzugt gemeinsam mit den Herbiziden eingesetzt werden können, sind beispielsweise folgende:
Acetamiprid, Acrinathrin, Aldicarb, Amitraz, Acinphos-methyl, Cyfluthrin, Carbaryl, Cypermethrin, Deltamethrin, Endosulfan, Ethoprophos, Fenamiphos, Fenthion, Fipronil, Imidacloprid, Methamidophos, Methiocarb, Niclosamide, Oxydemeton-methyl, Prothiophos, Silafluofen, Thiacloprid, Thiodicarb, Tralomethrin, Triazophos, Trichlorfon, Triflumuron, Terbufos, Fonofos, Phorate, Chlorpyriphos, Carbofuran, Tefluthrin.

Die erfindungsgemäßen Wirkstoffkombinationen sind zur Bekämpfung eines breiten Unkrautspektrums im Nichtkulturland, auf Wegen, Gleisanlagen, Industrieflächen ("industrial weed control") oder in Plantagenkulturen wie gemäßigten, subtropischen und tropischen Klimaten oder Geographien geeignet. Beispiele für Plantagenkulturen sind Ölpalme, Nüsse (z. B. Mandeln, Haselnüsse, Walnüsse, Macademia), Kokosnuss, Beeren, Ölpalme, Gummibaum, Citrus (z. B. Orange, Zitrone, Mandarine), Bananen, Ananas, Baumwolle, Zuckerrohr, Tee, Kaffee, Kakao und Ähnliches. Ebenso sind sie für die Anwendung im Obstbau (z. B. Kernobst wie Apfel, Birne, Kirsche, Mango, Kiwi) und Weinbau geeignet. Die Mittel können auch zur Saatvorbereitung ("bum-down-" "no-till"- oder "zero-till"-Methode) oder zur Behandlung nach der Ernte ("chemical fallow") eingesetzt werden. Die Anwendungsmöglichkeiten der Wirkstoffkombinationen erstrecken sich auch zur Unkrautkontrolle in Baumkulturen, z. B. jungen Christbaumkulturen oder Eukalyptus-Anlagen, jeweils vor der Einpflanzung oder nach der Verpflanzung (auch mit Überkopfbehandlung, "over-top").

Auch können die Mittel in zur Bekämpfung von unerwünschtem Pflanzenwuchs in wirtschaftlich bedeutenden Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Kartoffel und Hirse (Sorghum), Weideland und Grün-/Rasenflächen und Plantagenkulturen eingesetzt werden. Plantagenkulturen sind unteranderem Pomefruits (Apfel, Birne, Quitte), Ribes-Artige (Brombeere, Himbeere),Citrus, Prunus-Artige (Kirschen, Nektarinen, Mandeln), Nußfrüchte (Walnuß, Pecan, Haselnuß, Cashew, Macadamia), Mango, Kakao, Kaffee, Wein (Tafel-, Weintrauben), Palmen (wie Ölpalme, Dattelpalme,Kokospalme,,) Eucalyptus, Kaki, Persimon, Kautschuk, Ananans, Banane, Avocado, Litschi, Forstkulturen (Eucalypteae, Piniaceae, Piceae, Meliaceae, etc. )

Die erfindungsgemäßen herbiziden Wirkstoffkombinationen in den jeweiligen Anwendungsformen (= herbiziden Mittel) weisen Synergien hinsichtlich der Herbizidwirkung und Selektivität und günstige Wirkung bezüglich des Unkrautspektums auf. Sie weisen eine ausgezeichnete herbizide Wirksamkeit gegen ein breites Spektrum wirtschaftlich wichtiger monokotyler und dikotyler annueller Schadpflanzen auf. Auch schwer bekämpfbare perennierende Schadpflanzen, die aus Rhizomen, Wurzelstöcken oder anderen Dauerorganen austreiben, werden durch die Wirkstoffe gut erfaßt.

Zur Anwendung können die Wirkstoffkombinationen auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden.

Dabei können die Substanzen im Vorsaat- (ggf. auch durch Einarbeitung in den Boden), Vorauflauf- oder Nachauflaufverfahren ausgebracht werden. Bevorzugt ist die Anwendung im frühen Nachsaat-Vorauflaufverfahren oder im Nachauflaufverfahren von Plantagenkulturen gegen noch nicht aufgelaufene oder bereits aufgelaufene Schadpflanzen. Die Anwendung kann auch in Unkrautmanagment-Systemen (weed-management) mit geteilten mehrfachen Anwendungen (Sequenzanwendungen, "sequentials") integriert werden.

Im Einzelnen seien beispielhaft einige Vertreter der mono- und dikotylen Unkrautflora genannt, die durch die erfindungsgemäßen Wirkstoffkombinationen kontrolliert werden können, ohne dass durch die Nennung eine Beschränkung auf bestimmte Arten erfolgen soll.

Auf der Seite der monokotylen Unkrautarten werden z.B. Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum, Sphenoclea und Cyperus-arten von der annuellen Gruppe erfasst.

Bei dikotylen Unkrautarten erstreckt sich das Wirkungsspektrum auf Arten wie z.B. Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erodium, Erysimum, Euphorbia, Galeopsis, Galinsoga, Galium, Geranium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Werden die erfindungsgemäßen Wirkstoffkombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt nach der Behandlung ein Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Beispielsweise übertreffen die herbiziden Wirkungen bei einer bestimmten Schadpflanzenspezies den Erwartungswert, wie er nach Standardverfahren, z. B. gemäß Colby oder anderen Extrapolationsverfahren, abgeschätzt werden kann.

Ein synergistischer Effekt liegt immer dann vor, wenn die Wirkung, hier die herbizide Wirkung der Wirkstoffkombination größer ist als die Summe der Wirkungen der einzeln applizierten Wirkstoffe. Die zu erwartende Wirkung für eine gegebene Kombination zweier Wirkstoffe kann nach S.R. Colby ("Calculating Synergistic and Antagonistic Responses of Herbicide Combination", Weeds 15 (1967), 20-22) berechnet werden (siehe unten).

Die synergistischen Effekte erlauben daher beispielsweise eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine erhöhte Residualwirkung, eine erhöhte Langzeitwirkung, eine erhöhte Wirkungsgeschwindigkeit, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Obgleich die erfindungsgemäßen Kombinationen eine ausgezeichnete herbizide Aktivität gegenüber mono- und dikotylen Unkräutern aufweisen, werden viele wirtschaftlich bedeutende Kulturpflanzen abhängig von der Struktur der jeweiligen erfindungsgemäßen Wirkstoffkombinationen und deren Aufwandmenge nur unwesentlich oder gar nicht geschädigt. Wirtschaftlich bedeutende Kulturen sind dabei z.B. dikotyle Kulturen der Gattungen Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, oder monokotyle Kulturen der Gattungen Allium, Ananas, Asparagus, Avena, Hordeum, Oryza, Panicum, Saccharum, Secale, Sorghum, Triticale, Triticum und Zea.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden, durch konventionelle Mutagenese veränderten oder gentechnisch veränderten, toleranten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Vorzugsweise können die erfindungsgemäßen Wirkstoffkombinationen als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),

- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit

  Bacillus thuringiensis-Toxine (Bt-Toxine) zu produzieren, welche die Pflanzen gegen bestimmte Schädlinge resistent machen (EP-A-0142924, EP-A-0193259).

- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualitat auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg, oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen. Vorzugsweise können die erfindungsgemäßen Wirkstoffkombinationen in transgenen Kulturen eingesetzt werden, welche gegen die eingesetzten Wirkstoffe tolerant sind bzw. tolerant gemacht worden sind.

Vorzugsweise können die erfindungsgemäßen Wirkstoffkombinationen auch in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder

Benzoylisoxazole und analogen Wirkstoffe, resistent sind.

Gegenstand der Erfindung ist deshalb auch ein Verfahren zur Bekämpfung von unerwünschtem Pflanzenwuchs, gegebenenfalls in Nutzpflanzenkulturen, vorzugsweise im Nichtkulturland oder in Plantagenkulturen, dadurch gekennzeichnet, dass man ein oder mehrere Herbizide des Typs (A) mit einem oder mehreren Herbiziden des Typs (B) auf die Schadpflanzen, Pflanzenteile oder Pflanzensamen (Saatgut) davon oder die Anbaufläche appliziert.

Gegenstand der Erfindung ist auch die Verwendung der neuen Kombinationen aus Verbindungen (A)+(B) zur Bekämpfung von Schadpflanzen, gegebenenfalls in Nutzpflanzenkulturen, vorzugsweise in Nichtkulturland und Plantagenkulturen, aber auch zur Bekämpfung von Schadpflanzen vor der Aussaat der folgenden Nutzpflanze, wie insbesondere zur Saatvorbereitung ("burn-down Anwendung").

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Pulver (SP), emulgierbare Konzentrate (EC), wasserlösliche Konzentrate, wäßrige Lösungen (SL), Emulsionen (EW) wie Öl-in-Wasser- und Wasser-in-Öl-Emulsionen, versprühbare Lösungen oder Emulsionen, Dispersionen auf Ö1- oder Wasserbasis, Öldispersionen (OD), Suspoemulsionen, Suspensionskonzentrate (SC), ölmischbare Lösungen, Kapselsuspensionen (CS), Stäubemittel (DP), Beizmittel, Granulate zur Boden- oder Streuapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln oder Wachse.

Gegenstand der Erfindung sind deshalb auch herbizide und pflanzenwachstumsregulierende Mittel, welche die erfindungsgemäßen Wirkstoffkombinationen enthalten.

Die einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon’s, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie anderen Herbiziden, Fungiziden, Insektiziden oder anderen Schädlingsbekämpfungsmitteln (z. B. Akarizide, Nematizide, Molluskizide, Rodentizide, Aphizide, Avizide, Larvizide, Ovizide, Bakterizide, Viruzide, etc.), sowie Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2’-dinaphthylmethan-6,6’-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder wie z. B. Polyoxyethylensorbitanfettsäureester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen (A) und/oder (B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 90 Gew.-%, betragen, vorzugsweise 5 bis 80 Gewichtsprozent. Staubförmige Formulierungen enthalten meistens 5 bis 20 Gew.-% an Wirkstoff, versprühbare Lösungen enthalten etwa 0.05 bis 80, vorzugsweise 2 bis 50 Gewichtsprozent (Gew.-%) Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 1 und 95 Gew.-%, vorzugsweise zwischen 10 und 80 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gewichsteile (= Gew.-Teile) eines Wirkstoffs (A) oder (B) oder eines Wirkstoffgemischs (A) + (B) (und gegebenenfalls weiterer Wirkstoffkomponenten) und/oder deren Salze und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirkstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirkstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirkstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, dass eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E^C = A+B - (A \cdot B/100)$$

Dabei bedeuten:

A = Wirkung des Wirkstoffs (A) in % bei einer Aufwandmenge von a g a.i./ha;
B = Wirkung des Wirkstoffs (B) in % bei einer Aufwandmenge von b g a.i./ha;
$E^C$ = Erwartungswert der Wirkung der Kombination (A)+(B) in % bei der kombinierten Aufwandmenge a+b g a.i./ha.

Die beobachteten Werte ($E^A$) der Versuche zeigen bei geeigneten niedrigen Dosierungen eine Wirkung der Kombinationen, die über den Erwartungswerten nach Colby liegen ($\Delta$).

1. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 300 bis 800 1/ha auf die grünen Pflanzenteile gesprüht. Nach ca. 3 bis 4 Wochen Standzeit der Versuchspflanzen im Gewächshaus

unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby liegen.

2. Herbizide Wirkung im Vor- und Nachauflauf (Feldversuche)

Entsprechend den Gewächshausversuchen des Abschnitts 1 wurden die Versuche auf Parzellen in Freiland durchgeführt. Die Bonitur erfolgte analog dem Versuch in Abschnitt 1.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent.

Im Falle von Plantagenkulturen wurde in der Regel nur der Boden zwischen den einzelnen Kulturpflanzen mit den Wirkstoffen behandelt.

Nach der Anwendung, z. B. 2, 4, 6 und 8 Wochen nach Applikation wurde die Wirkung der Präparate optisch im Vergleich zu unbehandelten Kontrollen bonitiert. Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, dass die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby und weisen deshalb ebenfalls auf einen Synergismus hin. Die Kulturpflanzen dagegen wurden infolge der Behandlungen mit den herbiziden Mitteln nicht oder nur unwesentlich geschädigt.

4. Spezielle Versuchsbeispiele

Folgenden Abkürzungen werden in der Beschreibung und den nachfolgenden Tabellen verwendet:

g a.i./ha = Gramm Aktivsubstanz (active ingredient) (= 100% Wirkstoff) pro Hektar;

Die Summe der Wirkungen der Einzelapplikationen ist unter $E^A$ angegeben;
Erwartungswerte nach Colby sind jeweils unter $E^C$ angegeben;

Die biologischen Ergebnisse der erfindungsgemäßen Zusammensetzungen sind in den Tabellen 3.1 -3.8 zusammengefasst. Der Boniturzeitraum ist in Tagen nach der Applikation (DAT) angegeben.

Tabelle 3.1: Synergistischer Effekt (Δ) für herbizide binäre Zusammensetzungen im Nachauflauf enthaltend Herbizide aus der Gruppe B1

| Wirkstoff/e (Z59) | Aufwandmenge [g a.i./ha] | Herbizide Wirkung 28 DAT [%] gegen *Panicum maximum* |
|---|---|---|
| (B1.7) Mesotrione | 75 | 0 |
| A3 | 100 | 82 |
| A3 + (B1.7) Mesotrione | 100 + 75 | $E^A$ = 85 ($E^C$ = 82)<br>Δ 4 |
| | | |

(fortgesetzt)

| Wirkstoff/e (Z59) | Aufwandmenge [g a.i./ha] | Herbizide Wirkung 43 DAT [%] gegen *Bellis perenne* |
|---|---|---|
| (B1.7) Mesotrione | 105 | 0 |
| A3 | 100 | 0 |
| A3 + (B1.7) Mesotrione | 100 + 105 | $E^A$ = 50 ($E^C$ = 0)<br>Δ 50 |
| Wirkstoff/e (Z59) | Aufwandmenge [g a.i./ha] | Herbizide Wirkung 43 DAT [%] gegen *Ephilobium hirsutum* |
| (B1.7) Mesotrione | 105 | 0 |
| A3 | 100 | 77 |
| A3 + (B1.7) Mesotrione | 100 + 105 | $E^A$ = 100 ($E^C$ = 77)<br>Δ 23 |
| | | |
| Wirkstoff/e (Z59) | Aufwandmenge [g a.i./ha] | Herbizide Wirkung 32 DAT [%] gegen *Lamium purpureum* |
| (B1.7) Mesotrione | 105 | 0 |
| A3 | 100 | 50 |
| A3 + (B1.7) Mesotrione | 100 + 105 | $E^A$ = 80 ($E^C$ = 50)<br>Δ 30 |
| | | |
| Wirkstoff/e (Z59) | Aufwandmenge [g a.i./ha] | Herbizide Wirkung 43 DAT [%] gegen *Ranunculus repens* |
| (B1.7) Mesotrione | 105 | 0 |
| A3 | 100 | 82 |
| A3 + (B1.7) Mesotrione | 100 + 105 | $E^A$ = 90 ($E^C$ = 82)<br>Δ 8 |
| | | |
| Wirkstoff/e (Z59) | Aufwandmenge [g a.i./ha] | Herbizide Wirkung 43 DAT [%] gegen *Viola arvensis* |
| (B1.7) Mesotrione | 105 | 0 |
| A3 | 100 | 50 |
| A3 + (B1.7) Mesotrione | 100 + 105 | $E^A$ = 60 ($E^C$ = 50)<br>Δ 10 |
| | | |
| Wirkstoff/e (Z59) | Aufwandmenge [g a.i./ha] | Herbizide Wirkung 21 DAT [%] gegen *Amaranthus palmeri* |
| (B1.7) Mesotrione | 5 | 0 |
| A3 | 5<br>1,7 | 15<br>10 |
| A3 + (B1.7) Mesotrione | 5+5<br>1,7+5 | $E^A$ = 40 ($E^C$ = 15) Δ 25<br>$E^A$ = 30 ($E^C$ = 10) Δ 20 |

(fortgesetzt)

| Wirkstoff/e (Z59) | Aufwandmenge [g a.i./ha] | Herbizide Wirkung 21 DAT [%] gegen *Bidens pilosa* |
|---|---|---|
| (B1.7) Mesotrione | 45<br>5 | 25<br>0 |
| A3 | 15<br>5<br>1,7 | 25<br>10<br>0 |
| A3 + (B1.7) Mesotrione | 15 + 45<br>5+45<br>1,7 + 45<br>5+5<br>1,7+5 | $E^A$ = 55 ($E^C$ = 43,75) Δ 11,25<br>$E^A$ = 60 ($E^C$ = 32,5) Δ 27,5<br>$E^A$= 65 ($E^C$ = 25) Δ 40<br>$E^A$ = 45 ($E^C$ = 10) Δ 35<br>$E^A$ = 25 ($E^C$=0) Δ 25 |
| | | |
| Wirkstoff/e | Aufwandmenge [g a.i./ha] | Herbizide Wirkung 21 DAT [%] gegen *Brachiaria platyphylla* |
| (B1.14) Tembotrione | 45<br>15 | 50<br>50 |
| A3 | 1,7 | 20 |
| A3 + (B1.14) Tembotrione | 1,7 + 45<br>1,7 + 15 | $E^A$ = 97 ($E^C$ = 76) Δ 21<br>$E^A$ = 85 ($E^C$ = 60) Δ 25 |
| | | |
| Wirkstoff/e | Aufwandmenge [g a.i./ha] | Herbizide Wirkung 21 DAT [%] gegen *Setaria viridis* |
| (B1.14) Tembotrione | 5 | 10 |
| A3 | 1,7 | 70 |
| A3 + (B1.14) Tembotrione | 1,7+5 | $E^A$ = 97 ($E^C$ = 73) Δ 24 |
| | | |
| Wirkstoff/e | Aufwandmenge [g a.i./ha] | Herbizide Wirkung 21 DAT [%] gegen *Sorghum halepense* |
| (B1.14) Tembotrione | 15<br>5 | 50<br>30 |
| A3 | 1,7 | 40 |
| A3 + (B1.14) Tembotrione | 1,7 + 15<br>1,7+5 | $E^A$= 80 ($E^C$ = 70) Δ 10<br>$E^A$= 70 ($E^C$ = 58) Δ 12 |
| Wirkstoff/e | Aufwandmenge [g a.i./ha] | Herbizide Wirkung 21 DAT [%] gegen *Amaranthus palmeri* |
| (B1.14) Tembotrione | 15<br>5 | 20<br>10 |
| A3 | 15<br>5<br>1,7 | 30<br>10<br>0 |

(fortgesetzt)

| Wirkstoff/e | Aufwandmenge [g a.i./ha] | Herbizide Wirkung 21 DAT [%] gegen *Amaranthus palmeri* |
|---|---|---|
| A3 + (B1.14) Tembotrione | 5+15<br>1,7+15<br>15+5<br>5+5<br>1,7+5 | $E^A$ = 50 ($E^C$ = 28) Δ 22<br>$E^A$ = 50 ($E^C$ = 20) Δ 30<br>$E^A$ = 60 ($E^C$ = 37) Δ 23<br>$E^A$ = 50 ($E^C$ = 19) Δ 31<br>$E^A$ = 30 ($E^C$ = 10) Δ 20 |
| | | |
| Wirkstoff/e | Aufwandmenge [g a.i./ha] | Herbizide Wirkung 21 DAT [%] gegen *Bidens pilosa* |
| (B1.14) Tembotrione | 45<br>15<br>5 | 25<br>25<br>10 |
| A3 | 5<br>1,7 | 10<br>10 |
| A3 + (B1.14) Tembotrione | 5+45<br>1,7 + 15<br>5+5<br>1,7+5 | $E^A$ = 60 ($E^C$ = 32,5) Δ 27,5<br>$E^A$ = 45 ($E^C$ = 32,5) Δ 12,5<br>$E^A$ = 35 ($E^C$ = 19) Δ 16<br>$E^A$ = 30 ($E^C$ = 19) Δ 11 |
| | | |
| Wirkstoff/e | Aufwandmenge [g a.i./ha] | Herbizide Wirkung 37 DAT [%] gegen *Ipomoea hederacea* |
| (B1.14) Tembotrione | 37,5 | 0 |
| A3 | 100 | 8 |
| A3 + (B1.14) Tembotrione | 100 + 37,5 | $E^A$ = 13 ($E^C$ = 8)<br>Δ 5 |

Tabelle 3.2: Synergistischer Effekt (Δ) für herbizide binäre Zusammensetzungen im Nachauflauf enthaltend Herbizide aus der Gruppe B2

| Wirkstoff/e (Z3) | Aufwandmenge [g a.i./ha] | Herbizide Wirkung 21 DAT [%] gegen *Bidens pilosa* |
|---|---|---|
| (B2.18) Diflufenican | 90<br>30 | 10<br>10 |
| A1 | 15 | 35 |
| A1 + (B2.18) Diflufenican | 15 + 90<br>15 + 30 | $E^A$ = 50 ($E^C$ = 42) Δ 8<br>$E^A$ = 50 ($E^C$ = 42) Δ 8 |
| | | |
| Wirkstoff/e (Z3) | Aufwandmenge [g a.i./ha] | Herbizide Wirkung 21 DAT [%] gegen *Echinochloa crus-galli* |
| (B2.18) Diflufenican | 270<br>30 | 20<br>10 |
| A1 | 5 | 10 |
| A1 + (B2.18) Diflufenican | 5 + 270<br>5 + 30 | $E^A$ = 35 ($E^C$ = 28) Δ 7<br>$E^A$ = 30 ($E^C$ = 19) Δ 11 |

(fortgesetzt)

| Wirkstoff/e (Z3) | Aufwandmenge [g a.i./ha] | Herbizide Wirkung 21 DAT [%] gegen *Echinochloa crus-galli* |
|---|---|---|
| | | |
| Wirkstoff/e (Z3) | Aufwandmenge [g a.i./ha] | Herbizide Wirkung 21 DAT [%] gegen *Eleusine indica* |
| (B2.18) Diflufenican | 270<br>90 | 30<br>20 |
| A1 | 15<br>5 | 70<br>45 |
| A1 + (B2.18) Diflufenican | 5+270<br>15+90 | $E^A$ = 75 ($E^C$ = 62) Δ 13<br>$E^A$ = 85 ($E^C$ = 76) Δ 9 |
| Wirkstoff/e (Z3) | Aufwandmenge [g a.i./ha] | Herbizide Wirkung 21 DAT [%] gegen *Polygonum convulvulus* |
| (B2.18) Diflufenican | 90<br>30 | 20<br>10 |
| A1 | 45 | 85 |
| A1 + (B2.18) Diflufenican | 45+90<br>45+30 | $E^A$ = 97 ($E^C$ = 88) Δ 9<br>$E^A$ = 93 ($E^C$ = 87) Δ 6 |
| | | |
| Wirkstoff/e (Z3) | Aufwandmenge [g a.i./ha] | Herbizide Wirkung 21 DAT [%] gegen *Sorghum halepense* |
| (B2.18) Diflufenican | 90<br>30 | 10<br>10 |
| A1 | 15 5 | 35 20 |
| A1 + (B2.18) Diflufenican | 15 + 90<br>5 + 90<br>15+30<br>5 + 30 | $E^A$ = 97 ($E^C$ = 42) Δ 55<br>$E^A$ = 45 ($E^C$ = 28) Δ 17<br>$E^A$ = 93 ($E^C$ = 42) Δ 51<br>$E^A$ = 40 ($E^C$ = 28) Δ 12 |
| | | |
| Wirkstoff/e (Z32) | Aufwandmenge [g a.i./ha] | Herbizide Wirkung 21 DAT [%] gegen *Abutilon theophrasti* |
| (B2.18) Diflufenican | 90<br>30 | 10<br>10 |
| A2 | 15 | 75 |
| A2 + (B2.18) Diflufenican | 15+90<br>15 + 30 | $E^A$ = 85 ($E^C$ = 78) Δ 7<br>$E^A$ = 85 ($E^C$ = 78) Δ 7 |
| Wirkstoff/e (Z32) | Aufwandmenge [g a.i./ha] | Herbizide Wirkung 21 DAT [%] gegen *Brachiaria platyphylla* |
| (B2.18) Diflufenican | 270<br>90<br>30 | 20<br>15<br>15 |
| A2 | 15<br>5<br>1,7 | 85<br>65<br>10 |

(fortgesetzt)

| Wirkstoff/e (Z32) | Aufwandmenge [g a.i./ha] | Herbizide Wirkung 21 DAT [%] gegen *Brachiaria platyphylla* |
|---|---|---|
| A2 + (B2.18) Diflufenican | 5+270<br>15+90<br>5+90<br>1,7 + 90<br>15+30<br>5 + 30<br>1,7 + 30 | $E^A$ = 90 ($E^C$ = 72) Δ 18<br>$E^A$ = 99 ($E^C$ = 87) Δ 12<br>$E^A$ = 98 ($E^C$ = 70) Δ 28<br>$E^A$ = 50 ($E^C$ = 24) Δ 26<br>$E^A$ = 98 ($E^C$ = 87) Δ 11<br>$E^A$ = 93 ($E^C$ = 70) Δ 23<br>$E^A$ = 40 ($E^C$ = 24) Δ 16 |
| | | |
| Wirkstoff/e (Z32) | Aufwandmenge [g a.i./ha] | Herbizide Wirkung 21 DAT [%] gegen *Echinochloa crus-galli* |
| (B2.18) Diflufenican | 270<br>90<br>30 | 15<br>10<br>10 |
| A2 | 15<br>5 | 80<br>40 |
| A2 + (B2.18) Diflufenican | 15 + 270<br>15+90<br>15+30<br>5+30 | $E^A$ = 90 ($E^C$ = =83) Δ 7<br>$E^A$ = 97 ($E^C$ = 82) Δ 15<br>$E^A$ = 99 ($E^C$ = 82) Δ 17<br>$E^A$ = 70 ($E^C$ = 46) Δ 24 |
| Wirkstoff/e (Z32) | Aufwandmenge [g a.i./ha] | Herbizide Wirkung 21 DAT [%] gegen *Eleusine indica* |
| (B2.18) Diflufenican | 270<br>90<br>30 | 65<br>20<br>20 |
| A2 | 15<br>1,7 | 70<br>10 |
| A2 + (B2.18) Diflufenican | 15 + 270<br>15+90<br>15+30<br>1,7 + 30 | $E^A$ = 99 ($E^C$ = 90) Δ 9<br>$E^A$ = 98 ($E^C$ = 76) Δ 22<br>$E^A$ = 99 ($E^C$ = 76) Δ 23<br>$E^A$ = 35 ($E^C$ = 28) Δ 7 |
| | | |
| Wirkstoff/e (Z32) | Aufwandmenge [g a.i./ha] | Herbizide Wirkung 21 DAT [%] gegen *Kochia scoparia* |
| (B2.18) Diflufenican | 30 | 25 |
| A2 | 5 | 40 |
| A2 + (B2.18) Diflufenican | 5+30 | $E^A$ = 65 ($E^C$ = 55) Δ 10 |
| | | |
| Wirkstoff/e (Z32) | Aufwandmenge [g a.i./ha] | Herbizide Wirkung 21 DAT [%] gegen *Setaria viridis* |
| (B2.18) Diflufenican | 270<br>90<br>30 | 15<br>15<br>10 |

(fortgesetzt)

| Wirkstoff/e (Z32) | Aufwandmenge [g a.i./ha] | Herbizide Wirkung 21 DAT [%] gegen *Setaria viridis* |
|---|---|---|
| A2 | 5<br>1,7 | 80<br>10 |
| A2 + (B2.18) Diflufenican | 5+270<br>1,7 + 270<br>5+90<br>5+30 | $E^A$ = 99 ($E^C$ = 83) Δ 16<br>$E^A$ = 65 ($E^C$ = 24) Δ 41<br>$E^A$ = 93 ($E^C$ = 83) Δ 10<br>$E^A$ = 99 ($E^C$ = 82) Δ 17 |
| Wirkstoff/e (Z32) | Aufwandmenge [g a.i./ha] | Herbizide Wirkung 21 DAT [%] gegen *Digitaria sanguinalis* |
| (B2.18) Diflufenican | 270<br>90<br>30 | 20<br>20<br>15 |
| A2 | 15<br>5 | 80<br>25 |
| A2 + (B2.18) Diflufenican | 15 + 270<br>15+90<br>5+30 | $E^A$ = 95 ($E^C$ = 84) Δ 11<br>$E^A$ = 99 ($E^C$ = 84) Δ 15<br>$E^A$= 75 ($E^C$ = 36) Δ 39 |
| | | |
| Wirkstoff/e (Z32) | Aufwandmenge [g a.i./ha] | Herbizide Wirkung 21 DAT [%] gegen *Sorghum halepense* |
| (B2.18) Diflufenican | 270<br>90<br>30 | 15<br>15<br>10 |
| A2 | 5<br>1,7 | 75<br>15 |
| A2 + (B2.18) Diflufenican | 5+270<br>1,7 + 270<br>5+90<br>1,7 + 90<br>5+30<br>1,7 + 30 | $E^A$ = 93 ($E^C$ = 79) Δ 14<br>$E^A$ = 50 ($E^C$ = 28) Δ 22<br>$E^A$ = 95 ($E^C$ = 79) Δ 16<br>$E^A$ = 70 ($E^C$ = 28) Δ 42<br>$E^A$ = 95 ($E^C$ = 78) Δ 17<br>$E^A$ = 30 ($E^C$ = 24) Δ 6 |
| | | |
| Wirkstoff/e | Aufwandmenge [g a.i./ha] | Herbizide Wirkung 28 DAT [%] gegen *Brachiaria plantaginea* |
| (B2.4) Asulam (CAS 2302-17-2) | 720 | 0 |
| A3 | 100 | 82 |
| A3 + (B2.4) Asulam (CAS 2302-17-2) | 100 + 720 | $E^A$ = 87 ($E^C$ = 82)<br>Δ 5 |
| Wirkstoff/e | Aufwandmenge [g a.i./ha] | Herbizide Wirkung 28 DAT [%] gegen *Digitaria horizontalis* |
| (B2.4) Asulam (CAS 2302-17-2) | 720 | 0 |
| A3 | 100 | 96 |
| A3 + (B2.4) Asulam (CAS 2302-17-2) | 100 + 720 | $E^A$ = 99 ($E^C$ = 96)<br>Δ 3 |

(fortgesetzt)

| Wirkstoff/e | Aufwandmenge [g a.i./ha] | Herbizide Wirkung 28 DAT [%] gegen *Digitaria horizontalis* |
|---|---|---|
| | | |
| Wirkstoff/e | Aufwandmenge [g a.i./ha] | Herbizide Wirkung 28 DAT [%] gegen *Digitaria horizontalis* |
| (B2.4) Asulam (CAS 2302-17-2) | 720 | 0 |
| A3 | 100 | 87 |
| A3 + (B2.4) Asulam (CAS 2302-17-2) | 100 + 720 | $E^A$ = 90 ($E^C$ = 87)<br>Δ 3 |
| | | |
| Wirkstoff/e (Z61) | Aufwandmenge [g a.i./ha] | Herbizide Wirkung 37 DAT [%] gegen *Digitaria sanguinalis* |
| (B2.18) Diflufenican | 180 | 0 |
| A3 | 100 | 94 |
| A3 + (B2.18) Diflufenican | 100 + 180 | $E^A$ = 99 ($E^C$ = 94)<br>Δ 5 |
| | | |
| Wirkstoff/e (Z61) | Aufwandmenge [g a.i./ha] | Herbizide Wirkung 27 DAT [%] gegen *Chenopodium album* |
| (B2.18) Diflufenican | 180 | 20 |
| A3 | 100 | 85 |
| A3 + (B2.18) Diflufenican | 100 + 180 | $E^A$ = 96 ($E^C$ = 88)<br>Δ 8 |
| | | |
| Wirkstoff/e (Z61) | Aufwandmenge [g a.i./ha] | Herbizide Wirkung 28 DAT [%] gegen *Brachiaria plantaginea* |
| (B2.18) Diflufenican | 200 | 0 |
| A3 | 100 | 82 |
| A3 + (B2.18) Diflufenican | 100 + 200 | $E^A$ = 89 ($E^C$ = 82)<br>Δ 7 |
| Wirkstoff/e (Z61) | Aufwandmenge [g a.i./ha] | Herbizide Wirkung 28 DAT [%] gegen *Digitaria horizontalis* |
| (B2.18) Diflufenican | 200 | 0 |
| A3 | 100 | 96 |
| A3 + (B2.18) Diflufenican | 100 + 200 | $E^A$ = 100 ($E^C$ = 96)<br>Δ 4 |
| | | |
| Wirkstoff/e (Z61) | Aufwandmenge [g a.i./ha] | Herbizide Wirkung 28 DAT [%] gegen *Brachiaria decumbens* |
| (B2.18) Diflufenican | 200 | 0 |
| A3 | 100 | 87 |

(fortgesetzt)

| Wirkstoff/e (Z61) | Aufwandmenge [g a.i./ha] | Herbizide Wirkung 28 DAT [%] gegen *Brachiaria decumbens* |
|---|---|---|
| A3 + (B2.18) Diflufenican | 100 + 200 | $E^A$ = 99 ($E^C$ = 87)<br>Δ 12 |
| | | |
| Wirkstoff/e (Z61) | Aufwandmenge [g a.i./ha] | Herbizide Wirkung 28 DAT [%] gegen *Panicum maximum* |
| (B2.18) Diflufenican | 200 | 0 |
| A3 | 100 | 82 |
| A3 + (B2.18) Diflufenican | 100 + 200 | $E^A$ = 92 ($E^C$ = 82)<br>Δ 10 |
| | | |
| Wirkstoff/e (Z61) | Aufwandmenge [g a.i. / ha] | Herbizide Wirkung in [%] 14 DAT gegen *Alopecurus myosuroides* |
| A3 | 4<br>1 | 90<br>15 |
| (B2.18) Diflufenican | 270<br>90 | 20<br>15 |
| A3 + (B2.18) Diflufenican | 4 + 270<br>4 + 90<br>1 + 270<br>1 + 90 | $E^A$ = 97 ($E^C$ = 92) Δ = 5<br>$E^A$ = 97 ($E^C$ = 92) Δ = 5<br>$E^A$ = 97 ($E^C$ = 32) Δ = 65<br>$E^A$ = 80 ($E^C$ = 28) Δ = 52 |
| Wirkstoff/e (Z61) | Aufwandmenge [g a.i. / ha] | Herbizide Wirkung in [%] 28 DAT gegen *Alopecurus myosuroides* |
| A3 | 16<br>4<br>1 | 90<br>50<br>15 |
| (B2.18) Diflufenican | 270 90 | 20 15 |
| A3 + (B2.18) Diflufenican | 16 + 270<br>4 + 270<br>4 + 90<br>1 + 270<br>1 + 90 | $E^A$ = 98 ($E^C$ = 92) Δ = 6<br>$E^A$ = 100 ($E^C$ = 60) Δ = 40<br>$E^A$ = 85 ($E^C$ = 58) Δ = 27<br>$E^A$ = 100 ($E^C$ = 32) Δ = 68<br>$E^A$ = 35 ($E^C$ = 28) Δ = 7 |
| | | |
| Wirkstoff/e (Z61) | Aufwandmenge [g a.i. / ha] | Herbizide Wirkung in [%] 14 DAT gegen *Bromus sterilis* |
| A3 | 4<br>1 | 85<br>15 |
| (B2.18) Diflufenican | 270 90 | 15 10 |
| A3 + (B2.18) Diflufenican | 4 + 270<br>1 + 270<br>1 + 90 | $E^A$ = 95 ($E^C$ = 87) Δ = 8<br>$E^A$ = 85 ($E^C$ = 28) Δ = 57<br>$E^A$ = 85 ($E^C$ = 24) Δ = 61 |
| | | |

(fortgesetzt)

| Wirkstoff/e (Z61) | Aufwandmenge [g a.i. / ha] | Herbizide Wirkung in [%] 28 DAT gegen *Bromus sterilis* |
|---|---|---|
| A3 | 1 | 15 |
| (B2.18) Diflufenican | 270<br>90 | 20<br>15 |
| A3 + (B2.18) Diflufenican | 1 + 270<br>1 + 90 | $E^A$ = 95 ($E^C$ = 32) Δ = 63<br>$E^A$ = 80 ($E^C$ = 28) Δ = 52 |
| Wirkstoff/e (Z61) | Aufwandmenge [g a.i. / ha] | Herbizide Wirkung in [%] 28 DAT gegen *Centaurea cyanus* |
| A3 | 1 | 0 |
| (B2.18) Diflufenican | 270<br>90 | 40<br>25 |
| A3 + (B2.18) Diflufenican | 1 + 270<br>1 + 90 | $E^A$ = 50 ($E^C$ = 40) Δ 10<br>$E^A$ = 30 ($E^C$ = 25) Δ 5 |
| | | |
| Wirkstoff/e (Z61) | Aufwandmenge [g a.i. / ha] | Herbizide Wirkung in [%] 14 DAT gegen *Galium aparine* |
| A3 | 1 | 40 |
| (B2.18) Diflufenican | 270<br>90<br>30 | 60<br>50<br>50 |
| A3 + (B2.18) Diflufenican | 1 + 270<br>1 + 90<br>1 + 30 | $E^A$ = 85 ($E^C$ = 76) Δ = 9<br>$E^A$ = 90 ($E^C$ = 70) Δ = 20<br>$E^A$ = 80 ($E^C$ = 70) Δ = 10 |
| | | |
| Wirkstoff/e (Z61) | Aufwandmenge [g a.i. / ha] | Herbizide Wirkung in [%] 28 DAT gegen *Galium aparine* |
| A3 | 16<br>1 | 75<br>15 |
| (B2.18) Diflufenican | 270<br>90<br>30 | 40<br>30<br>30 |
| A3 + (B2.18) Diflufenican | 16 + 270<br>16+90<br>1 + 270<br>1 + 90<br>1 +30 | $E^A$ = 95 ($E^C$ = 85) Δ = 10<br>$E^A$ = 90 ($E^C$ = 83) Δ = 7<br>$E^A$ = 70 ($E^C$ = 49) Δ = 21<br>$E^A$ = 70 ($E^C$ = 41) Δ = 29<br>$E^A$ = 70 ($E^C$ = 41) Δ = 29 |
| Wirkstoff/e (Z61) | Aufwandmenge [g a.i. / ha] | Herbizide Wirkung in [%] 14 DAT gegen *Lamium purpureum L.* |
| A3 | 1 | 65 |
| (B2.18) Diflufenican | 270<br>90 | 35<br>30 |
| A3 + (B2.18) Diflufenican | 1 + 270<br>1 + 90 | $E^A$ = 95 ($E^C$ = 77) Δ = 18<br>$E^A$ = 93 ($E^C$ = 76) Δ = 17 |

(fortgesetzt)

| Wirkstoff/e (Z61) | Aufwandmenge [g a.i. / ha] | Herbizide Wirkung in [%] 14 DAT gegen *Lamium purpureum L.* |
|---|---|---|
| | | |
| Wirkstoff/e (Z61) | Aufwandmenge [g a.i. / ha] | Herbizide Wirkung in [%] 28 DAT gegen *Lamium purpureum L.* |
| A3 | 4<br>1 | 40<br>25 |
| (B2.18) Diflufenican | 270<br>30<br>90 | 20<br>20<br>20 |
| A3 + (B2.18) Diflufenican | 4 + 270<br>4 + 30<br>1 + 270<br>1 + 90<br>1 + 30 | $E^A = 70$ ($E^C = 52$) $\Delta = 18$<br>$E^A = 60$ ($E^C = 52$) $\Delta = 8$<br>$E^A = 60$ ($E^C = 40$) $\Delta = 20$<br>$E^A = 60$ ($E^C = 40$) $\Delta = 20$<br>$E^A = 60$ ($E^C = 40$) $\Delta = 20$ |
| | | |
| Wirkstoff/e (Z61) | Aufwandmenge [g a.i. / ha] | Herbizide Wirkung in [%] 14 DAT gegen *Lolium rigidum* |
| A3 | 1 | 35 |
| (B2.18) Diflufenican | 270<br>90<br>30 | 10<br>10<br>0 |
| A3 + (B2.18) Diflufenican | 1 + 270<br>1 + 90<br>1 + 30 | $E^A = 97$ ($E^C = 42$) $\Delta = 55$<br>$E^A = 95$ ($E^C = 42$) $\Delta = 53$<br>$E^A = 45$ ($E^C = 35$) $\Delta = 10$ |
| Wirkstoff/e (Z61) | Aufwandmenge [g a.i. / ha] | Herbizide Wirkung in [%] 28 DAT gegen *Lolium rigidum* |
| A3 | 4<br>1 | 50<br>15 |
| (B2.18) Diflufenican | 270<br>90 | 20<br>15 |
| A3 + (B2.18) Diflufenican | 4 + 270<br>4 + 90<br>1 + 270<br>1 + 90 | $E^A = 95$ ($E^C = 60$) $\Delta = 35$<br>$E^A = 70$ ($E^C = 58$) $\Delta = 12$<br>$E^A = 95$ ($E^C = 32$) $\Delta = 63$<br>$E^A = 80$ ($E^C = 28$) $\Delta = 52$ |
| | | |
| Wirkstoff/e (Z61) | Aufwandmenge [g a.i. / ha] | Herbizide Wirkung in [%] 14 DAT gegen *Lolium rigidum* (resistenter Biotyp) |
| A3 | 4<br>1 | 40<br>15 |
| (B2.18) Diflufenican | 270<br>90 | 10<br>0 |
| A3 + (B2.18) Diflufenican | 4 + 270<br>1 + 270<br>1 + 90 | $E^A = 93$ ($E^C = 46$) $\Delta = 47$<br>$E^A = 80$ ($E^C = 24$) $\Delta = 56$<br>$E^A = 80$ ($E^C = 15$) $\Delta = 65$ |

(fortgesetzt)

| Wirkstoff/e (Z61) | Aufwandmenge [g a.i. / ha] | Herbizide Wirkung in [%] 14 DAT gegen *Lolium rigidum* (resistenter Biotyp) |
|---|---|---|
| | | |
| Wirkstoff/e (Z61) | Aufwandmenge [g a.i. / ha] | Herbizide Wirkung in [%] 28 DAT gegen *Lolium rigidum* (resistenter Biotyp) |
| A3 | 4<br>1 | 10<br>0 |
| (B2.18) Diflufenican | 270<br>90 | 20<br>10 |
| A3 + (B2.18) Diflufenican | 4 + 270<br>1 + 90 | $E^A$ = 60 ($E^C$ = 28) Δ = 32<br>$E^A$ = 35 ($E^C$ = 10) Δ = 25 |
| Wirkstoff/e (Z61) | Aufwandmenge [g a.i. / ha] | Herbizide Wirkung in [%] 14 DAT gegen *Matricaria inodora* |
| A3 | 1 | 0 |
| (B2.18) Diflufenican | 270<br>30 | 30<br>15 |
| A3 + (B2.18) Diflufenican | 1 + 270<br>1 + 30 | $E^A$ = 40 ($E^C$ = 30) Δ = 10<br>$E^A$ = 30 ($E^C$ = 15) Δ = 15 |
| | | |
| Wirkstoff/e (Z61) | Aufwandmenge [g a.i. / ha] | Herbizide Wirkung in [%] 28 DAT gegen *Matricaria inodora* |
| A3 | 4<br>1 | 20<br>15 |
| (B2.18) Diflufenican | 30 | 0 |
| A3 + (B2.18) Diflufenican | 4 + 30<br>1 + 30 | $E^A$ = 30 ($E^C$ = 20) Δ 10<br>$E^A$ = 20 ($E^C$ = 15) Δ = 5 |
| | | |
| Wirkstoff/e (Z61) | Aufwandmenge [g a.i. / ha] | Herbizide Wirkung in [%] 14 DAT gegen *Phalaris minor* |
| A3 | 16<br>4<br>1 | 85<br>90<br>10 |
| (B2.18) Diflufenican | 270<br>90<br>30 | 25<br>0<br>0 |
| A3 + (B2.18) Diflufenican | 16 + 270<br>16 + 90<br>4 + 90<br>1 + 270<br>1 + 90<br>1 + 30 | $E^A$ = 97 ($E^C$ = 89) Δ = 8<br>$E^A$ = 95 ($E^C$ = 85) Δ = 10<br>$E^A$ = 97 ($E^C$ = 90) Δ = 7<br>$E^A$ = 95 ($E^C$ = 33) Δ = 62<br>$E^A$ = 95 ($E^C$ = 10) Δ = 85<br>$E^A$ = 25 ($E^C$ = 10) Δ = 15 |
| Wirkstoff/e (Z61) | Aufwandmenge [g a.i. / ha] | Herbizide Wirkung in [%] 28 DAT gegen *Phalaris minor* |
| A3 | 16<br>4 | 40<br>70 |

(fortgesetzt)

| Wirkstoff/e (Z61) | Aufwandmenge [g a.i. / ha] | Herbizide Wirkung in [%] 28 DAT gegen *Phalaris minor* |
|---|---|---|
| | 1 | 0 |
| (B2.18) Diflufenican | 270<br>90 | 20<br>5 |
| A3 + (B2.18) Diflufenican | 16 + 270<br>16 + 90<br>4 + 270<br>4 + 90<br>1 + 270<br>1 + 90 | $E^A$ = 80 ($E^C$ = 52) Δ = 28<br>$E^A$ = 70 ($E^C$ = 43) Δ = 27<br>$E^A$ = 100 ($E^C$ = 76) Δ = 24<br>$E^A$ = 97 ($E^C$ = 72) Δ = 25<br>$E^A$ = 50 ($E^C$ = 20) Δ = 30<br>$E^A$ = 70 ($E^C$ = 5) Δ = 65 |
| | | |
| Wirkstoff/e (Z61) | Aufwandmenge [g a.i. / ha] | Herbizide Wirkung in [%] 14 DAT gegen *Poa annua L.* |
| A3 | 16<br>1 | 85<br>40 |
| (B2.18) Diflufenican | 270 90 | 20 20 |
| A3 + (B2.18) Diflufenican | 16 + 270<br>16 + 90<br>1 + 270<br>1 + 90 | $E^A$ = 97 ($E^C$ = 88) Δ = 9<br>$E^A$ = 97 ($E^C$ = 88) Δ = 9<br>$E^A$ = 95 ($E^C$ = 52) Δ = 43<br>$E^A$ = 95 ($E^C$ = 52) Δ = 43 |
| | | |
| Wirkstoff/e (Z61) | Aufwandmenge [g a.i. / ha] | Herbizide Wirkung in [%] 28 DAT gegen *Poa annua L.* |
| A3 | 16<br>1 | 40<br>15 |
| (B2.18) Diflufenican | 270 90 | 15 10 |
| A3 + (B2.18) Diflufenican | 16 + 270<br>16 + 90<br>1 + 270<br>1 + 90 | $E^A$ = 80 ($E^C$ = 49) Δ = 31<br>$E^A$ = 97 ($E^C$ = 46) Δ = 51<br>$E^A$ = 80 ($E^C$ = 28) Δ = 52<br>$E^A$ = 95 ($E^C$ = 24) Δ = 71 |
| Wirkstoff/e (Z61) | Aufwandmenge [g a.i. / ha] | Herbizide Wirkung in [%] 14 DAT gegen *Veronica hederifolia* |
| A3 | 16 | 40 |
| (B2.18) Diflufenican | 270 | 85 |
| A3 + (B2.18) Diflufenican | 16 + 270 | 97 ($E^C$ = 91) Δ = 6 |
| | | |
| Wirkstoff/e (Z61) | Aufwandmenge [g a.i. / ha] | Herbizide Wirkung in [%] 28 DAT gegen *Viola tricolor* |
| A3 | 16 1 | 20 15 |
| (B2.18) Diflufenican | 30 | 40 |
| A3 + (B2.18) Diflufenican | 16 + 30<br>1 + 30 | $E^A$ = 97 ($E^C$ = 52) Δ = 45<br>$E^A$ = 60 ($E^C$ = 49) Δ = 11 |
| | | |

(fortgesetzt)

| Wirkstoff/e (Z119) | Aufwandmenge [g a.i. / ha] | Herbizide Wirkung in [%] 14 DAT gegen *Alopecurus myosuroides* |
|---|---|---|
| A5 | 16<br>1 | 85<br>50 |
| (B2.18) Diflufenican | 270 | 10 |
| A5 + (B2.18) Diflufenican | 16 + 270<br>1 + 270 | $E^A$ = 95 ($E^C$ = 87) Δ = 8<br>$E^A$ = 70 ($E^C$ = 55) Δ = 15 |
| | | |
| Wirkstoff/e (Z119) | Aufwandmenge [g a.i. / ha] | Herbizide Wirkung in [%] 28 DAT gegen *Alopecurus myosuroides* |
| A5 | 16<br>1 | 90<br>30 |
| (B2.18) Diflufenican | 270<br>90<br>30 | 0<br>0<br>0 |
| A5 + (B2.18) Diflufenican | 16 + 270<br>16 + 90<br>16 + 30<br>1 + 270<br>1 + 90 | $E^A$ = 98 ($E^C$ = 90) Δ = 8<br>$E^A$ = 98 ($E^C$ = 90) Δ = 8<br>$E^A$ = 95 ($E^C$ = 90) Δ = 5<br>$E^A$ = 40 ($E^C$ = 30) Δ = 10<br>$E^A$ = 40 ($E^C$ = 30) Δ = 10 |
| Wirkstoff/e (Z119) | Aufwandmenge [g a.i. / ha] | Herbizide Wirkung in [%] 14 DAT gegen *Bromus sterilis* |
| A5 | 1 | 50 |
| (B2.18) Diflufenican | 270<br>90 | 5<br>5 |
| A5 + (B2.18) Diflufenican | 1 + 270<br>1 + 90 | $E^A$ = 70 ($E^C$ = 53) Δ = 17<br>$E^A$ = 60 ($E^C$ = 53) Δ = 7 |
| | | |
| Wirkstoff/e (Z119) | Aufwandmenge [g a.i. / ha] | Herbizide Wirkung in [%] 28 DAT gegen *Bromus sterilis* |
| A5 | 1 | 30 |
| (B2.18) Diflufenican | 270 | 0 |
| A5 + (B2.18) Diflufenican | 1 + 270 | $E^A$ = 50 ($E^C$ = 30) Δ = 20 |
| | | |
| Wirkstoff/e (Z119) | Aufwandmenge [g a.i. / ha] | Herbizide Wirkung in [%] 14 DAT gegen *Centaurea cyanus* |
| A5 | 16<br>4 | 85<br>60 |
| (B2.18) Diflufenican | 270<br>90<br>30 | 10<br>0<br>0 |

(fortgesetzt)

| Wirkstoff/e (Z119) | Aufwandmenge [g a.i. / ha] | Herbizide Wirkung in [%] 14 DAT gegen *Centaurea cyanus* |
|---|---|---|
| A5 + (B2.18) Diflufenican | 16 + 270<br>16 + 90<br>16 + 30<br>4 + 90 | $E^A$ = 95 ($E^C$ = 87) Δ = 8<br>$E^A$ = 93 ($E^C$ = 85) Δ = 8<br>$E^A$ = 93 ($E^C$ = 85) Δ = 8<br>$E^A$ = 70 ($E^C$ = 60) Δ = 10 |
| | | |
| Wirkstoff/e (Z119) | Aufwandmenge [g a.i. / ha] | Herbizide Wirkung in [%] 28 DAT gegen *Centaurea cyanus* |
| A5 | 16 | 75 |
| (B2.18) Diflufenican | 270<br>90<br>30 | 5<br>0<br>0 |
| A5 + (B2.18) Diflufenican | 16 + 270<br>16 + 90<br>16 + 30 | $E^A$ = 95 ($E^C$ = 76) Δ = 19<br>$E^A$ = 80 ($E^C$ = 75) Δ = 5<br>$E^A$ = 80 ($E^C$ = 75) Δ = 5 |
| Wirkstoff/e (Z119) | Aufwandmenge [g a.i. / ha] | Herbizide Wirkung in [%] 14 DAT gegen *Galium aparine* |
| A5 | 1 | 60 |
| (B2.18) Diflufenican | 30 | 30 |
| A5 + (B2.18) Diflufenican | 1 + 30 | $E^A$ = 80 ($E^C$ = 72) Δ = 8 |
| | | |
| Wirkstoff/e (Z119) | Aufwandmenge [g a.i. / ha] | Herbizide Wirkung in [%] 28 DAT gegen *Galium aparine* |
| A5 | 16 4 | 70 60 |
| (B2.18) Diflufenican | 30 | 0 |
| A5 + (B2.18) Diflufenican | 16 + 30<br>4 + 30 | $E^A$ = 75 ($E^C$ = 70) Δ = 5<br>$E^A$ = 75 ($E^C$ = 60) Δ = 15 |
| | | |
| Wirkstoff/e (Z119) | Aufwandmenge [g a.i. / ha] | Herbizide Wirkung in [%] 14 DAT gegen *Lamium purpureum L.* |
| A5 | 16 | 80 |
| (B2.18) Diflufenican | 30 | 20 |
| A5 + (B2.18) Diflufenican | 16 + 30 | $E^A$ = 90 ($E^C$ = 84) Δ = 6 |
| | | |
| Wirkstoff/e (Z119) | Aufwandmenge [g a.i. / ha] | Herbizide Wirkung in [%] 14 DAT gegen *Lolium rigidum* |
| A5 | 16<br>1 | 75<br>30 |
| (B2.18) Diflufenican | 90 270 | 5 5 |

(fortgesetzt)

| Wirkstoff/e (Z119) | Aufwandmenge [g a.i. / ha] | Herbizide Wirkung in [%] 14 DAT gegen *Lolium rigidum* |
|---|---|---|
| A5 + (B2.18) Diflufenican | 16 + 90<br>1 + 270 | $E^A$ = 85 ($E^C$ = 76) Δ = 9<br>$E^A$ = 60 ($E^C$ = 34) Δ = 26 |
| Wirkstoff/e (Z119) | Aufwandmenge [g a.i. / ha] | Herbizide Wirkung in [%] 28 DAT gegen *Lolium rigidum* |
| A5 | 16<br>4<br>1 | 60<br>50<br>30 |
| (B2.18) Diflufenican | 270 90 30 | 0 0 0 |
| A5 + (B2.18) Diflufenican | 16 + 270<br>16 + 90<br>16 + 30<br>4 + 270<br>4 + 90<br>4 + 30<br>1 + 270 | $E^A$ = 80 ($E^C$ = 60) Δ = 20<br>$E^A$ = 85 ($E^C$ = 60) Δ = 25<br>$E^A$ = 75 ($E^C$ = 60) Δ = 15<br>$E^A$ = 80 ($E^C$ = 50) Δ = 30<br>$E^A$ = 70 ($E^C$ = 50) Δ = 20<br>$E^A$ = 60 ($E^C$ = 50) Δ = 10<br>$E^A$ = 50 ($E^C$ = 30) Δ = 20 |
| | | |
| Wirkstoff/e (Z119) | Aufwandmenge [g a.i. / ha] | Herbizide Wirkung in [%] 14 DAT gegen *Lolium rigidum* (resistenter Biotyp) |
| A5 | 16<br>1 | 70<br>30 |
| (B2.18) Diflufenican | 90<br>30<br>270 | 5<br>0<br>5 |
| A5 + (B2.18) Diflufenican | 16 + 90<br>16 + 30<br>1 + 270 | $E^A$ = 85 ($E^C$ = 72) Δ = 13<br>$E^A$ = 75 ($E^C$ = 70) Δ = 5<br>$E^A$ = 40 ($E^C$ = 34) Δ = 6 |
| | | |
| Wirkstoff/e (Z119) | Aufwandmenge [g a.i. / ha] | Herbizide Wirkung in [%] 28 DAT gegen *Lolium rigidum* (resistenter Biotyp) |
| A5 | 1 | 20 |
| (B2.18) Diflufenican | 270 | 0 |
| A5 + (B2.18) Diflufenican | 1 + 270 | $E^A$ = 30 ($E^C$ = 20) Δ = 10 |
| | | |
| Wirkstoff/e (Z119) | Aufwandmenge [g a.i. / ha] | Herbizide Wirkung in [%] 28 DAT gegen *Matricaria inodora* |
| A5 | 16<br>4 | 70<br>30 |
| (B2.18) Diflufenican | 270<br>90 | 50<br>50 |
| A5 + (B2.18) Diflufenican | 16 + 270<br>4 + 90 | $E^A$ = 95 ($E^C$ = 85) Δ = 10<br>$E^A$ = 70 ($E^C$ = 65) Δ = 5 |

(fortgesetzt)

| Wirkstoff/e (Z119) | Aufwandmenge [g a.i. / ha] | Herbizide Wirkung in [%] 14 DAT gegen *Phalaris minor* |
|---|---|---|
| A5 | 16<br>4 | 85<br>85 |
| (B2.18) Diflufenican | 270<br>90<br>270 | 10<br>5<br>10 |
| A5 + (B2.18) Diflufenican | 16 + 270<br>16 + 90<br>4 + 270 | $E^A$ = 93 ($E^C$ = 87) Δ = 6<br>$E^A$ = 93 ($E^C$ = 86) Δ = 7<br>$E^A$ = 93 (E = 87) Δ = 6 |
| | | |
| Wirkstoff/e (Z119) | Aufwandmenge [g a.i. / ha] | Herbizide Wirkung in [%] 28 DAT gegen *Phalaris minor* |
| A5 | 16<br>4 | 70<br>60 |
| (B2.18) Diflufenican | 270<br>90<br>30 | 5<br>0<br>0 |
| A5 + (B2.18) Diflufenican | 16 + 270<br>16 + 90<br>16 + 30<br>4 + 270<br>4 + 30 | $E^A$ = 80 ($E^C$ = 72) Δ = 8<br>$E^A$ = 98 ($E^C$ = 70) Δ = 28<br>$E^A$ = 85 ($E^C$ = 70) Δ = 15<br>$E^A$ = 85 ($E^C$ = 62) Δ = 23<br>$E^A$ = 70 ($E^C$ = 60) Δ = 10 |
| | | |
| Wirkstoff/e (Z119) | Aufwandmenge [g a.i. / ha] | Herbizide Wirkung in [%] 14 DAT gegen *Poa annua L.* |
| A5 | 16 1 | 70 30 |
| (B2.18) Diflufenican | 270<br>90<br>30 | 10<br>5<br>0 |
| A5 + (B2.18) Diflufenican | 16 + 270<br>16 + 90<br>16 + 30<br>1 + 270<br>1 + 90<br>1 + 30 | $E^A$ = 85 ($E^C$ = 73) Δ = 12<br>$E^A$ = 90 ($E^C$ = 72) Δ = 18<br>$E^A$ = 90 ($E^C$ = 70) Δ = 20<br>$E^A$ = 50 ($E^C$ = 37) Δ = 13<br>$E^A$ = 50 ($E^C$ = 34) Δ = 16<br>$E^A$ = 50 ($E^C$ = 30) Δ = 20 |
| Wirkstoff/e (Z119) | Aufwandmenge [g a.i. / ha] | Herbizide Wirkung in [%] 28 DAT gegen *Poa annua L.* |
| A5 | 16<br>1 | 40<br>20 |
| (B2.18) Diflufenican | 270<br>90<br>30 | 0<br>0<br>0 |
| A5 + (B2.18) Diflufenican | 16 + 270<br>16 + 90<br>16 + 30 | $E^A$ = 65 ($E^C$ = 40) Δ = 25<br>$E^A$ = 85 ($E^C$ = 40) Δ = 45<br>$E^A$ = 80 ($E^C$ = 40) Δ = 40 |

(fortgesetzt)

| Wirkstoff/e (Z119) | Aufwandmenge [g a.i. / ha] | Herbizide Wirkung in [%] 28 DAT gegen *Poa annua L.* |
|---|---|---|
| | 1 + 270 | $E^A$ = 50 ($E^C$ = 20) Δ = 30 |
| | | |
| Wirkstoff/e (Z119) | Aufwandmenge [g a.i. / ha] | Herbizide Wirkung in [%] 14 DAT gegen *Viola tricolor* |
| A5 | 16 | 60 |
| (B2.18) Diflufenican | 270 | 40 |
| A5 + (B2.18) Diflufenican | 16 + 270 | $E^A$ = 85 ($E^C$ = 76) Δ = 9 |
| | | |
| Wirkstoff/e (Z148) | Aufwandmenge [g a.i. / ha] | Herbizide Wirkung in [%] 14 DAT gegen *Bromus sterilis* |
| A6 | 4 1 | 80 75 |
| (B2.18) Diflufenican | 270<br>90<br>30 | 5<br>5<br>0 |
| A6 + (B2.18) Diflufenican | 4 + 270<br>4 + 90<br>4 + 30<br>1 + 30 | $E^A$ = 90 ($E^B$ = 81) Δ = 9<br>$E^A$ = 90 (EB=81) Δ = 9<br>$E^A$ = 85 ($E^B$ = 80) Δ = 5<br>$E^A$ = 80 ($E^B$ = 75) Δ = 5 |
| | | |
| Wirkstoff/e (Z148) | Aufwandmenge [g a.i. / ha] | Herbizide Wirkung in [%] 28 DAT gegen *Bromus sterilis* |
| A6 | 1 | 50 |
| (B2.18) Diflufenican | 270<br>90<br>30 | 0<br>0<br>0 |
| A6 + (B2.18) Diflufenican | 1 + 270<br>1 + 90<br>1 + 30 | $E^A$ = 70 ($E^B$ = 50) Δ = 20<br>$E^A$ = 90 ($E^B$ = 50) Δ = 40<br>$E^A$ = 60 ($E^B$ = 50) Δ = 10 |
| Wirkstoff/e (Z148) | Aufwandmenge [g a.i. / ha] | Herbizide Wirkung in [%] 14 DAT gegen *Centaurea cyanus* |
| A6 | 4<br>1 | 85<br>40 |
| (B2.18) Diflufenican | 90<br>30<br>270 | 0<br>0<br>10 |
| A6 + (B2.18) Diflufenican | 4 + 90<br>4 + 30<br>1 + 270<br>1 + 30 | $E^A$ = 90 ($E^B$ = 85) Δ = 5<br>$E^A$ = 90 ($E^B$ = 85) Δ = 5<br>$E^A$ = 85 ($E^B$ = 46) Δ = 39<br>$E^A$ = 70 ($E^B$ = 40) Δ = 30 |
| | | |

(fortgesetzt)

| Wirkstoff/e (Z148) | Aufwandmenge [g a.i. / ha] | Herbizide Wirkung in [%] 28 DAT gegen *Centaurea cyanus* |
|---|---|---|
| A6 | 4<br>1 | 70<br>40 |
| (B2.18) Diflufenican | 90<br>30<br>270 | 0<br>0<br>5 |
| A6 + (B2.18) Diflufenican | 4 + 90<br>4 + 30<br>1 + 270 | $E^A$ = 80 ($E^B$ = 70) Δ = 10<br>$E^A$ = 90 ($E^B$ = 70) Δ = 20<br>$E^A$ = 70 ($E^B$ = 43) Δ = 27 |

| Wirkstoff/e (Z148) | Aufwandmenge [g a.i. / ha] | Herbizide Wirkung in [%] 28 DAT gegen *Galium aparine* |
|---|---|---|
| A6 | 1 | 60 |
| (B2.18) Diflufenican | 90<br>30 | 20<br>0 |
| A6 + (B2.18) Diflufenican | 1 + 90<br>1 + 30 | $E^A$ = 75 ($E^B$ = 68) Δ = 7<br>$E^A$ = 70 ($E^B$ = 60) Δ = 10 |

| Wirkstoff/e (Z148) | Aufwandmenge [g a.i. / ha] | Herbizide Wirkung in [%] 14 DAT gegen *Lamium purpureum L.* |
|---|---|---|
| A6 | 4 | 85 |
| (B2.18) Diflufenican | 30 | 20 |
| A6 + (B2.18) Diflufenican | 4 + 30 | $E^A$ = 93 ($E^B$ = 88) Δ = 5 |

| Wirkstoff/e (Z148) | Aufwandmenge [g a.i. / ha] | Herbizide Wirkung in [%] 28 DAT gegen *Lamium purpureum L.* |
|---|---|---|
| A6 | 1 | 75 |
| (B2.18) Diflufenican | 90<br>30 | 20<br>10 |
| A6 + (B2.18) Diflufenican | 1 + 90<br>1 + 30 | $E^A$ = 85 ($E^B$ = 80) Δ = 5<br>$E^A$ = 85 ($E^B$ = 78) Δ = 7 |

| Wirkstoff/e (Z148) | Aufwandmenge [g a.i. / ha] | Herbizide Wirkung in [%] 28 DAT gegen *Lolium rigidum* |
|---|---|---|
| A6 | 16 | 90 |
| (B2.18) Diflufenican | 270<br>90 | 0<br>0 |
| A6 + (B2.18) Diflufenican | 16 + 270<br>16 + 90 | $E^A$ = 95 ($E^B$ = 90) Δ = 5<br>$E^A$ = 95 ($E^B$ = 90) Δ = 5 |

| Wirkstoff/e (Z148) | Aufwandmenge [g a.i. / ha] | Herbizide Wirkung in [%] 28 DAT gegen *Lolium rigidum* (resistenter Biotyp) |
|---|---|---|
| A6 | 16 | 70 |

(fortgesetzt)

| Wirkstoff/e (Z148) | Aufwandmenge [g a.i. / ha] | Herbizide Wirkung in [%] 28 DAT gegen *Lolium rigidum* (resistenter Biotyp) |
|---|---|---|
| (B2.18) Diflufenican | 270<br>90<br>30 | 0<br>0<br>0 |
| A6 + (B2.18) Diflufenican | 16 + 270<br>16 + 90<br>16 + 30 | $E^A = 75$ ($E^B = 70$) $\Delta = 5$<br>$E^A = 85$ ($E^B = 70$) $\Delta = 15$<br>$E^A = 80$ ($E^B = 70$) $\Delta = 10$ |
| | | |
| Wirkstoff/e (Z148) | Aufwandmenge [g a.i. / ha] | Herbizide Wirkung in [%] 14 DAT gegen *Matricaria inodora* |
| A6 | 16 | 70 |
| (B2.18) Diflufenican | 90 | 50 |
| A6 + (B2.18) Diflufenican | 16 + 90 | $E^A = 90$ ($E^B = 85$) $\Delta = 5$ |
| Wirkstoff/e (Z148) | Aufwandmenge [g a.i. / ha] | Herbizide Wirkung in [%] 28 DAT gegen *Phalaris minor* |
| A6 | 16 | 90 |
| (B2.18) Diflufenican | 270<br>90<br>30 | 5<br>0<br>0 |
| A6 + (B2.18) Diflufenican | 16 + 270<br>16 + 90<br>16 + 30 | $E^A = 98$ ($E^B = 91$) $\Delta = 7$<br>$E^A = 98$ ($E^B = 90$) $\Delta = 8$<br>$E^A = 98$ ($E^B = 90$) $\Delta = 8$ |
| | | |
| Wirkstoff/e (Z148) | Aufwandmenge [g a.i. / ha] | Herbizide Wirkung in [%] 28 DAT gegen *Poa annua L.* |
| A6 | 16 | 70 |
| (B2.18) Diflufenican | 270<br>90<br>30 | 0<br>0<br>0 |
| A6 + (B2.18) Diflufenican | 16 + 270<br>16 + 90<br>16 + 30 | $E^A = 80$ ($E^B = 70$) $\Delta = 10$<br>$E^A = 93$ ($E^B = 70$) $\Delta = 23$<br>$E^A = 93$ ($E^B = 70$) $\Delta = 23$ |
| | | |
| Wirkstoff/e (Z63) | Aufwandmenge [g a.i. / ha] | Herbizide Wirkung in [%] 14 DAT gegen *Alopecurus myosuroides* |
| A3 | 1 | 15 |
| (B2.28) Flufenacet | 100 | 70 |
| A3 + (B2.28) Flufenacet | 1 + 100 | $E^A = 80$ ($E^C = 75$) $\Delta = 5$ |
| | | |
| Wirkstoff/e (Z63) | Aufwandmenge [g a.i. / ha] | Herbizide Wirkung in [%] 28 DAT gegen *Alopecurus myosuroides* |
| A3 | 4<br>1 | 50<br>15 |

(fortgesetzt)

| Wirkstoff/e (Z63) | Aufwandmenge [g a.i. / ha] | Herbizide Wirkung in [%] 28 DAT gegen *Alopecurus myosuroides* |
|---|---|---|
| (B2.28) Flufenacet | 300 | 75 |
| A3 + (B2.28) Flufenacet | 4 + 300<br>1 + 300 | $E^A$ = 100 ($E^C$ = 88) Δ = 12<br>$E^A$ = 98 ($E^C$ = 79) Δ = 19 |
| Wirkstoff/e (Z63) | Aufwandmenge [g a.i. / ha] | Herbizide Wirkung in [%] 14 DAT gegen *Bromus sterilis* |
| A3 | 1 | 15 |
| (B2.28) Flufenacet | 100<br>33 | 75<br>35 |
| A3 + (B2.28) Flufenacet | 1 + 100<br>1 + 33 | $E^A$ = 85 ($E^C$ = 79) Δ = 6<br>$E^A$ = 60 ($E^C$ = 45) Δ = 15 |
| | | |
| Wirkstoff/e (Z63) | Aufwandmenge [g a.i. / ha] | Herbizide Wirkung in [%] 28 DAT gegen *Bromus sterilis* |
| A3 | 1 | 15 |
| (B2.28) Flufenacet | 300<br>100 | 65<br>25 |
| A3 + (B2.28) Flufenacet | 1 + 300<br>1 + 100 | $E^A$ = 97 ($E^C$ = 70) Δ = 27<br>$E^A$ = 95 ($E^C$ = 36) Δ = 59 |
| | | |
| Wirkstoff/e (Z63) | Aufwandmenge [g a.i. / ha] | Herbizide Wirkung in [%] 14 DAT gegen *Centaurea cyanus* |
| A3 | 4<br>1 | 50<br>20 |
| (B2.28) Flufenacet | 300 | 30 |
| A3 + (B2.28) Flufenacet | 4 + 300<br>1 + 300 | $E^A$ = 75 ($E^C$ = 65) Δ = 10<br>$E^A$ = 70 ($E^C$ = 44) Δ = 26 |
| | | |
| Wirkstoff/e (Z63) | Aufwandmenge [g a.i. / ha] | Herbizide Wirkung in [%] 28 DAT gegen *Centaurea cyanus* |
| A3 | 1 | 0 |
| (B2.28) Flufenacet | 100 | 20 |
| A3 + (B2.28) Flufenacet | 1 + 100 | $E^A$ = 25 ($E^C$ = 20) Δ = 5 |
| Wirkstoff/e (Z63) | Aufwandmenge [g a.i. / ha] | Herbizide Wirkung in [%] 28 DAT gegen *Galium aparine* |
| A3 | 16<br>1 | 75<br>15 |
| (B2.28) Flufenacet | 33<br>100 | 60<br>65 |
| A3 + (B2.28) Flufenacet | 16 + 33<br>1 + 100<br>1 + 33 | $E^A$ = 97 ($E^C$ = 90) Δ = 7<br>$E^A$ = 90 ($E^C$ = 70) Δ = 20<br>$E^A$ = 75 ($E^C$ = 66) Δ = 9 |

(fortgesetzt)

| Wirkstoff/e (Z63) | Aufwandmenge [g a.i. / ha] | Herbizide Wirkung in [%] 28 DAT gegen *Galium aparine* |
|---|---|---|
| | | |
| Wirkstoff/e (Z63) | Aufwandmenge [g a.i. / ha] | Herbizide Wirkung in [%] 14 DAT gegen *Lamium purpureum L.* |
| A3 | 1 | 65 |
| (B2.28) Flufenacet | 100 | 40 |
| A3 + (B2.28) Flufenacet | 1 + 100 | $E^A$ = 95 ($E^C$ = 79) Δ = 16 |
| | | |
| Wirkstoff/e (Z63) | Aufwandmenge [g a.i. / ha] | Herbizide Wirkung in [%] 28 DAT gegen *Lamium purpureum L.* |
| A3 | 1 | 25 |
| (B2.28) Flufenacet | 100 | 20 |
| A3 + (B2.28) Flufenacet | 1 + 100 | $E^A$ = 50 ($E^C$ = 40) Δ = 10 |
| | | |
| Wirkstoff/e (Z63) | Aufwandmenge [g a.i. / ha] | Herbizide Wirkung in [%] 14 DAT gegen *Lolium rigidum* |
| A3 | 1 | 35 |
| (B2.28) Flufenacet | 300<br>100<br>33 | 40<br>35<br>0 |
| A3 + (B2.28) Flufenacet | 1 + 300<br>1 + 100<br>1 + 33 | $E^A$ = 95 ($E^C$ = 61) Δ = 34<br>$E^A$ = 95 ($E^C$ = 58) Δ = 37<br>$E^A$ = 50 ($E^C$ = 35) Δ = 15 |
| Wirkstoff/e (Z63) | Aufwandmenge [g a.i. / ha] | Herbizide Wirkung in [%] 28 DAT gegen *Lolium rigidum* |
| A3 | 4<br>1 | 50<br>15 |
| (B2.28) Flufenacet | 300<br>100 | 25<br>20 |
| A3 + (B2.28) Flufenacet | 4 + 300<br>4 + 100<br>1 + 300<br>1 + 100 | $E^A$ = 90 ($E^C$ = 63) Δ = 27<br>$E^A$ = 80 ($E^C$ = 60) Δ = 20<br>$E^A$ = 95 ($E^C$ = 36) Δ = 59<br>$E^A$ = 93 ($E^C$ = 32) Δ = 61 |
| | | |
| Wirkstoff/e (Z63) | Aufwandmenge [g a.i. / ha] | Herbizide Wirkung in [%] 14 DAT gegen *Lolium rigidum* (resistenter Biotyp) |
| A3 | 4<br>1 | 40<br>15 |
| (B2.28) Flufenacet | 300<br>100 | 10<br>20 |
| A3 + (B2.28) Flufenacet | 4 + 300<br>4 + 100<br>1 + 300 | $E^A$ = 70 ($E^C$ = 46) Δ = 24<br>$E^A$ = 70 ($E^C$ = 52) Δ = 18<br>$E^A$ = 90 ($E^C$ = 24) Δ = 66 |

(fortgesetzt)

| Wirkstoff/e (Z63) | Aufwandmenge [g a.i. / ha] | Herbizide Wirkung in [%] 14 DAT gegen *Lolium rigidum* (resistenter Biotyp) |
|---|---|---|
| | 1 + 100 | $E^A = 50$ ($E^C = 32$) $\Delta = 18$ |

| Wirkstoff/e (Z63) | Aufwandmenge [g a.i. / ha] | Herbizide Wirkung in [%] 28 DAT gegen *Lolium rigidum* (resistenter Biotyp) |
|---|---|---|
| A3 | 4<br>1 | 10<br>0 |
| (B2.28) Flufenacet | 300<br>100 | 20<br>10 |
| A3 + (B2.28) Flufenacet | 4 + 300<br>4 + 100<br>1 + 300<br>1 + 100 | $E^A = 40$ ($E^C = 28$) $\Delta$ 12<br>$E^A = 25$ ($E^C = 19$) $\Delta = 6$<br>$E^A = 70$ ($E^C = 20$) $\Delta = 50$<br>$E^A = 15$ ($E^C = 10$) $\Delta = 5$ |
| Wirkstoff/e (Z63) | Aufwandmenge [g a.i. / ha] | Herbizide Wirkung in [%] 14 DAT gegen *Matricaria inodora* |
| A3 | 16 | 20 |
| (B2.28) Flufenacet | 33 | 0 |
| A3 + (B2.28) Flufenacet | 16 + 33 | $E^A = 30$ ($E^C = 20$) $\Delta = 10$ |

| Wirkstoff/e (Z63) | Aufwandmenge [g a.i. / ha] | Herbizide Wirkung in [%] 28 DAT gegen *Phalaris minor* |
|---|---|---|
| A3 | 16<br>1 | 40<br>0 |
| (B2.28) Flufenacet | 300<br>100<br>33 | 85<br>40<br>0 |
| A3 + (B2.28) Flufenacet | 16+300<br>16 + 100<br>16 + 33<br>1 + 300<br>1 + 100 | $E^A = 98$ ($E^C = 91$) $\Delta = 7$<br>$E^A = 90$ ($E^C = 64$) $\Delta = 26$<br>$E^A = 80$ ($E^C = 40$) $\Delta = 40$<br>$E^A = 100$ ($E^C = 85$) $\Delta = 15$<br>$E^A = 80$ ($E^C = 40$) $\Delta = 40$ |

| Wirkstoff/e (Z63) | Aufwandmenge [g a.i. / ha] | Herbizide Wirkung in [%] 28 DAT gegen *Poa annua L.* |
|---|---|---|
| A3 | 16<br>1 | 40<br>15 |
| (B2.28) Flufenacet | 300<br>100<br>33 | 65<br>70<br>10 |
| A3 + (B2.28) Flufenacet | 16 + 300<br>16 + 100<br>16 + 33<br>1 + 100 | $E^A = 97$ ($E^C = 79$) $\Delta = 18$<br>$E^A = 97$ ($E^C = 82$) $\Delta = 15$<br>$E^A = 60$ ($E^C = 46$) $\Delta = 14$<br>$E^A = 97$ ($E^C = 75$) $\Delta = 22$ |

(fortgesetzt)

| Wirkstoff/e (Z63) | Aufwandmenge [g a.i. / ha] | Herbizide Wirkung in [%] 14 DAT gegen *Veronica hederifolia* |
|---|---|---|
| A3 | 16 | 40 |
| (B2.28) Flufenacet | 100<br>33 | 40<br>35 |
| A3 + (B2.28) Flufenacet | 16 + 100<br>16 + 33 | $E^A$ = 80 ($E^C$ = 64) Δ = 16<br>$E^A$ = 80 ($E^C$ = 61) Δ = 19 |
| | | |
| Wirkstoff/e (Z63) | Aufwandmenge [g a.i. / ha] | Herbizide Wirkung in [%] 14 DAT gegen *Viola tricolor* |
| A3 | 16<br>1 | 85<br>50 |
| (B2.28) Flufenacet | 33<br>100 | 20<br>50 |
| A3 + (B2.28) Flufenacet | 16 + 33<br>1 + 100 | $E^A$ = 95 ($E^C$ = 88) Δ = 7<br>$E^A$ = 90 ($E^C$ = 75) Δ = 15 |
| | | |
| Wirkstoff/e (Z63) | Aufwandmenge [g a.i. / ha] | Herbizide Wirkung in [%] 28 DAT gegen *Viola tricolor* |
| A3 | 16<br>4<br>1 | 20<br>30<br>15 |
| (B2.28) Flufenacet | 300<br>100<br>33 | 35<br>20<br>20 |
| A3 + (B2.28) Flufenacet | 16 + 300<br>16 + 100<br>16 + 33<br>4 + 300<br>4 + 100<br>1 + 300<br>1 + 100 | $E^A$ = 65 ($E^C$ = 48) Δ = 17<br>$E^A$ = 70 ($E^C$ = 36) Δ = 34<br>$E^A$ = 97 ($E^C$ = 36) Δ = 61<br>$E^A$ = 65 ($E^C$ = 55) Δ = 10<br>$E^A$ = 65 ($E^C$ = 44) Δ = 21<br>$E^A$ = 50 ($E^C$ = 45) Δ = 5<br>$E^A$ = 40 ($E^C$ = 32) Δ = 8 |
| Wirkstoff/e | Aufwandmenge [g a.i. / ha] | Herbizide Wirkung in [%] 14 DAT gegen *Alopecurus myosuroides* |
| A3 | 1 | 15 |
| (B2.31) Foramsulfuron | 1 | 80 |
| A3 + (B2.31) Foramsulfuron | 1 + 1 | $E^A$ = 95 ($E^C$ = 83) Δ = 12 |
| | | |
| Wirkstoff/e | Aufwandmenge [g a.i. / ha] | Herbizide Wirkung in [%] 28 DAT gegen *Alopecurus myosuroides* |
| A3 | 4<br>1 | 50<br>15 |

(fortgesetzt)

| Wirkstoff/e | Aufwandmenge [g a.i. / ha] | Herbizide Wirkung in [%] 28 DAT gegen *Alopecurus myosuroides* |
|---|---|---|
| (B2.31) Foramsulfuron | 9<br>3<br>1 | 85<br>80<br>40 |
| A3 + (B2.31) Foramsulfuron | 4+9<br>4+3<br>4 + 1<br>1 + 1 | $E^A$ = 98 ($E^C$ = 92,5) Δ = 5,5<br>$E^A$ = 97 ($E^C$ = 90) Δ = 7<br>$E^A$ = 80 ($E^C$ = 70) Δ = 10<br>$E^A$ = 70 ($E^C$ = 49) Δ = 21 |
| | | |
| Wirkstoff/e | Aufwandmenge [g a.i. / ha] | Herbizide Wirkung in [%] 14 DAT gegen *Bromus sterilis* |
| A3 | 1 | 15 |
| (B2.31) Foramsulfuron | 9<br>3<br>1 | 85<br>85<br>65 |
| A3 + (B2.31) Foramsulfuron | 1 + 9<br>1 + 3<br>1 + 1 | $E^A$ = 95 ($E^C$ = 87) Δ = 8<br>$E^A$ = 95 ($E^C$ = 87) Δ = 8<br>$E^A$ = 75 ($E^C$ = 70) Δ = 5 |
| | | |
| Wirkstoff/e | Aufwandmenge [g a.i. / ha] | Herbizide Wirkung in [%] 28 DAT gegen *Bromus sterilis* |
| A3 | 1 | 15 |
| (B2.31) Foramsulfuron | 9<br>3 | 60<br>25 |
| A3 + (B2.31) Foramsulfuron | 1+9<br>1+3 | $E^A$ = 95 ($E^C$ = 66) Δ = 29<br>$E^A$ = 60 ($E^C$ = 36) Δ = 24 |
| Wirkstoff/e | Aufwandmenge [g a.i. / ha] | Herbizide Wirkung in [%] 28 DAT gegen *Galium aparine* |
| A3 | 1 | 15 |
| (B2.31) Foramsulfuron | 9<br>1 | 65<br>0 |
| A3 + (B2.31) Foramsulfuron | 1 + 9<br>1 + 1 | $E^A$ = 80 ($E^C$ = 70) Δ = 10<br>$E^A$ = 50 ($E^C$ = 15) Δ = 35 |
| | | |
| Wirkstoff/e | Aufwandmenge [g a.i. / ha] | Herbizide Wirkung in [%] 28 DAT gegen *Lolium rigidum* |
| A3 | 1 | 15 |
| (B2.31) Foramsulfuron | 9<br>3 | 65<br>35 |
| A3 + (B2.31) Foramsulfuron | 1 + 9<br>1 + 3 | $E^A$ = 95 ($E^C$ = 70) Δ = 25<br>$E^A$ = 60 ($E^C$ = 45) Δ = 15 |
| | | |

(fortgesetzt)

| Wirkstoff/e | Aufwandmenge [g a.i. / ha] | Herbizide Wirkung in [%] 14 DAT gegen *Lolium rigidum* (resistenter Biotyp) |
|---|---|---|
| A3 | 4<br>1 | 40<br>15 |
| (B2.31) Foramsulfuron | 9<br>3 | 15<br>15 |
| A3 + (B2.31) Foramsulfuron | 4 + 9<br>1 + 9<br>1 + 3 | $E^A$ = 70 ($E^C$ = 49) Δ = 21<br>$E^A$ = 70 ($E^C$ = 28) Δ = 42<br>$E^A$ = 40 ($E^C$ = 2) Δ = 12 |
| | | |
| Wirkstoff/e | Aufwandmenge [g a.i. / ha] | Herbizide Wirkung in [%] 28 DAT gegen *Lolium rigidum* (resistenter Biotyp) |
| A3 | 1 | 0 |
| (B2.31) Foramsulfuron | 9<br>3 | 20<br>10 |
| A3 + (B2.31) Foramsulfuron | 1 + 9<br>1 + 3 | $E^A$ = 40 ($E^C$ = 20) Δ = 20<br>$E^A$ = 15 ($E^C$ = 10) Δ = 5 |
| Wirkstoff/e | Aufwandmenge [g a.i. / ha] | Herbizide Wirkung in [%] 14 DAT gegen *Matricaria inodora* |
| A3 | 16 | 20 |
| (B2.31) Foramsulfuron | 1 | 70 |
| A3 + (B2.31) Foramsulfuron | 16 + 1 | $E^A$ = 85 ($E^C$ = 76) Δ = 9 |
| | | |
| Wirkstoff/e | Aufwandmenge [g a.i. / ha] | Herbizide Wirkung in [%] 28 DAT gegen *Matricaria inodora* |
| A3 | 16 | 15 |
| (B2.31) Foramsulfuron | 1 | 30 |
| A3 + (B2.31) Foramsulfuron | 16 + 1 | $E^A$ = 50 ($E^C$ = 40,5) Δ = 9,5 |
| | | |
| Wirkstoff/e | Aufwandmenge [g a.i. / ha] | Herbizide Wirkung in [%] 14 DAT gegen *Phalaris minor* |
| A3 | 1 | 10 |
| (B2.31) Foramsulfuron | 9<br>3 | 80<br>85 |
| A3 + (B2.31) Foramsulfuron | 1+9<br>1+3 | $E^A$ = 93 ($E^C$ = 82) Δ = 11<br>$E^A$ = 93 ($E^C$ = 87) Δ = 6 |
| | | |
| Wirkstoff/e | Aufwandmenge [g a.i. / ha] | Herbizide Wirkung in [%] 28 DAT gegen *Phalaris minor* |
| A3 | 16<br>4<br>1 | 40<br>70<br>0 |

(fortgesetzt)

| Wirkstoff/e | Aufwandmenge [g a.i. / ha] | Herbizide Wirkung in [%] 28 DAT gegen *Phalaris minor* |
|---|---|---|
| (B2.31) Foramsulfuron | 9<br>3 | 20<br>40 |
| A3 + (B2.31) Foramsulfuron | 16 + 9<br>16 + 3<br>4 + 3<br>1+9<br>1 + 3 | $E^A$ = 95 ($E^C$ = 52) Δ = 43<br>$E^A$ = 80 ($E^C$ = 64) Δ = 16<br>$E^A$ = 90 ($E^C$ = 82) Δ = 8<br>$E^A$ = 70 ($E^C$ = 20) Δ = 50<br>$E^A$ = 70 ($E^C$ = 40) Δ = 30 |
| Wirkstoff/e | Aufwandmenge [g a.i. / ha] | Herbizide Wirkung in [%] 28 DAT gegen *Poa annua L.* |
| A3 | 16 | 40 |
| (B2.31) Foramsulfuron | 1 | 40 |
| A3 + (B2.31) Foramsulfuron | 16 + 1 | $E^A$ = 93 ($E^C$ = 64) Δ = 29 |
| | | |
| Wirkstoff/e | Aufwandmenge [g a.i. / ha] | Herbizide Wirkung in [%] 14 DAT gegen *Veronica hederifolia* |
| A3 | 16 | 40 |
| (B2.31) Foramsulfuron | 1 | 80 |
| A3 + (B2.31) Foramsulfuron | 16 + 1 | $E^A$ = 95 ($E^C$ = 88) Δ = 7 |
| | | |
| Wirkstoff/e | Aufwandmenge [g a.i. / ha] | Herbizide Wirkung in [%] 28 DAT gegen *Viola tricolor* |
| A3 | 16 | 20 |
| (B2.31) Foramsulfuron | 3<br>1 | 80<br>65 |
| A3 + (B2.31) Foramsulfuron | 16 + 3<br>16 + 1 | $E^A$ = 100 ($E^C$ = 84) Δ = 16<br>$E^A$ = 90 ($E^C$ = 72) Δ = 18 |
| | | |
| Wirkstoff/e (Z64) | Aufwandmenge [g a.i. / ha] | Herbizide Wirkung in [%] 28 DAT gegen *Alopecurus myosuroides* |
| A3 | 4 | 60 |
| (B2.37) Mesosulfuron (CAS 208465-21-8) | 1,7 | 75 |
| A3 + (B2.37) Mesosulfuron (CAS 208465-21-8) | 4 + 1,7 | $E^A$ = 95 ($E^C$ = 90) Δ = 5 |
| Wirkstoff/e (Z64) | Aufwandmenge [g a.i. / ha] | Herbizide Wirkung in [%] 28 DAT gegen *Centaurea cyanus* |
| A3 | 1 | 10 |
| (B2.37) Mesosulfuron (CAS 208465-21-8) | 5 | 60 |
| A3 + (B2.37) Mesosulfuron (CAS 208465-21-8) | 1 + 5 | $E^A$ = 70 ($E^C$ = 64) Δ = 6 |

(fortgesetzt)

| Wirkstoff/e (Z64) | Aufwandmenge [g a.i. / ha] | Herbizide Wirkung in [%] 28 DAT gegen *Centaurea cyanus* |
|---|---|---|
| | | |
| Wirkstoff/e (Z64) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B2.37) Mesosulfuron (CAS 208465-21-8) | 15<br>5<br>1,7 | 30<br>30<br>20 |
| A3 + (B2.37) Mesosulfuron (CAS 208465-21-8) | 4 + 15<br>4+5<br>4 + 1,7<br>1 + 15<br>1 + 5 | $E^A$ = 85 ($E^C$ = 72) Δ = 13<br>$E^A$ = 90 ($E^C$ = 72) Δ = 18<br>$E^A$ = 85 ($E^C$ = 68) Δ = 17<br>$E^A$ = 75 ($E^C$ = 51) Δ = 24<br>$E^A$ = 75 ($E^C$ = 51) Δ = 24 |
| | | |
| Wirkstoff/e (Z64) | Aufwandmenge [g a.i. / ha] | Herbizide Wirkung in [%] 28 DAT gegen *Lolium rigidum* (resistenter Biotyp) |
| A3 | 16<br>4<br>1 | 80<br>40<br>0 |
| (B2.37) Mesosulfuron (CAS 208465-21-8) | 5<br>1,7<br>15 | 0<br>0<br>20 |
| A3 + (B2.37) Mesosulfuron (CAS 208465-21-8) | 16 + 5<br>16 + 1,7<br>4 + 15<br>4+5<br>4 + 1,7<br>1 + 15<br>1 + 5<br>1 + 1,7 | $E^A$ = 85 ($E^C$ = 80) Δ = 5<br>$E^A$ = 85 ($E^C$ = 80) Δ = 5<br>$E^A$ = 75 ($E^C$ = 52) Δ = 23<br>$E^A$ = 85 ($E^C$ = 40) Δ = 45<br>$E^A$ = 70 ($E^C$ = 40) Δ = 30<br>$E^A$ = 40 ($E^C$ = 20) Δ = 20<br>$E^A$ = 40 ($E^C$ = 0) Δ = 40<br>$E^A$ = 30 ($E^C$ = 0) Δ = 30 |
| Wirkstoff/e (Z64) | Aufwandmenge [g a.i. / ha] | Herbizide Wirkung in [%] 14 DAT gegen *Matricaria inodora* |
| A3 | 4<br>1 | 30<br>0 |
| (B2.37) Mesosulfuron (CAS 208465-21-8) | 15 | 75 |
| A3 + (B2.37) Mesosulfuron (CAS 208465-21-8) | 4 + 15<br>1 + 15 | $E^A$ = 95 ($E^C$ = 83) Δ = 12<br>$E^A$ = 85 ($E^C$ = 75) Δ = 10 |
| | | |
| Wirkstoff/e (Z64) | Aufwandmenge [g a.i. / ha] | Herbizide Wirkung in [%] 28 DAT gegen *Matricaria inodora* |
| A3 | 4<br>1 | 30<br>0 |

(fortgesetzt)

| Wirkstoff/e (Z64) | Aufwandmenge [g a.i. / ha] | Herbizide Wirkung in [%] 28 DAT gegen *Matricaria inodora* |
|---|---|---|
| (B2.37) Mesosulfuron (CAS 208465-21-8) | 15 | 65 |
| A3 + (B2.37) Mesosulfuron (CAS 208465-21-8) | 4 + 15<br>1 + 15 | $E^A$ = 98 ($E^C$ = 76) Δ = 22<br>$E^A$ = 80 ($E^C$ = 65) Δ = 15 |

| Wirkstoff/e (Z64) | Aufwandmenge [g a.i. / ha] | Herbizide Wirkung in [%] 28 DAT gegen *Phalaris minor* |
|---|---|---|
| A3 | 1 | 10 |
| (B2.37) Mesosulfuron (CAS 208465-21-8) | 15 | 85 |
| A3 + (B2.37) Mesosulfuron (CAS 208465-21-8) | 1 + 15 | $E^A$ = 98 ($E^C$ = 87) Δ = 11 |

| Wirkstoff/e (Z66) | Aufwandmenge [g a.i./ha] | Herbizide Wirkung 37 DAT [%] gegen *Ipomoea hederacea* |
|---|---|---|
| (B2.63) Rimsulfuron | 35 | 0 |
| A3 | 100 | 8 |
| A3<br>+ (B2.63) Rimsulfuron | 100 + 35 | $E^A$ = 65 ($E^C$ = 8)<br>Δ 57 |

| Wirkstoff/e | Aufwandmenge [g a.i./ha] | Herbizide Wirkung 21 DAT [%] gegen *Brachiaria platyphylla* |
|---|---|---|
| (B2.64) S-metolachlor | 450<br>150 | 25<br>10 |
| A3 | 1,7 | 20 |
| A3 + (B2.64) S-metolachlor | 1,7 + 450<br>1,7 + 150 | $E^A$ = 70 ($E^C$ = 40) Δ 30<br>$E^A$ = 60 ($E^C$ = 38) Δ 32 |

| Wirkstoff/e | Aufwandmenge [g a.i./ha] | Herbizide Wirkung 21 DAT [%] gegen *Digitaria sanguinalis* |
|---|---|---|
| (B2.64) S-metolachlor | 150<br>50 | 40<br>10 |
| A3 | 5<br>1,7 | 80<br>10 |
| A3 + (B2.64) S-metolachlor | 1,7 + 150<br>5 + 50 | $E^A$ = 60 ($E^C$ = 46) Δ 14<br>$E^A$ = 95 ($E^C$ = 82) Δ 13 |

| Wirkstoff/e | Aufwandmenge [g a.i./ha] | Herbizide Wirkung 21 DAT [%] gegen *Setaria viridis* |
|---|---|---|
| (B2.64) S-metolachlor | 50 | 30 |
| A3 | 1,7 | 70 |
| A3 + (B2.64) S-metolachlor | 1,7 + 50 | $E^A$ = 99 ($E^C$ = 79) Δ 20 |

(fortgesetzt)

| Wirkstoff/e | Aufwandmenge [g a.i./ha] | Herbizide Wirkung 21 DAT [%] gegen *Setaria viridis* |
|---|---|---|
| | | |
| Wirkstoff/e | Aufwandmenge [g a.i./ha] | Herbizide Wirkung 21 DAT [%] gegen *Sorghum halepense* |
| (B2.64) S-metolachlor | 450 | 40 |
| A3 | 1,7 | 40 |
| A3 + (B2.64) S-metolachlor | 1,7 + 450 | $E^A$ = 80 ($E^C$ = 64) ∆ 16 |
| Wirkstoff/e | Aufwandmenge [g a.i./ha] | Herbizide Wirkung 21 DAT [%] gegen *Abutilon theophrasti* |
| (B2.64) S-metolachlor | 450<br>150 | 10<br>0 |
| A3 | 5<br>1,7 | 30<br>0 |
| A3 + (B2.64) S-metolachlor | 5 + 450<br>5 + 150<br>1,7 + 150 | $E^A$ = ($E^C$ = 37) ∆ 13<br>$E^A$ = 50 ($E^C$ = 30) ∆ 20<br>$E^A$ = 30 ($E^C$ = 0) ∆ 30 |
| | | |
| Wirkstoff/e | Aufwandmenge [g a.i./ha] | Herbizide Wirkung 21 DAT [%] gegen *Bidens pilosa* |
| (B2.64) S-metolachlor | 450<br>150 | 20<br>10 |
| A3 | 5<br>1,7 | 10<br>10 |
| A3 + (B2.64) S-metolachlor | 5 + 450<br>1,7 + 450<br>5 + 150<br>1,7 + 150 | $E^A$ = 50 ($E^C$ = 28) ∆ 22<br>$E^A$ = 40 ($E^C$ = 28) ∆ 12<br>$E^A$ = 40 ($E^C$ = 19) ∆ 21<br>$E^A$ = 40 ($E^C$ = 19) ∆ 21 |
| | | |
| Wirkstoff/e | Aufwandmenge [g a.i./ha] | Herbizide Wirkung 21 DAT [%] gegen *Kochia scoparia* |
| (B2.64) S-metolachlor | 450<br>150 | 10<br>0 |
| A3 | 1,7 | 30 |
| A3 + (B2.64) S-metolachlor | 1,7 + 450<br>1,7 + 150 | $E^A$ = 60 ($E^C$ = 37) ∆ 23<br>$E^A$ = 40 ($E^C$ = 30) ∆ 10 |
| | | |
| Wirkstoff/e | Aufwandmenge [g a.i./ha] | Herbizide Wirkung 21 DAT [%] gegen *Pharbitis purpurea* |
| (B2.64) S-metolachlor | 450<br>150 | 10<br>0 |
| A3 | 5 | 80 |
| A3 + (B2.64) S-metolachlor | 5 + 450<br>5 + 150 | $E^A$ = 95 ($E^C$ = 82) ∆ 13<br>$E^A$ = 90 ($E^C$ = 80) ∆ 10 |

(fortgesetzt)

| Wirkstoff/e (Z67) | Aufwandmenge [g a.i. / ha] | Herbizide Wirkung in [%] 14 DAT gegen *Alopecurus myosuroides* |
|---|---|---|
| A3 | 1 | 15 |
| (B2.68) Thiencarbazone (CAS 317815-83-1) | 1,5<br>0,5 | 35<br>40 |
| A3 + (B2.68) Thiencarbazone (CAS 317815-83-1) | 1 + 1,5<br>1 + 0,5 | $E^A$ = 98 ($E^C$ = 45) Δ = 53<br>$E^A$ = 75 ($E^C$ = 49) Δ = 26 |
| | | |
| Wirkstoff/e (Z67) | Aufwandmenge [g a.i. / ha] | Herbizide Wirkung in [%] 28 DAT gegen *Alopecurus myosuroides* |
| A3 | 4<br>1 | 50<br>15 |
| (B2.68) Thiencarbazone (CAS 317815-83-1) | 1,5 | 30 |
| A3 + (B2.68) Thiencarbazone (CAS 317815-83-1) | 4 + 1,5<br>1 + 1,5 | $E^A$ = 100 ($E^C$ = 65) Δ = 35<br>$E^A$ = 100 ($E^C$ = 41) Δ = 59 |
| | | |
| Wirkstoff/e (Z67) | Aufwandmenge [g a.i. / ha] | Herbizide Wirkung in [%] 14 DAT gegen *Bromus sterilis* |
| A3 | 4<br>1 | 85<br>15 |
| (B2.68) Thiencarbazone (CAS 317815-83-1) | 1,5<br>0,5 | 20<br>15 |
| A3 + (B2.68) Thiencarbazone (CAS 317815-83-1) | 4 + 1,5<br>1 + 1,5<br>1 + 0,5 | $E^A$ = 95 ($E^C$ = 88) Δ = 7<br>$E^A$ = 95 ($E^C$ = 32) Δ = 63<br>$E^A$ = 85 ($E^C$ = 28) Δ = 57 |
| Wirkstoff/e (Z67) | Aufwandmenge [g a.i. / ha] | Herbizide Wirkung in [%] 28 DAT gegen *Bromus sterilis* |
| A3 | 1 | 15 |
| (B2.68) Thiencarbazone (CAS 317815-83-1) | 1,5<br>0,5 | 20<br>15 |
| A3 + (B2.68) Thiencarbazone (CAS 317815-83-1) | 1 + 1,5<br>1 + 0,5 | $E^A$ = 97 ($E^C$ = 32) Δ = 65<br>$E^A$ = 85 ($E^C$ = 28) Δ = 57 |
| | | |
| Wirkstoff/e (Z67) | Aufwandmenge [g a.i. / ha] | Herbizide Wirkung in [%] 14 DAT gegen *Centaurea cyanus* |
| A3 | 1 | 20 |
| (B2.68) Thiencarbazone (CAS 317815-83-1) | 0,17 | 0 |
| A3 + (B2.68) Thiencarbazone (CAS 317815-83-1) | 1 + 0,17 | $E^A$ = 30 ($E^C$ = 20) Δ = 10 |
| | | |

(fortgesetzt)

| Wirkstoff/e (Z67) | Aufwandmenge [g a.i. / ha] | Herbizide Wirkung in [%] 28 DAT gegen *Centaurea cyanus* |
|---|---|---|
| A3 | 4<br>1 | 20<br>0 |
| (B2.68) Thiencarbazone (CAS 317815-83-1) | 1,5<br>0,17 | 35<br>0 |
| A3 + (B2.68) Thiencarbazone (CAS 317815-83-1) | 4 + 1,5<br>4 + 0,17<br>1 + 0,17 | $E^A$ = 60 ($E^C$ = 48) Δ = 12<br>$E^A$ = 25 ($E^C$ = 20) Δ = 5<br>$E^A$ = 20 ($E^C$ = 0) Δ = 20 |

| Wirkstoff/e (Z67) | Aufwandmenge [g a.i. / ha] | Herbizide Wirkung in [%] 14 DAT gegen *Galium aparine* |
|---|---|---|
| A3 | 1 | 40 |
| (B2.68) Thiencarbazone (CAS 317815-83-1) | 0,17 | 60 |
| A3 + (B2.68) Thiencarbazone (CAS 317815-83-1) | 1 + 0,17 | $E^A$ = 85 ($E^C$ = 76) Δ = 9 |
| Wirkstoff/e (Z67) | Aufwandmenge [g a.i. / ha] | Herbizide Wirkung in [%] 28 DAT gegen *Galium aparine* |
| A3 | 1 | 15 |
| (B2.68) Thiencarbazone (CAS 317815-83-1) | 0,17 | 50 |
| A3 + (B2.68) Thiencarbazone (CAS 317815-83-1) | 1 + 0,17 | $E^A$ = 65 ($E^C$ = 58) Δ = 7 |

| Wirkstoff/e (Z67) | Aufwandmenge [g a.i. / ha] | Herbizide Wirkung in [%] 28 DAT gegen *Lamium purpureum L.* |
|---|---|---|
| A3 | 1 | 25 |
| (B2.68) Thiencarbazone (CAS 317815-83-1) | 0,17 | 35 |
| A3 + (B2.68) Thiencarbazone (CAS 317815-83-1) | 1 + 0,17 | $E^A$ = 70 ($E^C$ = 51) Δ = 19 |

| Wirkstoff/e (Z67) | Aufwandmenge [g a.i. / ha] | Herbizide Wirkung in [%] 14 DAT gegen *Lolium rigidum* |
|---|---|---|
| A3 | 1 | 35 |
| (B2.68) Thiencarbazone (CAS 317815-83-1) | 1,5<br>0,5 | 85<br>60 |
| A3 + (B2.68) Thiencarbazone (CAS 317815-83-1) | 1 + 1,5<br>1 + 0,5 | $E^A$ = 95 ($E^C$ = 90) Δ = 5<br>$E^A$ = 93 ($E^C$ = 74) Δ = 19 |

| Wirkstoff/e (Z67) | Aufwandmenge [g a.i. / ha] | Herbizide Wirkung in [%] 28 DAT gegen *Lolium rigidum* |
|---|---|---|
| A3 | 4 | 50 |

(fortgesetzt)

| Wirkstoff/e (Z67) | Aufwandmenge [g a.i. / ha] | Herbizide Wirkung in [%] 28 DAT gegen *Lolium rigidum* |
|---|---|---|
| | 1 | 15 |
| (B2.68) Thiencarbazone (CAS 317815-83-1) | 0,5<br>1,5 | 10<br>50 |
| A3 + (B2.68) Thiencarbazone (CAS 317815-83-1) | 4 + 0,5<br>1 + 1,5<br>1 + 0,5 | $E^A$ = 65 ($E^C$ = 55) Δ = 10<br>$E^A$ = 97 ($E^C$ = 58) Δ = 39<br>$E^A$ = 75 ($E^C$ = 24) Δ = 51 |
| Wirkstoff/e (Z67) | Aufwandmenge [g a.i. / ha] | Herbizide Wirkung in [%] 14 DAT gegen *Lolium rigidum* (resistenter Biotyp) |
| A3 | 4<br>1 | 40<br>15 |
| (B2.68) Thiencarbazone (CAS 317815-83-1) | 1,5<br>0,5<br>0,17 | 0<br>0<br>0 |
| A3 + (B2.68) Thiencarbazone (CAS 317815-83-1) | 4 + 1,5<br>1 + 1,5<br>1 + 0,5<br>1 + 0,17 | $E^A$ = 85 ($E^C$ = 40) Δ = 45<br>$E^A$ = 93 ($E^C$ = 15) Δ = 78<br>$E^A$ = 65 ($E^C$ = 15) Δ = 50<br>$E^A$ = 20 ($E^C$ = 15) Δ = 5 |
| | | |
| Wirkstoff/e (Z67) | Aufwandmenge [g a.i. / ha] | Herbizide Wirkung in [%] 28 DAT gegen *Lolium rigidum* (resistenter Biotyp) |
| A3 | 1 | 0 |
| (B2.68) Thiencarbazone (CAS 317815-83-1) | 1,5<br>0,5 | 20<br>10 |
| A3 + (B2.68) Thiencarbazone (CAS 317815-83-1) | 1 + 1,5<br>1 + 0,5 | $E^A$ = 50 ($E^C$ = 20) Δ = 30<br>$E^A$ = 20 ($E^C$ = 10) Δ = 10 |
| | | |
| Wirkstoff/e (Z67) | Aufwandmenge [g a.i. / ha] | Herbizide Wirkung in [%] 14 DAT gegen *Matricaria inodora* |
| A3 | 16<br>4 | 20<br>20 |
| (B2.68) Thiencarbazone (CAS 317815-83-1) | 0,5<br>0,17 | 50<br>15 |
| A3 + (B2.68) Thiencarbazone (CAS 317815-83-1) | 16 + 0,5<br>16 + 0,17<br>4 + 0,17 | $E^A$ = 80 ($E^C$ = 60) Δ = 20<br>$E^A$ = 75 ($E^C$ = 32) Δ = 43<br>$E^A$ = 40 ($E^C$ = 32) Δ = 8 |
| Wirkstoff/e (Z67) | Aufwandmenge [g a.i. / ha] | Herbizide Wirkung in [%] 28 DAT gegen *Matricaria inodora* |
| A3 | 16<br>1 | 15<br>15 |
| (B2.68) Thiencarbazone (CAS 317815-83-1) | 0,17 | 0 |
| A3 + (B2.68) Thiencarbazone (CAS 317815-83-1) | 16 + 0,17<br>1 + 0,17 | $E^A$ = 35 ($E^C$ = 15) Δ = 20<br>$E^A$ = 40 ($E^C$ = 15) Δ = 25 |

(fortgesetzt)

| Wirkstoff/e (Z67) | Aufwandmenge [g a.i. / ha] | Herbizide Wirkung in [%] 28 DAT gegen *Matricaria inodora* |
|---|---|---|
| | | |
| Wirkstoff/e (Z67) | Aufwandmenge [g a.i. / ha] | Herbizide Wirkung in [%] 14 DAT gegen *Phalaris minor* |
| A3 | 4<br>1 | 90<br>10 |
| (B2.68) Thiencarbazone (CAS 317815-83-1) | 1,5<br>0,5<br>0,17 | 10<br>15<br>0 |
| A3 + (B2.68) Thiencarbazone (CAS 317815-83-1) | 4 + 1,5<br>1 + 1,5<br>1 + 0,5<br>1 + 0,17 | $E^A$ = 97 ($E^C$ = 91) Δ = 6<br>$E^A$ = 95 ($E^C$ = 19) Δ = 76<br>$E^A$ = 93 ($E^C$ = 24) Δ = 69<br>$E^A$ = 20 ($E^C$ = 10) Δ = 10 |
| | | |
| Wirkstoff/e (Z67) | Aufwandmenge [g a.i. / ha] | Herbizide Wirkung in [%] 28 DAT gegen *Phalaris minor* |
| A3 | 1 | 0 |
| (B2.68) Thiencarbazone (CAS 317815-83-1) | 1,5<br>0,5 | 20<br>0 |
| A3 + (B2.68) Thiencarbazone (CAS 317815-83-1) | 1 + 1,5<br>1 + 0,5 | $E^A$ = 80 ($E^C$ = 20) Δ = 60<br>$E^A$ = 25 ($E^C$ = 0) Δ = 25 |
| Wirkstoff/e (Z67) | Aufwandmenge [g a.i. / ha] | Herbizide Wirkung in [%] 14 DAT gegen *Poa annua L.* |
| A3 | 1 | 40 |
| (B2.68) Thiencarbazone (CAS 317815-83-1) | 1,5<br>0,5 | 15<br>10 |
| A3 + (B2.68) Thiencarbazone (CAS 317815-83-1) | 1 + 1,5<br>1 + 0,5 | $E^A$ = 95 ($E^C$ = 49) Δ = 46<br>$E^A$ = 93 ($E^C$ = 46) Δ = 47 |
| | | |
| Wirkstoff/e (Z67) | Aufwandmenge [g a.i. / ha] | Herbizide Wirkung in [%] 28 DAT gegen *Poa annua L.* |
| A3 | 16<br>1 | 40<br>15 |
| (B2.68) Thiencarbazone (CAS 317815-83-1) | 0,5 1,5 | 0 25 |
| A3 + (B2.68) Thiencarbazone (CAS 317815-83-1) | 16 + 0,5<br>1 + 1,5<br>1 + 0,5 | $E^A$ = 75 ($E^C$ = 40) Δ = 35<br>$E^A$ = 85 ($E^C$ = 36) Δ = 49<br>$E^A$ = 25 ($E^C$ = 15) Δ = 10 |
| | | |
| Wirkstoff/e (Z67) | Aufwandmenge [g a.i. / ha] | Herbizide Wirkung in [%] 14 DAT gegen *Veronica hederifolia* |
| A3 | 16 | 40 |

(fortgesetzt)

| Wirkstoff/e (Z67) | Aufwandmenge [g a.i. / ha] | Herbizide Wirkung in [%] 14 DAT gegen *Veronica hederifolia* |
|---|---|---|
| (B2.68) Thiencarbazone (CAS 317815-83-1) | 0,17 | 70 |
| A3 + (B2.68) Thiencarbazone (CAS 317815-83-1) | 16 + 0,17 | $E^A$ = 97 ($E^C$ = 82) Δ = 15 |
| | | |
| Wirkstoff/e (Z67) | Aufwandmenge [g a.i. / ha] | Herbizide Wirkung in [%] 28 DAT gegen *Veronica hederifolia* |
| A3 | 16 | 50 |
| (B2.68) Thiencarbazone (CAS 317815-83-1) | 0,17 | 70 |
| A3 + (B2.68) Thiencarbazone (CAS 317815-83-1) | 16 + 0,17 | $E^A$ = 95 ($E^C$ = 85) Δ = 10 |
| Wirkstoff/e (Z90) | Aufwandmenge [g a.i./ha] | Herbizide Wirkung 21 DAT [%] gegen *Abutilon theophrasti* |
| (B2.18) Diflufenican | 270<br>90<br>30 | 25<br>10<br>10 |
| A4 | 45<br>15<br>5 | 20<br>10<br>10 |
| A4 + (B2.18) Diflufenican | 45 + 270<br>15 + 270<br>5 + 270<br>45 + 90<br>15 + 90<br>5 + 90<br>45 + 30<br>15 + 30<br>5 + 30 | $E^A$ = 60 ($E^C$ = 40) Δ 20<br>$E^A$ = 50 ($E^C$ = 33) Δ 17<br>$E^A$ = 60 ($E^C$ = 33) Δ 27<br>$E^A$ = 50 ($E^C$ = 28) Δ 22<br>$E^A$ = 40 ($E^C$ = 19) Δ 21<br>$E^A$ = 30 ($E^C$ = 19) Δ 11<br>$E^A$ = 50 ($E^C$ = 28) Δ 22<br>$E^A$ = 30 ($E^C$ = 19) Δ 11<br>$E^A$ = 30 ($E^C$ = 19) Δ 11 |
| | | |
| Wirkstoff/e (Z90) | Aufwandmenge [g a.i./ha] | Herbizide Wirkung 21 DAT [%] gegen *Amaranthus palmeri (res.)* |
| (B2.18) Diflufenican | 30 | 40 |
| A4 | 45<br>15 | 30<br>10 |
| A4 + (B2.18) Diflufenican | 45 + 30<br>15 + 30 | $E^A$ = 85 ($E^C$ = 58) Δ 27<br>$E^A$ = 70 ($E^C$ = 46) Δ 24 |
| | | |
| Wirkstoff/e (Z90) | Aufwandmenge [g a.i./ha] | Herbizide Wirkung 21 DAT [%] gegen *Bidens pilosa* |
| (B2.18) Diflufenican | 270<br>90 | 45<br>35 |

(fortgesetzt)

| Wirkstoff/e (Z90) | Aufwandmenge [g a.i./ha] | Herbizide Wirkung 21 DAT [%] gegen *Bidens pilosa* |
|---|---|---|
| A4 | 15<br>5 | 10<br>10 |
| A4 + (B2.18) Diflufenican | 15 + 270<br>5 + 270<br>15 + 90 | $E^A$ = 65 ($E^C$ = 51) ∆ 14<br>$E^A$ = 70 ($E^C$ = 51) ∆ 19<br>$E^A$ = 60 ($E^C$ = 42) ∆ 18 |
| Wirkstoff/e (Z90) | Aufwandmenge [g a.i./ha] | Herbizide Wirkung 21 DAT [%] gegen *Echinochloa crus-galli* |
| (B2.18) Diflufenican | 30 | 10 |
| A4 | 15 | 20 |
| A4 + (B2.18) Diflufenican | 15 + 30 | $E^A$ = 70 (E=28) ∆ 42 |
| | | |
| Wirkstoff/e (Z90) | Aufwandmenge [g a.i./ha] | Herbizide Wirkung 21 DAT [%] gegen *Setaria viridis* |
| (B2.18) Diflufenican | 270<br>90<br>30 | 15<br>10<br>10 |
| A4 | 15<br>1,5 | 60<br>10 |
| A4 + (B2.18) Diflufenican | 1,7 + 270<br>15 + 90<br>15 + 30 | $E^A$ = 35 ($E^C$ = 24) ∆ 11<br>$E^A$ = 80 ($E^C$ = 66) ∆ 14<br>$E^A$ = 75 ($E^C$ = 64) ∆ 11 |
| | | |
| Wirkstoff/e (Z90) | Aufwandmenge [g a.i./ha] | Herbizide Wirkung 21 DAT [%] gegen *Sorghum halepense* |
| (B2.18) Diflufenican | 30 | 10 |
| A4 | 15 | 10 |
| A4 + (B2.18) Diflufenican | 15 + 30 | $E^A$ = 30 ($E^C$ = 19) ∆ 11 |

Tabelle 3.3: Synergistischer Effekt (∆) für herbizide binäre Zusammensetzungen im Nachauflauf enthaltend Herbizide aus der Gruppe B3

| Wirkstoff/e | Aufwandmenge [g a.i. / ha] | Herbizide Wirkung in [%] 14 DAT gegen *Alopecurus myosuroides* |
|---|---|---|
| A3 | 4<br>1 | 90<br>15 |
| (B3.1) Bromoxynil<br>(CAS 1689-84-5) | 150<br>450 | 15<br>25 |
| A3 + (B3.1) Bromoxynil (CAS 1689-84-5) | 4 + 150<br>1 + 450<br>1 + 150 | $E^A$ = 97 ($E^C$ = 92) ∆ = 5<br>$E^A$ = 97 ($E^C$ = 36) ∆ = 61<br>$E^A$ = 80 ($E^C$ = 28) ∆ = 52 |
| | | |
| | | |

(fortgesetzt)

| Wirkstoff/e | Aufwandmenge [g a.i. / ha] | Herbizide Wirkung in [%] 14 DAT gegen *Alopecurus myosuroides* |
|---|---|---|
| Wirkstoff/e | Aufwandmenge [g a.i. / ha] | Herbizide Wirkung in [%] 28 DAT gegen *Alopecurus myosuroides* |
| A3 | 4<br>1 | 50<br>15 |
| (B3.1) Bromoxynil<br>(CAS 1689-84-5) | 150<br>450 | 15<br>25 |
| A3 + (B3.1) Bromoxynil (CAS 1689-84-5) | 4 + 150<br>1 + 450<br>1 + 150 | $E^A$ = 100 ($E^C$ = 58) Δ = 42<br>$E^A$ = 98 ($E^C$ = 36) Δ = 62<br>$E^A$ = 60 ($E^C$ = 28) Δ = 32 |
| | | |
| Wirkstoff/e | Aufwandmenge [g a.i. / ha] | Herbizide Wirkung in [%] 14 DAT gegen *Bromus sterilis* |
| A3 | 4<br>1 | 85<br>15 |
| (B3.1) Bromoxynil<br>(CAS 1689-84-5) | 450<br>150<br>50 | 10<br>10<br>0 |
| A3 + (B3.1) Bromoxynil (CAS 1689-84-5) | 4 + 450<br>4 + 150<br>1 + 450<br>1 + 150<br>1 + 50 | $E^A$ = 95 ($E^C$ = 87) Δ = 8<br>$E^A$ = 93 ($E^C$ = 87) Δ = 6<br>$E^A$ = 85 ($E^C$ = 24) Δ = 61<br>$E^A$ = 80 ($E^C$ = 24) Δ = 56<br>$E^A$ = 30 ($E^C$ = 15) Δ = 15 |
| Wirkstoff/e | Aufwandmenge [g a.i. / ha] | Herbizide Wirkung in [%] 28 DAT gegen *Bromus sterilis* |
| A3 | 1 | 15 |
| (B3.1) Bromoxynil<br>(CAS 1689-84-5) | 450<br>150 | 20<br>15 |
| A3 + (B3.1) Bromoxynil (CAS 1689-84-5) | 1 + 450<br>1 + 150 | $E^A$ = 95 ($E^C$ = 32) Δ = 63<br>$E^A$ = 65 ($E^C$ = 28) Δ = 37 |
| | | |
| Wirkstoff/e | Aufwandmenge [g a.i. / ha] | Herbizide Wirkung in [%] 14 DAT gegen *Centaurea cyanus* |
| A3 | 16 | 80 |
| (B3.1) Bromoxynil (CAS 1689-84-5) | 50 | 30 |
| A3 + (B3.1) Bromoxynil (CAS 1689-84-5) | 16 + 50 | $E^A$ = 100 ($E^C$ = 86) Δ = 14 |
| | | |
| Wirkstoff/e | Aufwandmenge [g a.i. / ha] | Herbizide Wirkung in [%] 28 DAT gegen *Centaurea cyanus* |
| A3 | 16 | 40 |

(fortgesetzt)

| Wirkstoff/e | Aufwandmenge [g a.i. / ha] | Herbizide Wirkung in [%] 28 DAT gegen *Centaurea cyanus* |
|---|---|---|
| (B3.1) Bromoxynil (CAS 1689-84-5) | 50 | 10 |
| A3 + (B3.1) Bromoxynil (CAS 1689-84-5) | 16 + 50 | $E^A$ = 100 ($E^C$ = 46) Δ = 54 |
| | | |
| Wirkstoff/e | Aufwandmenge [g a.i. / ha] | Herbizide Wirkung in [%] 14 DAT gegen *Galium aparine* |
| A3 | 1 | 40 |
| (B3.1) Bromoxynil (CAS 1689-84-5) | 450<br>150<br>50 | 50<br>30<br>20 |
| A3 + (B3.1) Bromoxynil (CAS 1689-84-5) | 1 + 450<br>1 + 150<br>1 + 50 | $E^A$ = 90 ($E^C$ = 70) Δ = 20<br>$E^A$ = 85 ($E^C$ = 58) Δ = 27<br>$E^A$ = 70 ($E^C$ = 52) Δ = 18 |
| Wirkstoff/e | Aufwandmenge [g a.i. / ha] | Herbizide Wirkung in [%] 28 DAT gegen *Galium aparine* |
| A3 | 1 | 15 |
| (B3.1) Bromoxynil (CAS 1689-84-5) | 450 | 75 |
| A3 + (B3.1) Bromoxynil (CAS 1689-84-5) | 1 + 450 | $E^A$ = 85 ($E^C$ = 79) Δ = 6 |
| | | |
| Wirkstoff/e | Aufwandmenge [g a.i. / ha] | Herbizide Wirkung in [%] 14 DAT gegen *Lamium purpureum L.* |
| A3 | 1 | 65 |
| (B3.1) Bromoxynil (CAS 1689-84-5) | 450<br>150 | 40<br>15 |
| A3 + (B3.1) Bromoxynil (CAS 1689-84-5) | 1 + 450<br>1 + 150 | $E^A$ = 95 ($E^C$ = 79) Δ = 16<br>$E^A$ = 93 ($E^C$ = 70) Δ = 23 |
| | | |
| Wirkstoff/e | Aufwandmenge [g a.i. / ha] | Herbizide Wirkung in [%] 28 DAT gegen *Lamium purpureum L.* |
| A3 | 4<br>1 | 40<br>25 |
| (B3.1) Bromoxynil (CAS 1689-84-5) | 450<br>150 | 25<br>25 |
| A3 + (B3.1) Bromoxynil (CAS 1689-84-5) | 4 + 450<br>4 + 150<br>1 + 450 | $E^A$ = 65 ($E^C$ = 55) Δ = 10<br>$E^A$ = 60 ($E^C$ = 55) Δ = 5<br>$E^A$ = 60 ($E^C$ = 44) Δ = 16 |

(fortgesetzt)

| Wirkstoff/e | Aufwandmenge [g a.i. / ha] | Herbizide Wirkung in [%] 14 DAT gegen *Lolium rigidum* |
|---|---|---|
| A3 | 1 | 35 |
| (B3.1) Bromoxynil<br>(CAS 1689-84-5) | 450<br>150 | 15<br>0 |
| A3 + (B3.1) Bromoxynil (CAS 1689-84-5) | 1 + 450<br>1 + 150 | $E^A$ = 95 ($E^C$ = 45) Δ = 50<br>$E^A$ = 93 ($E^C$ = 35) Δ = 58 |
| | | |
| Wirkstoff/e | Aufwandmenge [g a.i. / ha] | Herbizide Wirkung in [%] 28 DAT gegen *Lolium rigidum* |
| A3 | 4<br>1 | 50<br>15 |
| (B3.1) Bromoxynil<br>(CAS 1689-84-5) | 450<br>150 | 20<br>10 |
| A3 + (B3.1) Bromoxynil (CAS 1689-84-5) | 4 + 450<br>1 + 450<br>1 + 150 | $E^A$ = 80 ($E^C$ = 60) Δ = 20<br>$E^A$ = 97 ($E^C$ = 32) Δ = 65<br>$E^A$ = 80 ($E^C$ = 24) Δ = 56 |
| | | |
| Wirkstoff/e | Aufwandmenge [g a.i. / ha] | Herbizide Wirkung in [%] 14 DAT gegen *Lolium rigidum* (resistenter Biotyp) |
| A3 | 4<br>1 | 40<br>15 |
| (B3.1) Bromoxynil<br>(CAS 1689-84-5) | 450<br>150 | 15<br>0 |
| A3 + (B3.1) Bromoxynil (CAS 1689-84-5) | 4 + 450<br>1 + 450<br>1 + 150 | $E^A$ = 70 ($E^C$ = 49) Δ = 21<br>$E^A$ = 95 ($E^C$ = 28) Δ = 67<br>$E^A$ = 80 ($E^C$ = 15) Δ = 65 |
| Wirkstoff/e | Aufwandmenge [g a.i. / ha] | Herbizide Wirkung in [%] 28 DAT gegen *Lolium rigidum* (resistenter Biotyp) |
| A3 | 1 | 0 |
| (B3.1) Bromoxynil<br>(CAS 1689-84-5) | 450<br>150 | 20<br>10 |
| A3 +<br>(B3.1) Bromoxynil (CAS 1689-84-5) | 1 + 450<br>1 + 150 | $E^A$ = 80 ($E^C$ = 20) Δ = 60<br>$E^A$ = 50 ($E^C$ = 10) Δ = 40 |
| | | |
| Wirkstoff/e | Aufwandmenge [g a.i. / ha] | Herbizide Wirkung in [%] 14 DAT gegen *Matricaria inodora* |
| A3 | 16<br>4 | 20<br>20 |
| (B3.1) Bromoxynil<br>(CAS 1689-84-5) | 450<br>50 | 85<br>40 |

(fortgesetzt)

| Wirkstoff/e | Aufwandmenge [g a.i. / ha] | Herbizide Wirkung in [%] 14 DAT gegen *Matricaria inodora* |
|---|---|---|
| A3 + (B3.1) Bromoxynil (CAS 1689-84-5) | 16 + 450<br>16 + 50<br>4 + 450<br>4 + 50 | $E^A$ = 100 ($E^C$ = 88) Δ = 12<br>$E^A$ = 100 ($E^C$ = 52) Δ = 48<br>$E^A$ = 97 ($E^C$ = 88) Δ = 9<br>$E^A$ = 80 ($E^C$ = 52) Δ = 28 |

| Wirkstoff/e | Aufwandmenge [g a.i. / ha] | Herbizide Wirkung in [%] 28 DAT gegen *Matricaria inodora* |
|---|---|---|
| A3 | 16 | 15 |
| (B3.1) Bromoxynil (CAS 1689-84-5) | 450<br>50 | 80<br>15 |
| A3 + (B3.1) Bromoxynil (CAS 1689-84-5) | 16 + 450<br>16 + 50 | $E^A$ = 100 ($E^C$ = 83) Δ = 17<br>$E^A$ = 100 ($E^C$ = 28) Δ = 72 |

| Wirkstoff/e | Aufwandmenge [g a.i. / ha] | Herbizide Wirkung in [%] 14 DAT gegen *Phalaris minor* |
|---|---|---|
| A3 | 16<br>4<br>1 | 85<br>90<br>10 |
| (B3.1) Bromoxynil (CAS 1689-84-5) | 450<br>150<br>50 | 15<br>10<br>0 |
| A3 + (B3.1) Bromoxynil (CAS 1689-84-5) | 16 + 450<br>4+150<br>1 + 450<br>1 + 150<br>1 + 50 | $E^A$ = 95 ($E^C$ = 87) Δ = 8<br>$E^A$ = 97 ($E^C$ = 91) Δ = 6<br>$E^A$ = 95 ($E^C$ = 24) Δ = 71<br>$E^A$ = 95 ($E^C$ = 19) Δ = 76<br>$E^A$ = 20 ($E^C$ = 10) Δ = 10 |

| Wirkstoff/e | Aufwandmenge [g a.i. / ha] | Herbizide Wirkung in [%] 28 DAT gegen *Phalaris minor* |
|---|---|---|
| A3 | 16<br>4<br>1 | 40<br>70<br>0 |
| (B3.1) Bromoxynil (CAS 1689-84-5) | 450<br>150 | 15<br>0 |
| A3 + (B3.1) Bromoxynil (CAS 1689-84-5) | 16 + 450<br>16 + 150<br>4 + 150<br>1 + 450<br>1 + 150 | $E^A$ = 90 ($E^C$ = 49) Δ = 41<br>$E^A$ = 50 ($E^C$ = 40) Δ = 10<br>$E^A$ = 80 ($E^C$ = 70) Δ = 10<br>$E^A$ = 80 ($E^C$ = 15) Δ = 65<br>$E^A$ = 80 ($E^C$ = 0) Δ = 80 |

| Wirkstoff/e | Aufwandmenge [g a.i. / ha] | Herbizide Wirkung in [%] 14 DAT gegen *Poa annua L.* |
|---|---|---|
| A3 | 16<br>1 | 85<br>40 |

(fortgesetzt)

| Wirkstoff/e | Aufwandmenge [g a.i. / ha] | Herbizide Wirkung in [%] 14 DAT gegen *Poa annua L.* |
|---|---|---|
| (B3.1) Bromoxynil<br>(CAS 1689-84-5) | 450<br>150 | 20<br>15 |
| A3 + (B3.1) Bromoxynil (CAS 1689-84-5) | 16 + 450<br>16 + 150<br>1 + 450<br>1 + 150 | $E^A$ = 95 ($E^C$ = 88) Δ = 7<br>$E^A$ = 95 ($E^C$ = 87) Δ = 8<br>$E^A$ = 95 ($E^C$ = 52) Δ = 43<br>$E^A$ = 95 ($E^C$ = 49) Δ = 46 |
| Wirkstoff/e | Aufwandmenge [g a.i. / ha] | Herbizide Wirkung in [%] 28 DAT gegen *Poa annua L.* |
| A3 | 16 1 | 40 15 |
| (B3.1) Bromoxynil<br>(CAS 1689-84-5) | 450<br>150 | 25<br>15 |
| A3 + (B3.1) Bromoxynil (CAS 1689-84-5) | 16 + 450<br>16 + 150<br>1 + 450<br>1 + 150 | $E^A$ = 80 ($E^C$ = 55) Δ = 25<br>$E^A$ = 97 ($E^C$ = 49) Δ = 48<br>$E^A$ = 90 ($E^C$ = 36) Δ = 54<br>$E^A$ = 85 ($E^C$ = 28) Δ = 57 |
| | | |
| Wirkstoff/ e | Aufwandmenge [g a.i. / ha] | Herbizide Wirkung in [%] 14 DAT gegen *Veronica hederifolia* |
| A3 | 16<br>1 | 40<br>30 |
| (B3.1) Bromoxynil<br>(CAS 1689-84-5) | 450<br>150 | 20<br>0 |
| A3 + (B3.1) Bromoxynil (CAS 1689-84-5) | 16 + 450<br>16 + 150<br>1 + 450<br>1 + 150 | $E^A$ = 85 ($E^C$ = 52) Δ = 33<br>$E^A$ = 85 ($E^C$ = 40) Δ = 45<br>$E^A$ = 50 ($E^C$ = 44) Δ = 6<br>$E^A$ = 40 ($E^C$ = 30) Δ = 10 |
| | | |
| Wirkstoff/e | Aufwandmenge [g a.i. / ha] | Herbizide Wirkung in [%] 14 DAT gegen *Viola tricolor* |
| A3 | 16<br>1 | 85<br>50 |
| (B3.1) Bromoxynil<br>(CAS 1689-84-5) | 150<br>450<br>50 | 50<br>30<br>15 |
| A3 + (B3.1) Bromoxynil (CAS 1689-84-5) | 16 + 150<br>1 + 450<br>1 + 150<br>1 + 50 | $E^A$ = 100 ($E^C$ = 93) Δ = 7<br>$E^A$ = 85 ($E^C$ = 65) Δ = 20<br>$E^A$ = 80 ($E^C$ = 75) Δ = 5<br>$E^A$ = 80 ($E^C$ = 58) Δ = 22 |
| Wirkstoff/e | Aufwandmenge [g a.i. / ha] | Herbizide Wirkung in [%] 28 DAT gegen *Viola tricolor* |
| A3 | 16<br>1 | 20<br>15 |
| (B3.1) Bromoxynil | 450 | 15 |

(fortgesetzt)

| Wirkstoff/e | Aufwandmenge [g a.i. / ha] | Herbizide Wirkung in [%] 28 DAT gegen *Viola tricolor* |
|---|---|---|
| (CAS 1689-84-5) | 150<br>50 | 40<br>25 |
| A3 + (B3.1) Bromoxynil (CAS 1689-84-5) | 16 + 450<br>16 + 150<br>16 + 50<br>1 + 450<br>1 + 150<br>1 + 50 | $E^A$ = 40 ($E^C$ = 32) Δ = 8<br>$E^A$ = 100 ($E^C$ = 52) Δ = 48<br>$E^A$ = 70 ($E^C$ = 40) Δ = 30<br>$E^A$ = 50 ($E^C$ = 28) Δ = 22<br>$E^A$ = 70 ($E^C$ = 49) Δ = 21<br>$E^A$ = 50 ($E^C$ = 36) Δ = 14 |

Tabelle 3.4: Synergistischer Effekt (Δ) für herbizide binäre Zusammensetzungen im Nachauflauf enthaltend Herbizide aus der Gruppe B4

| Wirkstoff/e | Aufwandmenge [g a.i. / ha] | Herbizide Wirkung in [%] 14 DAT gegen *Alopecurus myosuroides* |
|---|---|---|
| A3 | 1 | 15 |
| (B4.8) Carfentrazone (CAS 128639-02-1) | 45<br>15<br>5 | 25<br>0<br>0 |
| A3 + (B4.8) Carfentrazone (CAS 128639-02-1) | 1 + 45<br>1 + 15<br>1 + 5 | $E^A$ = 97 ($E^C$ = 36) Δ = 61<br>$E^A$ = 70 ($E^C$ = 15) Δ = 55<br>$E^A$ = 20 ($E^C$ = 15) Δ = 5 |
| Wirkstoff/e | Aufwandmenge [g a.i. / ha] | Herbizide Wirkung in [%] 28 DAT gegen *Alopecurus myosuroides* |
| A3 | 16<br>4<br>1 | 90<br>50<br>15 |
| (B4.8) Carfentrazone (CAS 128639-02-1) | 45<br>15 | 20<br>0 |
| A3<br>+<br>(B4.8) Carfentrazone<br>(CAS 128639-02-1) | 16 + 45<br>4 + 45<br>1 + 45<br>1 + 15 | $E^A$ = 98 ($E^C$ = 92) Δ = 6<br>$E^A$ = 100 ($E^C$ = 60) Δ = 40<br>$E^A$ = 100 ($E^C$ = 32) Δ = 68<br>$E^A$ = 30 ($E^C$ = 15) Δ = 15 |
| | | |
| Wirkstoff/e | Aufwandmenge [g a.i. / ha] | Herbizide Wirkung in [%] 14 DAT gegen *Bromus sterilis* |
| A3 | 1 | 15 |
| (B4.8) Carfentrazone (CAS 128639-02-1) | 45<br>15 | 30<br>20 |
| A3 + (B4.8) Carfentrazone (CAS 128639-02-1) | 1 + 45<br>1 + 15 | $E^A$ = 85 ($E^C$ =) Δ = 44<br>$E^A$ = 75 ($E^C$ = 32) Δ = 43 |
| | | |

(fortgesetzt)

| Wirkstoff/e | Aufwandmenge [g a.i. / ha] | Herbizide Wirkung in [%] 28 DAT gegen *Bromus sterilis* |
|---|---|---|
| A3 | 1 | 15 |
| (B4.8) Carfentrazone (CAS 128639-02-1) | 45<br>15 | 35<br>15 |
| A3 + (B4.8) Carfentrazone (CAS 128639-02-1) | 1 + 45<br>1 + 15 | $E^A$ = 97 ($E^C$ = 45) $\Delta$ = 52<br>$E^A$ = 45 ($E^C$ = 28) $\Delta$ = 17 |
| | | *Galium aparine* |
| A3 | 16<br>4 | 75<br>65 |
| (B4.8) Carfentrazone (CAS 128639-02-1) | 15<br>5 | 80<br>70 |
| A3 + (B4.8) Carfentrazone (CAS 128639-02-1) | 16 + 15<br>4+5 | $E^A$ = 100 ($E^C$ = 95) $\Delta$ = 5<br>$E^A$ = 100 ($E^C$ = 90) $\Delta$ = 10 |
| | | |
| Wirkstoff/e | Aufwandmenge [g a.i. / ha] | Herbizide Wirkung in [%] 28 DAT gegen *Lamium purpureum L.* |
| A3 | 1 | 25 |
| (B4.8) Carfentrazone (CAS 128639-02-1) | 45 | 80 |
| A3 + (B4.8) Carfentrazone (CAS 128639-02-1) | 1 + 45 | $E^A$ = 100 ($E^C$ = 85) $\Delta$ = 15 |
| | | |
| Wirkstoff/e | Aufwandmenge [g a.i. / ha] | Herbizide Wirkung in [%] 14 DAT gegen *Matricaria inodora* |
| A3 | 4 | 20 |
| (B4.8) Carfentrazone (CAS 128639-02-1) | 5 | 25 |
| A3 + (B4.8) Carfentrazone (CAS 128639-02-1) | 4+5 | $E^A$ = 50 ($E^C$ = 40) $\Delta$ = 10 |
| | | |
| Wirkstoff/e | Aufwandmenge [g a.i. / ha] | Herbizide Wirkung in [%] 14 DAT gegen *Alopecurus myosuroides* |
| A3 | 1 | 35 |
| (B4.8) Carfentrazone (CAS 128639-02-1) | 45<br>15 | 35<br>15 |
| A3 + (B4.8) Carfentrazone (CAS 128639-02-1) | 1 + 45<br>1 + 15 | $E^A$ = 95 ($E^C$ = 58) $\Delta$ = 37<br>$E^A$ = 80 (E = 45) $\Delta$ = 35 |
| Wirkstoff/e | Aufwandmenge [g a.i. / ha] | Herbizide Wirkung in [%] 28 DAT gegen *Lolium rigidum* |
| A3 | 1 | 15 |
| (B4.8) Carfentrazone (CAS 128639-02-1) | 45<br>15 | 20<br>0 |

(fortgesetzt)

| Wirkstoff/e | Aufwandmenge [g a.i. / ha] | Herbizide Wirkung in [%] 28 DAT gegen *Lolium rigidum* |
|---|---|---|
| A3 +<br>(B4.8) Carfentrazone (CAS 128639-02-1) | 1 + 45<br>1 + 15 | $E^A = 97$ ($E^C = 32$) $\Delta = 65$<br>$E^A = 50$ ($E^C = 15$) $\Delta = 35$ |
| | | |
| Wirkstoff/e | Aufwandmenge [g a.i. / ha] | Herbizide Wirkung in [%] 14 DAT gegen *Lolium rigidum* (resistenter Biotyp) |
| A3 | 1 | 15 |
| (B4.8) Carfentrazone<br>(CAS 128639-02-1) | 45<br>15 | 25<br>10 |
| A3 +<br>(B4.8) Carfentrazone (CAS 128639-02-1) | 1 + 45<br>1 + 15 | $E^A = 60$ ($E^C = 36$) $\Delta = 24$<br>$E^A = 50$ ($E^C = 24$) $\Delta = 26$ |
| | | |
| Wirkstoff/e | Aufwandmenge [g a.i. / ha] | Herbizide Wirkung in [%] 28 DAT gegen *Lolium rigidum* (resistenter Biotyp) |
| A3 | 1 | 0 |
| (B4.8) Carfentrazone<br>(CAS 128639-02-1) | 45<br>15 | 20<br>0 |
| A3 +<br>(B4.8) Carfentrazone (CAS 128639-02-1) | 1 + 45<br>1 + 15 | $E^A = 30$ ($E^C = 20$) $\Delta$ 10<br>$E^A = 25$ ($E^C = 0$) $\Delta = 25$ |
| | | |
| Wirkstoff/e | Aufwandmenge [g a.i. / ha] | Herbizide Wirkung in [%] 14 DAT gegen *Phalaris minor* |
| A3 | 1 | 10 |
| (B4.8) Carfentrazone<br>(CAS 128639-02-1) | 45<br>15 | 20<br>15 |
| A3 + (B4.8) Carfentrazone (CAS 128639-02-1) | 1 + 45<br>1 + 15 | $E^A = 97$ ($E^C = 28$) $\Delta = 69$<br>$E^A = 97$ ($E^C = 24$) $\Delta = 73$ |
| Wirkstoff/e | Aufwandmenge [g a.i. / ha] | Herbizide Wirkung in [%] 28 DAT gegen *Phalaris minor* |
| A3 | 1 | 0 |
| (B4.8) Carfentrazone<br>(CAS 128639-02-1) | 45<br>15 | 10<br>0 |
| A3 + (B4.8) Carfentrazone (CAS 128639-02-1) | 1 + 45<br>1 + 15 | $E^A = 80$ ($E^C = 10$) $\Delta = 70$<br>$E^A = 80$ ($E^C = 0$) $\Delta = 80$ |
| | | |
| Wirkstoff/e | Aufwandmenge [g a.i. / ha] | Herbizide Wirkung in [%] 14 DAT gegen *Poa annua L.* |
| A3 | 16<br>1 | 85<br>40 |

(fortgesetzt)

| Wirkstoff/e | Aufwandmenge [g a.i. / ha] | Herbizide Wirkung in [%] 14 DAT gegen *Poa annua L.* |
|---|---|---|
| (B4.8) Carfentrazone (CAS 128639-02-1) | 45<br>15<br>5 | 10<br>0<br>0 |
| A3 + (B4.8) Carfentrazone (CAS 128639-02-1) | 16 + 45<br>16 + 15<br>1 + 45<br>1 + 15<br>1 + 5 | $E^A$ = 95 ($E^C$ = 87) Δ = 8<br>$E^A$ = 90 ($E^C$ = 85) Δ = 5<br>$E^A$ = 95 ($E^C$ = 46) Δ = 49<br>$E^A$ = 95 ($E^C$ = 40) Δ = 55<br>$E^A$ = 50 ($E^C$ = 40) Δ = 10 |
| | | |
| Wirkstoff/e | Aufwandmenge [g a.i. / ha] | Herbizide Wirkung in [%] 28 DAT gegen *Poa annua L.* |
| A3 | 16<br>1 | 40<br>15 |
| (B4.8) Carfentrazone (CAS 128639-02-1) | 45<br>15 | 20<br>0 |
| A3 + (B4.8) Carfentrazone (CAS 128639-02-1) | 16 + 45<br>16 + 15<br>1 + 45<br>1 + 15 | $E^A$ = 70 ($E^C$ = 52) Δ = 18<br>$E^A$ = 60 ($E^C$ = 40) Δ = 20<br>$E^A$ = 90 ($E^C$ = 32) Δ = 58<br>$E^A$ = 98 ($E^C$ = 15) Δ = 83 |
| | | *Viola tricolor* |
| A3 | 4<br>1 | 30<br>15 |
| (B4.8) Carfentrazone (CAS 128639-02-1) | 5 | 80 |
| A3 + (B4.8) Carfentrazone (CAS 128639-02-1) | 4+5<br>1 + 5 | $E^A$ = 100 ($E^C$ = 86) Δ = 14<br>$E^A$ = 100 ($E^C$ = 83) Δ = 17 |
| | | |
| Wirkstoff/e | Aufwandmenge [g a.i./ha] | Herbizide Wirkung 21 DAT [%] gegen *Digitaria sanguinalis* |
| (B4.11) Imazamox (CAS 114311-32-9) | 3,3 | 60 |
| A3 | 1,7 | 20 |
| A3 + (B4.11) Imazamox (CAS 114311-32-9) | 1,7 + 3,3 | $E^A$ = 40 ($E^C$ = 19) Δ 21 |
| | | |
| Wirkstoff/e | Aufwandmenge [g a.i./ha] | Herbizide Wirkung 21 DAT [%] gegen *Bidens pilosa* |
| (B4.11) Imazamox (CAS 114311-32-9) | 30<br>3,3 | 50<br>20 |
| A3 | 15<br>5<br>1,7 | 50<br>10<br>10 |

(fortgesetzt)

| Wirkstoff/e | Aufwandmenge [g a.i./ha] | Herbizide Wirkung 21 DAT [%] gegen *Bidens pilosa* |
|---|---|---|
| A3 + (B4.11) Imazamox (CAS 114311-32-9) | 5 + 30<br>1,7 + 30<br>15 + 3,3<br>5 + 3,3 | $E^A$ = 80 ($E^C$ = 55) Δ 25<br>$E^A$ = 75 ($E^C$ = 55) Δ 20<br>$E^A$ = 75 ($E^C$ = 60) Δ 15<br>$E^A$ = 60 ($E^C$ = 28) Δ 32 |
| Wirkstoff/e | Aufwandmenge [g a.i. / ha] | Herbizide Wirkung in [%] 14 DAT gegen *Alopecurus myosuroides* |
| A3 | 4<br>1 | 90<br>15 |
| (B4.13) Imazapyr (CAS 81334-34-1) | 4,5<br>1,5 | 20<br>10 |
| A3 + (B4.13) Imazapyr (CAS 81334-34-1) | 4 + 4,5<br>1 + 4,5<br>1 + 1,5 | $E^A$ = 97 ($E^C$ = 92) Δ = 5<br>$E^A$ = 97 ($E^C$ = 32) Δ = 65<br>$E^A$ = 75 ($E^C$ = 24) Δ = 51 |
| | | |
| Wirkstoff/e | Aufwandmenge [g a.i. / ha] | Herbizide Wirkung in [%] 28 DAT gegen *Alopecurus myosuroides* |
| A3 | 16<br>4<br>1 | 90<br>50<br>15 |
| (B4.13) Imazapyr (CAS 81334-34-1) | 4,5 | 20 |
| A3 + (B4.13) Imazapyr (CAS 81334-34-1) | 16 + 4,5<br>4 + 4,5<br>1 + 4,5 | $E^A$ = 98 ($E^C$ = 92) Δ = 6<br>$E^A$ = 100 ($E^C$ = 60) Δ = 40<br>$E^A$ = 95 ($E^C$ = 32) Δ = 63 |
| | | |
| Wirkstoff/e | Aufwandmenge [g a.i. / ha] | Herbizide Wirkung in [%] 14 DAT gegen *Bromus steri*lis |
| A3 | 1 | 15 |
| (B4.13) Imazapyr (CAS 81334-34-1) | 4,5<br>1,5<br>0,5 | 25<br>0<br>0 |
| A3 + (B4.13) Imazapyr (CAS 81334-34-1) | 1 + 4,5<br>1 + 1,5<br>1 + 0,5 | $E^A$ = 85 ($E^C$ = 36) Δ = 49<br>$E^A$ = 85 ($E^C$ = 15) Δ = 70<br>$E^A$ = 20 ($E^C$ = 15) Δ = 5 |
| Wirkstoff/e | Aufwandmenge [g a.i. / ha] | Herbizide Wirkung in [%] 28 DAT gegen *Bromus sterilis* |
| A3 | 1 | 15 |
| (B4.13) Imazapyr (CAS 81334-34-1) | 4,5<br>1,5 | 15<br>10 |
| A3 + (B4.13) Imazapyr (CAS 81334-34-1) | 1 + 4,5<br>1 + 1,5 | $E^A$ = 97 ($E^C$ = 28) Δ = 69<br>$E^A$ = 70 ($E^C$ = 24) Δ = 46 |
| | | |

(fortgesetzt)

| Wirkstoff/e | Aufwandmenge [g a.i. / ha] | Herbizide Wirkung in [%] 14 DAT gegen *Centaurea cyanus* |
|---|---|---|
| A3 | 4 | 50 |
| (B4.13) Imazapyr (CAS 81334-34-1) | 4,5 | 10 |
| A3 + (B4.13) Imazapyr (CAS 81334-34-1) | 4 + 4,5 | $E^A$ = 60 ($E^C$ = 55) Δ = 5 |
| | | |
| Wirkstoff/e | Aufwandmenge [g a.i. / ha] | Herbizide Wirkung in [%] 28 DAT gegen *Centaurea cyanus* |
| A3 | 16 | 40 |
| (B4.13) Imazapyr (CAS 81334-34-1) | 4,5 | 25 |
| A3 + (B4.13) Imazapyr (CAS 81334-34-1) | 16 + 4,5 | $E^A$ = 65 ($E^C$ = 55) Δ = 10 |
| | | |
| Wirkstoff/e | Aufwandmenge [g a.i. / ha] | Herbizide Wirkung in [%] 14 DAT gegen *Galium aparine* |
| A3 | 1 | 40 |
| (B4.13) Imazapyr (CAS 81334-34-1) | 4,5<br>1,5 | 25<br>40 |
| A3 + (B4.13) Imazapyr (CAS 81334-34-1) | 1 + 4,5<br>1 + 1,5 | $E^A$ = 93 ($E^C$ = 55) Δ = 38<br>$E^A$ = 90 ($E^C$ = 64) Δ = 26 |
| Wirkstoff/e | Aufwandmenge [g a.i. / ha] | Herbizide Wirkung in [%] 28 DAT gegen *Galium aparine* |
| A3 | 1 | 15 |
| (B4.13) Imazapyr (CAS 81334-34-1) | 4,5<br>1,5<br>0,5 | 40<br>50<br>30 |
| A3 + (B4.13) Imazapyr (CAS 81334-34-1) | 1 + 4,5<br>1 + 1,5<br>1 + 0,5 | $E^A$ = 85 ($E^C$ = 49) Δ = 36<br>$E^A$ = 70 ($E^C$ = 58) Δ = 12<br>$E^A$ = 50 ($E^C$ = 41) Δ = 9 |
| | | |
| Wirkstoff/e | Aufwandmenge [g a.i. / ha] | Herbizide Wirkung in [%] 14 DAT gegen *Lamium purpureum L.* |
| A3 | 1 | 65 |
| (B4.13) Imazapyr (CAS 81334-34-1) | 4,5<br>1,5<br>0,5 | 40<br>25<br>0 |
| A3 + (B4.13) Imazapyr (CAS 81334-34-1) | 1 + 4,5<br>1 + 1,5<br>1 + 0,5 | $E^A$ = 95 ($E^C$ = 79) Δ = 16<br>$E^A$ = 93 ($E^C$ = 74) Δ = 19<br>$E^A$ = 85 ($E^C$ = 65) Δ = 20 |
| | | |

(fortgesetzt)

| Wirkstoff/e | Aufwandmenge [g a.i. / ha] | Herbizide Wirkung in [%] 28 DAT gegen *Lamium purpureum L.* |
|---|---|---|
| A3 | 4<br>1 | 40<br>25 |
| (B4.13) Imazapyr (CAS 81334-34-1) | 4,5<br>0,5<br>1,5 | 20<br>0<br>0 |
| A3 + (B4.13) Imazapyr (CAS 81334-34-1) | 4 + 4,5<br>4 + 0,5<br>1 + 4,5<br>1 + 1,5<br>1 + 0,5 | $E^A$ = 75 ($E^C$ = 52) Δ = 23<br>$E^A$ = 45 ($E^C$ = 40) Δ = 5<br>$E^A$ = 60 ($E^C$ = 40) Δ = 20<br>$E^A$ = 40 ($E^C$ = 25) Δ = 15<br>$E^A$ = 70 ($E^C$ = 25) Δ = 45 |
| Wirkstoff/e | Aufwandmenge [g a.i. / ha] | Herbizide Wirkung in [%] 14 DAT gegen *Lolium rigidum* |
| A3 | 1 | 35 |
| (B4.13) Imazapyr (CAS 81334-34-1) | 4,5<br>1,5 | 20<br>0 |
| A3 + (B4.13) Imazapyr (CAS 81334-34-1) | 1 + 4,5<br>1 + 1,5 | $E^A$ = 95 ($E^C$ = 48) Δ = 47<br>$E^A$ = 95 ($E^C$ = 35) Δ = 60 |
| | | |
| Wirkstoff/e | Aufwandmenge [g a.i. / ha] | Herbizide Wirkung in [%] 28 DAT gegen *Lolium rigidum* |
| A3 | 4<br>1 | 50<br>15 |
| (B4.13) Imazapyr (CAS 81334-34-1) | 4,5<br>1,5 | 15<br>0 |
| A3 + (B4.13) Imazapyr (CAS 81334-34-1) | 4 + 4,5<br>4 + 1,5<br>1 + 4,5<br>1 + 1,5 | $E^A$ = 97 ($E^C$ = 58) Δ = 39<br>$E^A$ = 60 ($E^C$ = 50) Δ = 10<br>$E^A$ = 80 ($E^C$ = 28) Δ = 52<br>$E^A$ = 70 ($E^C$ = 15) Δ = 55 |
| | | |
| Wirkstoff/e | Aufwandmenge [g a.i. / ha] | Herbizide Wirkung in [%] 14 DAT gegen *Lolium rigidum* (resistenter Biotyp) |
| A3 | 4<br>1 | 40<br>15 |
| (B4.13) Imazapyr (CAS 81334-34-1) | 4,5<br>1,5<br>0,5 | 15<br>10<br>0 |
| A3 + (B4.13) Imazapyr (CAS 81334-34-1) | 4 + 4,5<br>1 + 4,5<br>1 + 1,5<br>1 + 0,5 | $E^A$ = 80 ($E^C$ = 49) Δ = 31<br>$E^A$ = 70 ($E^C$ = 28) Δ = 42<br>$E^A$ = 35 ($E^C$ = 24) Δ = 11<br>$E^A$ = 20 ($E^C$ = 15) Δ = 5 |

(fortgesetzt)

| Wirkstoff/e | Aufwandmenge [g a.i. / ha] | Herbizide Wirkung in [%] 28 DAT gegen *Lolium rigidum* (resistenter Biotyp) |
|---|---|---|
| A3 | 4<br>1 | 10<br>0 |
| (B4.13) Imazapyr (CAS 81334-34-1) | 4,5<br>1,5 | 15<br>0 |
| A3 + (B4.13) Imazapyr (CAS 81334-34-1) | 4 + 4,5<br>4 + 1,5<br>1 + 4,5<br>1 + 1,5 | $E^A$ = 40 ($E^C$ = 24) Δ = 16<br>$E^A$ = 15 ($E^C$ = 10) Δ = 5<br>$E^A$ = 30 ($E^C$ = 15) Δ = 15<br>$E^A$ = 15 ($E^C$ = 0) Δ = 15 |
| | | |
| Wirkstoff/e | Aufwandmenge [g a.i. / ha] | Herbizide Wirkung in [%] 14 DAT gegen *Matricaria inodora* |
| A3 | 16 | 20 |
| (B4.13) Imazapyr (CAS 81334-34-1) | 0,5 | 0 |
| A3 + (B4.13) Imazapyr (CAS 81334-34-1) | 16 + 0,5 | $E^A$ = 25 ($E^C$ = 20) Δ = 5 |
| | | |
| Wirkstoff/e | Aufwandmenge [g a.i. / ha] | Herbizide Wirkung in [%] 28 DAT gegen *Matricaria inodora* |
| A3 | 16 | 15 |
| (B4.13) Imazapyr (CAS 81334-34-1) | 4,5<br>0,5 | 20<br>0 |
| A3 + (B4.13) Imazapyr (CAS 81334-34-1) | 16 + 4,5<br>16 + 0,5 | $E^A$ = 40 ($E^C$ = 32) Δ = 8<br>$E^A$ = 20 ($E^C$ = 15) Δ = 5 |
| Wirkstoff/e | Aufwandmenge [g a.i. / ha] | Herbizide Wirkung in [%] 14 DAT gegen *Phalaris minor* |
| A3 | 16<br>4<br>1 | 85<br>90<br>10 |
| (B4.13) Imazapyr (CAS 81334-34-1) | 4,5<br>1,5<br>0,5 | 25<br>0<br>0 |
| A3 + (B4.13) Imazapyr (CAS 81334-34-1) | 16 + 4,5<br>4 + 1,5<br>1 + 4,5<br>1 + 1,5<br>1 + 0,5 | $E^A$ = 97 ($E^C$ = 89) Δ = 8<br>$E^A$ = 95 ($E^C$ = 90) Δ = 5<br>$E^A$ = 95 ($E^C$ = 33) Δ = 62<br>$E^A$ = 95 ($E^C$ = 10) Δ = 85<br>$E^A$ = 20 ($E^C$ = 10) Δ = 10 |
| | | |
| Wirkstoff/e | Aufwandmenge [g a.i. / ha] | Herbizide Wirkung in [%] 28 DAT gegen *Phalaris minor* |
| A3 | 16<br>4 | 40<br>70 |

(fortgesetzt)

| Wirkstoff/e | Aufwandmenge [g a.i. / ha] | Herbizide Wirkung in [%] 28 DAT gegen *Phalaris minor* |
|---|---|---|
| | 1 | 0 |
| (B4.13) Imazapyr (CAS 81334-34-1) | 4,5<br>1,5<br>0,5 | 20<br>10<br>0 |
| A3 + (B4.13) Imazapyr (CAS 81334-34-1) | 16 + 4,5<br>4 + 4,5<br>4 + 1,5<br>1 + 4,5<br>1 + 1,5<br>1 + 0,5 | $E^A$ = 80 ($E^C$ = 52) Δ = 28<br>$E^A$ = 100 ($E^C$ = 76) Δ = 24<br>$E^A$ = 80 ($E^C$ = 73) Δ = 7<br>$E^A$ = 70 ($E^C$ = 20) Δ = 50<br>$E^A$ = 60 ($E^C$ = 10) Δ = 50<br>$E^A$ = 15 ($E^C$ = 0) Δ = 15 |
| Wirkstoff/e | Aufwandmenge [g a.i. / ha] | Herbizide Wirkung in [%] 14 DAT gegen *Poa annua L.* |
| A3 | 16<br>1 | 85<br>40 |
| (B4.13) Imazapyr (CAS 81334-34-1) | 4,5<br>1,5 | 0<br>0 |
| A3 + (B4.13) Imazapyr (CAS 81334-34-1) | 16 + 4,5<br>16 + 1,5<br>1 + 4,5<br>1 + 1,5 | $E^A$ = 95 ($E^C$ = 85) Δ = 10<br>$E^A$ = 95 ($E^C$ = 85) Δ = 10<br>$E^A$ = 95 ($E^C$ = 40) Δ = 55<br>$E^A$ = 97 ($E^C$ = 40) Δ = 57 |
| | | |
| Wirkstoff/e | Aufwandmenge [g a.i. / ha] | Herbizide Wirkung in [%] 28 DAT gegen *Poa annua L.* |
| A3 | 16<br>1 | 40<br>15 |
| (B4.13) Imazapyr (CAS 81334-34-1) | 4,5<br>1,5<br>0,5 | 20<br>15<br>0 |
| A3 + (B4.13) Imazapyr (CAS 81334-34-1) | 16 + 4,5<br>16 + 1,5<br>1 + 4,5<br>1 + 1,5<br>1 + 0,5 | $E^A$ = 98 ($E^C$ = 52) Δ = 46<br>$E^A$ = 97 ($E^C$ = 49) Δ = 48<br>$E^A$ = 50 ($E^C$ = 32) Δ = 18<br>$E^A$ = 98 ($E^C$ = 28) Δ = 70<br>$E^A$ = 20 ($E^C$ = 15) Δ = 5 |
| | | |
| Wirkstoff/e | Aufwandmenge [g a.i. / ha] | Herbizide Wirkung in [%] 14 DAT gegen *Viola tricolor* |
| A3 | 1 | 50 |
| (B4.13) Imazapyr (CAS 81334-34-1) | 4,5<br>1,5<br>0,5 | 40<br>40<br>10 |

| | | |
|---|---|---|
| A3 + (B4.13) Imazapyr (CAS 81334-34-1) | 1 + 4,5<br>1 + 1,5<br>1 + 0,5 | $E^A$ = 85 ($E^C$ = 70) Δ = 15<br>$E^A$ = 90 ($E^C$ = 70) Δ = 20<br>$E^A$ = 80 ($E^C$ = 55) Δ = 25 |

(fortgesetzt)

| Wirkstoff/e | Aufwandmenge [g a.i. / ha] | Herbizide Wirkung in [%] 28 DAT gegen *Viola tricolor* |
|---|---|---|
| A3 | 4<br>1 | 30<br>15 |
| (B4.13) Imazapyr (CAS 81334-34-1) | 4,5<br>1,5 | 15<br>20 |
| A3 + (B4.13) Imazapyr (CAS 81334-34-1) | 4 + 4,5<br>4 + 1,5<br>1 + 4,5<br>1 + 1,5 | $E^A$ = 75 ($E^C$ = 41) Δ = 34<br>$E^A$ = 80 ($E^C$ = 44) Δ = 36<br>$E^A$ = 60 ($E^C$ = 28) Δ = 32<br>$E^A$ = 80 ($E^C$ = 32) Δ = 48 |
| | | |
| Wirkstoff/e | Aufwandmenge [g a.i./ha] | Herbizide Wirkung 21 DAT [%] gegen *Amaranthus palmeri* |
| (B4.15) Imazethapyr (CAS 81335-77-5) | 30<br>10<br>3,33 | 10<br>0<br>0 |
| A3 | 5<br>1,7 | 15<br>10 |
| A3 + (B4.15) Imazethapyr (CAS 81335-77-5) | 5 + 30<br>1,7 + 10<br>1,7 + 3,33 | $E^A$ = 35 ($E^C$ = 23,5) Δ 11,5<br>$E^A$ = 20 ($E^C$ = 10) Δ 10<br>$E^A$ = 20 ($E^C$ = 10) Δ 10 |
| | | |
| Wirkstoff/e | Aufwandmenge [g a.i./ha] | Herbizide Wirkung 21 DAT [%] gegen *Bidens pilosa* |
| (B4.15) Imazethapyr (CAS 81335-77-5) | 30<br>10<br>3,33 | 25<br>0<br>0 |
| A3 | 5<br>1,7 | 10<br>0 |
| A3 + (B4.15) Imazethapyr (CAS 81335-77-5) | 5 + 30<br>1,7 + 30<br>1,7 + 10<br>5 + 3,33<br>1,7 + 3,33 | $E^A$ = 60 ($E^C$ = 32,5) Δ 27,5<br>$E^A$ = 50 ($E^C$ = 25) Δ 25<br>$E^A$ = 10 ($E^C$ = 0) Δ 10<br>$E^A$ = 25 ($E^C$ = 10) Δ 15<br>$E^A$ = 25 ($E^C$ = 0) Δ 25 |
| Wirkstoff/e (Z68) | Aufwandmenge [g a.i./ha] | Herbizide Wirkung 37 DAT [%] gegen *Abutilon theophrasti* |
| (B4.18) Isoxaflutole | 75 | 58 |
| A3 | 100 | 75 |
| A3 + (B4.18) Isoxaflutole | 100 + 75 | $E^A$ = 93 ($E^C$ = 89,5)<br>Δ 3,5 |
| | | |
| Wirkstoff/e (Z68) | Aufwandmenge [g a.i./ha] | Herbizide Wirkung 21 DAT [%] gegen *Brachiaria platyphylla* |
| (B4.18) Isoxaflutole | 45<br>15 | 30<br>20 |

(fortgesetzt)

| Wirkstoff/e (Z68) | Aufwandmenge [g a.i./ha] | Herbizide Wirkung 21 DAT [%] gegen *Brachiaria platyphylla* |
|---|---|---|
| A3 | 5<br>1,7 | 80<br>20 |
| A3 + (B4.18) Isoxaflutole | 5 + 45<br>1,7 + 45<br>5 + 15<br>1,7 + 15 | $E^A$ = 100 ($E^C$ = 86) Δ 14<br>$E^A$ = 70 ($E^C$ = 44) Δ 26<br>$E^A$ = 95 ($E^C$ = 84) Δ 11<br>$E^A$ = 65 ($E^C$ = 36) Δ 29 |
| | | |
| Wirkstoff/e (Z68) | Aufwandmenge [g a.i./ha] | Herbizide Wirkung 21 DAT [%] gegen *Digitaria sanguinalis* |
| (B4.18) Isoxaflutole | 45<br>15 | 25<br>10 |
| A3 | 5<br>1,7 | 80<br>10 |
| A3 + (B4.18) Isoxaflutole | 5 + 45<br>1,7 + 15 | $E^A$ = 98 ($E^C$ = 85) Δ 13<br>$E^A$ = 50 ($E^C$ = 19) Δ 31 |
| | | |
| Wirkstoff/e (Z68) | Aufwandmenge [g a.i./ha] | Herbizide Wirkung 21 DAT [%] gegen *Sorghum halepense* |
| (B4.18) Isoxaflutole | 45 | 60 |
| A3 | 1,7 | 40 |
| A3 + (B4.18) Isoxaflutole | 1,7 + 45 | $E^A$ = 93 ($E^C$ = 76) Δ 17 |
| Wirkstoff/e (Z68) | Aufwandmenge [g a.i./ha] | Herbizide Wirkung 21 DAT [%] gegen *Amaranthus palmeri* |
| (B4.18) Isoxaflutole | 45<br>15<br>5 | 20<br>10<br>10 |
| A3 | 15<br>5<br>1,7 | 30<br>10<br>0 |
| A3 + (B4.18) Isoxaflutole | 1,7 + 45<br>15 + 15<br>5 + 15<br>1,7 + 15<br>5+5<br>1,7 + 5 | $E^A$ = 30 ($E^C$ = 20) Δ 10<br>$E^A$ = 50 ($E^C$ = 37) Δ 13<br>$E^A$ = 40 ($E^C$ = 19) Δ 21<br>$E^A$ = 20 ($E^C$ = 10) Δ 10<br>$E^A$ = 30 ($E^C$ = 19) Δ 11<br>$E^A$ = 25 ($E^C$ = 10) Δ 15 |
| | | |
| Wirkstoff/e (Z68) | Aufwandmenge [g a.i./ha] | Herbizide Wirkung 21 DAT [%] gegen *Bidens pilosa* |
| (B4.18) Isoxaflutole | 45<br>5 | 60<br>20 |

| | | |
|---|---|---|
| A3 | 15<br>5<br>1,7 | 50<br>10<br>10 |

(fortgesetzt)

| Wirkstoff/e (Z68) | Aufwandmenge [g a.i./ha] | Herbizide Wirkung 21 DAT [%] gegen *Bidens pilosa* |
|---|---|---|
| A3 + (B4.18) Isoxaflutole | 15 + 45<br>5 + 45<br>1,7 + 45<br>5+5<br>1,7 + 5 | $E^A$ = 90 ($E^C$ = 80) Δ 10<br>$E^A$ = 85 ($E^C$ = 64) Δ 21<br>$E^A$ = 80 ($E^C$ = 64) Δ 16<br>$E^A$ = 60 ($E^C$ = 28) Δ 32<br>$E^A$ = 40 ($E^C$ = 28) Δ 12 |
| | | |
| Wirkstoff/e (Z69) | Aufwandmenge [g a.i. / ha] | Herbizide Wirkung in [%] 14 DAT gegen *Alopecurus myosuroides* |
| A3 | 4<br>1 | 75<br>30 |
| (B4.22) Pyrasulfotole | 45<br>15<br>5 | 10<br>0<br>0 |
| A3 + (B4.22) Pyrasulfotole | 4 + 45<br>4 + 15<br>4+5<br>1 + 45<br>1 + 15<br>1 + 5 | $E^A$ = 90 ($E^C$ = 78) Δ = 12<br>$E^A$ = 90 ($E^C$ = 75) Δ = 15<br>$E^A$ = 90 ($E^C$ = 75) Δ = 15<br>$E^A$ = 50 ($E^C$ = 37) Δ = 13<br>$E^A$ = 40 ($E^C$ = 30) Δ = 10<br>$E^A$ = 60 ($E^C$ = 30) Δ = 30 |
| Wirkstoff/e (Z69) | Aufwandmenge [g a.i. / ha] | Herbizide Wirkung in [%] 28 DAT gegen *Alopecurus myosuroides* |
| A3 | 4<br>1 | 60<br>10 |
| (B4.22) Pyrasulfotole | 45<br>15<br>5 | 10<br>0<br>0 |
| A3 + (B4.22) Pyrasulfotole | 4 + 45<br>4 + 15<br>4+5<br>1 + 15<br>1 + 5 | $E^A$ = 93 ($E^C$ = 64) Δ = 29<br>$E^A$ = 95 ($E^C$ = 60) Δ = 35<br>$E^A$ = 80 ($E^C$ = 60) Δ = 20<br>$E^A$ = 30 ($E^C$ = 10) Δ = 20<br>$E^A$ = 40 ($E^C$ = 10) Δ = 30 |
| | | |
| Wirkstoff/e (Z69) | Aufwandmenge [g a.i. / ha] | Herbizide Wirkung in [%] 14 DAT gegen *Bromus sterilis* |
| A3 | 1 | 30 |
| (B4.22) Pyrasulfotole | 45<br>15<br>5 | 10<br>0<br>0 |
| A3 + (B4.22) Pyrasulfotole | 1 + 45<br>1 + 15<br>1 + 5 | $E^A$ = 70 ($E^C$ = 37) Δ = 33<br>$E^A$ = 60 ($E^C$ = 30) Δ = 30<br>$E^A$ = 70 ($E^C$ = 30) Δ = 40 |
| | | |

(fortgesetzt)

| Wirkstoff/e (Z69) | Aufwandmenge [g a.i. / ha] | Herbizide Wirkung in [%] 14 DAT gegen *Centaurea cyanus* |
|---|---|---|
| A3 | 16<br>1 | 70<br>30 |
| (B4.22) Pyrasulfotole | 15<br>45 | 10<br>30 |
| A3 + (B4.22) Pyrasulfotole | 16 + 15<br>1 + 45<br>1 + 15 | $E^A$ = 80 ($E^C$ = 73) Δ = 7<br>$E^A$ = 60 ($E^C$ = 51) Δ = 9<br>$E^A$ = 50 ($E^C$ = 37) Δ = 13 |
| Wirkstoff/e (Z69) | Aufwandmenge [g a.i. / ha] | Herbizide Wirkung in [%] 28 DAT gegen *Centaurea cyanus* |
| A3 | 16<br>4<br>1 | 70<br>50<br>10 |
| (B4.22) Pyrasulfotole | 15<br>5<br>45 | 0<br>0<br>20 |
| A3<br>+<br>(B4.22) Pyrasulfotole | 16 + 15<br>16+5<br>4 + 15<br>4 + 5<br>1 + 45<br>1 + 15<br>1 + 5 | $E^A$ = 75 ($E^C$ = 70) Δ = 5<br>$E^A$ = 75 ($E^C$ = 70) Δ = 5<br>$E^A$ = 60 ($E^C$ = 50) Δ = 10<br>$E^A$ = 60 ($E^C$ = 50) Δ = 10<br>$E^A$ = 40 ($E^C$ = 28) Δ = 12<br>$E^A$ = 60 ($E^C$ = 10) Δ = 50<br>$E^A$ = 30 ($E^C$ = 10) Δ = 20 |
| | | |
| Wirkstoff/e (Z69) | Aufwandmenge [g a.i. / ha] | Herbizide Wirkung in [%] 14 DAT gegen *Lolium rigidum* |
| A3 | 4<br>1 | 85<br>40 |
| (B4.22) Pyrasulfotole | 5<br>45<br>15 | 0<br>5<br>5 |
| A3 + (B4.22) Pyrasulfotole | 4 + 5<br>1 + 45<br>1 + 15<br>1 + 5 | $E^A$ = 90 ($E^C$ = 85) Δ = 5<br>$E^A$ = 70 ($E^C$ = 43) Δ = 27<br>$E^A$ = 75 ($E^C$ = 43) Δ = 32<br>$E^A$ = 70 ($E^C$ = 40) Δ = 30 |
| Wirkstoff/e (Z69) | Aufwandmenge [g a.i. / ha] | Herbizide Wirkung in [%] 28 DAT gegen *Lolium rigidum* |
| A3 | 4<br>1 | 70<br>10 |
| (B4.22) Pyrasulfotole | 45<br>15<br>5 | 10<br>0<br>0 |

(fortgesetzt)

| Wirkstoff/e (Z69) | Aufwandmenge [g a.i. / ha] | Herbizide Wirkung in [%] 28 DAT gegen *Lolium rigidum* |
|---|---|---|
| A3 + (B4.22) Pyrasulfotole | 4 + 45<br>4 + 15<br>4+5<br>1 + 15<br>1 + 5 | $E^A$ = 95 ($E^C$ = 73) Δ = 22<br>$E^A$ = 85 ($E^C$ = 70) Δ = 15<br>$E^A$ = 90 ($E^C$ = 70) Δ = 20<br>$E^A$ = 40 ($E^C$ = 10) Δ = 30<br>$E^A$ = 40 ($E^C$ = 10) Δ = 30 |
| | | |
| Wirkstoff/e (Z69) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B4.22) Pyrasulfotole | 45<br>15<br>5 | 10<br>5<br>5 |
| A3 + (B4.22) Pyrasulfotole | 4 + 45<br>4 + 15<br>4+5<br>1 + 15<br>1 + 5 | $E^A$ = 85 ($E^C$ = 64) Δ = 21<br>$E^A$ = 85 ($E^C$ = 62) Δ = 23<br>$E^A$ = 85 ($E^C$ = 62) Δ = 23<br>$E^A$ = 50 ($E^C$ = 34) Δ = 16<br>$E^A$ = 50 ($E^C$ = 34) Δ = 16 |
| | | |
| Wirkstoff/e (Z69) | Aufwandmenge [g a.i. / ha] | Herbizide Wirkung in [%] 28 DAT gegen *Lolium rigidum* (resistenter Biotyp) |
| A3 | 4<br>1 | 40<br>0 |
| (B4.22) Pyrasulfotole | 15<br>5 | 0<br>0 |
| A3 + (B4.22) Pyrasulfotole | 4 + 15<br>4+5<br>1 + 15<br>1 + 5 | $E^A$ = 60 ($E^C$ = 40) Δ = 20<br>$E^A$ = 70 ($E^C$ = 40) Δ = 30<br>$E^A$ = 30 ($E^C$ = 0) Δ = 30<br>$E^A$ = 20 ($E^C$ = 0) Δ = 20 |
| Wirkstoff/e (Z69) | Aufwandmenge [g a.i. / ha] | Herbizide Wirkung in [%] 14 DAT gegen *Matricaria inodora* |
| A3 | 16 | 40 |
| (B4.22) Pyrasulfotole | 5 | 20 |
| A3 + (B4.22) Pyrasulfotole | 16 + 5 | $E^A$ = 80 ($E^C$ = 52) Δ = 28 |
| | | |
| Wirkstoff/e (Z69) | Aufwandmenge [g a.i. / ha] | Herbizide Wirkung in [%] 28 DAT gegen *Matricaria inodora* |
| A3 | 16 | 50 |
| (B4.22) Pyrasulfotole | 5 | 10 |
| A3 + (B4.22) Pyrasulfotole | 16 + 5 | $E^A$ = 60 ($E^C$ = 55) Δ = 5 |
| | | |

(fortgesetzt)

| Wirkstoff/e (Z69) | Aufwandmenge [g a.i. / ha] | Herbizide Wirkung in [%] 14 DAT gegen *Phalaris minor* |
|---|---|---|
| A3 | 16<br>4<br>1 | 85<br>85<br>20 |
| (B4.22) Pyrasulfotole | 15<br>5 | 0<br>0 |
| A3 + (B4.22) Pyrasulfotole | 16 + 15<br>16 + 5<br>4 + 15<br>4 + 5<br>1 + 15<br>1 + 5 | $E^A$ = 95 ($E^C$ = 85) Δ = 10<br>$E^A$ = 95 ($E^C$ = 85) Δ = 10<br>$E^A$ = 93 ($E^C$ = 85) Δ = 8<br>$E^A$ = 90 ($E^C$ = 85) Δ = 5<br>$E^A$ = 40 ($E^C$ = 20) Δ = 20<br>$E^A$ = 30 ($E^C$ = 20) Δ = 10 |
| Wirkstoff/e (Z69) | Aufwandmenge [g a.i. / ha] | Herbizide Wirkung in [%] 28 DAT gegen *Phalaris minor* |
| A3 | 16<br>1 | 85<br>10 |
| (B4.22) Pyrasulfotole | 15<br>5 | 0<br>0 |
| A3<br>+<br>(B4.22) Pyrasulfotole | 16 + 15<br>16 + 5<br>1 + 15 | $E^A$ = 93 ($E^C$ = 85) Δ = 8<br>$E^A$ = 90 ($E^C$ = 85) Δ = 5<br>$E^A$ = 30 ($E^C$ = 10) Δ = 20 |
| | | |
| Wirkstoff/e (Z69) | Aufwandmenge [g a.i. / ha] | Herbizide Wirkung in [%] 14 DAT gegen *Poa annua L.* |
| A3 | 4<br>1 | 85<br>50 |
| (B4.22) Pyrasulfotole | 45<br>15<br>5 | 0<br>0<br>0 |
| A3 + (B4.22) Pyrasulfotole | 4 + 45<br>4 + 15<br>4 + 5<br>1 + 45<br>1 + 15<br>1 + 5 | $E^A$ = 95 ($E^C$ = 85) Δ = 10<br>$E^A$ = 95 ($E^C$ = 85) Δ = 10<br>$E^A$ = 95 ($E^C$ = 85) Δ = 10<br>$E^A$ = 60 ($E^C$ = 50) Δ = 10<br>$E^A$ = 70 ($E^C$ = 50) Δ = 20<br>$E^A$ = 70 ($E^C$ = 50) Δ = 20 |
| Wirkstoff/e (Z69) | Aufwandmenge [g a.i. / ha] | Herbizide Wirkung in [%] 28 DAT gegen *Poa annua L.* |
| A3 | 16<br>4<br>1 | 85<br>80<br>20 |
| (B4.22) Pyrasulfotole | 45<br>15<br>5 | 0<br>0<br>0 |

(fortgesetzt)

| Wirkstoff/e (Z69) | Aufwandmenge [g a.i. / ha] | Herbizide Wirkung in [%] 28 DAT gegen *Poa annua L.* |
|---|---|---|
| A3 + (B4.22) Pyrasulfotole | 16 + 45<br>16 + 15<br>16 + 5<br>4 + 45<br>4 + 15<br>4 + 5<br>1 + 15<br>1 + 5 | $E^A$ = 98 ($E^C$ = 85) Δ = 13<br>$E^A$ = 98 ($E^C$ = 85) Δ = 13<br>$E^A$ = 90 ($E^C$ = 85) Δ = 5<br>$E^A$ = 98 ($E^C$ = 80) Δ = 18<br>$E^A$ = 98 ($E^C$ = 80) Δ = 18<br>$E^A$ = 98 ($E^C$ = 80) Δ = 18<br>$E^A$ = 40 ($E^C$ = 20) Δ = 20<br>$E^A$ = 50 ($E^C$ = 20) Δ = 30 |

Tabelle 3.5: Synergistischer Effekt (Δ) für herbizide binäre Zusammensetzungen im Nachauflauf enthaltend Herbizide aus der Gruppe B5

| Wirkstoff/e (Z72) | Aufwandmenge [g a.i./ha] | Herbizide Wirkung 28 DAT [%] gegen *Brachiaria plantaginea* |
|---|---|---|
| (B5.23) Florpyrauxifen (CAS 1390661-72-9) | 30 | 40 |
| A3 | 100 | 82 |
| A3 + (B5.23) Florpyrauxifen (CAS 1390661-72-9) | 100 +<br>30 | $E^A$ = 93 ($E^C$ = 89)<br>Δ 4 |
| | | |
| Wirkstoff/e | Aufwandmenge [g a.i./ha] | Herbizide Wirkung 21 DAT [%] gegen *Amaranthus palmeri* |
| (B5.26) Flumioxazin | 12<br>4<br>1,33 | 10<br>0<br>0 |
| A3 | 5<br>1,7 | 15<br>10 |
| A3 + (B5.26) Flumioxazin | 5 + 12<br>5+4<br>1,7 + 12<br>1,7 + 4<br>1,7 + 1,33 | $E^A$ = 93 ($E^C$ = 23,5) Δ 69,5<br>$E^A$ = 45 ($E^C$ = 15) Δ 30<br>$E^A$ = 40 ($E^C$ = 19) Δ 21<br>$E^A$ = 50 ($E^C$ = 10) Δ 40<br>$E^A$ = 30 ($E^C$ = 10) Δ 20 |
| Wirkstoff/e (Z73) | Aufwandmenge [g a.i. / ha] | Herbizide Wirkung in [%] 14 DAT gegen *Alopecurus myosuroides* |
| A3 | 4<br>1 | 75<br>30 |
| (B5.31) Halauxifen<br>(CAS 943831-98-9) | 9<br>3<br>1 | 5<br>0<br>0 |
| A3 + (B5.31) Halauxifen (CAS 943831-98-9) | 4+9<br>4+3<br>4 + 1<br>1 + 9<br>1 + 3<br>1 + 1 | $E^A$ = 85 ($E^C$ = 76) Δ = 9<br>$E^A$ = 95 ($E^C$ = 75) Δ = 20<br>$E^A$ = 90 ($E^C$ = 75) Δ = 15<br>$E^A$ = 70 ($E^C$ = 34) Δ = 36<br>$E^A$ = 70 ($E^C$ = 30) Δ = 40<br>$E^A$ = 60 ($E^C$ = 30) Δ = 30 |

(fortgesetzt)

| Wirkstoff/e (Z73) | Aufwandmenge [g a.i. / ha] | Herbizide Wirkung in [%] 14 DAT gegen *Alopecurus myosuroides* |
|---|---|---|
| | | |
| Wirkstoff/e (Z73) | Aufwandmenge [g a.i. / ha] | Herbizide Wirkung in [%] 28 DAT gegen *Alopecurus myosuroides* |
| A3 | 4<br>1 | 60<br>10 |
| (B5.31) Halauxifen (CAS 943831-98-9) | 9<br>3<br>1 | 0<br>0<br>0 |
| A3 + (B5.31) Halauxifen (CAS 943831-98-9) | 4+9<br>4+3<br>4 + 1<br>1 + 9<br>1 + 3<br>1 + 1 | $E^A$ = 70 ($E^C$ = 60) Δ = 10<br>$E^A$ = 90 ($E^C$ = 60) Δ = 30<br>$E^A$ = 75 ($E^C$ = 60) Δ = 15<br>$E^A$ = 40 ($E^C$ = 10) Δ = 30<br>$E^A$ = 40 ($E^C$ = 10) Δ = 30<br>$E^A$ = 30 ($E^C$ = 10) Δ = 20 |
| | | |
| Wirkstoff/e (Z73) | Aufwandmenge [g a.i. / ha] | Herbizide Wirkung in [%] 14 DAT gegen *Bromus sterilis* |
| A3 | 1 | 30 |
| (B5.31) Halauxifen (CAS 943831-98-9) | 9<br>3<br>1 | 30<br>10<br>0 |
| A3 + (B5.31) Halauxifen (CAS 943832-60-8) | 1 + 9<br>1 + 3<br>1 + 1 | $E^A$ = 80 ($E^C$ = 51) Δ = 29<br>$E^A$ = 85 ($E^C$ = 37) Δ = 48<br>$E^A$ = 80 ($E^C$ = 30) Δ = 50 |
| Wirkstoff/e (Z73) | Aufwandmenge [g a.i. / ha] | Herbizide Wirkung in [%] 28 DAT gegen *Bromus sterilis* |
| A3 | 4<br>1 | 90<br>30 |
| (B5.31) Halauxifen (CAS 943831-98-9) | 3<br>1<br>9 | 0<br>0<br>20 |
| A3 + (B5.31) Halauxifen (CAS 943831-98-9) | 4 + 3<br>4 + 1<br>1 + 9<br>1 + 3<br>1 + 1 | $E^A$ = 95 ($E^C$ = 90) Δ = 5<br>$E^A$ = 95 ($E^C$ = 90) Δ = 5<br>$E^A$ = 50 ($E^C$ = 44) Δ = 6<br>$E^A$ = 70 ($E^C$ = 30) Δ = 40<br>$E^A$ = 40 ($E^C$ = 30) Δ = 10 |
| | | |
| Wirkstoff/e (Z73) | Aufwandmenge [g a.i. / ha] | Herbizide Wirkung in [%] 14 DAT gegen *Lolium rigidum* |
| A3 | 4<br>1 | 85<br>40 |
| (B5.31) Halauxifen (CAS 943831-98-9) | 9<br>3 | 5<br>0 |

(fortgesetzt)

| Wirkstoff/e (Z73) | Aufwandmenge [g a.i. / ha] | Herbizide Wirkung in [%] 14 DAT gegen *Lolium rigidum* |
|---|---|---|
| | 1 | 0 |
| A3 + (B5.31) Halauxifen (CAS 943831-98-9) | 4+9<br>4+3<br>4 + 1<br>1 + 9<br>1 + 3<br>1 + 1 | $E^A$ = 93 ($E^C$ = 86) Δ = 7<br>$E^A$ = 90 ($E^C$ = 85) Δ = 5<br>$E^A$ = 93 ($E^C$ = 85) Δ = 8<br>$E^A$ = 80 ($E^C$ = 43) Δ = 37<br>$E^A$ = 75 ($E^C$ = 40) Δ = 35<br>$E^A$ = 70 ($E^C$ = 40) Δ = 30 |
| Wirkstoff/e (Z73) | Aufwandmenge [g a.i. / ha] | Herbizide Wirkung in [%] 28 DAT gegen *Lolium rigidum* |
| A3 | 4<br>1 | 70<br>10 |
| (B5.31) Halauxifen<br>(CAS 943831-98-9) | 9<br>3<br>1 | 0<br>0<br>0 |
| A3 + (B5.31) Halauxifen (CAS 943831-98-9) | 4 + 9<br>4+3<br>4 + 1<br>1 + 9<br>1 + 3<br>1 + 1 | $E^A$ = 85 ($E^C$ = 70) Δ = 15<br>$E^A$ = 85 ($E^C$ = 70) Δ = 15<br>$E^A$ = 95 ($E^C$ = 70) Δ = 25<br>$E^A$ = 60 ($E^C$ = 10) Δ = 50<br>$E^A$ = 40 ($E^C$ = 10) Δ = 30<br>$E^A$ = 30 ($E^C$ = 10) Δ = 20 |
| | | |
| Wirkstoff/e (Z73) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B5.31) Halauxifen<br>(CAS 943831-98-9) | 9<br>3<br>1 | 5<br>0<br>0 |
| A3 + (B5.31) Halauxifen (CAS 943831-98-9) | 4+9<br>4+3<br>4+1<br>1 + 9<br>1 + 3<br>1 + 1 | $E^A$ = 85 ($E^C$ = 62) Δ = 23<br>$E^A$ = 85 ($E^C$ = 60) Δ = 25<br>$E^A$ = 85 ($E^C$ = 60) Δ = 25<br>$E^A$ = 40 ($E^C$ = 34) Δ = 6<br>$E^A$ = 75 ($E^C$ = 30) Δ = 45<br>$E^A$ = 60 ($E^C$ = 30) Δ = 30 |
| Wirkstoff/e (Z73) | Aufwandmenge [g a.i. / ha] | Herbizide Wirkung in [%] 28 DAT gegen *Lolium rigidum* (resistenter Biotyp) |
| A3 | 16<br>4<br>1 | 80<br>40<br>0 |
| (B5.31) Halauxifen (CAS 943831-98-9) | 3<br>9<br>1 | 0<br>10<br>0 |

(fortgesetzt)

| Wirkstoff/e (Z73) | Aufwandmenge [g a.i. / ha] | Herbizide Wirkung in [%] 28 DAT gegen *Lolium rigidum* (resistenter Biotyp) |
|---|---|---|
| A3 + (B5.31) Halauxifen (CAS 943831-98-9) | 16 + 3<br>4 + 9<br>4 + 3<br>4 + 1<br>1 + 9<br>1 + 3<br>1 + 1 | $E^A$ = 90 ($E^C$ = 80) Δ = 10<br>$E^A$ = 70 ($E^C$ = 46) Δ = 24<br>$E^A$ = 60 ($E^C$ = 40) Δ = 20<br>$E^A$ = 75 ($E^C$ = 40) Δ = 35<br>$E^A$ = 20 ($E^C$ = 10) Δ = 10<br>$E^A$ = 30 ($E^C$ = 0) Δ = 30<br>$E^A$ = 30 ($E^C$ = 0) Δ = 30 |

| Wirkstoff/e (Z73) | Aufwandmenge [g a.i. / ha] | Herbizide Wirkung in [%] 14 DAT gegen *Matricaria inodora* |
|---|---|---|
| A3 | 16<br>4 | 40<br>30 |
| (B5.31) Halauxifen<br>(CAS 943831-98-9) | 9<br>3<br>1 | 60<br>40<br>30 |
| A3 + (B5.31) Halauxifen (CAS 943832-60-8) | 16 + 9<br>16 + 3<br>4 + 1 | $E^A$ = 90 ($E^C$ = 76) Δ = 14<br>$E^A$ = 80 ($E^C$ = 64) Δ = 16<br>$E^A$ = 60 ($E^C$ = 51) Δ = 9 |
| Wirkstoff/e (Z73) | Aufwandmenge [g a.i. / ha] | Herbizide Wirkung in [%] 14 DAT gegen *Phalaris minor* |
| A3 | 16<br>4<br>1 | 85<br>85<br>20 |
| (B5.31) Halauxifen<br>(CAS 943831-98-9) | 9<br>3<br>1 | 5<br>0<br>0 |
| A3 + (B5.31) Halauxifen (CAS 943831-98-9) | 16 + 9<br>16 + 3<br>16 + 1<br>4 + 3<br>4 + 1<br>1 + 9<br>1 + 3<br>1 + 1 | $E^A$ = 95 ($E^C$ = 86) Δ = 9<br>$E^A$ = 93 ($E^C$ = 85) Δ = 8<br>$E^A$ = 93 ($E^C$ = 85) Δ = 8<br>$E^A$ = 93 ($E^C$ = 85) Δ = 8<br>$E^A$ = 93 ($E^C$ = 85) Δ = 8<br>$E^A$ = 50 ($E^C$ = 24) Δ = 26<br>$E^A$ = 70 ($E^C$ = 20) Δ = 50<br>$E^A$ = 70 ($E^C$ = 20) Δ = 50 |

| Wirkstoff/e (Z73) | Aufwandmenge [g a.i. / ha] | Herbizide Wirkung in [%] 28 DAT gegen *Phalaris minor* |
|---|---|---|
| A3 | 16<br>1 | 85<br>10 |
| (B5.31) Halauxifen (CAS 943831-98-9) | 9<br>3<br>1 | 5<br>0<br>0 |

(fortgesetzt)

| Wirkstoff/e (Z73) | Aufwandmenge [g a.i. / ha] | Herbizide Wirkung in [%] 28 DAT gegen *Phalaris minor* |
|---|---|---|
| A3 + (B5.31) Halauxifen (CAS 943831-98-9) | 16 + 9<br>1 + 9<br>1 + 3<br>1 + 1 | $E^A$ = 98 ($E^C$ = 86) Δ = 12<br>$E^A$ = 40 ($E^C$ = 15) Δ = 25<br>$E^A$ = 20 ($E^C$ = 10) Δ = 10<br>$E^A$ = 30 ($E^C$ = 10) Δ = 20 |
| Wirkstoff/e (Z73) | Aufwandmenge [g a.i. / ha] | Herbizide Wirkung in [%] 14 DAT gegen *Poa annua L.* |
| A3 | 16<br>4<br>1 | 93<br>85<br>50 |
| (B5.31) Halauxifen<br>(CAS 943831-98-9) | 9<br>3<br>1 | 5<br>0<br>0 |
| A3 + (B5.31) Halauxifen (CAS 943831-98-9) | 16+9<br>4 + 9<br>4 + 3<br>4 + 1<br>1 + 9<br>1 + 3<br>1 + 1 | $E^A$ = 98 ($E^C$ = 93) Δ = 5<br>$E^A$ = 98 ($E^C$ = 86) Δ = 12<br>$E^A$ = 95 ($E^C$ = 85) Δ = 10<br>$E^A$ = 95 ($E^C$ = 85) Δ = 10<br>$E^A$ = 85 ($E^C$ = 53) Δ = 32<br>$E^A$ = 85 ($E^C$ = 50) Δ = 35<br>$E^A$ = 80 ($E^C$ = 50) Δ = 30 |
| | | |
| Wirkstoff/e (Z73) | Aufwandmenge [g a.i. / ha] | Herbizide Wirkung in [%] 28 DAT gegen *Poa annua L.* |
| A3 | 16<br>4<br>1 | 85<br>80<br>20 |
| (B5.31) Halauxifen<br>(CAS 943831-98-9) | 9<br>3<br>1 | 0<br>0<br>0 |
| A3 + (B5.31) Halauxifen (CAS 943831-98-9) | 16 + 9<br>16 + 3<br>16 + 1<br>4 + 9<br>4+3<br>4 + 1<br>1 + 9<br>1 + 3<br>1 + 1 | $E^A$ = 98 ($E^C$ = 85) Δ = 13<br>$E^A$ = 98 ($E^C$ = 85) Δ = 13<br>$E^A$ = 100 ($E^C$ = 85) Δ = 15<br>$E^A$ = 98 ($E^C$ = 80) Δ = 18<br>$E^A$ = 90 ($E^C$ = 80) Δ = 10<br>$E^A$ = 98 ($E^C$ = 80) Δ = 18<br>$E^A$ = 60 ($E^C$ = 20) Δ = 40<br>$E^A$ = 40 ($E^C$ = 20) Δ = 20<br>$E^A$ = 60 ($E^C$ = 20) Δ = 40 |
| Wirkstoff/e (Z73) | Aufwandmenge [g a.i. / ha] | Herbizide Wirkung in [%] 14 DAT gegen *Veronica hederifolia* |
| A3 | 4<br>1 | 30<br>10 |
| (B5.31) Halauxifen<br>(CAS 943831-98-9) | 9<br>3 | 60<br>60 |

(fortgesetzt)

| Wirkstoff/e (Z73) | Aufwandmenge [g a.i. / ha] | Herbizide Wirkung in [%] 14 DAT gegen *Veronica hederifolia* |
|---|---|---|
| A3 + (B5.31) Halauxifen (CAS 943831-98-9) | 4+9<br>1 + 9<br>1 + 3 | $E^A$ = 85 ($E^C$ = 72) Δ = 13<br>$E^A$ = 80 ($E^C$ = 64) Δ = 16<br>$E^A$ = 70 ($E^C$ = 64) Δ = 6 |
| | | |
| Wirkstoff/e | Aufwandmenge [g a.i./ha] | |
| (B5.37) Paraquat (CAS 4685-14-7) | 45<br>5 | |
| A3 | 15<br>1,7 | |
| A3 + (B5.37) Paraquat (CAS 4685-14-7) | 1,7 + 45<br>15 + 5<br>1,7 + 5 | |
| | | |
| Wirkstoff/e | Aufwandmenge [g a.i./ha] | |
| (B5.37) Paraquat (CAS 4685-14-7) | 45<br>5 | |
| A3 | 5<br>1,7 | |
| A3 + (B5.37) Paraquat (CAS 4685-14-7) | 5 + 45<br>1,7 + 45<br>1,7 + 5 | |
| Wirkstoff/e | Aufwandmenge [g a.i./ha] | Herbizide Wirkung 21 DAT [%] gegen *Bidens pilosa* |
| (B5.37) Paraquat (CAS 4685-14-7) | 45<br>5 | 10<br>0 |
| A3 | 15<br>5<br>1,7 | 25<br>10<br>0 |
| A3 + (B5.37) Paraquat (CAS 4685-14-7) | 15 + 45<br>5 + 45<br>1,7 + 45<br>15 + 5<br>5+5<br>1,7 + 5 | $E^A$ = 50 ($E^C$ = 32,5) Δ 17,5<br>$E^A$ = 50 ($E^C$ = 19) Δ 31<br>$E^A$ = 65 ($E^C$ = 10) Δ 55<br>$E^A$ = 40 ($E^C$ = 25) Δ 15<br>$E^A$ = 60 ($E^C$ = 10) Δ 50<br>$E^A$ = 50 ($E^C$ = 0) Δ 50 |
| | | |
| Wirkstoff/e | Aufwandmenge [g a.i./ha] | Herbizide Wirkung 21 DAT [%] gegen *Pharbitis purpurea* |
| (B5.37) Paraquat (CAS 4685-14-7) | 5 | 15 |
| A3 | 15<br>5 | 85<br>85 |
| A3 + (B5.37) Paraquat (CAS 4685-14-7) | 15 + 5<br>5+5 | $E^A$ = 99 ($E^C$ = 87) Δ 12<br>$E^A$ = 98 ($E^C$ = 87) Δ 11 |

Tabelle 3.6: Synergistischer Effekt (Δ) für herbizide binäre Zusammensetzungen im Nachauflauf enthaltend Herbizide aus der Gruppe B7

| Wirkstoff/e | Aufwandmenge [g a.i./ha] | Herbizide Wirkung 21 DAT [%] gegen *Setaria viridis* |
|---|---|---|
| (B7.4) Glufosinate (CAS 77182-82-2) | 50 | 20 |
| A1 | 1,7 | 15 |
| A1 + (B7.4) Glufosinate (CAS 77182-82-2) | 1,7 + 50 | $E^A$ = 45 ($E^C$ = 32) Δ 13 |
| Wirkstoff/e | Aufwandmenge [g a.i./ha] | Herbizide Wirkung 21 DAT [%] gegen *Sorghum halepense* |
| (B7.4) Glufosinate (CAS 77182-82-2) | 450<br>50 | 5<br>20 |
| A1 | 15<br>1,7 | 35<br>10 |
| A1 + (B7.4) Glufosinate (CAS 77182-82-2) | 1,7 + 450<br>15 + 50<br>1,7 + 50 | $E^A$ = 93 ($E^C$ = 87) Δ 6<br>$E^A$ = 75 ($E^C$ = 48) Δ 27<br>$E^A$ = 40 ($E^C$ = 28) Δ 12 |
| | | |
| Wirkstoff/e | Aufwandmenge [g a.i./ha] | Herbizide Wirkung 21 DAT [%] gegen *Amaranthus palmeri (res.)* |
| (B7.4) Glufosinate (CAS 77182-82-2) | 50 | 35 |
| A1 | 45<br>15<br>5 | 40<br>10<br>10 |
| A1 + (B7.4) Glufosinate (CAS 77182-82-2) | 45 + 50<br>15 + 50<br>5 + 50 | $E^A$ = 75 ($E^C$ = 61) Δ 14<br>$E^A$ = 75 ($E^C$ = 42) Δ 33<br>$E^A$ = 75 ($E^C$ = 42) Δ 33 |
| | | |
| Wirkstoff/e | Aufwandmenge [g a.i./ha] | Herbizide Wirkung 21 DAT [%] gegen *Bidens pilosa* |
| (B7.4) Glufosinate (CAS 77182-82-2) | 450<br>50 | 90<br>30 |
| A1 | 15 | 35 |
| A1 + (B7.4) Glufosinate (CAS 77182-82-2) | 15 + 450<br>15 + 50 | $E^A$ = 100 ($E^C$ = 94) Δ 6<br>$E^A$ = 75 ($E^C$ = 55) Δ 20 |
| Wirkstoff/e | Aufwandmenge [g a.i./ha] | Herbizide Wirkung 21 DAT [%] gegen *Brachiaria platyphylla* |
| (B7.4) Glufosinate (CAS 77182-82-2) | 150 | 70 |
| A1 | 1,7 | 50 |
| A1 + (B7.4) Glufosinate (CAS 77182-82-2) | 1,7 + 150 | $E^A$ = 95 ($E^C$ = 85) Δ 10 |
| | | |

(fortgesetzt)

| Wirkstoff/e | Aufwandmenge [g a.i./ha] | Herbizide Wirkung 21 DAT [%] gegen *Digitaria sanguinalis* |
|---|---|---|
| (B7.4) Glufosinate (CAS 77182-82-2) | 450 | 85 |
| A1 | 1,7 | 20 |
| A1 + (B7.4) Glufosinate (CAS 77182-82-2) | 1,7 + 450 | $E^A$ = 98 ($E^C$ = 88) Δ 10 |
| | | |
| Wirkstoff/e | Aufwandmenge [g a.i./ha] | Herbizide Wirkung 21 DAT [%] gegen *Eleusine indica* |
| (B7.4) Glufosinate (CAS 77182-82-2) | 450<br>150 | 60<br>40 |
| A1 | 1,7 | 20 |
| A1 + (B7.4) Glufosinate (CAS 77182-82-2) | 1,7 + 450<br>1,7 + 150 | $E^A$ = 80 ($E^C$ = 68) Δ 12<br>$E^A$ = 70 ($E^C$ = 52) Δ 18 |
| Wirkstoff/e | Aufwandmenge [g a.i./ha] | Herbizide Wirkung 21 DAT [%] gegen *Kochia scoparia* |
| (B7.4) Glufosinate (CAS 77182-82-2) | 450 | 80 |
| A1 | 15<br>5 | 45<br>20 |
| A1 + (B7.4) Glufosinate (CAS 77182-82-2) | 15 + 450<br>5 + 450 | $E^A$ = 100 ($E^C$ = 89) Δ 11<br>$E^A$ = 100 ($E^C$ = 84) Δ 16 |
| | | |
| Wirkstoff/e | Aufwandmenge [g a.i./ha] | Herbizide Wirkung 21 DAT [%] gegen *Polygonum convulvulus* |
| (B7.4) Glufosinate (CAS 77182-82-2) | 150<br>50 | 20<br>10 |
| A1 | 45<br>5 | 85<br>85 |
| A1 + (B7.4) Glufosinate (CAS 77182-82-2) | 45 + 150<br>45 + 50<br>5 + 50 | $E^A$ = 99 ($E^C$ = 88) Δ 11<br>$E^A$ = 93 ($E^C$ = 87) Δ 6<br>$E^A$ = 93 ($E^C$ = 87) Δ 6 |
| | | |
| Wirkstoff/e | Aufwandmenge [g a.i./ha] | Herbizide Wirkung 21 DAT [%] gegen *Amaranthus palmeri* |
| (B7.4) Glufosinate (CAS 77182-82-2) | 50 | 50 |
| A2 | 5 | 45 |
| A2 + (B7.4) Glufosinate (CAS 77182-82-2) | 5 + 50 | $E^A$ = 90 ($E^C$ = 73) Δ 17 |

(fortgesetzt)

| Wirkstoff/e | Aufwandmenge [g a.i./ha] | Herbizide Wirkung 21 DAT [%] gegen *Bidens pilosa* |
|---|---|---|
| (B7.4) Glufosinate (CAS 77182-82-2) | 450 | 75 |
| A2 | 45<br>15<br>5 | 70<br>50<br>45 |
| A2 + (B7.4) Glufosinate (CAS 77182-82-2) | 45 + 450<br>15 + 450<br>5 + 450 | $E^A$ = 100 ($E^C$ = 93) Δ 7<br>$E^A$ = 95 ($E^C$ = 88) Δ 7<br>$E^A$ = 95 ($E^C$ = 86) Δ 9 |
| | | |
| Wirkstoff/e | Aufwandmenge [g a.i./ha] | Herbizide Wirkung 21 DAT [%] gegen *Eleusine indica* |
| (B7.4) Glufosinate (CAS 77182-82-2) | 150 | 35 |
| A2 | 1,7 | 10 |
| A2 + (B7.4) Glufosinate (CAS 77182-82-2) | 1,7 + 150 | $E^A$ = 65 ($E^C$ = 42) Δ 23 |
| | | |
| Wirkstoff/e | Aufwandmenge [g a.i./ha] | Herbizide Wirkung 21 DAT [%] gegen *Kochia scoparia* |
| (B7.4) Glufosinate (CAS 77182-82-2) | 50 | 20 |
| A2 | 5 | 40 |
| A2 + (B7.4) Glufosinate (CAS 77182-82-2) | 5 + 50 | $E^A$ = 70 ($E^C$ = 52) Δ 18 |
| Wirkstoff/e | Aufwandmenge [g a.i./ha] | Herbizide Wirkung 21 DAT [%] gegen *Setaria viridis* |
| (B7.4) Glufosinate (CAS 77182-82-2) | 50 | 40 |
| A2 | 1,7 | 10 |
| A2 + (B7.4) Glufosinate (CAS 77182-82-2) | 1,7 + 50 | $E^A$ = 65 ($E^C$ = 46) Δ 19 |
| | | |
| Wirkstoff/e | Aufwandmenge [g a.i./ha] | Herbizide Wirkung 21 DAT [%] gegen *Digitaria sanguinalis* |
| (B7.4) Glufosinate-(CAS 77182-82-2) | 120<br>40 | 30<br>10 |
| A3 | 1,7 | 10 |
| A3 + (B7.4) Glufosinate-(CAS 77182-82-2) | 1,7 + 120<br>1,7 + 40 | $E^A$ = 75 ($E^C$ = 37) Δ 38<br>$E^A$ = 45 ($E^C$ = 19) Δ 26 |
| | | |

(fortgesetzt)

| Wirkstoff/e | Aufwandmenge [g a.i./ha] | Herbizide Wirkung 21 DAT [%] gegen *Bidens pilosa* |
|---|---|---|
| (B7.4) Glufosinate-(CAS 77182-82-2) | 360 | 70 |
| A3 | 5<br>1,7 | 10<br>10 |
| A3 + (B7.4) Glufosinate-(CAS 77182-82-2) | 5 + 360<br>1,7 + 360 | $E^A$ = 100 ($E^C$ = 73) Δ 27<br>$E^A$ = 99 ($E^C$ = 73) Δ 26 |
| Wirkstoff/e | Aufwandmenge [g a.i./ha] | Herbizide Wirkung 21 DAT [%] gegen *Amaranthus palmeri (res.)* |
| (B7.4) Glufosinate (CAS 77182-82-2) | 150 | 70 |
| A4 | 5 | 10 |
| A4 + (7.4) Glufosinate (CAS 77182-82-2) | 5 + 150 | $E^A$ = 100 ($E^C$ = 73) Δ 27 |
| | | |
| Wirkstoff/e | Aufwandmenge [g a.i./ha] | Herbizide Wirkung 21 DAT [%] gegen *Bidens pilosa* |
| (B7.4) Glufosinate (CAS 77182-82-2) | 450<br>150 | 75<br>75 |
| A4 | 45<br>15<br>5 | 30<br>10<br>10 |
| A4 + (B7.4) Glufosinate (CAS 77182-82-2) | 45 + 450<br>15 + 450<br>5 + 450<br>15 + 150<br>5 + 150 | $E^A$ = 100 ($E^C$ = 83) Δ 17<br>$E^A$ = 100 ($E^C$ = 78) Δ 22<br>$E^A$ = 100 ($E^C$ = 78) Δ 22<br>$E^A$ = 100 ($E^C$ = 78) Δ 22<br>$E^A$ = 98 ($E^C$ = 78) Δ 20 |
| | | |
| Wirkstoff/e | Aufwandmenge [g a.i./ha] | Herbizide Wirkung 21 DAT [%] gegen *Echinochloa crus-galli* |
| (B7.4) Glufosinate (CAS 77182-82-2) | 150 | 65 |
| A4 | 5 | 10 |
| A4 + (B7.4) Glufosinate (CAS 77182-82-2) | 5 + 150 | $E^A$ = 95 ($E^C$ = 69) Δ 26 |
| Wirkstoff/e | Aufwandmenge [g a.i./ha] | Herbizide Wirkung 21 DAT [%] gegen *Eleusine indica* |
| (B7.4) Glufosinate (CAS 77182-82-2) | 150<br>50 | 35<br>15 |
| A4 | 1,7 | 20 |
| A4 + (B7.4) Glufosinate (CAS 77182-82-2) | 1,7 + 150<br>1,7 + 50 | $E^A$ = 85 ($E^C$ = 48) Δ 37<br>$E^A$ = 60 ($E^C$ = 32) Δ 28 |
| | | |

(fortgesetzt)

| Wirkstoff/e | Aufwandmenge [g a.i./ha] | Herbizide Wirkung 21 DAT [%] gegen *Kochia scoparia* |
|---|---|---|
| (B7.4) Glufosinate (CAS 77182-82-2) | 50 | 20 |
| A4 | 15<br>5 | 10<br>10 |
| A4 + (B7.4) Glufosinate (CAS 77182-82-2) | 15 + 50<br>5 + 50 | $E^A$ = 60 ($E^C$ = 28) Δ 32<br>$E^A$ = 50 ($E^C$ = 28) Δ 22 |
| | | |
| Wirkstoff/e | Aufwandmenge [g a.i./ha] | Herbizide Wirkung 21 DAT [%] gegen *Pharbitis purpurea* |
| (B7.4) Glufosinate (CAS 77182-82-2) | 50 | 20 |
| A4 | 15 | 60 |
| A4 + (B7.4) Glufosinate (CAS 77182-82-2) | 15 + 50 | $E^A$ = 85 ($E^C$ = 68) Δ 17 |
| Wirkstoff/e | Aufwandmenge [g a.i./ha] | Herbizide Wirkung 21 DAT [%] gegen *Setaria viridis* |
| (B7.4) Glufosinate (CAS 77182-82-2) | 50 | 40 |
| A4 | 15<br>5 | 60<br>20 |
| A4 + (B7.4) Glufosinate (CAS 77182-82-2) | 15 + 50<br>5 + 50 | $E^A$ = 100 ($E^C$ = 76) Δ 24<br>$E^A$ = 70 ($E^C$ = 52) Δ 18 |
| | | |
| Wirkstoff/e | Aufwandmenge [g a.i. / ha] | Herbizide Wirkung in [%] 14 DAT gegen *Bromus sterilis* |
| A5 | 16<br>4 | 80<br>75 |
| (7.4) Glufosinate (CAS 77182-82-2) | 50 | 0 |
| A5. + (7.4) Glufosinate CAS 77182-82-2) | 16 + 50<br>4 + 50 | $E^A$ = 85 ($E^C$ = 80) Δ = 5<br>$E^A$ = 85 ($E^C$ = 75) Δ = 10 |
| | | |
| Wirkstoff/e | Aufwandmenge [g a.i. / ha] | Herbizide Wirkung in [%] 14 DAT gegen *Centaurea cyanus* |
| A5 | 1 | 20 |
| (7.4) Glufosinate (CAS 77182-82-2) | 50 | 30 |
| A5 + (7.4) Glufosinate (CAS 77182-82-2) | 1 + 50 | $E^A$ = 50 ($E^C$ = 44) Δ = 6 |
| | | |

(fortgesetzt)

| Wirkstoff/e | Aufwandmenge [g a.i. / ha] | Herbizide Wirkung in [%] 28 DAT gegen *Centaurea cyanus* |
|---|---|---|
| A5 | 16 | 75 |
| (7.4) Glufosinate (CAS 77182-82-2) | 450 | 60 |
| A5 + (7.4) Glufosinate (CAS 77182-82-2) | 16 + 450 | $E^A$ = 100 ($E^C$ = 90) Δ = 10 |
| Wirkstoff/e | Aufwandmenge [g a.i. / ha] | Herbizide Wirkung in [%] 28 DAT gegen *Galium aparine* |
| A5 | 16 | 70 |
| (7.4) Glufosinate (CAS 77182-82-2) | 50 | 0 |
| A5 + (7.4) Glufosinate (CAS 77182-82-2) | 16 + 50 | $E^A$ = 85 ($E^C$ = 70) Δ = 15 |
| | | |
| Wirkstoff/e | Aufwandmenge [g a.i. / ha] | Herbizide Wirkung in [%] 14 DAT gegen *Lolium rigidum* |
| A5 | 1 | 30 |
| (7.4) Glufosinate (CAS 77182-82-2) | 150 | 50 |
| A5 + (7.4) Glufosinate (CAS 77182-82-2) | 1 + 150 | $E^A$ = 70 ($E^C$ = 65) Δ = 5 |
| | | |
| Wirkstoff/e | Aufwandmenge [g a.i. / ha] | Herbizide Wirkung in [%] 28 DAT gegen *Lolium rigidum* |
| A5 | 16 | 60 |
| (7.4) Glufosinate (CAS 77182-82-2) | 150 | 30 |
| A5 + (7.4) Glufosinate (CAS 77182-82-2) | 16 + 150 | $E^A$ = 80 ($E^C$ = 72) Δ = 8 |
| | | |
| Wirkstoff/e | Aufwandmenge [g a.i. / ha] | Herbizide Wirkung in [%] 14 DAT gegen *Lolium rigidum* (resistenter Biotyp) |
| A5 | 16<br>1 | 70<br>30 |
| (7.4) Glufosinate (CAS 77182-82-2) | 150 | 30 |
| A5 + (7.4) Glufosinate (CAS 77182-82-2) | 16 + 150<br>1 + 150 | $E^A$ = 85 ($E^C$ = 79) Δ = 6<br>$E^A$ = 60 ($E^C$ = 51) Δ = 9 |
| Wirkstoff/e | Aufwandmenge [g a.i. / ha] | Herbizide Wirkung in [%] 28 DAT gegen *Lolium rigidum* (resistenter Biotyp) |
| A5 | 1 | 20 |
| (7.4) Glufosinate (CAS 77182-82-2) | 450<br>150 | 50<br>30 |

(fortgesetzt)

| Wirkstoff/e | Aufwandmenge [g a.i. / ha] | Herbizide Wirkung in [%] 28 DAT gegen *Lolium rigidum* (resistenter Biotyp) |
|---|---|---|
| A5 + (7.4) Glufosinate (CAS 77182-82-2) | 1 + 450<br>1 + 150 | $E^A$ = 70 ($E^C$ = 60) Δ = 10<br>$E^A$ = 50 ($E^C$ = 44) Δ = 6 |
| | | |
| Wirkstoff/e | Aufwandmenge [g a.i. / ha] | Herbizide Wirkung in [%] 14 DAT gegen *Matricaria inodora* |
| A5 | 1 | 30 |
| (7.4) Glufosinate (CAS 77182-82-2) | 450 | 90 |
| A5 + (7.4) Glufosinate (CAS 77182-82-2) | 1 + 450 | $E^A$ = 99 ($E^C$ = 93) Δ = 6 |
| | | |
| Wirkstoff/e | Aufwandmenge [g a.i. / ha] | Herbizide Wirkung in [%] 28 DAT gegen *Matricaria inodora* |
| A5 | 1 | 10 |
| (7.4) Glufosinate (CAS 77182-82-2) | 450 | 85 |
| A5 + (7.4) Glufosinate (CAS 77182-82-2) | 1 + 450 | $E^A$ = 95 ($E^C$ = 87) Δ = 8 |
| | | |
| Wirkstoff/e | Aufwandmenge [g a.i. / ha] | Herbizide Wirkung in [%] 14 DAT gegen *Phalaris minor* |
| A5 | 16<br>1 | 85<br>60 |
| (7.4) Glufosinate (CAS 77182-82-2) | 50<br>150 | 0<br>30 |
| A5 + (7.4) Glufosinate (CAS 77182-82-2) | 16 + 50<br>1 + 150 | $E^A$ = 90 ($E^C$ = 85) Δ = 5<br>$E^A$ = 80 ($E^C$ = 72) Δ = 8 |
| Wirkstoff/e | Aufwandmenge [g a.i. / ha] | Herbizide Wirkung in [%] 28 DAT gegen *Phalaris minor* |
| A5 | 16 | 70 |
| (7.4) Glufosinate (CAS 77182-82-2) | 450<br>150<br>50 | 30<br>10<br>0 |
| A5 + (7.4) Glufosinate (CAS 77182-82-2) | 16 + 450<br>16 + 150<br>16 + 50 | $E^A$ = 98 ($E^C$ = 79) Δ = 19<br>$E^A$ = 95 ($E^C$ = 73) Δ = 22<br>$E^A$ = 85 ($E^C$ = 70) Δ = 15 |
| | | |
| Wirkstoff/e | Aufwandmenge [g a.i. / ha] | Herbizide Wirkung in [%] 14 DAT gegen *Poa annua L.* |
| A5 | 16 1 | 70 30 |

(fortgesetzt)

| Wirkstoff/e | Aufwandmenge [g a.i. / ha] | Herbizide Wirkung in [%] 14 DAT gegen *Poa annua L.* |
|---|---|---|
| (7.4) Glufosinate (CAS 77182-82-2) | 50<br>450<br>150 | 10<br>40<br>30 |
| A5 + (7.4) Glufosinate (CAS 77182-82-2) | 16 + 50<br>1 + 450<br>1 + 150 | $E^A$ = 85 ($E^C$ = 73) Δ = 12<br>$E^A$ = 75 ($E^C$ = 58) Δ = 17<br>$E^A$ = 60 ($E^C$ = 51) Δ = 9 |
| | | |
| Wirkstoff/e | Aufwandmenge [g a.i. / ha] | Herbizide Wirkung in [%] 14 DAT gegen *Viola tricolor* |
| A5 | 16 | 60 |
| (7.4) Glufosinate (CAS 77182-82-2) | 150 | 80 |
| A5 + (7.4) Glufosinate (CAS 77182-82-2) | 16 + 150 | $E^A$ = 98 ($E^C$ = 92) Δ = 6 |
| | | |
| Wirkstoff/e | Aufwandmenge [g a.i. / ha] | Herbizide Wirkung in [%] 28 DAT gegen *Viola tricolor* |
| A5 | 16<br>4 | 40<br>40 |
| (7.4) Glufosinate (CAS 77182-82-2) | 150<br><br>50<br>450 | 50<br><br>20<br>60 |
| A5 + (7.4) Glufosinate (CAS 77182-82-2) | 16 + 150<br>16 + 50<br>4 + 450 | $E^A$ = 100 ($E^C$ = 70) Δ = 30<br>$E^A$ = 60 ($E^C$ = 52) Δ = 8<br>$E^A$ = 85 ($E^C$ = 76) Δ = 9 |
| Wirkstoff/e | Aufwandmenge [g a.i. / ha] | Herbizide Wirkung in [%] 14 DAT gegen *Bromus sterilis* |
| A6 | 16<br>4 | 85<br>80 |
| (B7.4) Glufosinate (CAS 77182-82-2) | 50 | 0 |
| A6 + (B7.4) Glufosinate (CAS 77182-82-2) | 16 + 50<br>4 + 50 | $E^A$ = 90 ($E^B$ = 85) Δ = 5<br>$E^A$ = 85 ($E^B$ = 80) Δ = 5 |
| | | |
| Wirkstoff/e | Aufwandmenge [g a.i. / ha] | Herbizide Wirkung in [%] 28 DAT gegen *Bromus sterilis* |
| A6 | 1 | 50 |
| (B7.4) Glufosinate (CAS 77182-82-2) | 150 | 10 |
| A6 + (B7.4) Glufosinate (CAS 77182-82-2) | 1 + 150 | $E^A$ = 70 ($E^B$ = 55) Δ = 15 |
| | | |

(fortgesetzt)

| Wirkstoff/e | Aufwandmenge [g a.i. / ha] | Herbizide Wirkung in [%] 14 DAT gegen *Centaurea cyanus* |
|---|---|---|
| A6 | 4<br>1 | 85<br>40 |
| (B7.4) Glufosinate | 150<br>50 | 60<br>30 |
| A6 + (B7.4) Glufosinate (CAS 77182-82-2) | 4 + 150<br>1 + 50 | $E^A$ = 99 ($E^B$ = 94) Δ = 5<br>$E^A$ = 70 ($E^B$ = 58) Δ = 12 |
| | | |
| Wirkstoff/e | Aufwandmenge [g a.i. / ha] | Herbizide Wirkung in [%] 28 DAT gegen *Centaurea cyanus* |
| A6 | 4 | 70 |
| (B7.4) Glufosinate (CAS 77182-82-2) | 150 | 30 |
| A6 + (B7.4) Glufosinate (CAS 77182-82-2) | 4 + 150 | $E^A$ = 85 ($E^B$ = 79) Δ = 6 |
| Wirkstoff/e | Aufwandmenge [g a.i. / ha] | Herbizide Wirkung in [%] 28 DAT gegen *Lolium rigidum* (resistenter Biotyp) |
| A6 | 16 | 70 |
| (B7.4) Glufosinate (CAS 77182-82-2) | 150<br>50 | 30<br>10 |
| A6 + (B7.4) Glufosinate (CAS 77182-82-2) | 16 + 150<br>16 + 50 | $E^A$ = 95 ($E^B$ = 79) Δ = 16<br>$E^A$ = 85 ($E^B$ = 73) Δ = 12 |
| | | |
| Wirkstoff/e | Aufwandmenge [g a.i. / ha] | Herbizide Wirkung in [%] 28 DAT gegen *Phalaris minor* |
| A6 | 16 | 90 |
| (B7.4) Glufosinate (CAS 77182-82-2) | 450<br>150 | 30<br>10 |
| A6 + (B7.4) Glufosinate (CAS 77182-82-2) | 16 + 450<br>16 + 150 | $E^A$ = 98 ($E^B$ = 93) Δ = 5<br>$E^A$ = 98 ($E^B$ = 91) Δ = 7 |
| | | |
| Wirkstoff/e | Aufwandmenge [g a.i. / ha] | Herbizide Wirkung in [%] 28 DAT gegen *Poa annua L.* |
| A6 | 16 | 70 |
| (B7.4) Glufosinate (CAS 77182-82-2) | 150<br>50 | 30<br>20 |
| A6 + (B7.4) Glufosinate (CAS 77182-82-2) | 16 + 150<br>16 + 50 | $E^A$ = 95 ($E^B$ = 79) Δ = 16<br>$E^A$ = 85 ($E^B$ = 76) Δ = 9 |
| | | |
| Wirkstoff/e | Aufwandmenge [g a.i. / ha] | Herbizide Wirkung in [%] 28 DAT gegen *Viola tricolor* |
| A6 | 16 | 60 |

(fortgesetzt)

| Wirkstoff/e | Aufwandmenge [g a.i. / ha] | Herbizide Wirkung in [%] 28 DAT gegen *Viola tricolor* |
|---|---|---|
| | 4 | 50 |
| (B7.4) Glufosinate<br>(CAS 77182-82-2) | 450<br>50 | 60<br>20 |
| A6 + (B7.4) Glufosinate (CAS 77182-82-2) | 16 + 450<br>16 + 50<br>4 + 450 | $E^A$ = 100 ($E^B$ = 84) Δ = 16<br>$E^A$ = 75 ($E^B$ = 68) Δ = 7<br>$E^A$ = 95 ($E^B$ = 80) Δ = 15 |
| Wirkstoff/e (Z20) | Aufwandmenge [g a.i./ha] | Herbizide Wirkung 21 DAT [%] gegen *Amaranthus palmeri (res.)* |
| (B7.5) Glyphosate (CAS 38641-94-0) | 50 | 60 |
| A1 | 15<br>5 | 10<br>10 |
| A1 + (B7.5) Glyphosate (CAS 38641-94-0) | 15 + 50<br>5 + 50 | $E^A$ = 85 ($E^C$ = 64) Δ 21<br>$E^A$ = 80 ($E^C$ = 64) Δ 16 |
| | | |
| Wirkstoff/e (Z20) | Aufwandmenge [g a.i./ha] | Herbizide Wirkung 21 DAT [%] gegen *Bidens pilosa* |
| (B7.5) Glyphosate (CAS 38641-94-0) | 150 | 75 |
| A1 | 15 | 35 |
| A1 + (B7.5) Glyphosate (CAS 38641-94-0) | 15 + 150 | $E^A$ = 90 ($E^C$ = 84) Δ 6 |
| | | |
| Wirkstoff/e (Z20) | Aufwandmenge [g a.i./ha] | Herbizide Wirkung 21 DAT [%] gegen *Digitaria sanguinalis* |
| (B7.5) Glyphosate (CAS 38641-94-0) | 50 | 80 |
| A1 | 1,7 | 20 |
| A1 + (B7.5) Glyphosate (CAS 38641-94-0) | 1,7 + 50 | $E^A$ = 95 (EC = 84) Δ 11 |
| Wirkstoff/e (Z20) | Aufwandmenge [g a.i./ha] | Herbizide Wirkung 21 DAT [%] gegen *Kochia scoparia* |
| (B7.5) Glyphosate (CAS 38641-94-0) | 450<br>150 | 25<br>20 |
| A1 | 45<br>15<br>5 | 70<br>45<br>20 |
| A1 + (B7.5) Glyphosate (CAS 38641-94-0) | 45 + 450<br>15 + 450<br>5 + 450<br>15 + 150<br>5 + 150 | $E^A$ = 85 ($E^C$ = 78) Δ 7<br>$E^A$ = 85 ($E^C$ = 59) Δ 26<br>$E^A$ = 65 ($E^C$ = 40) Δ 25<br>$E^A$ = 65 ($E^C$ = 56) Δ 9<br>$E^A$ = 45 ($E^C$ = 36) Δ 9 |
| | | |

(fortgesetzt)

| Wirkstoff/e (Z20) | Aufwandmenge [g a.i./ha] | Herbizide Wirkung 21 DAT [%] gegen *Polygonum convolvulus* |
|---|---|---|
| (B7.5) Glyphosate (CAS 38641-94-0) | 50 | 10 |
| A1 | 45<br>15<br>5 | 85<br>85<br>85 |
| A1 + (B7.5) Glyphosate (CAS 38641-94-0) | 45 + 50<br>15 + 50<br>5 + 50 | $E^A$ = 93 ($E^C$ = 87) Δ 6<br>$E^A$ = 93 ($E^C$ = 87) Δ 6<br>$E^A$ = 93 ($E^C$ = 87) Δ 6 |
| | | |
| Wirkstoff/e (Z20) | Aufwandmenge [g a.i./ha] | Herbizide Wirkung 21 DAT [%] gegen *Sorghum halepense* |
| (B7.5) Glyphosate (CAS 38641-94-0) | 450<br>150<br>50 | 85<br>70<br>30 |
| A1 | 15<br>5<br>1,7 | 35<br>20<br>10 |
| A1 + (B7.5) Glyphosate (CAS 38641-94-0) | 15 + 450<br>15 + 150<br>5 + 150<br>1,7 + 150<br>15 + 50<br>1,7 + 50 | $E^A$ = 99 ($E^C$ = 90) Δ 9<br>$E^A$ = 93 ($E^C$ = 81) Δ 12<br>$E^A$ = 95 ($E^C$ = 76) Δ 19<br>$E^A$ = 90 ($E^C$ = 73) Δ 17<br>$E^A$ = 95 ($E^C$ = 55) Δ 40<br>$E^A$ = 45 ($E^C$ = 37) Δ 8 |
| Wirkstoff/e (Z49) | Aufwandmenge [g a.i./ha] | Herbizide Wirkung 21 DAT [%] gegen *Bidens pilosa* |
| (B7.5) Glyphosate (CAS 38641-94-0) | 450 | 85 |
| A2 | 15<br>5 | 50<br>45 |
| A2 + (B7.5) Glyphosate (CAS 38641-94-0) | 15 + 450<br>5 + 450 | $E^A$ = 100 ($E^C$ = 93) Δ 7<br>$E^A$ = 98 $E^C$ = 92) Δ 6 |
| | | |
| Wirkstoff/e (Z49) | Aufwandmenge [g a.i./ha] | Herbizide Wirkung 21 DAT [%] gegen *Echinochloa crus-galli* |
| (B7.5) Glyphosate (CAS 38641-94-0) | 50 | 45 |
| A2 | 15 | 80 |
| A2 + (B7.5) Glyphosate (CAS 38641-94-0) | 15 + 50 | $E^A$ = 95 ($E^C$ = 89) Δ 6 |
| | | |

(fortgesetzt)

| Wirkstoff/e (Z49) | Aufwandmenge [g a.i./ha] | Herbizide Wirkung 21 DAT [%] gegen *Kochia scoparia* |
|---|---|---|
| (B7.5) Glyphosate (CAS 38641-94-0) | 50 | 35 |
| A2 | 5 | 40 |
| A2 + (B7.5) Glyphosate (CAS 38641-94-0) | 5 + 50 | $E^A$ = 75 ($E^C$ = 61) Δ 14 |
| Wirkstoff/e (Z78) | Aufwandmenge [g a.i./ha] | Herbizide Wirkung 45 DAT [%] gegen *Ipomoea* ssp. |
| (B7.5) Glyphosate (CAS 39600-42-5) | 720 | 0 |
| A3 | 50 | 40 |
| A3 + (B7.5) Glyphosate (CAS 39600-42-5) | 50 + 720 | $E^A$ = 50 ($E^C$ = 40) Δ 10 |
| | | |
| Wirkstoff/e (Z78) | Aufwandmenge [g a.i./ha] | Herbizide Wirkung 45 DAT [%] gegen *Ipomoea* ssp. |
| (B7.5) Glyphosate (CAS 39600-42-5) | 1440 | 0 |
| A3 | 100 | 50 |
| A3 + (B7.5) Glyphosate (CAS 39600-42-5) | 100 + 1440 | $E^A$ = 70 ($E^C$ = 50) Δ 20 |
| | | |
| Wirkstoff/e (Z78) | Aufwandmenge [g a.i./ha] | Herbizide Wirkung 16 DAT [%] gegen *Amaranthus palmeri* |
| (B7.5) Glyphosate (CAS 39600-42-5) | 1440 | 2 |
| A3 | 100 | 45 |
| A3 + (B7.5) Glyphosate (CAS 39600-42-5) | 100 + 1440 | $E^A$ = 73 ($E^C$ = 46) Δ 27 |
| | | |
| Wirkstoff/e (Z78) | Aufwandmenge [g a.i./ha] | Herbizide Wirkung 16 DAT [%] gegen *Amaranthus palmeri* |
| (B7.5) Glyphosate (CAS 39600-42-5) | 1440 | 2 |
| A3 | 50 | 35 |
| A3 + (B7.5) Glyphosate (CAS 39600-42-5) | 50 + 1440 | $E^A$ = 52 ($E^C$ = 36) Δ 17 |
| Wirkstoff/e (Z78) | Aufwandmenge [g a.i./ha] | Herbizide Wirkung 45 DAT [%] gegen *Lysimachia nummularia* |
| (B7.5) Glyphosate (CAS 39600-42-5) | 720 | 7 |
| A3 | 100 | 18 |

(fortgesetzt)

| Wirkstoff/e (Z78) | Aufwandmenge [g a.i./ha] | Herbizide Wirkung 45 DAT [%] gegen *Lysimachia nummularia* |
|---|---|---|
| A3 + (B7.5) Glyphosate (CAS 39600-42-5) | 100 + 720 | $E^A$ = 63 ($E^C$ = 24) Δ 39 |
| | | |
| Wirkstoff/e (Z78) | Aufwandmenge [g a.i./ha] | Herbizide Wirkung 42 DAT [%] gegen *Malva pusilla* |
| (B7.5) Glyphosate (CAS 39600-42-5) | 720 | 0 |
| A3 | 100 | 50 |
| A3 + (B7.5) Glyphosate (CAS 39600-42-5) | 100 + 720 | $E^A$ = 63 ($E^C$ = 50) Δ 13 |
| | | |
| Wirkstoff/e (Z78) | Aufwandmenge [g a.i. / ha] | Herbizide Wirkung in [%] 14 DAT gegen *Alopecurus myosuroides* |
| A3 | 4<br>1 | 75<br>30 |
| (B7.5) Glyphosate (CAS 38641-94-0) | 50 | 30 |
| A3 + (B7.5) Glyphosate (CAS 38641-94-0) | 4 + 50<br>1 + 50 | $E^A$ = 90 ($E^C$ = 83) Δ = 7<br>$E^A$ = 75 ($E^C$ = 51) Δ = 24 |
| | | |
| Wirkstoff/e (Z78) | Aufwandmenge [g a.i. / ha] | Herbizide Wirkung in [%] 28 DAT gegen *Alopecurus myosuroides* |
| A3 | 4<br>1 | 60<br>10 |
| (B7.5) Glyphosate (CAS 38641-94-0) | 450<br>150<br>50 | 60<br>30<br>10 |
| A3 + (B7.5) Glyphosate (CAS 38641-94-0) | 4 + 450<br>4 + 150<br>4 + 50<br>1 + 450<br>1 + 50 | $E^A$ = 98 ($E^C$ = 84) Δ = 14<br>$E^A$ = 95 ($E^C$ = 72) Δ = 23<br>$E^A$ = 85 ($E^C$ = 64) Δ = 21<br>$E^A$ = 70 ($E^C$ = 64) Δ = 6<br>$E^A$ = 50 ($E^C$ = 19) Δ = 31 |
| Wirkstoff/e (Z78) | Aufwandmenge [g a.i. / ha] | Herbizide Wirkung in [%] 14 DAT gegen *Bromus sterilis* |
| A3 | 1 | 30 |
| (B7.5) Glyphosate (CAS 38641-94-0) | 50 | 30 |
| A3 + (B7.5) Glyphosate (CAS 38641-94-0) | 1 + 50 | $E^A$ = 80 ($E^C$ = 51) Δ = 29 |
| | | |

(fortgesetzt)

| Wirkstoff/e (Z78) | Aufwandmenge [g a.i. / ha] | Herbizide Wirkung in [%] 14 DAT gegen *Lolium rigidum* |
|---|---|---|
| A3 | 1 | 40 |
| (B7.5) Glyphosate (CAS 38641-94-0) | 50 | 40 |
| A3 + (B7.5) Glyphosate (CAS 38641-94-0) | 1 + 50 | $E^A$ = 80 ($E^C$ = 64) Δ = 16 |
| | | |
| Wirkstoff/e (Z78) | Aufwandmenge [g a.i. / ha] | Herbizide Wirkung in [%] 28 DAT gegen *Lolium rigidum* |
| A3 | 4<br>1 | 70<br>10 |
| (B7.5) Glyphosate (CAS 38641-94-0) | 50 | 30 |
| A3 + (B7.5) Glyphosate (CAS 38641-94-0) | 4 + 50<br>1 + 50 | $E^A$ = 85 ($E^C$ = 79) Δ = 6<br>$E^A$ = 60 ($E^C$ = 37) Δ = 23 |
| | | |
| Wirkstoff/e (Z78) | Aufwandmenge [g a.i. / ha] | Herbizide Wirkung in [%] 14 DAT gegen *Matricaria inodora* |
| A3 | 1 | 0 |
| (B7.5) Glyphosate (CAS 38641-94-0) | 50 | 50 |
| A3 + (B7.5) Glyphosate (CAS 38641-94-0) | 1 + 50 | $E^A$ = 60 ($E^C$ = 50) Δ = 10 |
| Wirkstoff/e (Z78) | Aufwandmenge [g a.i. / ha] | Herbizide Wirkung in [%] 28 DAT gegen *Matricaria inodora* |
| A3 | 1 | 0 |
| (B7.5) Glyphosate (CAS 38641-94-0) | 450 | 80 |
| A3 + (B7.5) Glyphosate (CAS 38641-94-0) | 1 + 450 | $E^A$ = 85 ($E^C$ = 80) Δ = 5 |
| | | |
| Wirkstoff/e (Z78) | Aufwandmenge [g a.i. / ha] | Herbizide Wirkung in [%] 14 DAT gegen *Phalaris minor* |
| A3 | 16<br>4<br>1 | 85<br>85<br>20 |
| (B7.5) Glyphosate (CAS 38641-94-0) | 50<br>450 | 30<br>80 |
| A3 + (B7.5) Glyphosate (CAS 38641-94-0) | 16 + 50<br>4 + 50<br>1 + 450<br>1 + 50 | $E^A$ = 98 ($E^C$ = 90) Δ = 8<br>$E^A$ = 95 ($E^C$ = 90) Δ = 5<br>$E^A$ = 90 ($E^C$ = 84) Δ = 6<br>$E^A$ = 85 ($E^C$ = 44) Δ = 41 |
| | | |

(fortgesetzt)

| Wirkstoff/e (Z78) | Aufwandmenge [g a.i. / ha] | Herbizide Wirkung in [%] 28 DAT gegen *Phalaris minor* |
|---|---|---|
| A3 | 16<br>4<br>1 | 85<br>85<br>10 |
| (B7.5) Glyphosate (CAS 38641-94-0) | 450<br>150<br>50 | 30<br>0<br>0 |
| A3 + (B7.5) Glyphosate (CAS 38641-94-0) | 16 + 450<br>16 + 150<br>16 + 50<br>4 + 50<br>1 + 450<br>1 + 150<br>1 + 50 | $E^A$ = 100 ($E^C$ = 90) Δ = 10<br>$E^A$ = 98 ($E^C$ = 85) Δ = 13<br>$E^A$ = 98 ($E^C$ = 85) Δ = 13<br>$E^A$ = 95 ($E^C$ = 85) Δ = 10<br>$E^A$ = 70 ($E^C$ = 37) Δ = 33<br>$E^A$ = 50 ($E^C$ = 10) Δ = 40<br>$E^A$ = 40 ($E^C$ = 10) Δ = 30 |
| Wirkstoff/e (Z78) | Aufwandmenge [g a.i. / ha] | Herbizide Wirkung in [%] 14 DAT gegen *Poa annua L.* |
| A3 | 4<br>1 | 85<br>50 |
| (B7.5) Glyphosate (CAS 38641-94-0) | 50 | 20 |
| A3 + (B7.5) Glyphosate (CAS 38641-94-0) | 4 + 50<br>1 + 50 | $E^A$ = 95 ($E^C$ = 88) Δ = 7<br>$E^A$ = 80 ($E^C$ = 60) Δ = 20 |
| | | |
| Wirkstoff/e (Z78) | Aufwandmenge [g a.i. / ha] | Herbizide Wirkung in [%] 28 DAT gegen *Poa annua L.* |
| A3 | 16<br>4<br>1 | 85<br>80<br>20 |
| (B7.5) Glyphosate (CAS 38641-94-0) | 50<br>150<br>450 | 0<br>60<br>60 |
| A3 + (B7.5) Glyphosate (CAS 38641-94-0) | 16 + 50<br>4 + 150<br>4 + 50<br>1 + 450<br>1 + 50 | $E^A$ = 98 ($E^C$ = 85) Δ = 13<br>$E^A$ = 98 ($E^C$ = 92) Δ = 6<br>$E^A$ = 98 ($E^C$ = 80) Δ = 18<br>$E^A$ = 93 ($E^C$ = 68) Δ = 25<br>$E^A$ = 60 ($E^C$ = 20) Δ = 40 |
| | | |
| Wirkstoff/e (Z78) | Aufwandmenge [g a.i. / ha] | Herbizide Wirkung in [%] 28 DAT gegen *Veronica hederifolia* |
| A3 | 1 | 30 |
| (B7.5) Glyphosate (CAS 38641-94-0) | 450 | 90 |
| A3 + (B7.5) Glyphosate (CAS 38641-94-0) | 1 + 450 | $E^A$ = 98 ($E^C$ = 93) Δ = 5 |

(fortgesetzt)

| Wirkstoff/e (Z107) | Aufwandmenge [g a.i./ha] | Herbizide Wirkung 21 DAT [%] gegen *Bidens pilosa* |
|---|---|---|
| (B7.5) Glyphosate (CAS 38641-94-0) | 450 | 85 |
| A4 | 5 | 10 |
| A4 + (B7.5) Glyphosate (CAS 38641-94-0) | 5 + 450 | $E^A$ = 100 ($E^C$ = 87) Δ 13 |
| | | |
| Wirkstoff/e (Z107) | Aufwandmenge [g a.i./ha] | Herbizide Wirkung 21 DAT [%] gegen *Kochia scoparia* |
| (B7.5) Glyphosate (CAS 38641-94-0) | 450 | 80 |
| A4 | 5 | 10 |
| A4 + (B7.5) Glyphosate (CAS 38641-94-0) | 5 + 450 | $E^A$ = 99 ($E^C$ = 82) Δ 17 |
| | | |
| Wirkstoff/e (Z136) | Aufwandmenge [g a.i. / ha] | Herbizide Wirkung in [%] 28 DAT gegen *Bromus sterilis* |
| A5 | 1 | 30 |
| (B7.5) Glyphosate (CAS 38641-94-0) | 150 | 40 |
| A5 + (B7.5) Glyphosate (CAS 38641-94-0) | 1 + 150 | $E^A$ = 70 ($E^C$ = 58) Δ = 12 |
| | | |
| Wirkstoff/e (Z136) | Aufwandmenge [g a.i. / ha] | Herbizide Wirkung in [%] 14 DAT gegen *Centaurea cyanus* |
| A5 | 1 | 20 |
| (B7.5) Glyphosate (CAS 38641-94-0) | 150<br>50 | 60<br>30 |
| A5 + (B7.5) Glyphosate (CAS 38641-94-0) | 1 + 150<br>1 + 50 | $E^A$ = 85 ($E^C$ = 68) Δ = 17<br>$E^A$ = 50 ($E^C$ = 44) Δ = 6 |
| Wirkstoff/e (Z136) | Aufwandmenge [g a.i. / ha] | Herbizide Wirkung in [%] 28 DAT gegen *Galium aparine* |
| A5 | 1 | 50 |
| (B7.5) Glyphosate (CAS 38641-94-0) | 150 | 40 |
| A5 + (B7.5) Glyphosate (CAS 38641-94-0) | 1 + 150 | $E^A$ = 75 ($E^C$ = 70) Δ = 5 |
| | | |
| Wirkstoff/e (Z136) | Aufwandmenge [g a.i. / ha] | Herbizide Wirkung in [%] 14 DAT gegen *Lamium purpureum L.* |
| A5 | 1 | 60 |
| (B7.5) Glyphosate (CAS 38641-94-0) | 50 | 50 |

(fortgesetzt)

| Wirkstoff/e (Z136) | Aufwandmenge [g a.i. / ha] | Herbizide Wirkung in [%] 14 DAT gegen *Lamium purpureum L.* |
|---|---|---|
| A5 + (B7.5) Glyphosate (CAS 38641-94-0) | 1 + 50 | $E^A$ = 85 ($E^C$ = 80) Δ = 5 |
| | | |
| Wirkstoff/e (Z136) | Aufwandmenge [g a.i. / ha] | Herbizide Wirkung in [%] 28 DAT gegen *Lamium purpureum L.* |
| A5 | 1 | 40 |
| (B7.5) Glyphosate (CAS 38641-94-0) | 450<br>150<br>50 | 75<br>40<br>30 |
| A5 + (B7.5) Glyphosate (CAS 38641-94-0) | 1 + 450<br>1 + 150<br>1 + 50 | $E^A$ = 90 ($E^C$ = 85) Δ = 5<br>$E^A$ = 85 ($E^C$ = 64) Δ = 21<br>$E^A$ = 70 ($E^C$ = 58) Δ = 12 |
| | | |
| Wirkstoff/e (Z136) | Aufwandmenge [g a.i. / ha] | Herbizide Wirkung in [%] 28 DAT gegen Lolium rigidum |
| A5 | 1 | 30 |
| (B7.5) Glyphosate (CAS 38641-94-0) | 150 | 60 |
| A5 + (B7.5) Glyphosate (CAS 38641-94-0) | 1 + 150 | $E^A$ = 80 ($E^C$ = 72) Δ = 8 |
| | | |
| Wirkstoff/e (Z136) | Aufwandmenge [g a.i. / ha] | Herbizide Wirkung in [%] 14 DAT gegen *Lolium rigidum* (resistenter Biotyp) |
| A5 | 16 | 70 |
| (B7.5) Glyphosate (CAS 38641-94-0) | 50 | 20 |
| A5 + (B7.5) Glyphosate (CAS 38641-94-0) | 16 + 50 | $E^A$ = 85 ($E^C$ = 76) Δ = 9 |
| Wirkstoff/e (Z136)<br>A5 | Aufwandmenge [g a.i. / ha]<br>1 | Herbizide Wirkung in [%] 28 DAT gegen *Phalaris minor*<br>30 |
| (B7.5) Glyphosate (CAS 38641-94-0) | 150 | 85 |
| A5 + (B7.5) Glyphosate (CAS 38641-94-0) | 1 + 150 | $E^A$ = 98 ($E^C$ = 90) Δ = 8 |
| | | |
| Wirkstoff/e (Z136) | Aufwandmenge [g a.i. / ha] | Herbizide Wirkung in [%] 28 DAT gegen *Poa annua L.* |
| A5 | 1 | 20 |
| (B7.5) Glyphosate (CAS 38641-94-0) | 150<br>50 | 50<br>30 |

(fortgesetzt)

| Wirkstoff/e (Z136) | Aufwandmenge [g a.i. / ha] | Herbizide Wirkung in [%] 28 DAT gegen *Poa annua L.* |
|---|---|---|
| A5 + (B7.5) Glyphosate (CAS 38641-94-0) | 1 + 150<br>1 + 50 | $E^A$ = 70 ($E^C$ = 60) Δ = 10<br>$E^A$ = 50 ($E^C$ = 44) Δ = 6 |
| | | |
| Wirkstoff/e (Z165) | Aufwandmenge [g a.i. / ha] | Herbizide Wirkung in [%] 28 DAT gegen *Bromus sterilis* |
| A6 | 1 | 50 |
| (B7.5) Glyphosate (CAS 38641-94-0) | 150 | 40 |
| A6 + (B7.5) Glyphosate | 1 + 150 | $E^A$ = 80 ($E^B$ = 70) Δ = 10 |
| | | |
| Wirkstoff/e (Z165) | Aufwandmenge [g a.i. / ha] | Herbizide Wirkung in [%] 14 DAT gegen *Centaurea cyanus* |
| A6 | 1 | 40 |
| (B7.5) Glyphosate (CAS 38641-94-0) | 150<br>50 | 60<br>30 |
| A6 + (B7.5) Glyphosate (CAS 38641-94-0) | 1 + 150<br>1 + 50 | $E^A$ = 95 ($E^B$ = 76) Δ = 19<br>$E^A$ = 70 ($E^B$ = 58) Δ = 12 |
| Wirkstoff/e (Z165) | Aufwandmenge [g a.i. / ha] | Herbizide Wirkung in [%] 28 DAT gegen *Centaurea cyanus* |
| A6 | 4<br>1 | 70<br>40 |
| (B7.5) Glyphosate (CAS 38641-94-0) | 50<br>450<br>150 | 30<br>85<br>60 |
| A6 + (B7.5) Glyphosate (CAS 38641-94-0) | 4 + 50<br>1 + 450<br>1 + 150<br>1 + 50 | $E^A$ = 90 ($E^B$ = 79) Δ = 11<br>$E^A$ = 98 ($E^B$ = 91) Δ = 7<br>$E^A$ = 95 ($E^B$ = 76) Δ = 19<br>$E^A$ = 70 ($E^B$ = 58) Δ = 12 |
| | | |
| Wirkstoff/e (Z165) | Aufwandmenge [g a.i. / ha] | Herbizide Wirkung in [%] 14 DAT gegen *Lolium rigidum* (resistenter Biotyp) |
| A6 | 1 | 50 |
| (B7.5) Glyphosate (CAS 38641-94-0) | 50 | 20 |
| A6 + (B7.5) Glyphosate (CAS 38641-94-0) | 1 + 50 | $E^A$ = 70 ($E^B$ = 60) Δ = 10 |
| | | |
| Wirkstoff/e (Z165) | Aufwandmenge [g a.i. / ha] | Herbizide Wirkung in [%] 14 DAT gegen *Matricaria inodora* |
| A6 | 1 | 40 |
| (B7.5) Glyphosate (CAS 38641-94-0) | 50 | 40 |

(fortgesetzt)

| Wirkstoff/e (Z165) | Aufwandmenge [g a.i. / ha] | Herbizide Wirkung in [%] 14 DAT gegen *Matricaria inodora* |
|---|---|---|
| A6 + (B7.5) Glyphosate (CAS 38641-94-0) | 1 + 50 | $E^A$ = 70 ($E^B$ = 64) Δ = 6 |
| | | |
| Wirkstoff/e (Z165) | Aufwandmenge [g a.i. / ha] | Herbizide Wirkung in [%] 28 DAT gegen *Phalaris minor* |
| A6 | 16 | 90 |
| (B7.5) Glyphosate (CAS 38641-94-0) | 50 | 30 |
| A6 + (B7.5) Glyphosate (CAS 38641-94-0) | 16 + 50 | $E^A$ = 98 ($E^B$ = 93) Δ = 5 |
| Wirkstoff/e (Z165) | Aufwandmenge [g a.i. / ha] | Herbizide Wirkung in [%] 28 DAT gegen *Poa annua L.* |
| A6 | 16<br>1 | 70<br>50 |
| (B7.5) Glyphosate (CAS 38641-94-0) | 150<br>50 | 50<br>30 |
| A6 + (B7.5) Glyphosate (CAS 38641-94-0) | 16 + 150<br>16 + 50<br>1 + 150 | $E^A$ = 95 ($E^B$ = 85) Δ = 10<br>$E^A$ = 95 ($E^B$ = 79) Δ = 16<br>$E^A$ = 80 ($E^B$ = 75) Δ = 5 |

Tabelle 3.7: Synergistischer Effekt (Δ) für herbizide binäre Zusammensetzungen im Nachauflauf enthaltend Herbizide aus der Gruppe B8

| Wirkstoff/e (Z80) | Aufwandmenge [g a.i. / ha] | Herbizide Wirkung in [%] 14 DAT gegen *Alopecurus myosuroides* |
|---|---|---|
| A3 | 4<br>1 | 75<br>30 |
| (B8.1) 2,4-D (CAS 1928-44-5) | 300<br>33 | 40<br>20 |
| A3 + (B8.1) 2,4-D (CAS 1928-44-5) | 4 + 300<br>4 + 33<br>1 + 100<br>1 + 33 | $E^A$ = 95 ($E^C$ = 85) Δ = 10<br>$E^A$ = 93 ($E^C$ = 80) Δ = 13<br>$E^A$ = 75 ($E^C$ = 51) Δ = 24<br>$E^A$ = 60 ($E^C$ = 44) Δ = 16 |
| | | |
| Wirkstoff/e (Z80) | Aufwandmenge [g a.i. / ha] | Herbizide Wirkung in [%] 28 DAT gegen *Alopecurus myosuroides* |
| A3 | 4<br>1 | 60<br>10 |
| (B8.1) 2,4-D (CAS 1928-44-5) | 300<br>100<br>33 | 0<br>0<br>0 |

(fortgesetzt)

| Wirkstoff/e (Z80) | Aufwandmenge [g a.i. / ha] | Herbizide Wirkung in [%] 28 DAT gegen *Alopecurus myosuroides* |
|---|---|---|
| A3 + (B8.1) 2,4-D (CAS 1928-44-5) | 4 + 300<br>4 + 33<br>1 + 300<br>1 + 100<br>1 + 33 | $E^A$ = 98 ($E^C$ = 60) Δ = 38<br>$E^A$ = 85 ($E^C$ = 60) Δ = 25<br>$E^A$ = 20 ($E^C$ = 10) Δ = 10<br>$E^A$ = 20 ($E^C$ = 10) Δ = 10<br>$E^A$ = 30 ($E^C$ = 10) Δ = 20 |
| Wirkstoff/e (Z80) | Aufwandmenge [g a.i. / ha] | Herbizide Wirkung in [%] 14 DAT gegen Bromus sterilis |
| A3 | 1 | 30 |
| (B8.1) 2,4-D (CAS 1928-44-5) | 300<br>100<br>33 | 20<br>20<br>10 |
| A3 + (B8.1) 2,4-D (CAS 94-75-7) | 1 + 300<br>1 + 100<br>1 + 33 | $E^A$ = 60 ($E^C$ = 44) Δ = 16<br>$E^A$ = 70 ($E^C$ = 44) Δ = 26<br>$E^A$ = 75 ($E^C$ = 37) Δ = 38 |
| | | |
| Wirkstoff/e (Z80) | Aufwandmenge [g a.i. / ha] | Herbizide Wirkung in [%] 28 DAT gegen *Bromus sterilis* |
| A3 | 4 1 | 90 30 |
| (B8.1) 2,4-D (CAS 1928-44-5) | 300<br>100<br>33 | 0<br>0<br>0 |
| A3 + (B8.1) 2,4-D (CAS 1928-44-5) | 4 + 300<br>4 + 100<br>4 + 33<br>1 + 33 | $E^A$ = 95 ($E^C$ = 90) Δ = 5<br>$E^A$ = 95 ($E^C$ = 90) Δ = 5<br>$E^A$ = 98 ($E^C$ = 90) Δ = 8<br>$E^A$ = 40 ($E^C$ = 30) Δ = 10 |
| | | |
| Wirkstoff/e (Z80) | Aufwandmenge [g a.i. / ha] | Herbizide Wirkung in [%] 14 DAT gegen *Galium aparine* |
| A3 | 1 | 50 |
| (B8.1) 2,4-D (CAS 1928-44-5) | 300<br>100 | 40<br>30 |
| A3 + (B8.1) 2,4-D (CAS 1928-44-5) | 1 + 300<br>1 + 100 | $E^A$ = 80 ($E^C$ = 70) Δ = 10<br>$E^A$ = 70 ($E^C$ = 65) Δ = 5 |
| Wirkstoff/e (Z80) | Aufwandmenge [g a.i. / ha] | Herbizide Wirkung in [%] 14 DAT gegen *Lolium rigidum* |
| A3 | 4<br>1 | 85<br>40 |
| (B8.1) 2,4-D (CAS 1928-44-5) | 300<br>100<br>33 | 5<br>5<br>5 |

(fortgesetzt)

| Wirkstoff/e (Z80) | Aufwandmenge [g a.i. / ha] | Herbizide Wirkung in [%] 14 DAT gegen *Lolium rigidum* |
|---|---|---|
| A3 + (B8.1) 2,4-D (CAS 1928-44-5) | 4 + 300<br>4 + 100<br>4 + 33<br>1 + 300<br>1 + 100<br>1 + 33 | $E^A = 93$ ($E^C = 86$) $\Delta = 7$<br>$E^A = 93$ ($E^C = 86$) $\Delta = 7$<br>$E^A = 95$ ($E^C = 86$) $\Delta = 9$<br>$E^A = 60$ ($E^C = 43$) $\Delta = 17$<br>$E^A = 60$ ($E^C = 43$) $\Delta = 17$<br>$E^A = 70$ ($E^C = 43$) $\Delta = 27$ |
| | | |
| Wirkstoff/e (Z80) | Aufwandmenge [g a.i. / ha] | Herbizide Wirkung in [%] 28 DAT gegen *Lolium rigidum* |
| A3 | 4<br>1 | 70<br>10 |
| (B8.1) 2,4-D (CAS 1928-44-5) | 300<br>100<br>33 | 0<br>0<br>0 |
| A3 + (B8.1) 2,4-D (CAS 1928-44-5) | 4 + 300<br>4 + 100<br>4 + 33<br>1 + 300<br>1 + 100<br>1 + 33 | $E^A = 85$ ($E^C = 70$) $\Delta = 15$<br>$E^A = 85$ ($E^C = 70$) $\Delta = 15$<br>$E^A = 98$ ($E^C = 70$) $\Delta = 28$<br>$E^A = 20$ ($E^C = 10$) $\Delta = 10$<br>$E^A = 20$ ($E^C = 10$) $\Delta = 10$<br>$E^A = 30$ ($E^C = 10$) $\Delta = 20$ |
| Wirkstoff/e (Z80) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B8.1) 2,4-D (CAS 1928-44-5) | 300<br>100<br>33 | 5<br>5<br>5 |
| A3 + (B8.1) 2,4-D (CAS 1928-44-5) | 4 + 300<br>4 + 100<br>4 + 33<br>1 + 300<br>1 + 100<br>1 + 33 | $E^A = 85$ ($E^C = 62$) $\Delta = 23$<br>$E^A = 90$ ($E^C = 62$) $\Delta = 28$<br>$E^A = 85$ ($E^C = 62$) $\Delta = 23$<br>$E^A = 50$ ($E^C = 34$) $\Delta = 16$<br>$E^A = 50$ ($E^C = 34$) $\Delta = 16$<br>$E^A = 70$ ($E^C = 34$) $\Delta = 36$ |
| | | |
| Wirkstoff/e (Z80) | Aufwandmenge [g a.i. / ha] | Herbizide Wirkung in [%] 28 DAT gegen *Lolium rigidum* (resistenter Biotyp) |
| A3 | 16<br>4<br>1 | 80<br>40<br>0 |
| (B8.1) 2,4-D (CAS 1928-44-5) | 100<br>33<br>300 | 0<br>0<br>0 |

(fortgesetzt)

| Wirkstoff/e (Z80) | Aufwandmenge [g a.i. / ha] | Herbizide Wirkung in [%] 28 DAT gegen *Lolium rigidum* (resistenter Biotyp) |
|---|---|---|
| A3 + (B8.1) 2,4-D (CAS 1928-44-5) | 16 + 100<br>16 + 33<br>4 + 300<br>4 + 100<br>4 + 33<br>1 + 300<br>1 + 100<br>1 + 33 | $E^A$ = 95 ($E^C$ = 80) Δ = 15<br>$E^A$ = 85 ($E^C$ = 80) Δ = 5<br>$E^A$ = 60 ($E^C$ = 40) Δ = 20<br>$E^A$ = 75 ($E^C$ = 40) Δ = 35<br>$E^A$ = 80 ($E^C$ = 40) Δ = 40<br>$E^A$ = 20 ($E^C$ = 0) Δ = 20<br>$E^A$ = 20 ($E^C$ = 0) Δ = 20<br>$E^A$ = 30 ($E^C$ = 0) Δ = 30 |
| Wirkstoff/e (Z80) | Aufwandmenge [g a.i. / ha] | Herbizide Wirkung in [%] 14 DAT gegen *Matricaria inodora* |
| A3 | 1 | 0 |
| (B8.1) 2,4-D (CAS 1928-44-5) | 300 | 85 |
| A3 + (B8.1) 2,4-D (CAS 1928-44-5) | 1 + 300 | $E^A$ = 93 ($E^C$ = 85) Δ = 8 |
| | | |
| Wirkstoff/e (Z80) | Aufwandmenge [g a.i. / ha] | Herbizide Wirkung in [%] 14 DAT gegen *Phalaris minor* |
| A3 | 16<br>4<br>1 | 85<br>85<br>20 |
| (B8.1) 2,4-D (CAS 1928-44-5) | 300<br>100<br>33 | 0<br>0<br>0 |
| A3 + (B8.1) 2,4-D (CAS 1928-44-5) | 16 + 300<br>16 + 100<br>16 + 33<br>4 + 300<br>4 + 100<br>4 + 33<br>1 + 300<br>1 + 100<br>1 + 33 | $E^A$ = 98 ($E^C$ = 85) Δ = 13<br>$E^A$ = 90 ($E^C$ = 85) Δ = 5<br>$E^A$ = 98 ($E^C$ = 85) Δ = 13<br>$E^A$ = 90 ($E^C$ = 85) Δ = 5<br>$E^A$ = 95 ($E^C$ = 85) Δ = 10<br>$E^A$ = 98 ($E^C$ = 85) Δ = 13<br>$E^A$ = 60 ($E^C$ = 20) Δ = 40<br>$E^A$ = 70 ($E^C$ = 20) Δ = 50<br>$E^A$ = 70 ($E^C$ = 20) Δ = 50 |
| Wirkstoff/e (Z80) | Aufwandmenge [g a.i. / ha] | Herbizide Wirkung in [%] 28 DAT gegen *Phalaris minor* |
| A3 | 16<br>4<br>1 | 85<br>85<br>10 |
| (B8.1) 2,4-D (CAS 1928-44-5) | 300<br>33<br>100 | 0<br>0<br>0 |

(fortgesetzt)

| Wirkstoff/e (Z80) | Aufwandmenge [g a.i. / ha] | Herbizide Wirkung in [%] 28 DAT gegen *Phalaris minor* |
|---|---|---|
| A3 + (B8.1) 2,4-D (CAS 1928-44-5) | 16 + 300<br>16 + 33<br>4 + 300<br>4 + 100<br>4 + 33<br>1 + 300<br>1 + 100<br>1 + 33 | $E^A$ = 98 ($E^C$ = 85) Δ = 13<br>$E^A$ = 100 ($E^C$ = 85) Δ = 15<br>$E^A$ = 90 ($E^C$ = 85) Δ = 5<br>$E^A$ = 95 ($E^C$ = 85) Δ = 10<br>$E^A$ = 98 ($E^C$ = 85) Δ = 13<br>$E^A$ = 40 ($E^C$ = 10) Δ = 30<br>$E^A$ = 40 ($E^C$ = 10) Δ = 30<br>$E^A$ = 30 ($E^C$ = 10) Δ = 20 |
| | | |
| Wirkstoff/e (Z80) | Aufwandmenge [g a.i. / ha] | Herbizide Wirkung in [%] 14 DAT gegen *Poa annua L.* |
| A3 | 16<br>4<br>1 | 93<br>85<br>50 |
| (B8.1) 2,4-D (CAS 1928-44-5) | 300<br>100<br>33 | 0<br>0<br>0 |
| A3 + (B8.1) 2,4-D (CAS 1928-44-5) | 16+300<br>16 + 100<br>16 + 33<br>4 + 300<br>4 + 100<br>4 + 33<br>1 + 300<br>1 + 100<br>1 + 33 | $E^A$ = 98 ($E^C$ = 93) Δ = 5<br>$E^A$ = 98 ($E^C$ = 93) Δ = 5<br>$E^A$ = 98 ($E^C$ = 93) Δ = 5<br>$E^A$ = 98 ($E^C$ = 85) Δ = 13<br>$E^A$ = 98 ($E^C$ = 85) Δ = 13<br>$E^A$ = 95 ($E^C$ = 85) Δ = 10<br>$E^A$ = 75 ($E^C$ = 50) Δ = 25<br>$E^A$ = 70 ($E^C$ = 50) Δ = 20<br>$E^A$ = 75 ($E^C$ = 50) Δ = 25 |
| Wirkstoff/e (Z80) | Aufwandmenge [g a.i. / ha] | Herbizide Wirkung in [%] 28 DAT gegen *Poa annua L.* |
| A3 | 16<br>4<br>1 | 85<br>80<br>20 |
| (B8.1) 2,4-D (CAS 1928-44-5) | 300<br>100<br>33 | 0<br>0<br>0 |
| A3 + (B8.1) 2,4-D (CAS 1928-44-5) | 16 + 300<br>16 + 100<br>16 + 33<br>4 + 300<br>4 + 100<br>4 + 33<br>1 + 300<br>1 + 100<br>1 + 33 | $E^A$ = 100 ($E^C$ = 85) Δ = 15<br>$E^A$ = 98 ($E^C$ = 85) Δ = 13<br>$E^A$ = 100 ($E^C$ = 85) Δ = 15<br>$E^A$ = 98 ($E^C$ = 80) Δ = 18<br>$E^A$ = 98 ($E^C$ = 80) Δ = 18<br>$E^A$ = 98 ($E^C$ = 80) Δ = 18<br>$E^A$ = 60 ($E^C$ = 20) Δ = 40<br>$E^A$ = 50 ($E^C$ = 20) Δ = 30<br>$E^A$ = 60 ($E^C$ = 20) Δ = 40 |
| | | |

(fortgesetzt)

| Wirkstoff/e (Z80) | Aufwandmenge [g a.i. / ha] | Herbizide Wirkung in [%] 14 DAT gegen *Veronica hederifolia* |
|---|---|---|
| A3 | 4<br>1 | 30<br>10 |
| (B8.1) 2,4-D (CAS 1928-44-5) | 33 | 60 |
| A3 + (B8.1) 2,4-D (CAS 1928-44-5) | 4 + 33<br>1 + 33 | $E^A$ = 85 ($E^C$ = 72) Δ = 13<br>$E^A$ = 80 ($E^C$ = 64) Δ = 16 |
| | | |
| Wirkstoff/e (Z80) | Aufwandmenge [g a.i. / ha] | Herbizide Wirkung in [%] 28 DAT gegen *Veronica hederifolia* |
| A3 | 4<br>1 | 50<br>30 |
| (B8.1) 2,4-D (CAS 1928-44-5) | 33 | 30 |
| A3 + (B8.1) 2,4-D (CAS 1928-44-5) | 4 + 33<br>1 + 33 | $E^A$ = 70 ($E^C$ = 65) Δ = 5<br>$E^A$ = 70 ($E^C$ = 51) Δ = 19 |
| Wirkstoff/e (Z80) | Aufwandmenge [g a.i. / ha] | Herbizide Wirkung in [%] 28 DAT gegen *Viola tricolor* |
| A3 | 1 | 30 |
| (B8.1) 2,4-D (CAS 1928-44-5) | 300 | 85 |
| A3 + (B8.1) 2,4-D (CAS 1928-44-5) | 1 + 300 | $E^A$ = 95 ($E^C$ = 89,5) Δ = 5,5 |
| | | |
| Wirkstoff/e (Z81) | Aufwandmenge [g a.i./ha] | Herbizide Wirkung 37 DAT [%] gegen *Abutilon theophrasti* |
| (B8.5) Aclonifen | 500 | 30 |
| A3 | 100 | 75 |
| A3 + (B8.5) Aclonifen | 100 + 500 | $E^A$ = 87 ($E^C$ = 82,5) Δ 4,5 |
| | | |
| Wirkstoff/e (Z81) | Aufwandmenge [g a.i./ha] | Herbizide Wirkung 37 DAT [%] gegen *Ipomoea hederacea* |
| (B8.5) Aclonifen | 500 | 0 |
| A3 | 100 | 8 |
| A3 + (B8.5) Aclonifen | 100 + 500 | $E^A$ = 60 ($E^C$ = 8) Δ 52 |
| | | |
| Wirkstoff/e (Z81) | Aufwandmenge [g a.i./ha] | Herbizide Wirkung 27 DAT [%] gegen *Chenopodium album* |
| (B8.5) Aclonifen | 500 | 15 |
| A3 | 100 | 85 |
| A3 + (B8.5) Aclonifen | 100 + 500 | $E^A$ = 95 ($E^C$ = 87) Δ 8 |

Tabelle 3.8: Synergistischer Effekt (Δ) für herbizide binäre Zusammensetzungen im Nachauflauf enthaltend Herbizide aus der Gruppe B9

| Wirkstoff/e (Z82) | Aufwandmenge [g a.i./ha] | Herbizide Wirkung 21 DAT [%] gegen *Brachiaria platyphylla* |
|---|---|---|
| (B9.10) Saflufenacil | 4 | 25 |
| A3 | 1,7 | 20 |
| A3 + (B9.10) Saflufenacil | 1,7 + 4 | $E^A$ = 55 ($E^C$ = 40) Δ 15 |
| | | |
| Wirkstoff/e (Z82) | Aufwandmenge [g a.i./ha] | Herbizide Wirkung 21 DAT [%] gegen *Digitaria sanguinalis* |
| (B9.10) Saflufenacil | 12 | 50 |
| A3 | 1,7 | 10 |
| A3 + (B9.10) Saflufenacil | 1,7 + 12 | $E^A$ = 100 ($E^C$ = 55) Δ 45 |
| | | |
| Wirkstoff/e (Z82) | Aufwandmenge [g a.i./ha] | Herbizide Wirkung 21 DAT [%] gegen *Amaranthus palmeri* |
| (B9.10) Saflufenacil | 1,3 | 70 |
| A3 | 1,7 | 0 |
| A3 + (B9.10) Saflufenacil | 1,7 + 1,3 | $E^A$ = 100 ($E^C$ = 70) Δ 30 |
| | | |
| Wirkstoff/e (Z82) | Aufwandmenge [g a.i./ha] | Herbizide Wirkung 21 DAT [%] gegen *Pharbitis purpurea* |
| (B9.10) Saflufenacil | 1,3 | 30 |
| A3 | 5 | 80 |
| A3 + (B9.10) Saflufenacil | 5 + 1,3 | $E^A$ = 99 ($E^C$ = 86) Δ 13 |
| Wirkstoff/e | Aufwandmenge [g a.i. / ha] | Herbizide Wirkung in [%] 28 DAT gegen *Poa annua* |
| A3 | 1 | 30 |
| (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 10<br>5 | 60<br>80 |
| A3 + (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 1 + 10<br>1 + 5 | $E^A$ = 85 ($E^C$ = 72) Δ = 13<br>$E^A$ = 100 ($E^C$ = 86) Δ = 14 |
| | | |
| Wirkstoff/e | Aufwandmenge [g a.i. / ha] | Herbizide Wirkung in [%] 28 DAT gegen *Centaurea cyano* |
| A3 | 16 | 70 |
| (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 2,5 | 90 |
| A3 + (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 16 + 2,5 | $E^A$ = 100 ($E^C$ = 97) Δ = 3 |

(fortgesetzt)

| Wirkstoff/e | Aufwandmenge [g a.i. / ha] | Herbizide Wirkung in [%] 28 DAT gegen *Galium aparine* |
|---|---|---|
| A3 | 16<br>4 | 80<br>70 |
| (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 10<br>5 | 90<br>90 |
| A3 + (B9.14) Ethyl[3-[2-chloro-4-fluoro-5-(1 -methyl-6-trifluoromethyl-2,4-dioxo-1,2,3,4-tetrahydropyrimidin-3-yl)phenoxy]-2-pyridyloxy]acetat | 16 + 10<br>16 + 5<br>4+5 | $E^A$ = 100 ($E^C$ = 98) Δ = 2<br>$E^A$ = 100 ($E^C$ = 98) Δ = 2<br>$E^A$ = 100 ($E^C$ = 97) Δ = 3 |
| | | |
| Wirkstoff/e | Aufwandmenge [g a.i. / ha] | Herbizide Wirkung in [%] 28 DAT gegen *Matricaria inodora* |
| A3 | 4<br>1 | 0<br>0 |
| (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 10 | 98 |
| A3 + (B9.14) Ethyl[3-[2-chloro-4-fluoro-5-(1 -methyl-6-trifluoromethyl-2,4-dioxo-1,2,3,4-tetrahydropyrimidin-3 - yl)phenoxy]-2-pyridyloxy]acetat | 4 + 10<br>1 + 10 | $E^A$ = 100 ($E^C$ = 98) Δ = 2<br>$E^A$ = 100 ($E^C$ = 98) Δ = 2 |

Tabelle 3.9: Synergistischer Effekt (Δ) für herbizide binäre Zusammensetzungen im Nachauflauf enthaltend Herbizide aus der Gruppe B10

| Wirkstoff/e (Z83) | Aufwandmenge [g a.i. / ha] | Herbizide Wirkung in [%] 14 DAT gegen *Alopecurus myosuroides* |
|---|---|---|
| A3 | 4<br>1 | 75<br>30 |
| (B10.5) Diuron | 45<br>15<br>5 | 20<br>10<br>0 |
| A3 + (B10.5) Diuron | 4 + 45<br>4 + 15<br>4+5<br>1 + 45<br>1 + 15<br>1 + 5 | $E^A$ = 95 ($E^C$ = 80) Δ = 15<br>$E^A$ = 90 ($E^C$ = 78) Δ = 12<br>$E^A$ = 90 ($E^C$ = 75) Δ = 15<br>$E^A$ = 80 ($E^C$ = 44) Δ = 36<br>$E^A$ = 70 ($E^C$ = 37) Δ = 33<br>$E^A$ = 70 ($E^C$ = 30) Δ = 40 |
| | | |
| Wirkstoff/e (Z83) | Aufwandmenge [g a.i. / ha] | Herbizide Wirkung in [%] 28 DAT gegen *Alopecurus myosuroides* |
| A3 | 4<br>1 | 60<br>10 |
| (B10.5) Diuron | 45<br>15<br>5 | 0<br>0<br>0 |

(fortgesetzt)

| Wirkstoff/e (Z83) | Aufwandmenge [g a.i. / ha] | Herbizide Wirkung in [%] 28 DAT gegen *Alopecurus myosuroides* |
|---|---|---|
| A3 + (B10.5) Diuron | 4 + 45<br>4 + 15<br>4+5<br>1 + 45<br>1 + 15<br>1 + 5 | $E^A$ = 98 ($E^C$ = 60) Δ = 38<br>$E^A$ = 85 ($E^C$ = 60) Δ = 25<br>$E^A$ = 85 ($E^C$ = 60) Δ = 25<br>$E^A$ = 30 ($E^C$ = 10) Δ = 20<br>$E^A$ = 30 ($E^C$ = 10) Δ = 20<br>$E^A$ = 30 ($E^C$ = 10) Δ = 20 |
| Wirkstoff/e (Z83) | Aufwandmenge [g a.i. / ha] | Herbizide Wirkung in [%] 14 DAT gegen *Bromus sterilis* |
| A3 | 4<br>1 | 90<br>30 |
| (B10.5) Diuron | 5<br>45<br>15 | 0<br>30<br>10 |
| A3 + (B10.5) Diuron | 4 + 5<br>1 + 45<br>1 + 15<br>1 + 5 | $E^A$ = 95 ($E^C$ = 90) Δ = 5<br>$E^A$ = 70 ($E^C$ = 51) Δ = 19<br>$E^A$ = 85 ($E^C$ = 37) Δ = 48<br>$E^A$ = 85 ($E^C$ = 30) Δ = 55 |
| | | |
| Wirkstoff/e (Z83) | Aufwandmenge [g a.i. / ha] | Herbizide Wirkung in [%] 28 DAT gegen *Bromus sterilis* |
| A3 | 1 | 30 |
| (B10.5) Diuron | 15<br>5 | 0<br>0 |
| A3 + (B10.5) Diuron | 1 + 15<br>1 + 5 | $E^A$ = 60 ($E^C$ = 30) Δ = 30<br>$E^A$ = 40 ($E^C$ = 30) Δ = 10 |
| | | |
| Wirkstoff/e (Z83) | Aufwandmenge [g a.i. / ha] | Herbizide Wirkung in [%] 14 DAT gegen Centaurea cyanus |
| A3 | 1 | 30 |
| (B10.5) Diuron | 5 | 10 |
| A3 + (B10.5) Diuron | 1 + 5 | $E^A$ = 50 ($E^C$ = 37) Δ = 13 |
| | | |
| Wirkstoff/e (Z83) | Aufwandmenge [g a.i. / ha] | Herbizide Wirkung in [%] 14 DAT gegen *Galium aparine* |
| A3 | 1 | 50 |
| (B10.5) Diuron | 5 | 0 |
| A3 + (B10.5) Diuron | 1 + 5 | $E^A$ = 60 ($E^C$ = 50) Δ = 10 |
| Wirkstoff/e (Z83) | Aufwandmenge [g a.i. / ha] | Herbizide Wirkung in [%] 14 DAT gegen *Lamium purpureum L.* |
| A3 | 1 | 70 |
| (B10.5) Diuron | 5 | 5 |
| A3 + (B10.5) Diuron | 1 + 5 | $E^A$ = 80 ($E^C$ = 72) Δ = 9 |

(fortgesetzt)

| Wirkstoff/e (Z83) | Aufwandmenge [g a.i. / ha] | Herbizide Wirkung in [%] 14 DAT gegen *Lamium purpureum L.* |
|---|---|---|
| | | |
| Wirkstoff/e (Z83) | Aufwandmenge [g a.i. / ha] | Herbizide Wirkung in [%] 28 DAT gegen *Lamium purpureum L.* |
| A3 | 1 | 50 |
| (B10.5) Diuron | 5 | 0 |
| A3 + (B10.5) Diuron | 1 + 5 | $E^A$ = 75 ($E^C$ = 50) Δ = 25 |
| | | |
| Wirkstoff/e (Z83) | Aufwandmenge [g a.i. / ha] | Herbizide Wirkung in [%] 14 DAT gegen *Lolium rigidum* |
| A3 | 4<br>1 | 85<br>40 |
| (B10.5) Diuron | 45<br>5<br>15 | 5<br>0<br>0 |
| A3 + (B10.5) Diuron | 4 + 45<br>4+5<br>1 + 45<br>1 + 15<br>1 + 5 | $E^A$ = 93 ($E^C$ = 86) Δ = 7<br>$E^A$ = 93 ($E^C$ = 85) Δ = 8<br>$E^A$ = 70 ($E^C$ = 43) Δ = 27<br>$E^A$ = 80 ($E^C$ = 40) Δ = 40<br>$E^A$ = 70 ($E^C$ = 40) Δ = 30 |
| Wirkstoff/e (Z83) | Aufwandmenge [g a.i. / ha] | Herbizide Wirkung in [%] 28 DAT gegen *Lolium rigidum* |
| A3 | 4<br>1 | 70<br>10 |
| (B10.5) Diuron | 45<br>15<br>5 | 0<br>0<br>0 |
| A3 + (B10.5) Diuron | 4 + 45<br>4 + 15<br>4 + 5<br>1 + 45<br>1 + 15<br>1 + 5 | $E^A$ = 85 ($E^C$ = 70) Δ = 15<br>$E^A$ = 80 ($E^C$ = 70) Δ = 10<br>$E^A$ = 95 ($E^C$ = 70) Δ = 25<br>$E^A$ = 30 ($E^C$ = 10) Δ = 20<br>$E^A$ = 50 ($E^C$ = 10) Δ = 40<br>$E^A$ = 40 ($E^C$ = 10) Δ = 30 |
| | | |
| Wirkstoff/e (Z83) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B10.5) Diuron | 45<br>15<br>5 | 5<br>0<br>0 |

(fortgesetzt)

| Wirkstoff/e (Z83) | Aufwandmenge [g a.i. / ha] | Herbizide Wirkung in [%] 14 DAT gegen *Lolium rigidum* (resistenter Biotyp) |
|---|---|---|
| A3 + (B10.5) Diuron | 4 + 45<br>4 + 15<br>4 + 5<br>1 + 45<br>1 + 15<br>1 + 5 | $E^A$ = 85 ($E^C$ = 62) Δ = 23<br>$E^A$ = 85 ($E^C$ = 60) Δ = 25<br>$E^A$ = 85 ($E^C$ = 60) Δ = 25<br>$E^A$ = 60 ($E^C$ = 34) Δ = 26<br>$E^A$ = 50 ($E^C$ = 30) Δ = 20<br>$E^A$ = 40 ($E^C$ = 30) Δ = 10 |
| Wirkstoff/e (Z83) | Aufwandmenge [g a.i. / ha] | Herbizide Wirkung in [%] 28 DAT gegen *Lolium rigidum* (resistenter Biotyp) |
| A3 | 4<br>1 | 40<br>0 |
| (B10.5) Diuron | 45<br>15<br>5 | 0<br>0<br>0 |
| A3 + (B10.5) Diuron | 4 + 45<br>4 + 15<br>4+5<br>1 + 45<br>1 + 15<br>1 + 5 | $E^A$ = 75 ($E^C$ = 40) Δ = 35<br>$E^A$ = 70 ($E^C$ = 40) Δ = 30<br>$E^A$ = 70 ($E^C$ = 40) Δ = 30<br>$E^A$ = 30 ($E^C$ = 0) Δ = 30<br>$E^A$ = 30 ($E^C$ = 0) Δ = 30<br>$E^A$ = 30 ($E^C$ = 0) Δ = 30 |
| | | |
| Wirkstoff/e (Z83) | Aufwandmenge [g a.i. / ha] | Herbizide Wirkung in [%] 14 DAT gegen *Matricaria inodora* |
| A3 | 4<br>1 | 30<br>0 |
| (B10.5) Diuron | 5<br>15 | 0<br>0 |
| A3 + (B10.5) Diuron | 4 + 5<br>1 + 15 | $E^A$ = 40 ($E^C$ = 30) Δ = 10<br>$E^A$ = 20 ($E^C$ = 0) Δ = 20 |
| | | |
| Wirkstoff/e (Z83) | Aufwandmenge [g a.i. / ha] | Herbizide Wirkung in [%] 28 DAT gegen *Matricaria inodora* |
| A3 | 1 | 0 |
| (B10.5) Diuron | 15 | 0 |
| A3 + (B10.5) Diuron | 1 + 15 | $E^A$ = 20 ($E^C$ = 0) Δ = 20 |
| Wirkstoff/e (Z83) | Aufwandmenge [g a.i. / ha] | Herbizide Wirkung in [%] 14 DAT gegen *Phalaris minor* |
| A3 | 16<br>4<br>1 | 85<br>85<br>20 |
| (B10.5) Diuron | 45<br>15<br>5 | 0<br>0<br>0 |

(fortgesetzt)

| Wirkstoff/e (Z83) | Aufwandmenge [g a.i. / ha] | Herbizide Wirkung in [%] 14 DAT gegen *Phalaris minor* |
|---|---|---|
| A3 + (B10.5) Diuron | 16 + 45<br>16 + 15<br>16 + 5<br>4 + 45<br>4 + 15<br>4 + 5<br>1 + 45<br>1 + 15<br>1 + 5 | $E^A$ = 95 ($E^C$ = 85) Δ = 10<br>$E^A$ = 95 ($E^C$ = 85) Δ = 10<br>$E^A$ = 95 ($E^C$ = 85) Δ = 10<br>$E^A$ = 95 ($E^C$ = 85) Δ = 10<br>$E^A$ = 95 ($E^C$ = 85) Δ = 10<br>$E^A$ = 95 ($E^C$ = 85) Δ = 10<br>$E^A$ = 60 ($E^C$ = 20) Δ = 40<br>$E^A$ = 40 ($E^C$ = 20) Δ = 20<br>$E^A$ = 50 ($E^C$ = 20) Δ = 30 |
| | | |
| Wirkstoff/e (Z83) | Aufwandmenge [g a.i. / ha] | Herbizide Wirkung in [%] 28 DAT gegen *Phalaris minor* |
| A3 | 16<br>4<br>1 | 85<br>85<br>10 |
| (B 10.5) Diuron | 45<br>5<br>15 | 0<br>0<br>0 |
| A3 + (B10.5) Diuron | 16 + 45<br>16 + 5<br>4 + 45<br>4 + 15<br>4 + 5<br>1 + 45<br>1 + 15<br>1 + 5 | $E^A$ = 98 ($E^C$ = 85) Δ = 13<br>$E^A$ = 98 ($E^C$ = 85) Δ = 13<br>$E^A$ = 98 ($E^C$ = 85) Δ = 13<br>$E^A$ = 98 ($E^C$ = 85) Δ = 13<br>$E^A$ = 95 ($E^C$ = 85) Δ = 10<br>$E^A$ = 30 ($E^C$ = 10) Δ = 20<br>$E^A$ = 30 ($E^C$ = 10) Δ = 20<br>$E^A$ = 20 ($E^C$ = 10) Δ = 10 |
| Wirkstoff/e (Z83) | Aufwandmenge [g a.i. / ha] | Herbizide Wirkung in [%] 14 DAT gegen *Poa annua L.* |
| A3 | 16<br>4<br>1 | 93<br>85<br>50 |
| (B10.5) Diuron | 45<br>15<br>5 | 0<br>0<br>0 |
| A3 + (B10.5) Diuron | 16 + 45<br>16 + 15<br>16 + 5<br>4 + 45<br>4 + 15<br>4 + 5<br>1 + 45<br>1 + 15<br>1 + 5 | $E^A$ = 98 ($E^C$ = 93) Δ = 5<br>$E^A$ = 98 ($E^C$ = 93) Δ = 5<br>$E^A$ = 98 ($E^C$ = 93) Δ = 5<br>$E^A$ = 98 ($E^C$ = 85) Δ = 13<br>$E^A$ = 98 ($E^C$ = 85) Δ = 13<br>$E^A$ = 98 ($E^C$ = 85) Δ = 13<br>$E^A$ = 75 ($E^C$ = 50) Δ = 25<br>$E^A$ = 80 ($E^C$ = 50) Δ = 30<br>$E^A$ = 85 ($E^C$ = 50) Δ = 35 |
| | | |

(fortgesetzt)

| Wirkstoff/e (Z83) | Aufwandmenge [g a.i. / ha] | Herbizide Wirkung in [%] 28 DAT gegen *Poa annua L.* |
|---|---|---|
| A3 | 16<br>4<br>1 | 85<br>80<br>20 |
| (B10.5) Diuron | 45<br>15<br>5 | 0<br>0<br>0 |
| A3 + (B10.5) Diuron | 16 + 45<br>16 + 15<br>16 + 5<br>4 + 45<br>4 + 15<br>4 + 5<br>1 + 45<br>1 + 15<br>1 + 5 | $E^A$ = 98 ($E^C$ = 85) Δ = 13<br>$E^A$ = 98 ($E^C$ = 85) Δ = 13<br>$E^A$ = 100 ($E^C$ = 85) Δ = 15<br>$E^A$ = 98 ($E^C$ = 80) Δ = 18<br>$E^A$ = 98 ($E^C$ = 80) Δ = 18<br>$E^A$ = 98 ($E^C$ = 80) Δ = 18<br>$E^A$ = 60 ($E^C$ = 20) Δ = 40<br>$E^A$ = 50 ($E^C$ = 20) Δ = 30<br>$E^A$ = 70 ($E^C$ = 20) Δ = 50 |
| Wirkstoff/e (Z83) | Aufwandmenge [g a.i. / ha] | Herbizide Wirkung in [%] 14 DAT gegen *Veronica hederifolia* |
| A3 | 4<br>1 | 30<br>10 |
| (B10.5) Diuron | 5<br>45 | 0<br>0 |
| A3 + (B10.5) Diuron | 4 + 5<br>1 + 45<br>1 + 5 | $E^A$ = 60 ($E^C$ = 30) Δ = 30<br>$E^A$ = 30 ($E^C$ = 10) Δ = 20<br>$E^A$ = 30 ($E^C$ = 10) Δ = 20 |
| | | |
| Wirkstoff/e (Z83) | Aufwandmenge [g a.i. / ha] | Herbizide Wirkung in [%] 28 DAT gegen *Veronica hederifolia* |
| A3 | 1 | 30 |
| (B10.5) Diuron | 15<br>5 | 0<br>0 |
| A3 + (B10.5) Diuron | 1 + 15<br>1 + 5 | $E^A$ = 50 ($E^C$ = 30) Δ = 20<br>$E^A$ = 50 ($E^C$ = 30) Δ = 20 |
| | | |
| Wirkstoff/e (Z83) | Aufwandmenge [g a.i. / ha] | Herbizide Wirkung in [%] 14 DAT gegen *Viola tricolor* |
| A3 | 1 | 60 |
| (B10.5) Diuron | 5 | 10 |
| A3 + (B10.5) Diuron | 1 + 5 | $E^A$ = 70 ($E^C$ = 64) Δ = 6 |
| Wirkstoff/e (Z83) | Aufwandmenge [g a.i. / ha] | Herbizide Wirkung in [%] 28 DAT gegen *Viola tricolor* |
| A3 | 16<br>1 | 70<br>30 |

(fortgesetzt)

| Wirkstoff/e (Z83) | Aufwandmenge [g a.i. / ha] | Herbizide Wirkung in [%] 28 DAT gegen *Viola tricolor* |
|---|---|---|
| (B10.5) Diuron | 5<br>45<br>15 | 0<br>0<br>0 |
| A3 + (B10.5) Diuron | 16 + 5<br>1 + 45<br>1 + 15<br>1 + 5 | $E^A$ = 75 ($E^C$ = 70) Δ = 5<br>$E^A$ = 60 ($E^C$ = 30) Δ = 30<br>$E^A$ = 60 ($E^C$ = 30) Δ = 30<br>$E^A$ = 70 ($E^C$ = 30) Δ = 40 |

Tabelle 3.10: Synergistischer Effekt (Δ) für herbizide binäre Zusammensetzungen im Nachauflauf enthaltend Herbizide aus der Gruppe B11

| Wirkstoff/e | Aufwandmenge [g a.i./ha] | Herbizide Wirkung 28 DAT [%] gegen *Brachiaria plantaginea* |
|---|---|---|
| (B11.2) Atrazin | 1000 | 0 |
| A3 | 100 | 82 |
| A3 + (B11.2) Atrazin | 100 + 1000 | $E^A$ = 88 ($E^C$ = 82)<br>Δ 7 |
| | | |
| Wirkstoff/e | Aufwandmenge [g a.i./ha] | Herbizide Wirkung 37 DAT [%] gegen *Digitaria sanguinalis* |
| (B11.2) Atrazin | 1000 | 5 |
| A3 | 100 | 94 |
| A3 + (B11.2) Atrazin | 100 + 1000 | $E^A$ = 99 ($E^C$ = 94)<br>Δ 5 |
| Wirkstoff/e | Aufwandmenge [g a.i./ha] | Herbizide Wirkung 37 DAT [%] gegen *Ipomoea hederacea* |
| (B11.2) Atrazin | 1000 | 10 |
| A3 | 100 | 8 |
| A3 + (B11.2) Atrazin | 100<br>+ 1000 | $E^A$ = 35 ($E^C$ = 17,2)<br>Δ 17.8 |
| | | |
| Wirkstoff/e | Aufwandmenge [g a.i./ha] | Herbizide Wirkung 21 DAT [%] gegen *Abutilon theophrasti* |
| (B11.2) Atrazine | 450<br>150<br>50 | 20<br>15<br>0 |
| A3 | 15<br>1,7 | 45<br>10 |
| A3 + (B11.2) Atrazine | 1,7 + 450<br>15 + 150<br>15 + 50 | $E^A$ = 65 ($E^C$ = 28) Δ 37<br>$E^A$ = 75 ($E^C$ = 53,25) Δ 22<br>$E^A$ = 55 ($E^C$ = 45) Δ 10 |
| | | |

(fortgesetzt)

| Wirkstoff/e | Aufwandmenge [g a.i./ha] | Herbizide Wirkung 21 DAT [%] gegen *Amaranthus palmeri* |
|---|---|---|
| (B11.2) Atrazine | 50 | 70 |
| A3 | 5 | 0 |
| A3 + (B11.2) Atrazine | 5 + 50 | $E^A$ = 30 ($E^C$ = 15) ∆ 15 |
| | | |
| Wirkstoff/e | Aufwandmenge [g a.i./ha]a | Herbizide Wirkung 21 DAT [%] gegen *Bidens pilosa* |
| (B11.2) Atrazine | 450 | 15 |
| A3 | 5<br>1,7 | 10<br>0 |
| A3 + (B11.2) Atrazine | 5 + 450<br>1,7 + 450 | $E^A$ = 65 ($E^C$ = 24) ∆ 41<br>$E^A$ = 45 ($E^C$ = 15) ∆ 30 |
| Wirkstoff/e (Z86) | Aufwandmenge [g a.i./ha] | Herbizide Wirkung 28 DAT [%] gegen *Brachiaria plantaginea* |
| (B11.6) Indaziflam | 50 | 0 |
| A3 | 100 | 82 |
| A3 + (B11.6) Indaziflam | 100 + 50 | $E^A$ = 96 ($E^C$ = 82)<br>∆ 14 |
| | | |
| Wirkstoff/e (Z86) | Aufwandmenge [g a.i./ha] | Herbizide Wirkung 28 DAT [%] gegen *Digitaria horizontalis* |
| (B11.6) Indaziflam | 50 | 3 |
| A3 | 100 | 96 |
| A3 + (B11.6) Indaziflam | 100 + 50 | $E^A$ = 100 ($E^C$ = 96)<br>∆ 4 |
| | | |
| Wirkstoff/e (Z86) | Aufwandmenge [g a.i./ha] | Herbizide Wirkung 28 DAT [%] gegen *Brachiaria decumbens* |
| (B11.6) Indaziflam | 50 | 15 |
| A3 | 100 | 87 |
| A3 + (B11.6) Indaziflam | 100 + 50 | $E^A$ = 100 ($E^C$ = 89)<br>∆ 11 |
| | | |
| Wirkstoff/e (Z86) | Aufwandmenge [g a.i./ha] | Herbizide Wirkung 28 DAT [%] gegen *Panicum maximum* |
| (B11.6) Indaziflam | 50 | 0 |
| A3 | 100 | 82 |
| A3 + (B11.6) Indaziflam | 100 + 50 | $E^A$ = 87 ($E^C$ = 82)<br>∆ 5 |

(fortgesetzt)

| Wirkstoff/e (Z86) | Aufwandmenge [g a.i. / ha] | Herbizide Wirkung in [%] 14 DAT gegen *Alopecurus myosuroides* |
|---|---|---|
| A3 | 4<br>1 | 75<br>30 |
| (B11.6) Indaziflam | 36<br>12<br>4 | 40<br>30<br>0 |
| A3 + (B11.6) Indaziflam | 4 + 36<br>4 + 12<br>4 + 4<br>1 + 36<br>1 + 12<br>1 + 4 | $E^A$ = 95 ($E^C$ = 85) Δ = 10<br>$E^A$ = 90 ($E^C$ = 83) Δ = 7<br>$E^A$ = 95 ($E^C$ = 75) Δ = 20<br>$E^A$ = 80 ($E^C$ = 58) Δ = 22<br>$E^A$ = 75 ($E^C$ = 51) Δ = 24<br>$E^A$ = 85 ($E^C$ = 30) Δ = 55 |
| | | |
| Wirkstoff/e (Z86) | Aufwandmenge [g a.i. / ha] | Herbizide Wirkung in [%] 28 DAT gegen *Alopecurus myosuroides* |
| A3 | 4<br>1 | 60<br>10 |
| (B11.6) Indaziflam | 36<br>12<br>4 | 70<br>20<br>0 |
| A3 + (B11.6) Indaziflam | 4 + 36<br>4 + 12<br>4+4<br>1 + 12<br>1 + 4 | $E^A$ = 98 ($E^C$ = 88) Δ = 10<br>$E^A$ = 85 ($E^C$ = 68) Δ = 17<br>$E^A$ = 90 ($E^C$ = 60) Δ = 30<br>$E^A$ = 50 ($E^C$ = 28) Δ = 22<br>$E^A$ = 60 ($E^C$ = 10) Δ = 50 |
| | | |
| Wirkstoff/e (Z86) | Aufwandmenge [g a.i. / ha] | Herbizide Wirkung in [%] 14 DAT gegen *Bromus sterilis* |
| A3 | 1 | 30 |
| (B11.6) Indaziflam | 36<br>12<br>4 | 70<br>50<br>30 |
| A3 + (B11.6) Indaziflam | 1 + 36<br>1 + 12<br>1 + 4 | $E^A$ = 93 ($E^C$ = 79) Δ = 14<br>$E^A$ = 85 ($E^C$ = 65) Δ = 20<br>$E^A$ = 90 ($E^C$ = 51) Δ = 39 |
| Wirkstoff/e (Z86) | Aufwandmenge [g a.i. / ha] | Herbizide Wirkung in [%] 28 DAT gegen *Bromus sterilis* |
| A3 | 1 | 30 |
| (B11.6) Indaziflam | 4 | 30 |
| A3 + (B11.6) Indaziflam | 1 + 4 | $E^A$ = 60 ($E^C$ = 51) Δ = 9 |
| | | |

(fortgesetzt)

| Wirkstoff/e (Z86) | Aufwandmenge [g a.i. / ha] | Herbizide Wirkung in [%] 14 DAT gegen *Lolium rigidum* |
|---|---|---|
| A3 | 4<br>1 | 85<br>40 |
| (B11.6) Indaziflam | 4<br>36<br>12 | 10<br>50<br>40 |
| A3 + (B11.6) Indaziflam | 4+4<br>1 + 36<br>1 + 12<br>1 + 4 | $E^A$ = 95 ($E^C$ = 87) Δ = 8<br>$E^A$ = 85 ($E^C$ = 70) Δ = 15<br>$E^A$ = 80 ($E^C$ = 64) Δ = 16<br>$E^A$ = 75 ($E^C$ = 46) Δ = 29 |
| | | |
| Wirkstoff/e (Z86) | Aufwandmenge [g a.i. / ha] | Herbizide Wirkung in [%] 28 DAT gegen *Lolium rigidum* |
| A3 | 4<br>1 | 70<br>10 |
| (B11.6) Indaziflam | 12<br>4 | 60<br>30 |
| A3 + (B11.6) Indaziflam | 4 + 12<br>4+4<br>1 + 12<br>1 + 4 | $E^A$ = 98 ($E^C$ = 88) Δ = 10<br>$E^A$ = 98 ($E^C$ = 79) Δ = 19<br>$E^A$ = 70 ($E^C$ = 64) Δ = 6<br>$E^A$ = 50 ($E^C$ = 37) Δ = 13 |
| Wirkstoff/e (Z86) | Aufwandmenge [g a.i. / ha] | Herbizide Wirkung in [%] 14 DAT gegen *Lolium rigidum* (resistenter Biotyp) |
| A3 | 4<br>1 | 60<br>30 |
| (B11.6) Indaziflam | 36<br>4<br>12 | 50<br>20<br>40 |
| A3 + (B11.6) Indaziflam | 4 + 36<br>4+4<br>1 + 36<br>1 + 12<br>1 + 4 | $E^A$ = 95 ($E^C$ = 80) Δ = 15<br>$E^A$ = 85 ($E^C$ = 68) Δ = 17<br>$E^A$ = 80 ($E^C$ = 65) Δ = 15<br>$E^A$ = 70 ($E^C$ = 58) Δ = 12<br>$E^A$ = 60 ($E^C$ = 44) Δ = 16 |
| | | |
| Wirkstoff/e (Z86) | Aufwandmenge [g a.i. / ha] | Herbizide Wirkung in [%] 28 DAT gegen *Lolium rigidum* (resistenter Biotyp) |
| A3 | 4<br>1 | 40<br>0 |
| (B11.6) Indaziflam | 36<br>4 | 80<br>30 |
| A3 + (B11.6) Indaziflam | 4 + 36<br>4+4<br>1 + 36<br>1 + 4 | $E^A$ = 98 ($E^C$ = 88) Δ = 10<br>$E^A$ = 80 ($E^C$ = 58) Δ = 22<br>$E^A$ = 85 ($E^C$ = 80) Δ = 5<br>$E^A$ = 40 ($E^C$ = 30) Δ = 10 |

(fortgesetzt)

| Wirkstoff/e (Z86) | Aufwandmenge [g a.i. / ha] | Herbizide Wirkung in [%] 28 DAT gegen *Lolium rigidum* (resistenter Biotyp) |
|---|---|---|
| | | |
| Wirkstoff/e (Z86) | Aufwandmenge [g a.i. / ha] | Herbizide Wirkung in [%] 14 DAT gegen *Matricaria inodora* |
| A3 | 1 | 0 |
| (B11.6) Indaziflam | 36 | 90 |
| A3 + (B11.6) Indaziflam | 1 + 36 | 95 ($E^C$ = 90) Δ = 5 |
| Wirkstoff/e (Z86) | Aufwandmenge [g a.i. / ha] | Herbizide Wirkung in [%] 14 DAT gegen *Phalaris minor* |
| A3 | 16<br>4<br>1 | 85<br>85<br>20 |
| (B11.6) Indaziflam | 4<br>36 | 10<br>75 |
| A3 + (B11.6) Indaziflam | 16 + 4<br>4+4<br>1 + 36<br>1 + 4 | $E^A$ = 95 ($E^C$ = 87) Δ = 8<br>$E^A$ = 95 ($E^C$ = 87) Δ = 8<br>$E^A$ = 90 ($E^C$ = 80) Δ = 10<br>$E^A$ = 40 ($E^C$ = 28) Δ = 12 |
| | | |
| Wirkstoff/e (Z86) | Aufwandmenge [g a.i. / ha] | Herbizide Wirkung in [%] 28 DAT gegen *Phalaris minor* |
| A3 | 16<br>4<br>1 | 85<br>85<br>10 |
| (B11.6) Indaziflam | 4<br>36 | 30<br>80 |
| A3 + (B11.6) Indaziflam | 16 + 4<br>4+4<br>1 + 36 | $E^A$ = 98 ($E^C$ = 90) Δ = 8<br>$E^A$ = 95 ($E^C$ = 90) Δ = 5<br>$E^A$ = 98 ($E^C$ = 82) Δ = 16 |
| | | |
| Wirkstoff/e (Z86) | Aufwandmenge [g a.i. / ha] | Herbizide Wirkung in [%] 14 DAT gegen *Poa annua L.* |
| A3 | 4<br>1 | 85<br>50 |
| (B11.6) Indaziflam | 4<br>36<br>12 | 30<br>85<br>85 |
| A3 + (B11.6) Indaziflam | 4+4<br>1 + 36<br>1 + 12<br>1 + 4 | $E^A$ = 98 ($E^C$ = 90) Δ = 8<br>$E^A$ = 98 ($E^C$ = 93) Δ = 5<br>$E^A$ = 98 ($E^C$ = 93) Δ = 5<br>$E^A$ = 90 ($E^C$ = 65) Δ = 25 |

(fortgesetzt)

| Wirkstoff/e (Z86) | Aufwandmenge [g a.i. / ha] | Herbizide Wirkung in [%] 28 DAT gegen *Poa annua L.* |
|---|---|---|
| A3 | 16<br>4<br>1 | 85<br>80<br>20 |
| (B11.6) Indaziflam | 4<br>36<br>12 | 30<br>85<br>85 |
| A3 + (B11.6) Indaziflam | 16 + 4<br>4+4<br>1 + 36<br>1 + 12<br>1 + 4 | $E^A$ = 100 ($E^C$ = 90) Δ = 10<br>$E^A$ = 98 ($E^C$ = 86) Δ = 12<br>$E^A$ = 100 ($E^C$ = 88) Δ = 12<br>$E^A$ = 100 ($E^C$ = 88) Δ = 12<br>$E^A$ = 80 ($E^C$ = 44) Δ = 36 |
| | | |
| Wirkstoff/e (Z87) | Aufwandmenge [g a.i./ha] | Herbizide Wirkung 21 DAT [%] gegen *Brachiaria platyphylla* |
| (B11.8) Metribuzin | 50 | 25 |
| A3 | 1,7 | 20 |
| A3 + (B11.8) Metribuzin | 1,7 + 50 | $E^A$ = 50 ($E^C$ = 40) Δ 10 |
| | | |
| Wirkstoff/e (Z87) | Aufwandmenge [g a.i./ha] | Herbizide Wirkung 21 DAT [%] gegen *Digitaria sanguinalis* |
| (B11.8) Metribuzin | 50 | 20 |
| A3 | 1,7 | 10 |
| A3 + (B11.8) Metribuzin | 1,7 + 50 | $E^A$ = 60 ($E^C$ = 28) Δ 32 |

Tabelle 3.10: Synergistischer Effekt (Δ) für herbizide ternäre Zusammensetzungen im Nachauflauf enthaltend Herbizide aus der Gruppe B5 und B10

| Wirkstoff/e | Aufwandmenge [g a.i./ ha] | Herbizide Wirkung 27 DAT [%] gegen *Chenopodium album.* |
|---|---|---|
| (B5.27) Fluridone + (B10.7) Fluometuron | 14,4 + 72 | 28 |
| A3 | 100 | 85 |
| A3 + (B5.27) Fluridone + (B10.7) Fluometuron | 100 + 14,4 + 72 | $E^A$ = 97 ($E^C$ = 89)<br>Δ 8 |
| | | |
| Wirkstoff/e | Aufwandmenge | Herbizide Wirkung 37 DAT [%] gegen *Echinochloa crus-galli* |
| (B5.27) Fluridone + (B10.7) Fluometuron | 14,4 + 72 g ae/ha | 0 |
| A3 | 100 g a.i./ ha | 93 |
| A3 + (B5.27) Fluridone + (B10.7) Fluometuron | 100 g a.i./ ha + 14,4 + 72 g ae/ha | $E^A$ = 96 ($E^C$ = 93)<br>Δ 3 |

## Patentansprüche

**1.** Zusammensetzungen enthaltend herbizid wirksame Verbindungen (A) und (B) wobei

(A) für eine oder mehrere Verbindungen der allgemeinen Formel (I) oder deren agrochemisch verträglichen Salze [Herbizide (A)] steht,

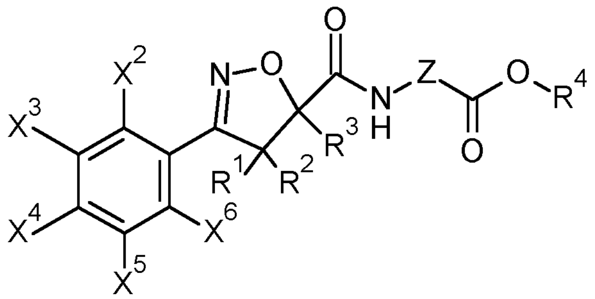

(I)

worin

$R^1$ und $R^2$ jeweils Wasserstoff bedeuten;
$R^3$ durch jeweils m Reste aus der Gruppe bestehend aus Fluor, Chlor, Cyano und ($C_1$-$C_2$)-Alkoxy substituiertes ($C_1$-$C_3$)-Alkyl, ($C_3$-$C_4$)-Cycloalkyl, ($C_2$-$C_3$)-Alkenyl, ($C_2$-$C_3$)-Alkinyl oder ($C_1$-$C_3$)-Alkoxy bedeutet;
$R^4$ Wasserstoff bedeutet,
oder
durch jeweils m Reste aus der Gruppe bestehend aus Fluor, Chlor, Brom, Cyano, ($C_1$-$C_4$)-Alkoxy, Hydroxy und Aryl substituiertes ($C_1$-$C_6$)-Alkyl, ($C_3$-$C_6$)-Cycloalkyl, ($C_3$-$C_6$)-Cycloalkyl-($C_1$-$C_6$)-Alkyl, ($C_2$-$C_6$)-Alkenyl, ($C_5$-$C_6$)-Cycloalkenyl oder ($C_2$-$C_6$)-Alkinyl bedeutet;
Z für eine Gruppe Z-1, Z-2, Z-8, Z-9, Z-11 oder Z13 steht, wobei Z-1, Z-2, Z-8, Z-9, Z-11 und Z13 folgende Bedeutung haben:

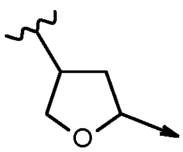

Z-1

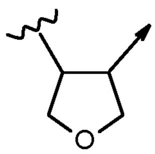

Z-2

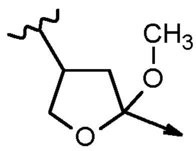

Z-8

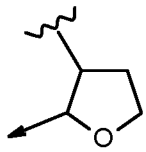

Z-9

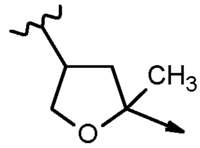

Z-11

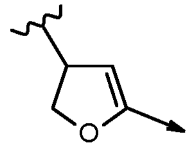

Z-13

worin der Pfeil jeweils für eine Bindung zur Gruppe C=O der Formel (I) steht;

$X^2$, $X^4$ und $X^6$ unabhängig voneinander Wasserstoff oder Fluor bedeuten;
$X^3$ und unabhängig voneinander Wasserstoff, Fluor, Chlor oder Cyano, oder
$X^5$ jeweils durch m Reste aus der Gruppe bestehend aus Fluor und Chlor substituiertes ($C_1$-$C_3$)-Alkyl, ($C_1$-$C_3$)-Alkoxy, bedeuten; und
m die Laufzahl 0, 1, 2 oder 3 beträgt;

und
(B) für ein oder mehrere Herbizide [Komponente (B)] aus der Gruppe der herbiziden Wirkstoffe (B1) bis (B11)

steht, worin

(B1) für herbizide Wirkstoffe aus der Gruppe der 1,3-Diketoverbindungen steht, ausgewählt aus

| | |
|---|---|
| (B1.1) | Alloxydim, |
| (B1.2) | Bicyclopyrone, |
| (B1.3) | Butroxydim, |
| (B1.4) | Clethodim, |
| (B1.5) | Cycloxydim, |
| (B1.6) | Fenquinotrione, |
| (B1.7) | Mesotrione, |
| (B1.8) | Pinoxaden, |
| (B1.9) | Profoxydim, |
| (B1.10) | Sethoxydim, |
| (B1.11) | Sulcotrione, |
| (B1.12) | SYP-9121 |
| (B1.13) | Tefuryltrione, |
| (B1.14) | Tembotrione, |
| (B1.15) | Tepraloxydim, |
| (B1.16) | Tralkoxydim, |
| (B1.17) | Y13161, |
| (B1.18) | Y13287; |

(B2) für herbizide Wirkstoffe aus der Gruppe der (Sulfon)Amide steht, ausgewählt aus

| | |
|---|---|
| (B2.1) | Acetochlor, |
| (B2.2) | Alachlor, |
| (B2.3) | Amidosulfuron, |
| (B2.4) | Asulam, |
| (B2.5) | Azimsulfuron, |
| (B2.6) | Beflubutamid, |
| (B2.7) | Bensulfuron, |
| (B2.8) | Butachlor, |
| (B2.9) | Carbetamide, |
| (B2.10) | Chlorimuron, |
| (B2.11) | Chlorpropham, |
| (B2.12) | Chlorsulfuron, |
| (B2.13) | Cinosulfuron, |
| (B2.14) | Cloransulam, |
| (B2.15) | Cyclosulfamuron, |
| (B2.16) | Desmedipham, |
| (B2.17) | Diclosulam, |
| (B2.18) | Diflufenican, |
| (B2.19) | Dimethachlor, |
| (B2.20) | Dimethenamid, |
| (B2.21) | Esprocarb, |
| (B2.22) | Ethametsulfuron, |
| (B2.23) | Ethoxysulfuron, |
| (B2.24) | Flazasulfuron, |
| (B2.25) | Florasulam, |
| (B2.26) | Flucarbazone, |
| (B2.27) | Flucetosulfuron, |
| (B2.28) | Flufenacet, |

(fortgesetzt)

| | |
|---|---|
| (B2.29) | Flumetsulam, |
| (B2.30) | Flupyrsulfuron, |
| (B2.31) | Foramsulfuron, |
| (B2.32) | Halosulfuron, |
| (B2.33) | Imazosulfuron, |
| (B2.34) | Iodosulfuron, |
| (B2.35) | Ipfencarbazone, |
| (B2.36) | Mefenacet, |
| (B2.37) | Mesosulfuron, |
| (B2.38) | Metazachlor, |
| (B2.39) | Metazosulfuron, |
| (B2.40) | Metolachlor, |
| (B2.41) | Metosulam, |
| (B2.42) | Metsulfuron, |
| (B2.43) | Nicosulfuron, |
| (B2.44) | Orthosulfamuron, |
| (B2.45) | Oxasulfuron, |
| (B2.46) | Penoxsulam, |
| (B2.47) | Pethoxamide, |
| (B2.48) | Phenmedipham, |
| (B2.49) | Picolinafen, |
| (B2.50) | Pretilachlor, |
| (B2.51) | Primisulfuron, |
| (B2.52) | Propachlor, |
| (B2.53) | Propanil, |
| (B2.54) | Propham; |
| (B2.55) | Propisochlor, |
| (B2.56) | Propoxycarbazone, |
| (B2.57) | Propyrisulfuron, |
| (B2.58) | Propyzamide, |
| (B2.59) | Prosulfocarb, |
| (B2.60) | Prosulfuron, |
| (B2.61) | Pyrazosulfuron, |
| (B2.62) | Pyroxsulam, |
| (B2.63) | Rimsulfuron, |
| (B2.64) | S-metolachlor, |
| (B2.65) | Sulfometuron, |
| (B2.66) | Sulfosulfuron, |
| (B2.67) | Thenylchlor, |
| (B2.68) | Thiencarbazone, |
| (B2.69) | Thifensulfuron, |
| (B2.70) | Tri-allat |
| (B2.71) | Triasulfuron, |
| (B2.72) | Tribenuron, |
| (B2.73) | Trifloxysulfuron, |
| (B2.74) | Triflusulfuron, |
| (B2.75) | Tritosulfuron, |
| (B2.76) | Esprocarb, |
| (B2.77) | Profluazol, |
| (B2.78) | Tri-allate; |

(B3) für herbizide Wirkstoffe aus der Gruppe der Arylnitrile steht, ausgewählt aus

(B3.1) Bromoxynil,
(B3.2) Chlorthiamid,
(B3.3) Dichlobenil,
(B3.4) Ioxynil,
(B3.5) Pyraclonil;

(B4) für herbizide Wirkstoffe aus der Gruppe der Azole steht, ausgewählt aus

(B4.1) Amicarbazone,
(B4.2) Amitrole,
(B4.3) Azafenidin,
(B4.4) Benzofenap,
(B4.5) Benzuofucaotong
(B4.6) Biscarfentrazone
(B4.7) Cafenstrole,
(B4.8) Carfentrazone,
(B4.9) Fentrazamide,
(B4.10) Imazamethabenz,
(B4.11) Imazamox,
(B4.12) Imazapic,
(B4.13) Imazapyr,
(B4.14) Imazaquin,
(B4.15) Imazethapyr,
(B4.16) Isouron,
(B4.17) Isoxaben,
(B4.18) Isoxaflutole,
(B4.19) Oxadiargyl,
(B4.20) Oxadiazon,
(B4.21) Pyraflufen,
(B4.22) Pyrasulfotole,
(B4.23) Pyrazolynate,
(B4.24) Pyrazoxyfen,
(B4.25) Pyroxasulfone,
(B4.26) Sulfentrazone,
(B4.27) Tolpyralate,
(B4.28) Topramezone,
(B4.29) Triazolesulcotrione (QYR-301),
(B4.30) QYM-201,
(B4.31) Bencarbazone,
(B4.32) Fluazolate,
(B4.33) Flupoxam,
(B4.34) Isoxachlortole;

(B5) für weitere herbizide Wirkstoffe steht, ausgewählt aus

(B5.1) Aminocyclopyrachlor,
(B5.2) Aminopyralid,
(B5.3) Benazolin-ethyl,
(B5.4) Benfluralin,
(B5.5) Bentazone,

(fortgesetzt)

| | |
|---|---|
| (B5.6) | Benzobicyclon, |
| (B5.7) | Bixlozone |
| (B5.8) | Bromofenoxim, |
| (B5.9) | Butralin, |
| (B5.10) | Chloridazon/Pyrazon, |
| (B5.11) | Chlorthal, |
| (B5.12) | Cinidon-ethyl, |
| (B5.13) | Cinmethylin, |
| (B5.14) | Clomazone, |
| (B5.15) | Cyclopyrimorat |
| (B5.16) | Dinitramine, |
| (B5.17) | Diquat, |
| (B5.18) | Dithiopyr, |
| (B5.19) | Essigsäure, |
| (B5.20) | Ethalfluralin, |
| (B5.21) | Ethofumesate, |
| (B5.22) | Flamprop, |
| (B5.23) | Florpyrauxifen, |
| (B5.24) | Flufenpyr, |
| (B5.25) | Flumiclorac, |
| (B5.26) | Flumioxazin, |
| (B5.27) | Fluridone, |
| (B5.28) | Flurochloridone, |
| (B5.29) | Flurtamone, |
| (B5.30) | Fluthiacet-methyl, |
| (B5.31) | Halauxifen, |
| (B5.32) | Indanofan, |
| (B5.33) | Norflurazon, |
| (B5.34) | Oleinsäure |
| (B5.35) | Oryzalin, |
| (B5.36) | Oxaziclomefone, |
| (B5.37) | Paraquat, |
| (B5.38) | Pelargonsäure, |
| (B5.39) | Pendimethalin, |
| (B5.40) | Pentoxazone, |
| (B5.41) | Pyridafol, |
| (B5.42) | Pyridate, |
| (B5.43) | Tetflupyrolimet, |
| (B5.44) | Thiazopyr, |
| (B5.45) | Triafamone, |
| (B5.46) | Trifluralin, |
| (B5.47) | 4-Amino-3-chloro-5-fluoro-6-(7-fluoro-1H-indol-6-yyl)pyridine-2-carbonsäure, |
| (B5.48) | Cyclopyrimorate, |
| (B5.49) | Diquat, |
| (B5.50) | Oxaziclomefone, |
| (B5.51) | Pentanochlor, |
| (B5.52) | Tebutam, |
| (B5.53) | Thidiazimin; |

(B6) für herbizide Wirkstoffe aus der Gruppe der (Het)Arylcarbonsäuren steht, ausgewählt aus

(B6.1) Chloramben,
(B6.2) Clopyralid,
(B6.3) Dicamba,
(B6.4) Fluroxypyr,
(B6.5) Picloram,
(B6.6) Quinclorac,
(B6.7) Quinmerac,
(B6.8) TBA,
(B6.9) Trichlopyr;

(B7) für herbizide Wirkstoffe aus der Gruppe der organischen Phosphorverbindungen steht, ausgewählt aus

(B7.1) Anilofos,
(B7.2) Bialaphos,
(B7.3) Butamifos,
(B7.4) Glufosinate,
(B7.5) Glyphosate,
(B7.6) Piperophos,
(B7.7) Sulfosate,
(B7.8) Amiprofos;

(B8) für herbizide Wirkstoffe aus der Gruppe der Phenylether steht, ausgewählt aus

(B8.1) 2,4-D,
(B8.2) 2,4-DB,
(B8.3) 2,4-DP,
(B8.4) Acifluorfen,
(B8.5) Aclonifen,
(B8.6) Bifenox,
(B8.7) Chlomethoxyfen,
(B8.8) Clodinafop-propargyl,
(B8.9) Clomeprop,
(B8.10) Cyhalofop,
(B8.11) Diclofop,
(B8.12) Ethoxyfen,
(B8.13) Fenoxaprop,
(B8.14) Fluazifop,
(B8.15) Fluoroglycofen,
(B8.16) Fomesafen,
(B8.17) Halosafen,
(B8.18) Haloxyfop,
(B8.19) Lactofen,
(B8.20) MCPA,
(B8.21) MCPB,
(B8.22) Mecoprop,
(B8.23) Metamifop,
(B8.24) Oxyfluorfen,
(B8.25) Propaquizafop,
(B8.26) Quizalofop,
(B8.27) Quizalofop-p,
(B8.28) Benzfendizone;

(B9) für herbizide Wirkstoffe aus der Gruppe der Pyrimidine steht, ausgewählt aus

(B9.1) Bispyrac-sodium,
(B9.2) Bromacil,
(B9.3) Butafenacil,
(B9.4) Lenacil,
(B9.5) Pyribenzoxim,
(B9.6) Pyriftalid,
(B9.7) Pyriminobac,
(B9.8) Pyrimisulfan,
(B9.9) Pyrithiobac-sodium,
(B9.10) Saflufenacil,
(B9.11) Terbacil,
(B9.12) Tiafenacil,
(B9.13) Trifludimoxazin,
(B9.14) Ethyl[3-[2-chloro-4-fluoro-5-(1-methyl-6-trifluoromethyl-2,4-dioxo-1,2,3,4-tetrahydropyrimidin-3 -yl) phenoxy] -2-pyridyloxy] acetat;

(B10) für herbizide Wirkstoffe aus der Gruppe der (Thio)harnstoffe steht, ausgewählt aus

(B10.1) Chlorobromuron,
(B10.2) Chlorotoluron,
(B10.3) Daimuron,
(B10.4) Dimefuron,
(B10.5) Diuron,
(B10.6) Diflufenzopyr
(B10.7) Fluometuron,
(B10.8) Isoproturon,
(B10.9) Linuron,
(B10.10) Methabenzthiazuron,
(B10.11) Metobromuron,
(B10.12) Metoxuron,
(B10.13) Monolinuron,
(B10.14) Neburon,
(B10.15) Siduron,
(B10.16) Tebuthiuron,
(B10.17) Fenuron,
(B10.18) Chloroxuron,
(B10.19) Diflufenzopyr,
(B 1 0.20) Ethidimuron;

(B11) für herbizide Wirkstoffe aus der Gruppe der Triazine steht, ausgewählt aus

(B11.1) Ametryne,
(B11.2) Atrazine,
(B11.3) Cynazine,
(B11.4) Dimethametryn,
(B11.5) Hexazinone,
(B11.6) Indaziflam,
(B11.7) Metamitron,
(B11.8) Metribuzin,
(B11.9) Prometon,

(fortgesetzt)

| | |
|---|---|
| (B11.10) | Prometryne, |
| (B11.11) | Propazine, |
| (B11.12) | Simazine, |
| (B11.13) | Simetryne, |
| (B11.14) | Terbumeton, |
| (B11.15) | Terbuthylazine, |
| (B11.16) | Terbutryne, |
| (B11.17) | Triaziflam, |
| (B11.18) | Trietazine, |
| (B11.19) | Desmetryne |

bedeutet.

**2.** Zusammensetzung gemäß Anspruch 1, wobei die Komponente (A) der allgemeinen Formel (I) wie folgt definiert ist:

$R^1$ und $R^2$ bedeuten jeweils Wasserstoff;
$R^3$ bedeutet durch jeweils m Reste aus der Gruppe bestehend aus Fluor und Chlor substituiertes $(C_1-C_3)$-Alkyl, $(C_2-C_3)$-Alkenyl, oder $(C_1-C_3)$-Alkoxy;
$R^4$ bedeutet durch jeweils m Reste aus der Gruppe bestehend aus Fluor, Chlor, Cyano, $(C_1-C_4)$-Alkoxy und Phenyl substituiertes $(C_1-C_6)$-Alkyl, $(C_3-C_6)$-Cycloalkyl, $(C_3-C_6)$-Cycloalky1-$(C_1-C_6)$-Alkyl, $(C_2-C_6)$-Alkenyl oder $(C_2-C_6)$-Alkinyl;
Z steht für die Gruppe Z-1 oder Z-13, wobei Z1 und Z13 die folgende Bedeutung haben:

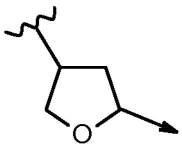

Z-1

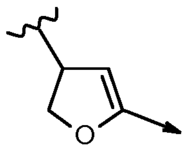

Z-13

worin der Pfeil jeweils für eine Bindung zur Gruppe C=O der Formel (I) steht;

$X^2$, $X^4$ und $X^6$ bedeuten unabhängig voneinander Wasserstoff;
$X^3$ und bedeuten unabhängig voneinander Wasserstoff, Fluor, Chlor oder Cyano, oder
$X^5$ jeweils durch m Reste aus der Gruppe bestehend aus Fluor und Chlor substituiertes $(C_1-C_3)$-Alkyl, $(C_1-C_3)$-Alkoxy; und
m die Laufzahl beträgt 0, 1, 2 oder 3.

**3.** Zusammensetzung gemäß Anspruch 1 oder 2, wobei die Komponente (B) einen oder mehrere Wirkstoffe, ausgewählt aus

| | |
|---|---|
| (B1.7) | Mesotrione, |
| (B1.8) | Pinoxaden, |

| | |
|---|---|
| (B2.18) | Diflufenican, |
| (B2.25) | Florasulam, |
| (B2.28) | Flufenacet, |
| (B2.37) | Mesosulfuron, |
| (B2.40) | Metolachlor, |
| (B2.63) | Rimsulfuron, |
| (B2.68) | Thiencarbazone, |

(B4.18) Isoxaflutole,
(B4.22) Pyrasulfotole,
(B4.25) Pyroxasulfone,

(B5.7) Bixlozone
(B5.23) Florpyrauxifen,
(B5.38) Pelargonsäure,

(B6.2) Clopyralid,
(B6.3) Dicamba,
(B6.4) Fluroxypyr,

(B7.5) Glyphosate,
(B7.7) Sulfosate;

(B8.1) 2,4-D,
(B8.5) Aclonifen,

(B9.10) Saflufenacil,

(B10.5) Diuron
(B10.8) Isoproturon,

(B11.5) Hexazinone,
(B11.6) Indaziflam,
(B11.8) Metribuzin

bedeutet.

4. Zusammensetzung gemäß Anspruch 1 enthaltend eine Komponente (A) ausgewählt aus: A1, A2, A3, A4, A5 und A6, oder ein agrochemisch verträgliches Salz dieser Verbindungen, wobei A1-A6 wie folgt definiert sind:

A1

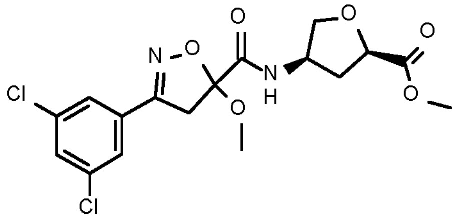

rel-(2R,4R)

A2

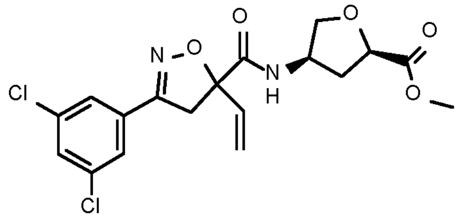

rel-(2R,4R)

A3

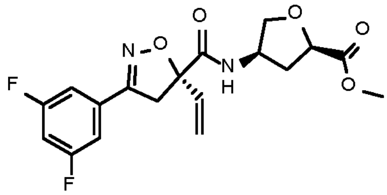

rel-(2R,4R)

A4

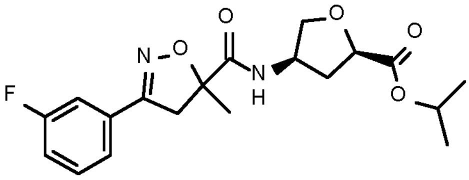

rel-(2R,4R)

A5

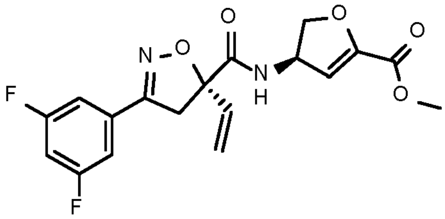

A6

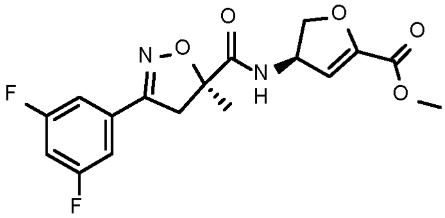

und
eine oder mehrere Komponenten (B) ausgewählt aus

(B1.7) Mesotrione,
(B1.8) Pinoxaden,

(B2.18) Diflufenican,
(B2.25) Florasulam,
(B2.28) Flufenacet,
(B2.37) Mesosulfuron,
(B2.40) Metolachlor,

(fortgesetzt)

| | |
|---|---|
| (B2.63) | Rimsulfuron, |
| (B2.68) | Thiencarbazone, |

| | |
|---|---|
| (B4.18) | Isoxaflutole, |
| (B4.22) | Pyrasulfotole, |
| (B4.25) | Pyroxasulfone, |

| | |
|---|---|
| (B5.7) | Bixlozone |
| (B5.23) | Florpyrauxifen, |
| (B5.38) | Pelargonsäure, |

| | |
|---|---|
| (B6.2) | Clopyralid, |
| (B6.3) | Dicamba, |
| (B6.4) | Fluroxypyr, |

| | |
|---|---|
| (B7.5) | Glyphosate, |
| (B7.7) | Sulfosate; |

| | |
|---|---|
| (B8.1) | 2,4-D, |
| (B8.5) | Aclonifen, |

| | |
|---|---|
| (B9.10) | Saflufenacil, |
| (B10.5) | Diuron |
| (B10.8) | Isoproturon, |
| (B11.5) | Hexazinone, |
| (B11.6) | Indaziflam, |
| (B11.8) | Metribuzin |

bedeutet.

**5.** Herbizide Zusammensetzung gemäß einem der Ansprüche 1 bis 4, wobei die Wirkstoffkomponenten (A) und (B) in einem Gewichtsverhältnis von 1:100000 bis 2000:1 enthalten sind.

**6.** Herbizide Zusammensetzung gemäß einem der Ansprüche 1 bis 5, wobei die Wirkstoffkomponenten (A) und (B) in einem Gewichtsverhältnis von 1:15000 bis 500:1 enthalten sind.

**7.** Herbizide Zusammensetzung gemäß einem der Ansprüche 1 bis 6, wobei ein oder mehrere weitere Komponenten aus der Gruppe enthaltend Pflanzenschutzmittelwirkstoffe anderer Art enthalten sind.

**8.** Herbizides Mittel enthaltend eine herbizide Zusammensetzung gemäß einem der Ansprüche 1 bis 7, enthaltend ein oder mehrere im Pflanzenschutz übliche Zusatzstoffe.

**9.** Verfahren zur Bekämpfung von Schadpflanzen oder zur Wachstumsregulierung von Pflanzen, wobei die Wirkstoffkomponenten der herbiziden Zusammensetzung gemäß einem der Ansprüche 1 bis 7 auf die Pflanzen, Pflanzenteile, Pflanzensamen oder die Anbaufläche appliziert werden.

**10.** Verfahren gemäß Anspruch 9, wobei die Wirkstoffkomponenten der herbiziden Zusammensetzung gemeinsam oder getrennt im Vorauflauf, Nachauflauf oder im Vor- und Nachauflauf auf die Pflanzen, Pflanzenteile, Pflanzensamen oder die Anbaufläche appliziert werden.

**11.** Verfahren gemäß Anspruch 10, wobei die Herbizidkomponente (A) in einer Aufwandmenge von 0,01 bis 1000 g a.i./ha appliziert wird.

**12.** Verfahren gemäß Anspruch 10, wobei die Herbizidkomponente (B) in einer Aufwandmenge von 0,01 bis 4000 g a.i./ha appliziert wird, ausgenommen Pelargonsäure, die in einer Aufwandmenge von 1 bis 100.000 g a.i./ha appliziert wird.

**13.** Verfahren nach einem der Ansprüche 10 bis 12 zur Bekämpfung von Schadpflanzen durch Behandlung vor Aussaat der Kulturpflanzen und in Plantagenkulturen, sowie Nichtkulturland.

**14.** Verfahren nach einem der Ansprüche 10 bis 13, wobei die Wirkstoffe der herbizide Zusammensetzung in Form eines herbiziden Mittels, welches ein oder mehrere im Pflanzenschutz übliche Zusatzstoffe enthält, gegebenenfalls nach Verdünnen mit Wasser, appliziert werden.

**15.** Verwendung der herbiziden Zusammensetzung gemäß einem der Ansprüche 1 bis 7 zur Bekämpfung von Schadpflanzen oder zur Wachstumsregulierung von Pflanzen.

## Claims

**1.** Compositions comprising herbicidally active compounds (A) and (B)
where

(A) represents one or more compounds of the general formula (I) or their agrochemically acceptable salts [herbicides (A)],

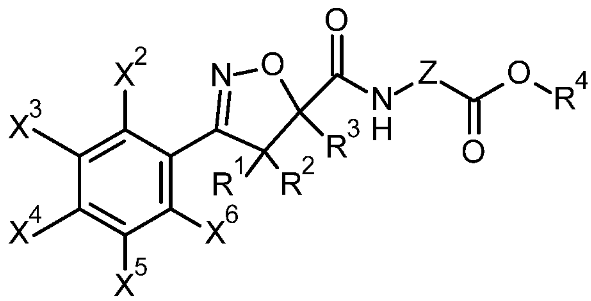

(I)

in which

$R^1$ and $R^2$ each represent hydrogen;
$R^3$ represents $(C_1\text{-}C_3)$ -alkyl, $(C_3\text{-}C_4)$ -cycloalkyl, $(C_2\text{-}C_3)$ -alkenyl, $(C_2\text{-}C_3)$ -alkynyl or $(C_1\text{-}C_3)$ -alkoxy, each of which is substituted by m radicals from the group consisting of fluorine, chlorine, cyano and $(C_1\text{-}C_2)$ -alkoxy;
$R^4$ represents hydrogen,
or
represents $(C_1\text{-}C_6)$ -alkyl, $(C_3\text{-}C_6)$ -cycloalkyl, $(C_3\text{-}C_6)$ -cycloalkyl- $(C_1\text{-}C_6)$ -alkyl, $(C_2\text{-}C_6)$ -alkenyl, $(C_5\text{-}C_6)$ -cycloalkenyl or $(C_2\text{-}C_6)$ -alkynyl, each of which is substituted by m radicals from the group consisting of fluorine, chlorine, bromine, cyano, $(C_1\text{-}C_4)$-alkoxy, hydroxy and aryl;
Z represents a group Z-1, Z-2, Z-8, Z-9, Z-11 or Z13, where Z-1, Z-2, Z-8, Z-9, Z-11 and Z13 have the following meaning:

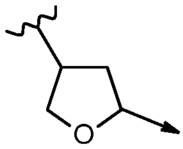

Z-1

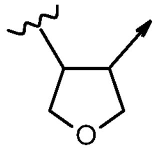

Z-2

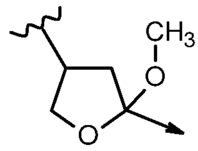

Z-8

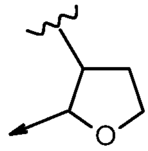

Z-9

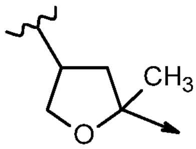

Z-11

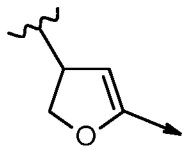

Z-13

where the arrow in each case denotes a bond to the group C=O of the formula (I);

$X^2$, $X^4$ and $X^6$ independently of one another represent hydrogen or fluorine;
$X^3$ and independently of one another represent hydrogen, fluorine, chlorine or cyano,
or
$X^5$ represent ($C_1$-$C_3$) -alkyl or ($C_1$-$C_3$) -alkoxy, each of which is substituted by m radicals from the group consisting of fluorine and chlorine; and
m represents the running number 0, 1, 2 or 3;

and
(B) represents one or more herbicides [component (B)] from the group of the herbicidally active compounds (B1) to (B11), where

(B1) represents herbicidally active compounds from the group of the 1,3-diketo compounds selected from

(B1.1) alloxydim,
(B1.2) bicyclopyrone,
(B1.3) butroxydim,
(B1.4) clethodim,
(B1.5) cycloxydim,
(B1.6) fenquinotrione,
(B1.7) mesotrione,
(B1.8) pinoxaden,
(B1.9) profoxydim,
(B1.10) sethoxydim,
(B1.11) sulcotrione,
(B1.12) SYP-9121
(B1.13) tefuryltrione,
(B1.14) tembotrione,
(B1.15) tepraloxydim,
(B1.16) tralkoxydim,
(B1.17) Y13161,
(B1.18) Y13287;

(B2) represents herbicidally active compounds from the group of the (sulfon)amides selected from

(B2.1) acetochlor,
(B2.2) alachlor,
(B2.3) amidosulfuron,

(continued)

| | |
|---|---|
| (B2.4) | asulam, |
| (B2.5) | azimsulfuron, |
| (B2.6) | beflubutamid, |
| (B2.7) | bensulfuron, |
| (B2.8) | butachlor, |
| (B2.9) | carbetamide, |
| (B2.10) | chlorimuron, |
| (B2.11) | chlorpropham, |
| (B2.12) | chlorsulfuron, |
| (B2.13) | cinosulfuron, |
| (B2.14) | cloransulam, |
| (B2.15) | cyclosulfamuron, |
| (B2.16) | desmedipham, |
| (B2.17) | diclosulam, |
| (B2.18) | diflufenican, |
| (B2.19) | dimethachlor, |
| (B2.20) | dimethenamid, |
| (B2.21) | esprocarb, |
| (B2.22) | ethametsulfuron, |
| (B2.23) | ethoxysulfuron, |
| (B2.24) | flazasulfuron, |
| (B2.25) | florasulam, |
| (B2.26) | flucarbazone, |
| (B2.27) | flucetosulfuron, |
| (B2.28) | flufenacet, |
| (B2.29) | flumetsulam, |
| (B2.30) | flupyrsulfuron, |
| (B2.31) | foramsulfuron, |
| (B2.32) | halosulfuron, |
| (B2.33) | imazosulfuron, |
| (B2.34) | iodosulfuron, |
| (B2.35) | ipfencarbazone, |
| (B2.36) | mefenacet, |
| (B2.37) | mesosulfuron, |
| (B2.38) | metazachlor, |
| (B2.39) | metazosulfuron, |
| (B2.40) | metolachlor, |
| (B2.41) | metosulam, |
| (B2.42) | metsulfuron, |
| (B2.43) | nicosulfuron, |
| (B2.44) | orthosulfamuron, |
| (B2.45) | oxasulfuron, |
| (B2.46) | penoxsulam, |
| (B2.47) | pethoxamide, |
| (B2.48) | phenmedipham, |
| (B2.49) | picolinafen, |
| (B2.50) | pretilachlor, |
| (B2.51) | primisulfuron, |
| (B2.52) | propachlor, |
| (B2.53) | propanil, |
| (B2.54) | propham; |

(continued)

(B2.55) propisochlor,
(B2.56) propoxycarbazone,
(B2.57) propyrisulfuron,
(B2.58) propyzamide,
(B2.59) prosulfocarb,
(B2.60) prosulfuron,
(B2.61) pyrazosulfuron,
(B2.62) pyroxsulam,
(B2.63) rimsulfuron,
(B2.64) S-metolachlor,
(B2.65) sulfometuron,
(B2.66) sulfosulfuron,
(B2.67) thenylchlor,
(B2.68) thiencarbazone,
(B2.69) thifensulfuron,
(B2.70) tri-allate,
(B2.71) triasulfuron,
(B2.72) tribenuron,
(B2.73) trifloxysulfuron,
(B2.74) triflusulfuron,
(B2.75) tritosulfuron,
(B2.76) esprocarb,
(B2.77) profluazol,
(B2.78) tri-allate;

(B3) represents herbicidally active compounds from the group of the arylonitriles selected from

(B3.1) bromoxynil,
(B3.2) chlorthiamid,
(B3.3) dichlobenil,
(B3.4) ioxynil,
(B3.5) pyraclonil;

(B4) represents herbicidally active compounds from the group of the azoles selected from

(B4.1) amicarbazone,
(B4.2) amitrole,
(B4.3) azafenidin,
(B4.4) benzofenap,
(B4.5) benzuofucaotong,
(B4.6) biscarfentrazone,
(B4.7) cafenstrole,
(B4.8) carfentrazone,
(B4.9) fentrazamide,
(B4.10) imazamethabenz,
(B4.11) imazamox,
(B4.12) imazapic,
(B4.13) imazapyr,
(B4.14) imazaquin,
(B4.15) imazethapyr,
(B4.16) isouron,

(continued)

(B4.17) isoxaben,
(B4.18) isoxaflutole,
(B4.19) oxadiargyl,
(B4.20) oxadiazon,
(B4.21) pyraflufen,
(B4.22) pyrasulfotole,
(B4.23) pyrazolynate,
(B4.24) pyrazoxyfen,
(B4.25) pyroxasulfone,
(B4.26) sulfentrazone,
(B4.27) tolpyralate,
(B4.28) topramezone,
(B4.29) triazolesulcotrione (QYR-301),
(B4.30) QYM-201,
(B4.31) bencarbazone,
(B4.32) fluazolate,
(B4.33) flupoxam,
(B4.34) isoxachlortole;

(B5) represents further herbicidally active compounds selected from

(B5.1) aminocyclopyrachlor,
(B5.2) aminopyralid,
(B5.3) benazolin-ethyl,
(B5.4) benfluralin,
(B5.5) bentazone,
(B5.6) benzobicyclon,
(B5.7) bixlozone,
(B5.8) bromofenoxim,
(B5.9) butralin,
(B5.10) chloridazon/pyrazon,
(B5.11) chlorthal,
(B5.12) cinidon-ethyl,
(B5.13) cinmethylin,
(B5.14) clomazone,
(B5.15) cyclopyrimorate,
(B5.16) dinitramine,
(B5.17) diquat,
(B5.18) dithiopyr,
(B5.19) acetic acid,
(B5.20) ethalfluralin,
(B5.21) ethofumesate,
(B5.22) flamprop,
(B5.23) florpyrauxifen,
(B5.24) flufenpyr,
(B5.25) flumiclorac,
(B5.26) flumioxazin,
(B5.27) fluridone,
(B5.28) flurochloridone,
(B5.29) flurtamone,
(B5.30) fluthiacet-methyl,

(continued)

(B5.31) halauxifen,
(B5.32) indanofan,
(B5.33) norflurazon,
(B5.34) oleic acid,
(B5.35) oryzalin,
(B5.36) oxaziclomefone,
(B5.37) paraquat,
(B5.38) pelargonic acid,
(B5.39) pendimethalin,
(B5.40) pentoxazone,
(B5.41) pyridafol,
(B5.42) pyridate,
(B5.43) tetflupyrolimet,
(B5.44) thiazopyr,
(B5.45) triafamone,
(B5.46) trifluralin,
(B5.47) 4-amino-3-chloro-5-fluoro-6-(7-fluoro-1H-indol-6-yl)pyridine-2-carboxylic acid,
(B5.48) cyclopyrimorate,
(B5.49) diquat,
(B5.50) oxaziclomefone,
(B5.51) pentanochlor,
(B5.52) tebutam,
(B5.53) thidiazimin;

(B6) represents herbicidally active compounds from the group of the (het)arylcarboxylic acids selected from

(B6.1) chloramben,
(B6.2) clopyralid,
(B6.3) dicamba,
(B6.4) fluroxypyr,
(B6.5) picloram,
(B6.6) quinclorac,
(B6.7) quinmerac,
(B6.8) TBA,
(B6.9) trichlopyr;

(B7) represents herbicidally active compounds from the group of the organophosphorus compounds selected from

(B7.1) anilofos,
(B7.2) bialaphos,
(B7.3) butamifos,
(B7.4) glufosinate,
(B7.5) glyphosate,
(B7.6) piperophos,
(B7.7) sulfosate,
(B7.8) amiprofos;

(B8) represents herbicidally active compounds from the group of the phenyl ethers selected from

(B8.1) 2,4-D,

(continued)

(B8.2) 2,4-DB,
(B8.3) 2,4-DP,
(B8.4) acifluorfen,
(B8.5) aclonifen,
(B8.6) bifenox,
(B8.7) chlomethoxyfen,
(B8.8) clodinafop-propargyl,
(B8.9) clomeprop,
(B8.10) cyhalofop,
(B8.11) diclofop,
(B8.12) ethoxyfen,
(B8.13) fenoxaprop,
(B8.14) fluazifop,
(B8.15) fluoroglycofen,
(B8.16) fomesafen,
(B8.17) halosafen,
(B8.18) haloxyfop,
(B8.19) lactofen,
(B8.20) MCPA,
(B8.21) MCPB,
(B8.22) mecoprop,
(B8.23) metamifop,
(B8.24) oxyfluorfen,
(B8.25) propaquizafop,
(B8.26) quizalofop,
(B8.27) quizalofop-p,
(B8.28) benzfendizone;

(B9) represents herbicidally active compounds from the group of the pyrimidines selected from

(B9.1) bispyrac-sodium,
(B9.2) bromacil,
(B9.3) butafenacil,
(B9.4) lenacil,
(B9.5) pyribenzoxim,
(B9.6) pyriftalid,
(B9.7) pyriminobac,
(B9.8) pyrimisulfan,
(B9.9) pyrithiobac-sodium,
(B9.10) saflufenacil,
(B9.11) terbacil,
(B9.12) tiafenacil,
(B9.13) trifludimoxazin,
(B9.14) ethyl [3-[2-chloro-4-fluoro-5-(1-methyl-6-trifluoromethyl-2,4-dioxo-1,2,3,4-tetrahydropyrimidin-3-yl) phenoxy]-2-pyridyloxy] acetate;

(B10) represents herbicidally active compounds from the group of the (thio)ureas selected from

(B10.1) chlorobromuron,
(B10.2) chlorotoluron,
(B10.3) daimuron,

(continued)

| | |
|---|---|
| (B10.4) | dimefuron, |
| (B10.5) | diuron, |
| (B10.6) | diflufenzopyr, |
| (B10.7) | fluometuron, |
| (B10.8) | isoproturon, |
| (B10.9) | linuron, |
| (B10.10) | methabenzthiazuron, |
| (B10.11) | metobromuron, |
| (B10.12) | metoxuron, |
| (B10.13) | monolinuron, |
| (B10.14) | neburon, |
| (B10.15) | siduron, |
| (B10.16) | tebuthiuron, |
| (B10.17) | fenuron, |
| (B10.18) | chloroxuron, |
| (B10.19) | diflufenzopyr, |
| (B10.20) | ethidimuron; |

(B11) represents herbicidally active compounds from the group of the triazines selected from

| | |
|---|---|
| (B11.1) | ametryne, |
| (B11.2) | atrazine, |
| (B11.3) | cynazine, |
| (B11.4) | dimethametryn, |
| (B11.5) | hexazinone, |
| (B11.6) | indaziflam, |
| (B11.7) | metamitron, |
| (B11.8) | metribuzin, |
| (B11.9) | prometon, |
| (B11.10) | prometryne, |
| (B11.11) | propazine, |
| (B11.12) | simazine, |
| (B11.13) | simetryne, |
| (B11.14) | terbumeton, |
| (B11.15) | terbuthylazine, |
| (B11.16) | terbutryne, |
| (B11.17) | triaziflam, |
| (B11.18) | trietazine, |
| (B11.19) | desmetryne. |

**2.** Composition according to Claim 1, where the component (A) of the general formula (I) is defined as follows:

$R^1$ and $R^2$ each represent hydrogen;
$R^3$ represents $(C_1\text{-}C_3)$-alkyl, $(C_2\text{-}C_3)$-alkenyl or $(C_1\text{-}C_3)$-alkoxy, each of which is substituted by m radicals from the group consisting of fluorine and chlorine;
$R^4$ represents $(C_1\text{-}C_6)$-alkyl, $(C_3\text{-}C_6)$-cycloalkyl, $(C_3\text{-}C_6)$-cycloalkyl- $(C_1\text{-}C_6)$-alkyl, $(C_2\text{-}C_6)$-alkenyl or $(C_2\text{-}C_6)$-alkynyl, each of which is substituted by m radicals from the group consisting of fluorine, chlorine, cyano, $(C_1\text{-}C_4)$-alkoxy and phenyl;
Z represents the group Z-1 or Z-13, where Z1 and Z13 have the following meaning:

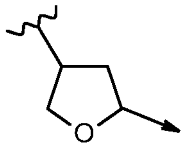

Z-1

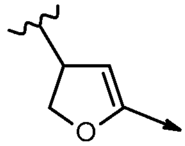

Z-13

where the arrow in each case denotes a bond to the group C=O of the formula (I);
$X^2$, $X^4$ and $X^6$ independently of one another represent hydrogen;
$X^3$ and independently of one another represent hydrogen, fluorine, chlorine or cyano,
or
$X^5$ represent $(C_1-C_3)$ -alkyl or $(C_1-C_3)$ -alkoxy, each of which is substituted by m radicals from the group consisting of fluorine and chlorine; and
m represents the running number 0, 1, 2 or 3.

**3.** Composition according to Claim 1 or 2, where component (B) represents one or more active compounds selected from

(B1.7) mesotrione,
(B1.8) pinoxaden,
(B2.18) diflufenican,
(B2.25) florasulam,
(B2.28) flufenacet,
(B2.37) mesosulfuron,
(B2.40) metolachlor,
(B2.63) rimsulfuron,
(B2.68) thiencarbazone,

(B4.18) isoxaflutole,
(B4.22) pyrasulfotole,
(B4.25) pyroxasulfone,

(B5.7) bixlozone,
(B5.23) florpyrauxifen,
(B5.38) pelargonic acid,

(B6.2) clopyralid,
(B6.3) dicamba,
(B6.4) fluroxypyr,

(B7.5) glyphosate,
(B7.7) sulfosate;

(B8.1) 2,4-D,
(B8.5) aclonifen,

(B9.10) saflufenacil,

(B10.5) diuron,
(B10.8) isoproturon,

(B11.5) hexazinone,
(B11.6) indaziflam,
(B11.8) metribuzin.

**4.** Composition according to Claim 1, comprising a component (A) selected from:

A1, A2, A3, A4, A5 and A6, or an agrochemically acceptable salt of these compounds, where A1-A6 are defined as follows:

A1

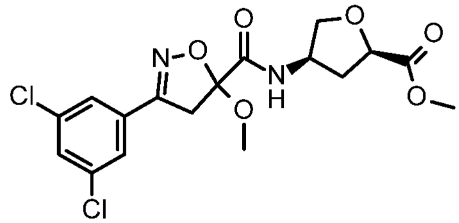

rel-(2R,4R)

A2

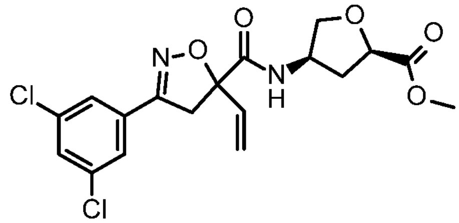

rel-(2R,4R)

A3

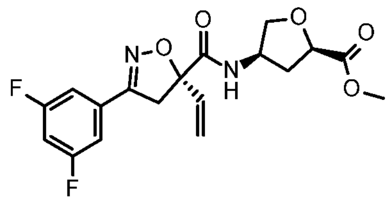

rel-(2R,4R)

A4

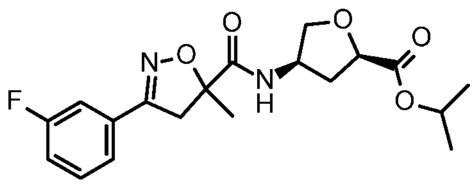

rel-(2R,4R)

A5 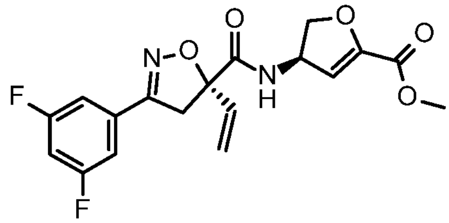

A6 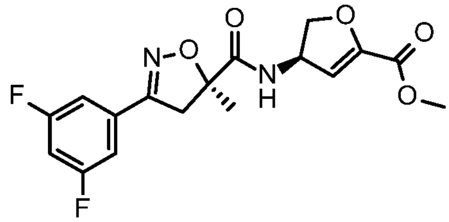

and

one or more components (B) selected from

(B1.7) mesotrione,
(B1.8) pinoxaden,

(B2.18) diflufenican,
(B2.25) florasulam,
(B2.28) flufenacet,
(B2.37) mesosulfuron,
(B2.40) metolachlor,
(B2.63) rimsulfuron,
(B2.68) thiencarbazone,

(B4.18) isoxaflutole,
(B4.22) pyrasulfotole,
(B4.25) pyroxasulfone,

(B5.7) bixlozone,
(B5.23) florpyrauxifen,
(B5.38) pelargonic acid,

(B6.2) clopyralid,
(B6.3) dicamba,
(B6.4) fluroxypyr,
(B7.5) glyphosate,
(B7.7) sulfosate;

(B8.1) 2,4-D,
(B8.5) aclonifen,

(B9.10) saflufenacil,

(B10.5) diuron,
(B10.8) isoproturon,

(B11.5) hexazinone,
(B11.6) indaziflam,
(B11.8) metribuzin.

**5.** Herbicidal composition according to any of Claims 1 to 4, comprising the active compound components (A) and (B) in a weight ratio of from 1:100 000 to 2000:1.

**6.** Herbicidal composition according to any of Claims 1 to 5, comprising the active compound components (A) and (B) in a weight ratio of from 1:15 000 to 500:1.

**7.** Herbicidal composition according to any of Claims 1 to 6, comprising one or more further components from the group comprising other kinds of active crop protection compounds.

**8.** Herbicidal product comprising a herbicidal composition according to any of Claims 1 to 7, comprising one or more additives customary in crop protection.

**9.** Method for controlling harmful plants or for regulating the growth of plants, where the active compound components of the herbicidal composition according to any of Claims 1 to 7 are applied to the plants, plant parts, plant seeds or the area under cultivation.

**10.** Method according to Claim 9, where the active compound components of the herbicidal composition are applied jointly or separately by the pre-emergence method, the post-emergence method or by the pre- and post-emergence method to the plants, plant parts, plant seeds or the area under cultivation.

**11.** Method according to Claim 10, where the herbicide component (A) is applied at an application rate of 0.01 to 1000 g of a.i./ha.

**12.** Method according to Claim 10, where the herbicide component (B) is applied at an application rate of 0.01 to 4000 g of a.i./ha, except for pelargonic acid, which is applied at an application rate of 1 to 100 000 g of a.i./ha.

**13.** Method according to any of Claims 10 to 12 for controlling harmful plants by treatment before sowing of the crop plants and in plantation crops, and also on non-crop land.

**14.** Method according to any of Claims 10 to 13, where the active compounds of the herbicidal composition are applied in the form of a herbicidal composition comprising one or more additives customary in crop protection, optionally after dilution with water.

**15.** Use of the herbicidal composition according to any of Claims 1 to 7 for controlling harmful plants or for regulating the growth of plants.

**Revendications**

**1.** Compositions contenant des composés actifs sur le plan herbicide (A) et (B), où

(A) représente un ou plusieurs composés de formule générale (I) ou leurs sels acceptables sur le plan agrochimique [Herbicides (A)],

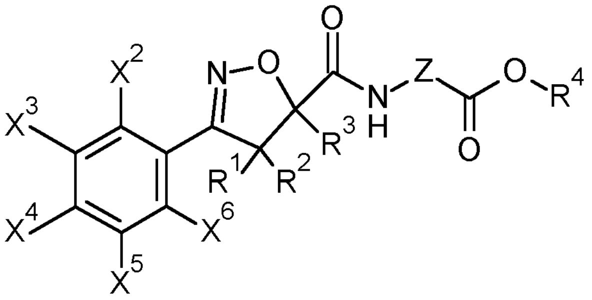

(I)

dans laquelle

$R^1$ et $R^2$ signifient chacun hydrogène ;
$R^3$ signifie ($C_1$-$C_3$) -alkyle, ($C_3$-$C_4$)-cycloalkyle, ($C_2$-$C_3$)-alcényle, ($C_2$-$C_3$)-alcynyle ou ($C_1$-$C_3$)-alcoxy, à chaque fois substitué par m radicaux du groupe constitué par fluor, chlore, cyano et ($C_1$-$C_2$)-alcoxy ;
$R^4$ signifie hydrogène ou ($C_1$-$C_6$)-alkyle, ($C_3$-$C_6$)-cycloalkyle, ($C_3$-$C_6$)-cycloalkyl- ($C_1$-$C_6$)-alkyle, ($C_2$-$C_6$) -alcényle, ($C_5$-$C_6$)-cycloalcényle ou ($C_2$-$C_6$)-alcynyle, à chaque substitué par m radicaux du groupe constitué par fluor, chlore, brome, cyano, ($C_1$-$C_4$)-alcoxy, hydroxy et aryle ;
Z représente un groupe Z-1, Z-2, Z-8, Z-9, Z-11 ou Z-13, où Z-1, Z-2, Z-8, Z-9, Z-11 et Z-13 présentent la signification suivante :

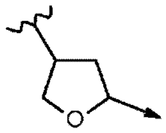

Z-1

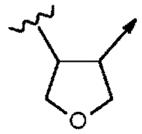

Z-2

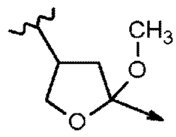

Z-8

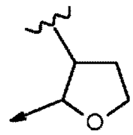

Z-9

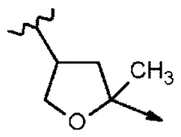

Z-11

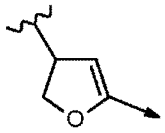

Z-13

où la flèche représente à chaque fois une liaison au groupe C=O de la formule (I) ;
$X^2$, $X^4$ et $X^6$ représentent, indépendamment les uns des autres, hydrogène ou fluor ;
$X^3$ et $X^5$ signifient, indépendamment l'un de l'autre, hydrogène, fluor, chlore ou cyano, ou ($C_1$-$C_3$)-alkyle, ($C_1$-$C_3$)-alcoxy à chaque fois substitué par m radicaux du groupe constitué par fluor et chlore ; et
m représente l'indice 0, 1, 2 ou 3 ;

et
(B) représente un ou plusieurs herbicides [composant (B)] du groupe des principes actifs herbicides (B1) à (B11), où

(B1) représente des principes actifs herbicides du groupe des composés 1,3-dicéto, choisis parmi

| | |
|---|---|
| (B1.1) | alloxydime, |
| (B1.2) | bicyclopyrone, |
| (B1.3) | butroxydim, |
| (B1.4) | cléthodime, |
| (B1.5) | cycloxydime, |
| (B1.6) | fenquinotrione, |
| (B1.7) | mésotrione |
| (B1.8) | pinoxaden, |

(suite)

(B1.9) profoxydim,
(B1.10) séthoxydim,
(B1.11) sulcotrione,
(B1.12) SYP-9121
(B1.13) tefuryltrione,
(B1.14) tembotrione,
(B1.15) tépraloxydim,
(B1.16) tralkoxydim,
(B1.17) Y13161,
(B1.18) Y13287 ;

(B2) représente des principes actifs herbicides du groupe des (sulfone)amides, choisis parmi

(B2.1) acétochlore,
(B2.2) alachlore,
(B2.3) amidosulfuron,
(B2.4) asulame,
(B2.5) azimsulfuron,
(B2.6) béflubutamide,
(B2.7) bensulfuron,
(B2.8) butachlor,
(B2.9) carbétamide,
(B2.10) chlorimuron,
(B2.11) chloroprophame,
(B2.12) chlorsulfuron,
(B2.13) cinosulfuron,
(B2.14) cloransulam,
(B2.15) cyclosulfamuron,
(B2.16) desmédiphame,
(B2.17) diclosulam,
(B2.18) diflufénican,
(B2.19) diméthachlore,
(B2.20) diméthénamide,
(B2.21) esprocarb,
(B2.22) éthametsulfuron,
(B2.23) éthoxysulfuron,
(B2.24) flazasulfuron,
(B2.25) florasulam,
(B2.26) flucarbazone,
(B2.27) flucetosulfuron,
(B2.28) flufénacet,
(B2.29) flumetsulam,
(B2.30) flupyrsulfuron
(B2.31) foramsulfuron,
(B2.32) halosulfuron,
(B2.33) imazosulfuron,
(B2.34) iodosulfuron,
(B2.35) ipfencarbazone,
(B2.36) mefenacet,
(B2.37) mésosulfuron,
(B2.38) métazachlor,

(suite)

(B2.39) métazosulfuron,
(B2.40) métolachlor,
(B2.41) métosulam,
(B2.42) metsulfuron,
(B2.43) nicosulfuron,
(B2.44) orthosulfamuron,
(B2.45) oxasulfuron,
(B2.46) pénoxsulame,
(B2.47) péthoxamide,
(B2.48) phénmédipham,
(B2.49) picolinafen,
(B2.50) prétilachlore,
(B2.51) primisulfuron,
(B2.52) propachlor,
(B2.53) propanil,
(B2.54) propham ;
(B2.55) propisochlor,
(B2.56) propoxycarbazone,
(B2.57) propyrisulfuron,
(B2.58) propyzamide,
(B2.59) prosulfocarb,
(B2.60) prosulfuron,
(B2.61) pyrazosulfuron,
(B2.62) pyroxsulam,
(B2.63) rimsulfuron,
(B2.64) S-métolachlor,
(B2.65) sulfométuron,
(B2.66) sulfosulfuron,
(B2.67) thénylchlor,
(B2.68) thiencarbazone,
(B2.69) thifensulfuron,
(B2.70) triallate
(B2.71) triasulfuron,
(B2.72) tribénuron,
(B2.73) trifloxysulfuron,
(B2.74) triflusulfuron,
(B2.75) tritosulfuron,
(B2.76) esprocarb,
(B2.77) profluazol,
(B2.78) triallate ;

(B3) représente des principes actifs herbicides du groupe des arylnitriles, choisis parmi

(B3.1) bromoxynil,
(B3.2) chlorthiamide,
(B3.3) dichlobénil,
(B3.4) ioxynil,
(B3.5) pyraclonil ;

(B4) représente des principes actifs herbicides du groupe des azoles, choisis parmi

(B4.1) amicarbazone,
(B4.2) amitrole,
(B4.3) azafenidin,
(B4.4) benzofenap,
(B4.5) benzuofucaotong
(B4.6) biscarfentrazone
(B4.7) cafenstrole,
(B4.8) carfentrazone,
(B4.9) fentrazamide,
(B4.10) imazaméthabenz,
(B4.11) imazamox,
(B4.12) imazapic,
(B4.13) imazapyr,
(B4.14) imazaquin,
(B4.15) imazéthapyr,
(B4.16) isouron,
(B4.17) isoxabène,
(B4.18) isoxaflutole,
(B4.19) oxadiargyl,
(B4.20) oxadiazon,
(B4.21) pyraflufen,
(B4.22) pyrasulfotole,
(B4.23) pyrazolynate,
(B4.24) pyrazoxyfen,
(B4.25) pyroxasulfone,
(B4.26) sulfentrazone,
(B4.27) tolpyralate,
(B4.28) topramezone,
(B4.29) triazolesulcotrione (QYR-301),
(B4.30) QYM-201,
(B4.31) bencarbazone,
(B4.32) fluazolate,
(B4.33) flupoxam,
(B4.34) isoxachlortole ;

(B5) représente d'autres principes actifs herbicides, choisis parmi

(B5.1) aminocyclopyrachlor,
(B5.2) aminopyralid,
(B5.3) benazolinéthyle,
(B5.4) benfluraline,
(B5.5) bentazone,
(B5.6) benzobicyclon,
(B5.7) bixlozone
(B5.8) bromophénoxime,
(B5.9) butraline,
(B5.10) chloridazone/pyrazone,
(B5.11) chlorthal,
(B5.12) cinidonéthyl,
(B5.13) cinméthylin,
(B5.14) clomazone,

(suite)

(B5.15) cyclopyrimorate
(B5.16) dinitramine,
(B5.17) diquat,
(B5.18) dithiopyr,
(B5.19) acide acétique,
(B5.20) éthalfluraline,
(B5.21) éthofumesate,
(B5.22) flamprop,
(B5.23) florpyrauxifène,
(B5.24) flufenpyr,
(B5.25) flumiclorac,
(B5.26) flumioxazine,
(B5.27) fluridone,
(B5.28) flurochloridone,
(B5.29) flurtamone,
(B5.30) fluthiacet-méthyle,
(B5.31) halauxifène,
(B5.32) indanofan,
(B5.33) norflurazon,
(B5.34) acide oléique,
(B5.35) oryzaline,
(B5.36) oxaziclomefone,
(B5.37) paraquat,
(B5.38) acide pélargonique,
(B5.39) pendiméthaline,
(B5.40) pentoxazone,
(B5.41) pyridafol,
(B5.42) pyridate,
(B5.43) tétflupyrolimet,
(B5.44) thiazopyr,
(B5.45) triafamone,
(B5.46) trifluraline,
(B5.47) acide 4-amino-3-chloro-5-fluoro-6-(7-fluoro-1H-indol-6-yl)pyridine-2-carboxylique,
(B5.48) cyclopyrimorate,
(B5.49) diquat,
(B5.50) oxaziclomefone,
(B5.51) pentanochlor,
(B5.52) tebutam
(B5.53) thidiazimin ;

(B6) représente des principes actifs herbicides du groupe des acides (hét)arylcarboxyliques, choisis parmi

(B6.1) chloroamben,
(B6.2) clopyralid,
(B6.3) dicamba,
(B6.4) fluroxypyr,
(B6.5) picloram,
(B6.6) quinclorac,
(B6.7) quinmerac,
(B6.8) TBA,
(B6.9) trichlopyr ;

(B7) représente des principes actifs herbicides du groupe des composés phosphorés organiques, choisis parmi

(B7.1) anilofos,
(B7.2) bialaphos,
(B7.3) butamifos,
(B7.4) glufosinate,
(B7.5) glyphosate,
(B7.6) pipérophos,
(B7.7) sulfosate,
(B7.8) amiprofos ;

(B8) représente des principes actifs herbicides du groupe des phényléthers, choisis parmi

(B8.1) 2,4-D,
(B8.2) 2,4-DB,
(B8.3) 2,4-DP,
(B8.4) acifluorfène,
(B8.5) aclonifène,
(B8.6) bifénox,
(B8.7) chlométhoxyfène,
(B8.8) clodinafop-propargyl,
(B8.9) cloméprop,
(B8.10) cyhalofop,
(B8.11) diclofop,
(B8.12) éthoxyfène,
(B8.13) fénoxaprop,
(B8.14) fluazifop,
(B8.15) fluoroglycofène,
(B8.16) fomesafen,
(B8.17) halosafen,
(B8.18) haloxyfop,
(B8.19) lactofen,
(B8.20) MCPA,
(B8.21) MCPB,
(B8.22) mécoprop,
(B8.23) metamifop,
(B8.24) oxyfluorfen,
(B8.25) propaquizafop,
(B8.26) quizalofop,
(B8.27) quizalofop-p,
(B8.28) benzfendizone ;

(B9) représente des principes actifs herbicides du groupe des pyrimidines, choisis parmi

(B9.1) bispyrac-sodium,
(B9.2) bromoacil,
(B9.3) butafenacil,
(B9.4) lenacil,
(B9.5) pyribenzoxim,
(B9.6) pyriftalid,
(B9.7) pyriminobac,

(suite)

(B9.8) pyrimisulfan,
(B9.9) pyrithiobac-sodium,
(B9.10) saflufenacil,
(B9.11) terbacil,
(B9.12) tiafenacil,
(B9.13) trifludimoxazine,
(B9.14) [3-[2-chloro-4-fluoro-5-(1-méthyl-6-trifluorométhyl-2,4-dioxo-1,2,3,4-tétrahydropyrimidin-3-yl)phénoxy]-2-pyridyloxy]acétate d'éthyle ;

(B10) représente des principes actifs herbicides du groupe des thio(urées), choisis parmi

(B10.1) chlorobromuron,
(B10.2) chlorotoluron,
(B10.3) daimuron,
(B10.4) dimefuron,
(B10.5) diuron,
(B10.6) diflufenzopyr
(B10.7) fluometuron,
(B10.8) isoproturon,
(B10.9) linuron,
(B10.10) méthabenzthiazuron,
(B10.11) métobromuron,
(B10.12) métoxuron,
(B10.13) monolinuron,
(B10.14) neburon,
(B10.15) siduron,
(B10.16) tébuthiuron,
(B10.17) fénuron,
(B10.18) chloroxuron,
(B10.19) diflufenzopyr,
(B10.20) éthidimuron ;

(B11) représente des principes actifs herbicides du groupe des triazines, choisis parmi

(B11.1) amétryne,
(B11.2) atrazine,
(B11.3) cynazine,
(B11.4) dimethametryn,
(B11.5) hexazinone,
(B11.6) indaziflam,
(B11.7) métamitron,
(B11.8) métribuzine,
(B11.9) prométon,
(B11.10) prométryne,
(B11.11) propazine,
(B11.12) simazine,
(B11.13) simétryne,
(B11.14) terbumeton,
(B11.15) terbuthylazine,
(B11.16) terbutryne,

(suite)

| | |
|---|---|
| (B11.17) | triaziflam, |
| (B11.18) | triétazine, |
| (B11.19) | desmetryne. |

**2.** Composition selon la revendication 1, le composant (A) de formule générale (I) étant défini comme suit :

$R^1$ et $R^2$ signifient à chaque fois hydrogène ;
$R^3$ signifie $(C_1-C_3)$-alkyle, $(C_2-C_3)$-alcényle ou $(C_1-C_3)$-alcoxy, à chaque fois substitué par m radicaux du groupe constitué par fluor et chlore ;
$R^4$ signifie $(C_1-C_6)$-alkyle, $(C_3-C_6)$-cycloalkyle, $(C_3-C_6)$-cycloalkyl- $(C_1-C_6)$-alkyle, $(C_2-C_6)$-alcényle ou $(C_2-C_6)$-alcynyle, à chaque substitué par m radicaux du groupe constitué par fluor, chlore, cyano, $(C_1-C_4)$-alcoxy et phényle ;
Z représente le groupe Z-1 ou Z-13, Z-1 et Z-13 présentant la signification suivante :

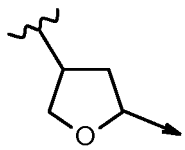
Z-1

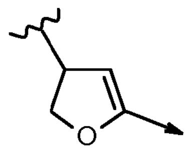
Z-13

où la flèche représente à chaque fois une liaison au groupe C=O de la formule (I) ;

$X^2$, $X^4$ et $X^6$ signifient, indépendamment les uns des autres, hydrogène ;
$X^3$ et $X^5$ signifient, indépendamment l'un de l'autre, hydrogène, fluor, chlore ou cyano, ou $(C_1-C_3)$-alkyle, $(C_1-C_3)$-alcoxy à chaque fois substitué par m radicaux du groupe constitué par fluor et chlore ; et
m représente l'indice 0, 1, 2 ou 3.

**3.** Composition selon la revendication 1 ou 2, le composant (B) signifiant un ou plusieurs principes actifs choisis parmi

| | |
|---|---|
| (B1.7) | mésotrione |
| (B1.8) | pinoxaden, |
| (B2.18) | diflufénican, |
| (B2.25) | florasulam, |
| (B2.28) | flufénacet, |
| (B2.37) | mésosulfuron, |
| (B2.40) | métolachlor, |
| (B2.63) | rimsulfuron, |
| (B2.68) | thiencarbazone, |
| (B4.18) | isoxaflutole, |
| (B4.22) | pyrasulfotole, |
| (B4.25) | pyroxasulfone, |
| (B5.7) | bixlozone |
| (B5.23) | florpyrauxifène, |
| (B5.38) | acide pélargonique, |
| (B6.2) | clopyralid, |
| (B6.3) | dicamba, |
| (B6.4) | fluroxypyr, |
| (B7.5) | glyphosate, |
| (B7.7) | sulfosate ; |
| (B8.1) | 2,4-D, |

(suite)

| | |
|---|---|
| (B8.5) | aclonifène, |
| (B9.10) | saflufenacil, |
| (B10.5) | diuron, |
| (B10.8) | isoproturon, |
| (B11.5) | hexazinone, |
| (B11.6) | indaziflam, |
| (B11.8) | métribuzine, |

**4.** Composition selon la revendication 1, contenant un composant (A) choisi parmi : A1, A2, A3, A4, A5 et A6 ou un sel compatible sur le plan agrochimique de ces composés, A1-A6 étant définis comme suit :

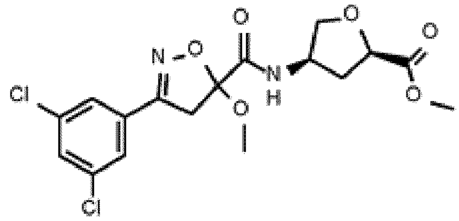

rel-(2R,4R)

A1

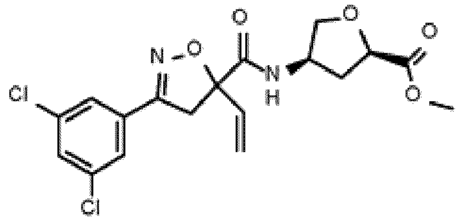

rel-(2R,4R)

A2

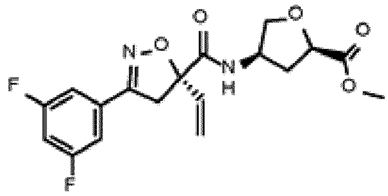

rel-(2R,4R)

A3

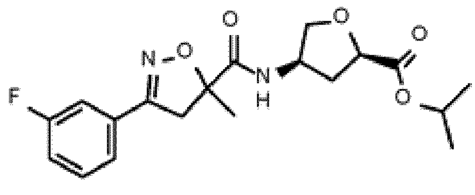

rel-(2R,4R)

A4

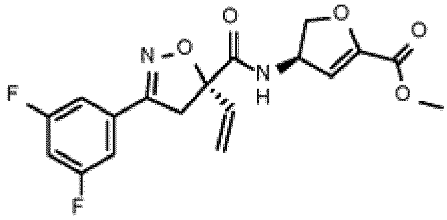

A5

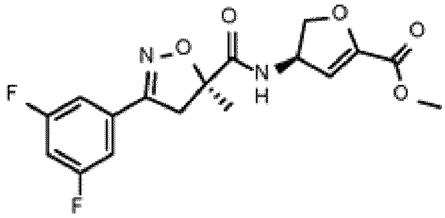

A6

et un ou plusieurs composants (B) choisis parmi

| | |
|---|---|
| (B1.7) | mésotrione |
| (B1.8) | pinoxaden, |
| (B2.18) | diflufénican, |
| (B2.25) | florasulam, |
| (B2.28) | flufénacet, |
| (B2.37) | mésosulfuron, |
| (B2.40) | métolachlor, |
| (B2.63) | rimsulfuron, |
| (B2.68) | thiencarbazone, |
| (B4.18) | isoxaflutole, |
| (B4.22) | pyrasulfotole, |
| (B4.25) | pyroxasulfone, |
| (B5.7) | bixlozone |
| (B5.23) | florpyrauxifène, |
| (B5.38) | acide pélargonique, |
| (B6.2) | clopyralid, |
| (B6.3) | dicamba, |
| (B6.4) | fluroxypyr, |
| (B7.5) | glyphosate, |
| (B7.7) | sulfosate ; |
| (B8.1) | 2,4-D, |
| (B8.5) | aclonifène, |
| (B9.10) | saflufenacil, |
| (B10.5) | diuron, |
| (B10.8) | isoproturon, |
| (B11.5) | hexazinone, |
| (B11.6) | indaziflam, |
| (B11.8) | métribuzine. |

**5.** Composition herbicide selon l'une quelconque des revendications 1 à 4, les composants de principe actif (A) et (B) étant contenus dans un rapport pondéral de 1:100.000 à 2000:1.

**6.** Composition herbicide selon l'une quelconque des revendications 1 à 5, les composants de principe actif (A) et (B)

étant contenus dans un rapport pondéral de 1:15.000 à 500:1.

**7.** Composition herbicide selon l'une quelconque des revendications 1 à 6, un ou plusieurs autres composants du groupe contenant des principes actifs de phytoprotection d'un autre type étant contenus.

**8.** Agent herbicide, contenant une composition herbicide selon l'une quelconque des revendications 1 à 7, contenant un ou plusieurs additifs usuels en phytoprotection.

**9.** Procédé pour lutter contre les plantes nuisibles ou pour la régulation de la croissance de plantes, les composants de principe actif de la composition herbicide selon l'une quelconque des revendications 1 à 7 étant appliqués sur les plantes, les parties de plantes, les graines de plantes ou la surface de culture.

**10.** Procédé selon la revendication 9, les composants de principe actif de la composition herbicide étant appliqués ensemble ou séparément, lors de la pré-émergence, la post-émergence ou lors de la pré-émergence et de la post-émergence, sur les plantes, les parties de plantes, les graines des plantes ou la surface de culture.

**11.** Procédé selon la revendication 10, le composant herbicide (A) étant appliqué en une quantité utilisée de 0,01 à 1000 g de principe actif/ha.

**12.** Procédé selon la revendication 10, le composant herbicide (B) étant appliqué en une quantité utilisée de 0,01 à 4000 g de principe actif/ha, à l'exception de l'acide pélargonique, qui est appliqué en une quantité utilisée de 1 à 100.000 g de principe actif/ha.

**13.** Procédé selon l'une quelconque des revendications 10 à 12 pour lutter contre les plantes nuisibles par traitement avant le semis des plantes de culture et dans les cultures de plantations ainsi que sur les terrains non cultivés.

**14.** Procédé selon l'une quelconque des revendications 10 à 13, les principes actifs de la composition herbicide étant appliqués sous forme d'un agent herbicide qui contient un ou plusieurs additifs usuels en phytoprotection, le cas échéant après dilution avec de l'eau.

**15.** Utilisation de la composition herbicide selon l'une quelconque des revendications 1 à 7 pour lutter contre les plantes nuisibles ou pour la régulation de la croissance de plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130798 A
- EP 2018065333 W
- WO 2006043635 A
- WO 2003106457 A
- WO 2006003494 A
- WO 2010052161 A
- EP 2647626 A
- WO 2004099160 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- WO 2015058021 A1
- WO 2015058028 A1
- CN 103265527 A
- WO 2013115391 A1
- WO 2014187846 A1
- WO 2010066780 A1
- WO 2011151146 A1
- WO 2011067272 A
- WO 2013050302 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 309862 A
- EP 0464461 A
- EP 0305398 A


### In der Beschreibung aufgeführte Nicht-Patentliteratur


- *CHEMICAL ABSTRACTS,* 55634-91-8
- *CHEMICAL ABSTRACTS,* 55635-13-7
- *CHEMICAL ABSTRACTS,* 352010-68-5
- *CHEMICAL ABSTRACTS,* 138164-12-2
- *CHEMICAL ABSTRACTS,* 99129-21-2
- *CHEMICAL ABSTRACTS,* 101205-02-1
- *CHEMICAL ABSTRACTS,* 1342891-70-6
- *CHEMICAL ABSTRACTS,* 104206-82-8
- *CHEMICAL ABSTRACTS,* 243973-20-8
- *CHEMICAL ABSTRACTS,* 139001-49-3
- *CHEMICAL ABSTRACTS,* 74051-80-2
- *CHEMICAL ABSTRACTS,* 99105-77-8
- *CHEMICAL ABSTRACTS,* 1976053-87-8
- *CHEMICAL ABSTRACTS,* 473278-76-1
- *CHEMICAL ABSTRACTS,* 335104-84-2
- *CHEMICAL ABSTRACTS,* 149979-41-9
- *CHEMICAL ABSTRACTS,* 87820-88-0
- *CHEMICAL ABSTRACTS,* 1639426-14-4
- *CHEMICAL ABSTRACTS,* 1639426-42-8
- *CHEMICAL ABSTRACTS,* 34256-82-1
- *CHEMICAL ABSTRACTS,* 15972-60-8
- *CHEMICAL ABSTRACTS,* 120923-37-7
- *CHEMICAL ABSTRACTS,* 3337-71-1
- *CHEMICAL ABSTRACTS,* 14089-43-1
- *CHEMICAL ABSTRACTS,* 2302-17-2
- *CHEMICAL ABSTRACTS,* 120162-55-2
- *CHEMICAL ABSTRACTS,* 113614-08-7
- *CHEMICAL ABSTRACTS,* 113614-09-8
- *CHEMICAL ABSTRACTS,* 83055-99-6
- *CHEMICAL ABSTRACTS,* 23184-66-99
- *CHEMICAL ABSTRACTS,* 16118-49-3
- *CHEMICAL ABSTRACTS,* 99283-00-8
- *CHEMICAL ABSTRACTS,* 90982-32-4
- *CHEMICAL ABSTRACTS,* 101-21-3
- *CHEMICAL ABSTRACTS,* 64902-72-3
- *CHEMICAL ABSTRACTS,* 94593-91-6
- *CHEMICAL ABSTRACTS,* 159518-97-5
- *CHEMICAL ABSTRACTS,* 147150-35-4
- *CHEMICAL ABSTRACTS,* 136849-15-5
- *CHEMICAL ABSTRACTS,* 13684-56-5

- *CHEMICAL ABSTRACTS,* 145701-21-9
- *CHEMICAL ABSTRACTS,* 83164-33-4
- *CHEMICAL ABSTRACTS,* 50563-36-5
- *CHEMICAL ABSTRACTS,* 87674-68-8
- *CHEMICAL ABSTRACTS,* 63515-14-8
- *CHEMICAL ABSTRACTS,* 85785-20-2
- *CHEMICAL ABSTRACTS,* 111353-84-5
- *CHEMICAL ABSTRACTS,* 97780-06-8
- *CHEMICAL ABSTRACTS,* 126801-58-9
- *CHEMICAL ABSTRACTS,* 104040-78-0
- *CHEMICAL ABSTRACTS,* 145701-23-1
- *CHEMICAL ABSTRACTS,* 145026-88-6
- *CHEMICAL ABSTRACTS,* 181274-17-9
- *CHEMICAL ABSTRACTS,* 412928-75-7
- *CHEMICAL ABSTRACTS,* 142459-58-3
- *CHEMICAL ABSTRACTS,* 98967-40-9
- *CHEMICAL ABSTRACTS,* 50315-10-9
- *CHEMICAL ABSTRACTS,* 144740-53-4
- *CHEMICAL ABSTRACTS,* 144740-54-5
- *CHEMICAL ABSTRACTS,* 173159-57-4
- *CHEMICAL ABSTRACTS,* 135397-30-7
- *CHEMICAL ABSTRACTS,* 100784-20-1
- *CHEMICAL ABSTRACTS,* 122548-33-8
- *CHEMICAL ABSTRACTS,* 185119-76-0
- *CHEMICAL ABSTRACTS,* 144550-06-1
- *CHEMICAL ABSTRACTS,* 144550-36-7
- *CHEMICAL ABSTRACTS,* 212201-70-2
- *CHEMICAL ABSTRACTS,* 73250-68-7
- *CHEMICAL ABSTRACTS,* 400852-66-6
- *CHEMICAL ABSTRACTS,* 208465-21-8
- *CHEMICAL ABSTRACTS,* 67129-08-2
- *CHEMICAL ABSTRACTS,* 868680-84-6
- *CHEMICAL ABSTRACTS,* 51218-45-2
- *CHEMICAL ABSTRACTS,* 139528-85-1
- *CHEMICAL ABSTRACTS,* 79510-48-8
- *CHEMICAL ABSTRACTS,* 74223-64-6
- *CHEMICAL ABSTRACTS,* 111991-09-4
- *CHEMICAL ABSTRACTS,* 213464-77-8
- *CHEMICAL ABSTRACTS,* 144651-06-9
- *CHEMICAL ABSTRACTS,* 219714-96-2
- *CHEMICAL ABSTRACTS,* 106700-29-2
- *CHEMICAL ABSTRACTS,* 13684-63-4
- *CHEMICAL ABSTRACTS,* 137641-05-5
- *CHEMICAL ABSTRACTS,* 51218-49-6
- *CHEMICAL ABSTRACTS,* 113036-87-6
- *CHEMICAL ABSTRACTS,* 86209-51-0
- *CHEMICAL ABSTRACTS,* 1918-16-7
- *CHEMICAL ABSTRACTS,* 709-98-8
- *CHEMICAL ABSTRACTS,* 122-42-9
- *CHEMICAL ABSTRACTS,* 86763-47-5
- *CHEMICAL ABSTRACTS,* 145026-81-9
- *CHEMICAL ABSTRACTS,* 181274-15-7
- *CHEMICAL ABSTRACTS,* 570415-88-2
- *CHEMICAL ABSTRACTS,* 23950-58-5
- *CHEMICAL ABSTRACTS,* 52888-80-9
- *CHEMICAL ABSTRACTS,* 94125-34-5
- *CHEMICAL ABSTRACTS,* 98389-04-9
- *CHEMICAL ABSTRACTS,* 93697-74-6
- *CHEMICAL ABSTRACTS,* 422556-08-9
- *CHEMICAL ABSTRACTS,* 122931-48-0
- *CHEMICAL ABSTRACTS,* 87392-12-9
- *CHEMICAL ABSTRACTS,* 74223-56-6
- *CHEMICAL ABSTRACTS,* 74222-97-2
- *CHEMICAL ABSTRACTS,* 141776-32-1
- *CHEMICAL ABSTRACTS,* 96491-05-3
- *CHEMICAL ABSTRACTS,* 936331-72-5
- *CHEMICAL ABSTRACTS,* 317815-83-1
- *CHEMICAL ABSTRACTS,* 79277-67-1
- *CHEMICAL ABSTRACTS,* 79277-27-3
- *CHEMICAL ABSTRACTS,* 2303-17-5
- *CHEMICAL ABSTRACTS,* 82097-50-5
- *CHEMICAL ABSTRACTS,* 106040-48-6
- *CHEMICAL ABSTRACTS,* 101200-48-0
- *CHEMICAL ABSTRACTS,* 145099-21-4
- *CHEMICAL ABSTRACTS,* 199119-58-9
- *CHEMICAL ABSTRACTS,* 135990-29-3
- *CHEMICAL ABSTRACTS,* 126535-15-7
- *CHEMICAL ABSTRACTS,* 142469-14-5
- *CHEMICAL ABSTRACTS,* 190314-43-3
- *CHEMICAL ABSTRACTS,* 1689-84-5
- *CHEMICAL ABSTRACTS,* 3861-41-4
- *CHEMICAL ABSTRACTS,* 56634-95-8
- *CHEMICAL ABSTRACTS,* 1689-99-2
- *CHEMICAL ABSTRACTS,* 2961-68-4
- *CHEMICAL ABSTRACTS,* 1918-13-4
- *CHEMICAL ABSTRACTS,* 1194-65-6
- *CHEMICAL ABSTRACTS,* 1689-83-4
- *CHEMICAL ABSTRACTS,* 2961-61-7
- *CHEMICAL ABSTRACTS,* 3861-47-0
- *CHEMICAL ABSTRACTS,* 2961-62-8
- *CHEMICAL ABSTRACTS,* 158353-15-2
- *CHEMICAL ABSTRACTS,* 129909-90-6
- *CHEMICAL ABSTRACTS,* 61-82-5
- *CHEMICAL ABSTRACTS,* 68049-83-2
- *CHEMICAL ABSTRACTS,* 82692-44-2
- *CHEMICAL ABSTRACTS,* 1992017-55-6
- *CHEMICAL ABSTRACTS,* 1622908-18-2
- *CHEMICAL ABSTRACTS,* 125306-83-4
- *CHEMICAL ABSTRACTS,* 128621-72-7
- *CHEMICAL ABSTRACTS,* 128639-02-1
- *CHEMICAL ABSTRACTS,* 158237-07-1
- *CHEMICAL ABSTRACTS,* 100728-84-5
- *CHEMICAL ABSTRACTS,* 81405-85-8
- *CHEMICAL ABSTRACTS,* 114311-32-9
- *CHEMICAL ABSTRACTS,* 247057-22-3
- *CHEMICAL ABSTRACTS,* 104098-48-8
- *CHEMICAL ABSTRACTS,* 115136-53-3
- *CHEMICAL ABSTRACTS,* 81334-34-1
- *CHEMICAL ABSTRACTS,* 81510-83-0
- *CHEMICAL ABSTRACTS,* 81335-37-7
- *CHEMICAL ABSTRACTS,* 81335-47-9
- *CHEMICAL ABSTRACTS,* 81335-43-5
- *CHEMICAL ABSTRACTS,* 81335-46-8
- *CHEMICAL ABSTRACTS,* 81335-77-5
- *CHEMICAL ABSTRACTS,* 101917-66-2
- *CHEMICAL ABSTRACTS,* 55861-78-4

- *CHEMICAL ABSTRACTS,* 82558-50-7
- *CHEMICAL ABSTRACTS,* 141112-29-0
- *CHEMICAL ABSTRACTS,* 39807-15-3
- *CHEMICAL ABSTRACTS,* 19666-30-9
- *CHEMICAL ABSTRACTS,* 129630-17-7
- *CHEMICAL ABSTRACTS,* 129630-19-9
- *CHEMICAL ABSTRACTS,* 365400-11-9
- *CHEMICAL ABSTRACTS,* 58011-68-0
- *CHEMICAL ABSTRACTS,* 71561-11-0
- *CHEMICAL ABSTRACTS,* 447399-55-5
- *CHEMICAL ABSTRACTS,* 122836-35-5
- *CHEMICAL ABSTRACTS,* 1101132-67-5
- *CHEMICAL ABSTRACTS,* 210631-68-8
- *CHEMICAL ABSTRACTS,* 1911613-97-2
- *CHEMICAL ABSTRACTS,* 1855925-45-1
- *CHEMICAL ABSTRACTS,* 173980-17-1
- *CHEMICAL ABSTRACTS,* 174514-07-9
- *CHEMICAL ABSTRACTS,* 119126-15-7
- *CHEMICAL ABSTRACTS,* 141112-06-3
- *CHEMICAL ABSTRACTS,* 858956-08-8
- *CHEMICAL ABSTRACTS,* 858954-83-3
- *CHEMICAL ABSTRACTS,* 858956-35-1
- *CHEMICAL ABSTRACTS,* 150114-71-9
- *CHEMICAL ABSTRACTS,* 566191-87-5
- *CHEMICAL ABSTRACTS,* 566191-89-7
- *CHEMICAL ABSTRACTS,* 3813-05-6
- *CHEMICAL ABSTRACTS,* 38561-76-1
- *CHEMICAL ABSTRACTS,* 25059-80-7
- *CHEMICAL ABSTRACTS,* 67338-65-2
- *CHEMICAL ABSTRACTS,* 1861-40-1
- *CHEMICAL ABSTRACTS,* 25057-89-0
- *CHEMICAL ABSTRACTS,* 50723-80-3
- *CHEMICAL ABSTRACTS,* 156963-66-5
- *CHEMICAL ABSTRACTS,* 81777-95-9
- *CHEMICAL ABSTRACTS,* 13181-17-4
- *CHEMICAL ABSTRACTS,* 33629-47-9
- *CHEMICAL ABSTRACTS,* 1698-60-8
- *CHEMICAL ABSTRACTS,* 2136-79-0
- *CHEMICAL ABSTRACTS,* 1861-32-1
- *CHEMICAL ABSTRACTS,* 887-54-7
- *CHEMICAL ABSTRACTS,* 142891-20-1
- *CHEMICAL ABSTRACTS,* 87818-31-3
- *CHEMICAL ABSTRACTS,* 81777-89-1
- *CHEMICAL ABSTRACTS,* 499231-24-2
- *CHEMICAL ABSTRACTS,* 29091-05-2
- *CHEMICAL ABSTRACTS,* 2764-72-9
- *CHEMICAL ABSTRACTS,* 85-00-7
- *CHEMICAL ABSTRACTS,* 4032-26-2
- *CHEMICAL ABSTRACTS,* 97886-45-8
- *CHEMICAL ABSTRACTS,* 64-19-7
- *CHEMICAL ABSTRACTS,* 55283-68-6
- *CHEMICAL ABSTRACTS,* 26225-79-6
- *CHEMICAL ABSTRACTS,* 58667-63-3
- *CHEMICAL ABSTRACTS,* 90134-59-1
- *CHEMICAL ABSTRACTS,* 63782-90-1
- *CHEMICAL ABSTRACTS,* 63729-98-6
- *CHEMICAL ABSTRACTS,* 943832-81-3
- *CHEMICAL ABSTRACTS,* 1390661-72-9
- *CHEMICAL ABSTRACTS,* 188490-07-5
- *CHEMICAL ABSTRACTS,* 188489-07-8
- *CHEMICAL ABSTRACTS,* 87547-04-4
- *CHEMICAL ABSTRACTS,* 87546-18-7
- *CHEMICAL ABSTRACTS,* 103361-09-7
- *CHEMICAL ABSTRACTS,* 59756-60-4
- *CHEMICAL ABSTRACTS,* 61213-25-0
- *CHEMICAL ABSTRACTS,* 96525-23-4
- *CHEMICAL ABSTRACTS,* 149253-65-6
- *CHEMICAL ABSTRACTS,* 943832-60-8
- *CHEMICAL ABSTRACTS,* 943831-98-9
- *CHEMICAL ABSTRACTS,* 13320-30-1
- *CHEMICAL ABSTRACTS,* 27314-13-2
- *CHEMICAL ABSTRACTS,* 112-80-1
- *CHEMICAL ABSTRACTS,* 19044-88-3
- *CHEMICAL ABSTRACTS,* 153197-14-9
- *CHEMICAL ABSTRACTS,* 4685-14-7
- *CHEMICAL ABSTRACTS,* 1910-42-5
- *CHEMICAL ABSTRACTS,* 2074-50-2
- *CHEMICAL ABSTRACTS,* 112-05-0
- *CHEMICAL ABSTRACTS,* 40487-42-1
- *CHEMICAL ABSTRACTS,* 110956-75-7
- *CHEMICAL ABSTRACTS,* 40020-01-7
- *CHEMICAL ABSTRACTS,* 55512-33-9
- *CHEMICAL ABSTRACTS,* 2053901-33-8
- *CHEMICAL ABSTRACTS,* 117718-60-2
- *CHEMICAL ABSTRACTS,* 874195-61-6
- *CHEMICAL ABSTRACTS,* 1582-09-8
- *CHEMICAL ABSTRACTS,* 2307-68-8
- *CHEMICAL ABSTRACTS,* 35256-85-0
- *CHEMICAL ABSTRACTS,* 123249-43-4
- *CHEMICAL ABSTRACTS,* 133-90-4
- *CHEMICAL ABSTRACTS,* 1076-46-6
- *CHEMICAL ABSTRACTS,* 53404-16-3
- *CHEMICAL ABSTRACTS,* 7286-84-2
- *CHEMICAL ABSTRACTS,* 25182-03-0
- *CHEMICAL ABSTRACTS,* 1702-17-6
- *CHEMICAL ABSTRACTS,* 1532-24-7
- *CHEMICAL ABSTRACTS,* 57754-85-5
- *CHEMICAL ABSTRACTS,* 58509-83-4
- *CHEMICAL ABSTRACTS,* 73455-09-1
- *CHEMICAL ABSTRACTS,* 1918-00-9
- *CHEMICAL ABSTRACTS,* 1286239-22-2
- *CHEMICAL ABSTRACTS,* 104040-79-1
- *CHEMICAL ABSTRACTS,* 2300-66-5
- *CHEMICAL ABSTRACTS,* 25059-78-3
- *CHEMICAL ABSTRACTS,* 55871-02-8
- *CHEMICAL ABSTRACTS,* 6597-78-0
- *CHEMICAL ABSTRACTS,* 53404-28-7
- *CHEMICAL ABSTRACTS,* 10007-85-9
- *CHEMICAL ABSTRACTS,* 1982-69-0
- *CHEMICAL ABSTRACTS,* 56141-00-5
- *CHEMICAL ABSTRACTS,* 69377-81-7
- *CHEMICAL ABSTRACTS,* 27-8
- *CHEMICAL ABSTRACTS,* 81406-37-3
- *CHEMICAL ABSTRACTS,* 1918-02-1
- *CHEMICAL ABSTRACTS,* 55870-98-9
- *CHEMICAL ABSTRACTS,* 36374-99-9

- *CHEMICAL ABSTRACTS,* 26952-20-5
- *CHEMICAL ABSTRACTS,* 14143-55-6
- *CHEMICAL ABSTRACTS,* 55871-00-6
- *CHEMICAL ABSTRACTS,* 2545-60-0
- *CHEMICAL ABSTRACTS,* 35832-11-2
- *CHEMICAL ABSTRACTS,* 6753-47-5
- *CHEMICAL ABSTRACTS,* 82683-78-1
- *CHEMICAL ABSTRACTS,* 84087-01-4
- *CHEMICAL ABSTRACTS,* 84087-48-9
- *CHEMICAL ABSTRACTS,* 84087-33-2
- *CHEMICAL ABSTRACTS,* 90717-03-6
- *CHEMICAL ABSTRACTS,* 50-31-7
- *CHEMICAL ABSTRACTS,* 3426-62-8
- *CHEMICAL ABSTRACTS,* 71750-37-3
- *CHEMICAL ABSTRACTS,* 4559-30-2
- *CHEMICAL ABSTRACTS,* 2078-42-4
- *CHEMICAL ABSTRACTS,* 55335-06-3
- *CHEMICAL ABSTRACTS,* 64700-56-7
- *CHEMICAL ABSTRACTS,* 1048373-85-8
- *CHEMICAL ABSTRACTS,* 60825-27-6
- *CHEMICAL ABSTRACTS,* 57213-69-1
- *CHEMICAL ABSTRACTS,* 64249-01-0
- *CHEMICAL ABSTRACTS,* 35597-43-4
- *CHEMICAL ABSTRACTS,* 71048-99-2
- *CHEMICAL ABSTRACTS,* 36335-67-8
- *CHEMICAL ABSTRACTS,* 51276-47-2
- *CHEMICAL ABSTRACTS,* 35597-44-5
- *CHEMICAL ABSTRACTS,* 77182-82-2
- *CHEMICAL ABSTRACTS,* 70033-13-5
- *CHEMICAL ABSTRACTS,* 1071-83-6
- *CHEMICAL ABSTRACTS,* 69254-40-6
- *CHEMICAL ABSTRACTS,* 34494-04-7
- *CHEMICAL ABSTRACTS,* 38641-94-0
- *CHEMICAL ABSTRACTS,* 40465-66-5
- *CHEMICAL ABSTRACTS,* 39600-42-5
- *CHEMICAL ABSTRACTS,* 70393-85-0
- *CHEMICAL ABSTRACTS,* 81591-81-3
- *CHEMICAL ABSTRACTS,* 24151-93-7
- *CHEMICAL ABSTRACTS,* 1591-81-3
- *CHEMICAL ABSTRACTS,* 33857-23-7
- *CHEMICAL ABSTRACTS,* 36001-88-4
- *CHEMICAL ABSTRACTS,* 94-75-7
- *CHEMICAL ABSTRACTS,* 2307-55-3
- *CHEMICAL ABSTRACTS,* 1929-73-3
- *CHEMICAL ABSTRACTS,* 1320-18-9
- *CHEMICAL ABSTRACTS,* 1928-45-6
- *CHEMICAL ABSTRACTS,* 94-80-4
- *CHEMICAL ABSTRACTS,* 1048373-72-3
- *CHEMICAL ABSTRACTS,* 20940-37-8
- *CHEMICAL ABSTRACTS,* 2008-39-1
- *CHEMICAL ABSTRACTS,* 5742-19-8
- *CHEMICAL ABSTRACTS,* 2212-54-6
- *CHEMICAL ABSTRACTS,* 533-23-3
- *CHEMICAL ABSTRACTS,* 1928-43-4
- *CHEMICAL ABSTRACTS,* 37102-63-9
- *CHEMICAL ABSTRACTS,* 713-15-1
- *CHEMICAL ABSTRACTS,* 25168-26-7
- *CHEMICAL ABSTRACTS,* 94-11-1
- *CHEMICAL ABSTRACTS,* 5742-17-6
- *CHEMICAL ABSTRACTS,* 3766-27-6
- *CHEMICAL ABSTRACTS,* 1917-97-1
- *CHEMICAL ABSTRACTS,* 1928-38-7
- *CHEMICAL ABSTRACTS,* 1928-44-5
- *CHEMICAL ABSTRACTS,* 1917-92-6
- *CHEMICAL ABSTRACTS,* 1928-61-6
- *CHEMICAL ABSTRACTS,* 2702-72-9
- *CHEMICAL ABSTRACTS,* 15146-99-3
- *CHEMICAL ABSTRACTS,* 28685-18-9
- *CHEMICAL ABSTRACTS,* 2646-78-8
- *CHEMICAL ABSTRACTS,* 18584-79-7
- *CHEMICAL ABSTRACTS,* 2569-01-9
- *CHEMICAL ABSTRACTS,* 215655-76-8
- *CHEMICAL ABSTRACTS,* 94-82-6
- *CHEMICAL ABSTRACTS,* 2758-42-1
- *CHEMICAL ABSTRACTS,* 1320-15-6
- *CHEMICAL ABSTRACTS,* 19480-40-1
- *CHEMICAL ABSTRACTS,* 10433-59-7
- *CHEMICAL ABSTRACTS,* 120-36-5
- *CHEMICAL ABSTRACTS,* 53404-31-2
- *CHEMICAL ABSTRACTS,* 53404-32-3
- *CHEMICAL ABSTRACTS,* 79270-78-3
- *CHEMICAL ABSTRACTS,* 28631-35-8
- *CHEMICAL ABSTRACTS,* 57153-17-0
- *CHEMICAL ABSTRACTS,* 5746-17-8
- *CHEMICAL ABSTRACTS,* 39104-30-8
- *CHEMICAL ABSTRACTS,* 50594-66-6
- *CHEMICAL ABSTRACTS,* 50594-67-7
- *CHEMICAL ABSTRACTS,* 62476-59-9
- *CHEMICAL ABSTRACTS,* 74070-46-5
- *CHEMICAL ABSTRACTS,* 42576-02-3
- *CHEMICAL ABSTRACTS,* 32861-85-1
- *CHEMICAL ABSTRACTS,* 114420-56-3
- *CHEMICAL ABSTRACTS,* 105512-06-9
- *CHEMICAL ABSTRACTS,* 84496-56-0
- *CHEMICAL ABSTRACTS,* 122008-78-0
- *CHEMICAL ABSTRACTS,* 122008-85-9
- *CHEMICAL ABSTRACTS,* 40843-25-2
- *CHEMICAL ABSTRACTS,* 51338-27-3
- *CHEMICAL ABSTRACTS,* 188634-90-4
- *CHEMICAL ABSTRACTS,* 131086-42-5
- *CHEMICAL ABSTRACTS,* 95617-09-7
- *CHEMICAL ABSTRACTS,* 113158-40-0
- *CHEMICAL ABSTRACTS,* 71283-80-2
- *CHEMICAL ABSTRACTS,* 69335-91-7
- *CHEMICAL ABSTRACTS,* 83066-88-0
- *CHEMICAL ABSTRACTS,* 79241-46-6
- *CHEMICAL ABSTRACTS,* 77501-60-1
- *CHEMICAL ABSTRACTS,* 77501-90-7
- *CHEMICAL ABSTRACTS,* 72178-02-0
- *CHEMICAL ABSTRACTS,* 108731-70-0
- *CHEMICAL ABSTRACTS,* 77227-69-1
- *CHEMICAL ABSTRACTS,* 69806-34-4
- *CHEMICAL ABSTRACTS,* 95977-29-0
- *CHEMICAL ABSTRACTS,* 72619-32-0
- *CHEMICAL ABSTRACTS,* 77501-63-4
- *CHEMICAL ABSTRACTS,* 94-74-6

- *CHEMICAL ABSTRACTS,* 19480-43-4
- *CHEMICAL ABSTRACTS,* 1713-12-8
- *CHEMICAL ABSTRACTS,* 2039-46-5
- *CHEMICAL ABSTRACTS,* 20405-19-0
- *CHEMICAL ABSTRACTS,* 2698-38-6
- *CHEMICAL ABSTRACTS,* 29450-45-1
- *CHEMICAL ABSTRACTS,* 1713-11-7
- *CHEMICAL ABSTRACTS,* 26544-20-7
- *CHEMICAL ABSTRACTS,* 2698-40-0
- *CHEMICAL ABSTRACTS,* 2436-73-9
- *CHEMICAL ABSTRACTS,* 6365-62-4
- *CHEMICAL ABSTRACTS,* 5221-16-9
- *CHEMICAL ABSTRACTS,* 3653-48-3
- *CHEMICAL ABSTRACTS,* 42459-68-7
- *CHEMICAL ABSTRACTS,* 94-81-5
- *CHEMICAL ABSTRACTS,* 10443-70-6
- *CHEMICAL ABSTRACTS,* 57153-18-1
- *CHEMICAL ABSTRACTS,* 6062-26-6
- *CHEMICAL ABSTRACTS,* 93-65-2
- *CHEMICAL ABSTRACTS,* 32351-70-5
- *CHEMICAL ABSTRACTS,* 1432-14-0
- *CHEMICAL ABSTRACTS,* 71526-69-7
- *CHEMICAL ABSTRACTS,* 28473-03-2
- *CHEMICAL ABSTRACTS,* 2786-19-8
- *CHEMICAL ABSTRACTS,* 1929-86-8
- *CHEMICAL ABSTRACTS,* 19095-88-6
- *CHEMICAL ABSTRACTS,* 53404-61-8
- *CHEMICAL ABSTRACTS,* 16484-77-8
- *CHEMICAL ABSTRACTS,* 256412-89-2
- *CHEMICAL ABSTRACTS,* 42874-03-3
- *CHEMICAL ABSTRACTS,* 111479-05-1
- *CHEMICAL ABSTRACTS,* 76578-12-6
- *CHEMICAL ABSTRACTS,* 76578-14-8
- *CHEMICAL ABSTRACTS,* 94051-08-8
- *CHEMICAL ABSTRACTS,* 100646-51-3
- *CHEMICAL ABSTRACTS,* 200509-41-7
- *CHEMICAL ABSTRACTS,* 158755-95-4
- *CHEMICAL ABSTRACTS,* 125401-92-5
- *CHEMICAL ABSTRACTS,* 314-40-9
- *CHEMICAL ABSTRACTS,* 53404-19-6
- *CHEMICAL ABSTRACTS,* 69484-12-4
- *CHEMICAL ABSTRACTS,* 134605-64-4
- *CHEMICAL ABSTRACTS,* 2164-08-1
- *CHEMICAL ABSTRACTS,* 168088-61-7
- *CHEMICAL ABSTRACTS,* 135186-78-6
- *CHEMICAL ABSTRACTS,* 136191-56-5
- *CHEMICAL ABSTRACTS,* 136191-64-5
- *CHEMICAL ABSTRACTS,* 221205-90-9
- *CHEMICAL ABSTRACTS,* 123342-93-8
- *CHEMICAL ABSTRACTS,* 123343-16-8
- *CHEMICAL ABSTRACTS,* 372137-35-4
- *CHEMICAL ABSTRACTS,* 5902-51-2
- *CHEMICAL ABSTRACTS,* 1220411-29-9
- *CHEMICAL ABSTRACTS,* 1258836-72-4
- *CHEMICAL ABSTRACTS,* 13360-45-7
- *CHEMICAL ABSTRACTS,* 15545-48-9
- *CHEMICAL ABSTRACTS,* 42609-52-9
- *CHEMICAL ABSTRACTS,* 34205-21-5
- *CHEMICAL ABSTRACTS,* 330-54-1
- *CHEMICAL ABSTRACTS,* 1957168-02-3
- *CHEMICAL ABSTRACTS,* 2164-17-2
- *CHEMICAL ABSTRACTS,* 34123-59-6
- *CHEMICAL ABSTRACTS,* 330-55-2
- *CHEMICAL ABSTRACTS,* 18691-97-9
- *CHEMICAL ABSTRACTS,* 3060-89-7
- *CHEMICAL ABSTRACTS,* 19937-59-8
- *CHEMICAL ABSTRACTS,* 1746-81-2
- *CHEMICAL ABSTRACTS,* 555-37-3
- *CHEMICAL ABSTRACTS,* 1982-49-6
- *CHEMICAL ABSTRACTS,* 34014-18-1
- *CHEMICAL ABSTRACTS,* 101-42-8
- *CHEMICAL ABSTRACTS,* 1982-47-4
- *CHEMICAL ABSTRACTS,* 109293-98-3
- *CHEMICAL ABSTRACTS,* 30043-49-3
- *CHEMICAL ABSTRACTS,* 834-12-8
- *CHEMICAL ABSTRACTS,* 1912-24-9
- *CHEMICAL ABSTRACTS,* 21725-46-2
- *CHEMICAL ABSTRACTS,* 22936-75-0
- *CHEMICAL ABSTRACTS,* 51235-04-2
- *CHEMICAL ABSTRACTS,* 950782-86-2
- *CHEMICAL ABSTRACTS,* 41394-05-2
- *CHEMICAL ABSTRACTS,* 21087-64-9
- *CHEMICAL ABSTRACTS,* 1610-18-0
- *CHEMICAL ABSTRACTS,* 7287-19-6
- *CHEMICAL ABSTRACTS,* 139-40-2
- *CHEMICAL ABSTRACTS,* 122-34-9
- *CHEMICAL ABSTRACTS,* 1014-70-6
- *CHEMICAL ABSTRACTS,* 33693-04-8
- *CHEMICAL ABSTRACTS,* 5915-41-3
- *CHEMICAL ABSTRACTS,* 886-50-0
- *CHEMICAL ABSTRACTS,* 131475-57-5
- *CHEMICAL ABSTRACTS,* 1912-26-1
- *CHEMICAL ABSTRACTS,* 1014-69-3
- The Pesticide Manual. British Crop Protection Council, 2006
- *Weed Research,* 1986, vol. 26, 441-445
- The Pesticide Manual. The British Crop Protection Council and the Royal Soc. of Chemistry, 2006
- e-Pesticide Manual. 2006
- *CHEMICAL ABSTRACTS,* 885026-50-6
- *CHEMICAL ABSTRACTS,* 637360-23-7
- *CHEMICAL ABSTRACTS,* 872999-66-1
- *CHEMICAL ABSTRACTS,* 1225292-17-0
- *CHEMICAL ABSTRACTS,* 1440516-42-6
- *CHEMICAL ABSTRACTS,* 792914-58-0
- *CHEMICAL ABSTRACTS,* 1204776-60-2
- *CHEMICAL ABSTRACTS,* 1461743-15-6
- *CHEMICAL ABSTRACTS,* 1226889-14-0
- *CHEMICAL ABSTRACTS,* 1449220-44-3
- *CHEMICAL ABSTRACTS,* 1332628-83-7
- *CHEMICAL ABSTRACTS,* 1477923-37-7
- *CHEMICAL ABSTRACTS,* 1105672-77-2
- *CHEMICAL ABSTRACTS,* 1232543-85-9
- *CHEMICAL ABSTRACTS,* 1268277-22-0
- *CHEMICAL ABSTRACTS,* 1233882-22-8
- *CHEMICAL ABSTRACTS,* 1108184-52-6

- *CHEMICAL ABSTRACTS,* 1542271-46-4
- *CHEMICAL ABSTRACTS,* 1370358-69-2
- *CHEMICAL ABSTRACTS,* 1181213-14-8
- *CHEMICAL ABSTRACTS,* 934001-66-8
- *CHEMICAL ABSTRACTS,* 1477919-27-9
- *CHEMICAL ABSTRACTS,* 1452877-50-7
- *CHEMICAL ABSTRACTS,* 1449021-97-9
- *CHEMICAL ABSTRACTS,* 1638765-58-8
- *CHEMICAL ABSTRACTS,* 1229023-00-0
- *CHEMICAL ABSTRACTS,* 1309959-62-3
- **S.R. COLBY.** Calculating Synergistic and Antagonistic Responses of Herbicide Combination. *Weeds,* 1967, vol. 15, 20-22
- Gene Transfer to Plants, Springer Lab Manual. Springer Verlag, 1995
- **CHRISTOU.** *Trends in Plant Science,* 1996, vol. 1, 423-431
- **SAMBROOK et al.** Molecular Cloning, A Laboratory Manual. Cold Spring Harbor Laboratory Press, 1989
- **WINNACKER.** Gene und Klone. VCH Weinheim, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hanser Verlag, 1986, vol. 7
- **VAN VALKENBURG.** Pesticides Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- Solvents Guide. Interscience, 1963
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **S. R. COLBY.** *Weeds,* 1967, vol. 15, 20-22